# EUROPEAN PATENT APPLICATION

(11) **EP 2 700 589 A2**
(43) Date of publication of application: **26.02.2014**
(21) Application number: 12774757.4
(22) Date of filing: 18.04.2012
(51) Int. Cl.: B65D 51/28, B65D 51/20, B65D 25/08, B65D 81/32, B29C 45/14, B29C 49/00

(54) **APPARATUS FOR RECEIVING HETEROGENEOUS MATERIALS**

(30) Priority: 18.04.2011 KR 20110035917; 21.09.2011 KR 20110095500; 21.09.2011 KR 20110095496; 21.09.2011 KR 20110095498; 15.11.2011 KR 20110119032; 21.11.2011 KR 20110121895; 22.11.2011 KR 20110122568; 27.11.2011 KR 20110124710; 05.12.2011 KR 20110129329; 08.12.2011 KR 20110130630; 08.12.2011 KR 20110131379; 26.01.2012 KR 20120007459; 13.02.2012 KR 20120014054; 13.02.2012 KR 20120014055; 21.02.2012 KR 20120017712; 06.03.2012 KR 20120022733; 11.03.2012 KR 20120024767; 07.04.2012 KR 20120036393; 12.04.2012 KR 20120038183
(71) Applicant: Lee, Seong-Jae, Seoul 110-846 (KR); Lee, Su-Jae, Seoul 139-837 (KR)
(72) Inventor: Lee, Seong-Jae, Seoul 110-846 (KR); Lee, Su-Jae, Seoul 139-837 (KR)
(74) Representative: Pfenning, Meinig & Partner GbR
(86) International application number: PCT/KR2012/002969
(87) International publication number: WO 2012/144802

(57) **Abstract**

An apparatus containing heterogeneous materials which is coupled to a mouth part of a container containing contents such as liquid or the like, comprises a main body to be coupled and fixed to the mouth part of the container; and an accommodating part having a storage space formed inside of the main body, wherein an upper foldable connecting part of the inner storage space of the accommodating part and an opening formed below the foldable connecting part break an accommodating part sealing part which seals the lower end of the accommodating part, thereby allowing the contents of the storage space of the accommodating part to drop down into the container to be mixed. An opening is formed at the bottom of the upper portion of the foldable connecting part and the foldable connecting part is formed between the opening and the main body, wherein a soft foldable part is formed at the top or bottom of the foldable connecting part.

## Description

### TECHNICAL FIELD

The present invention relates to an apparatus for receiving heterogeneous materials, in which the other foldable part is integrally injection-molded to a main body.

### BACKGROUND ART

There are related arts disclosed in Japanese Patent Application No. 3,432,533 and PCT/KR2009/00072.

### DISCLOSURE OF THE INVENTION

### TECHNICAL PROBLEM

Japanese Patent Application No. 3,432,533 (Japanese Patent Application filed on September 10, 1992) (see FIGS. 37 to 40) discloses a technology in which an accommodating part is defined in a foldable part having a dome shape, and when the accommodating part is pressed, the foldable part is folded downward, and simultaneously, heterogeneous materials stored in a storage space having a dome shape drop down into a container, thereby mixing the heterogeneous materials with each other. The present invention has improved restoring and barrier properties by double injection-molding a foldable part having a dome shape by using a soft material such as silicon.

Particularly, in a case of a general foldable part, there is a disadvantage that the foldable part is not easily folded downward when the foldable part is integrated with a main body. This is done because, if the foldable part has a thin thickness, the foldable part is easily folded, but the barrier property is deteriorated to spoil contents, and thus the foldable part is injection-molded with a thickness greater than a predetermined thickness.

Also, if the foldable part is thin, an accommodating part for storing heterogeneous materials is manufactured by using separate aluminum sheets, and then the contents are stored in a storage space defined by facing the aluminum sheets to each other. However, the storage space may be narrowed.

Also, a foldable part having a physical property equal to that of rubber may be separately manufactured and then be fitted into an upper portion of the main body. In this case, sealability may be deteriorated, and also a separate coupling part may be needed.

PCT/KR2009/00072 discloses a technology in which, when an upper sealing part having a sheet shape is removed, and a foldable part is pressed, a storage space is opened. This invention relates to an improvement invention of the invention disclosed in Japanese Patent Application No. 3,432,533.

For another example, US Patent Application No. 2010-960 discloses a feature in which a soft material is assembled with an upper portion of a main body. This invention has the same idea as that disclosed in US Patent Application No. 3,347,410 or US Patent Application No. 6,305,576.

The inventions disclosed in US Patent Publication No. 2011-174642 and US Patent Application No. 7,874,420 relate to a dependent invention of the invention disclosed in PCT/KR2009/00072.

In case of US Patent Application No. 6,305,576, although a foldable part itself is coupled to an inner stopper part in an assembling manner, it is not easy to screw-couple the foldable part formed of a soft material to the inner stopper part. Also, it takes a long time to couple the foldable part to the inner stopper part after contents are put into a storage space. Here, sealability is significantly different depending on the assembling method of the foldable part.

US Patent Application No. 4,578,931 discloses a technology in which a plurality of storage spaces are provided, and a discharge unit for discharging contents mixed in the storage spaces is devised.

However, since the storage spaces are independently provided, it is actually impossible to put the technology to practical use because it is difficult to apply the technology to a bottle cap having a narrow container neck that mainly feature a diameter of about 28 mm to 38 mm.

If a minimum amount of heterogeneous materials is put, the technology may be acceptable. However, in a case of a bottle containing the contents having the gross weight of about 500 ml, when the heterogeneous materials (such as vitamins and other high concentrations of liquid or powder) having an average amount of about 5 ml are stored, its proper function may be executed.

When based on the above-described ideas, US Patent Application No. 4,578,931 discloses a technology that is capable of being applied to a container having in the form of blocks and including a bottle neck having an outer diameter of about 50 mm or more.

Also, the related arts may have problems in the folding of the foldable part and the barrier property that is needed to keep the content.

Also, in a case where a straw insertion part exits, there is a US Patent Application No. 5,076,425 as the prior art. This technology may be used for assembling a bottle cap with an upper portion of a container having a cup shape.

According to the features of the above-described technologies, a cover may be manufactured by using a press vacuum molding process, and a portion of the cover may get a blade scar to form a straw insertion part. When the above-mentioned cover is used, an accommodating part provided in a portion of the cover may be pressed to mix heterogeneous materials with each other, and then, a straw may be inserted into the straw insertion part disposed at a relatively central portion to drink the mixed contents.

The above-mentioned conventional US Patent Application No. 5,076,425 discloses a technology in which the straw insertion part is punched or in a state similar to the punching. Therefore, the above-mentioned technology may have a problem in barrier property.

### TECHNICAL SOLUTION

In one embodiment, an apparatus for receiving heterogeneous materials, which is coupled to a mouth part of a container containing the contents such as liquid includes a main body coupled and fixed to the mouth part of the container and an accommodating part having a storage space within the main body, wherein the inner storage space of the accommodating part is configured so that a foldable connecting part and an opening part defined under the foldable connecting part breaks an accommodating part sealing part for sealing a lower end of the accommodating part to allow the contents within the accommodating part storage space to drop into the container, thereby mixing the contents with each other, and a foldable soft resin is added to the foldable connecting part.

Also, the foldable part may be molded on an upper portion of the foldable connecting part by using the soft resin in a co-injection manner, a main body mouth part may be disposed on an upper portion of the foldable connecting part, and a check valve may be disposed within the main body mouth part.

Also, an openable sealing stopper or a hinge-type sealing stopper may be coupled to the main body mouth part, and an assembly type accommodating part may be coupled to the inside of the main body.

In another embodiment, an apparatus for receiving heterogeneous materials, which is coupled to a mouth part of a container containing the contents such as liquid includes a main body coupled and fixed to a mouth part of the container and an accommodating part having a storage space within the main body, wherein the inner storage space of the accommodating part is configured so that a foldable connecting part and an opening part defined under the foldable connecting part breaks an accommodating part sealing part sealing a lower end of the accommodating part to allow the contents within the accommodating part storage space to drop into the container, thereby mixing the contents with each other.

Also, when a foldable part is added to the foldable connecting part, the foldable part is selected from miniatures, characters, letters, figures, or various shapes.

The foldable part may be molded by co-injection.

In further another embodiment, an apparatus for receiving heterogeneous materials, which is coupled to a mouth part of a container containing the contents such as liquid includes a main body coupled and fixed to a mouth part of the container and an accommodating part having a storage space within the main body, wherein the inner storage space of the accommodating part is configured so that a foldable connecting part and an opening part defined under the foldable connecting part breaks an accommodating part sealing part sealing a lower end of the accommodating part to allow the contents within the accommodating part storage space to drop into the container, thereby mixing the contents with the each other.

Also, a configuration part is disposed on the foldable connecting part, wherein the configuration part may be selected from miniatures, characters, letters, figures, or various shapes, and the foldable part may be injection-molded by a co-injection molding machine.

Also, the foldable connecting part may be coated with a material having a barrier property or adheres through deposition or thermal contraction, and a cover may be coupled to an upper portion of the main body.

Also, the foldable connecting part may include an auxiliary foldable part on a side opposite to a foldable reference surface so that the foldable part is folded in one side direction with respect to the foldable reference surface.

In further another embodiment, an apparatus for receiving heterogeneous materials, which is coupled to a mouth part of a container containing the contents such as liquid includes a main body coupled and fixed to a mouth part of the container and an accommodating part having a storage space within the main body, wherein the inner storage space of the accommodating part is configured so that a foldable connecting part and an opening part defined under the foldable connecting part breaks an accommodating part sealing part sealing a lower end of the accommodating part to allow the contents within the accommodating part storage space to drop into the container, thereby mixing the contents with each other, and the foldable connecting part is injection-molded by a co-injection molding machine.

Also, a rotational sealing stopper may be coupled to the main body mouth part, and the rotational sealing stopper may be protected by a cover part on the upper portion of the main body.

On the other hand, a protective cover may be coupled to the main body mouth part.

Also, the protective cover may have a top surface and a side surface, and a cover body may be disposed on a center of the protective cover, wherein the cover body may form a boundary with a cover's outer shell by a cover top surface cutoff line and be configured so that a cover sealing part sealing the main body mouth part is connected to a portion of a cover anti-forgery frame constituting a lower end of the cover's outer shell by a cover connecting part.

Also, a portion of the foldable part added to the upper portion of the foldable connecting part may include a soft part in which a syringe needle is insertable.

In further another embodiment, an apparatus for receiving heterogeneous materials, which is coupled to a mouth part of a container containing the contents such as liquid includes a main body coupled and fixed to a mouth part of the container and an accommodating part having a storage space within the main body, wherein the inner storage space of the accommodating part is configured so that a foldable connecting part and an opening part defined under the foldable connecting part breaks an accommodating part sealing part sealing a lower end of the accommodating part to allow the contents within the accommodating part storage space to drop into the container, thereby mixing the contents with each other, and the foldable connecting part is injection-molded by a co-injection molding machine.

In further another embodiment, an apparatus for receiving heterogeneous materials, which is coupled to a mouth part of a container containing the contents such as liquid includes a main body coupled and fixed to a mouth part of the container and an accommodating part having a storage space within the main body in an assembling manner, wherein the inner storage space of the accommodating part is configured so that a foldable connecting part and an opening part defined under the foldable connecting part breaks an accommodating part sealing part sealing a lower end of the accommodating part to allow the contents within the accommodating part storage space to drop into the container, thereby mixing the contents with each other, and the foldable connecting part is injection-molded by a co-injection molding machine.

Also, the assembly type accommodating part may be configured so that, while the foldable connecting part is folded downward, a cutoff protrusion piece breaks an accommodating part cutoff line defined in the accommodating part to open the storage space of the accommodating part.

In further another embodiment, an apparatus for receiving heterogeneous materials, which is coupled to a mouth part of a container containing the contents includes a main body coupled and fixed to a mouth part of the container and a foldable part formed of a material having a barrier property on an upper portion of the main body, wherein an assembly type opening end designed to move downward is disposed on a lower portion of the foldable part, and a lower end of an opening end guide of the main body on which the assembly type opening end is disposed is sealed by an accommodating part sealing part.

Also, the foldable part may be molded by a co-injection machine.

In an embodiment, an apparatus for receiving heterogeneous materials, which is coupled to a mouth part of a container containing the contents includes a main body coupled and fixed to a mouth part of the container and a foldable part formed of a material having a barrier property on an upper portion of the main body, wherein an insertion type accommodating part designed to move downward is disposed on a lower portion of the foldable part, and the heterogeneous materials is stored within the insertion type accommodating part, and an end of the insertion type accommodating part is sealed by a lower sealing part, wherein the lower sealing part is punched by an opening guide pin disposed on an opening end guide part of the main body.

In another embodiment, an apparatus for receiving heterogeneous materials, which is coupled to a mouth part of a container containing the contents includes a main body coupled and fixed to a mouth part of the container and an accommodating part having a storage space, the accommodating part being integrated or assembled to the inside of the main body, wherein the storage space of the accommodating part is sealed by a foldable part, and the foldable part is configured so that, when a rotational operable sealing stopper rotatably assembled with an upper portion of the main body is rotated, an accommodating part sealing part sealing the storage space of the accommodating part is opened.

In further another embodiment, an apparatus for receiving heterogeneous materials, which is coupled to a mouth part of a container containing the contents includes a main body coupled and fixed to a mouth part of the container and an accommodating part having a storage space, the accommodating part being integrated or assembled to the inside of the main body, wherein the storage space of the accommodating part is sealed by a foldable part or a foldable connecting part, and the foldable part or the foldable connecting part is configured so that, when a rotational operable sealing cover rotatably assembled with an upper portion of the main body is rotated, an accommodating part sealing part or an opening part of an assembly type accommodating part which seals the storage space of the accommodating part is opened.

Also, a second storage space may be defined in a lower portion of the storage space of the accommodating part, and the second storage space may be defined within the accommodating part sealing part sealing a lower end of the accommodating part.

### ADVANTAGEOUS EFFECTS

The soft foldable part may be pressed to mix the heterogeneous materials to improve convenience. In addition, the foldable part may be manufactured through the double injection molding (co-injection molding) by using the material having the barrier property to improve conservative property of the content.

### BRIEF DESCRIPTION OF THE DRAWINGS

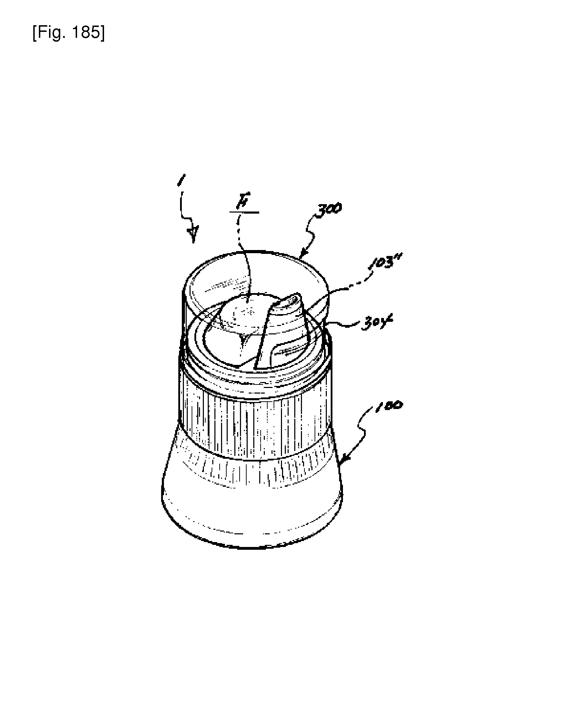

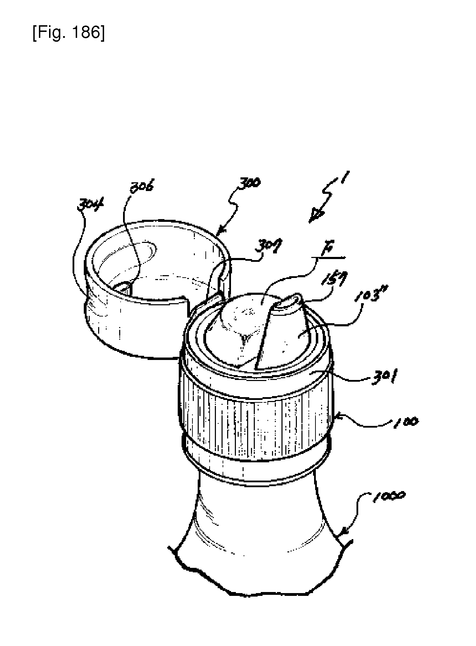

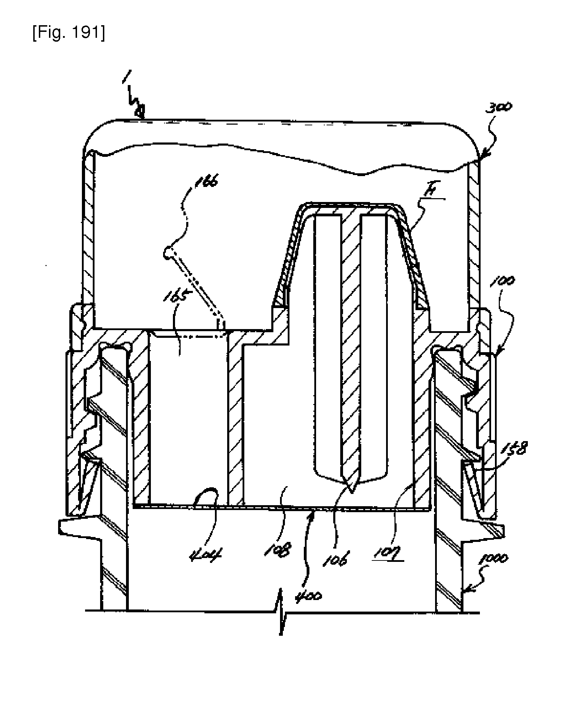

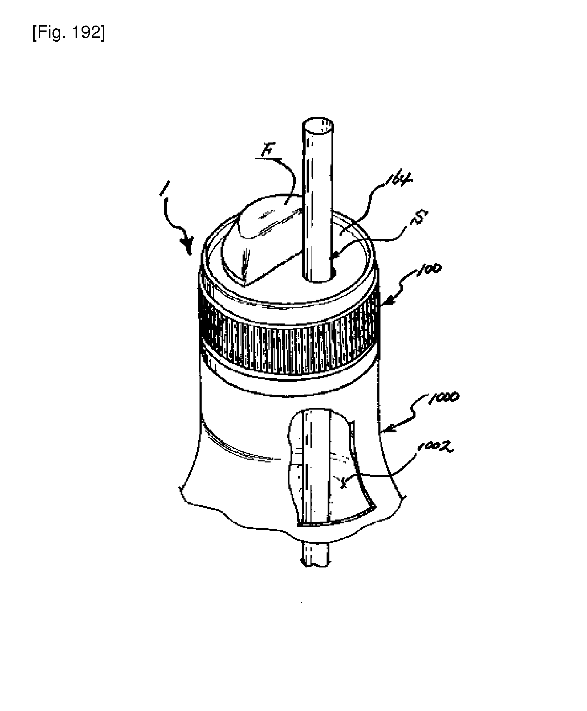

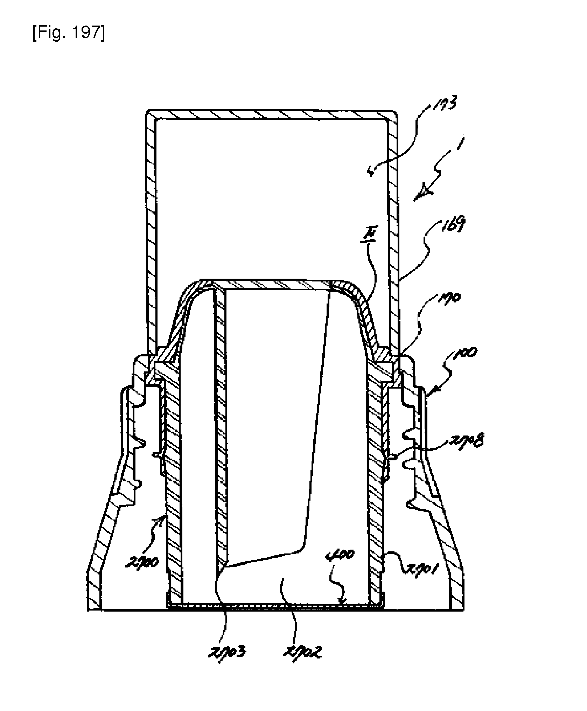

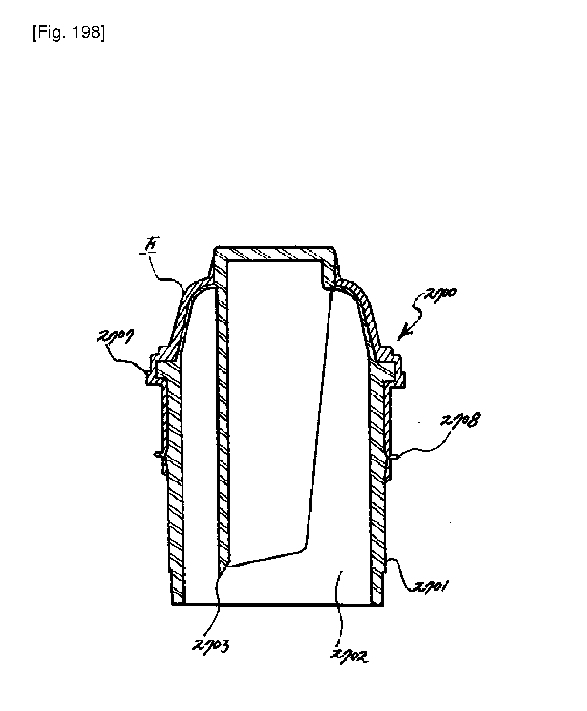

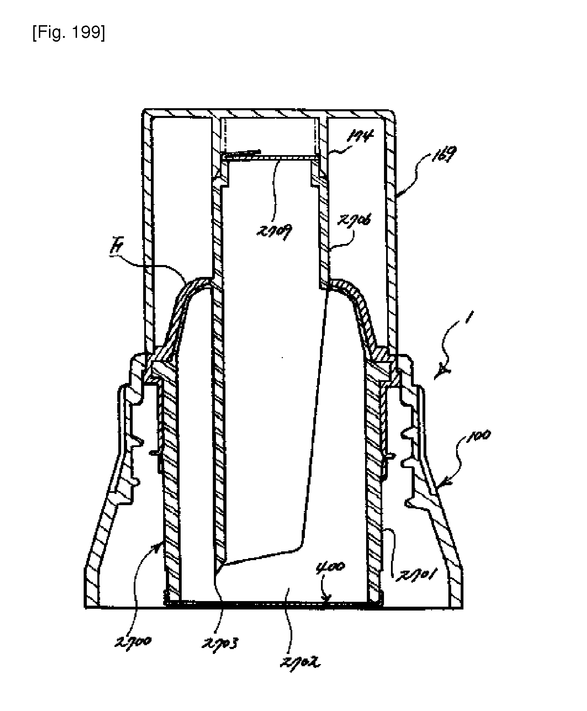

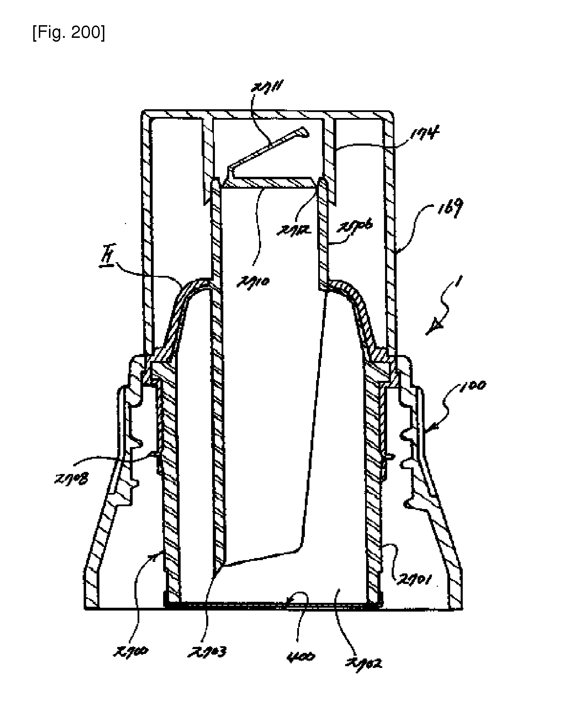

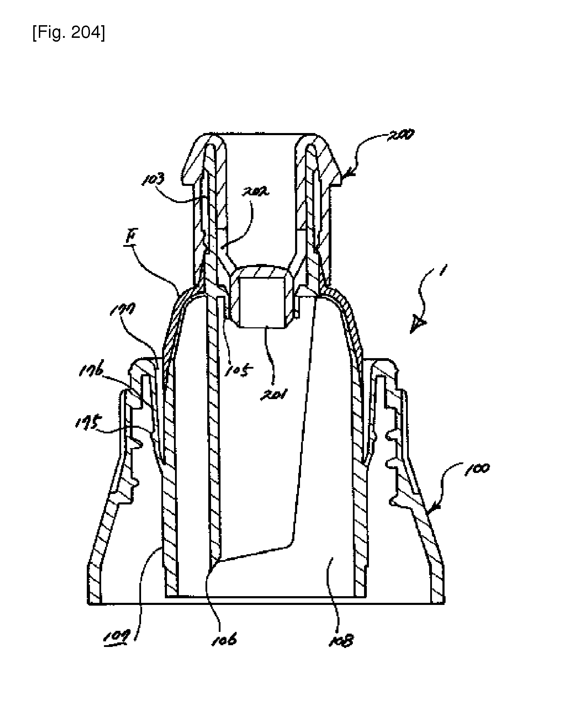

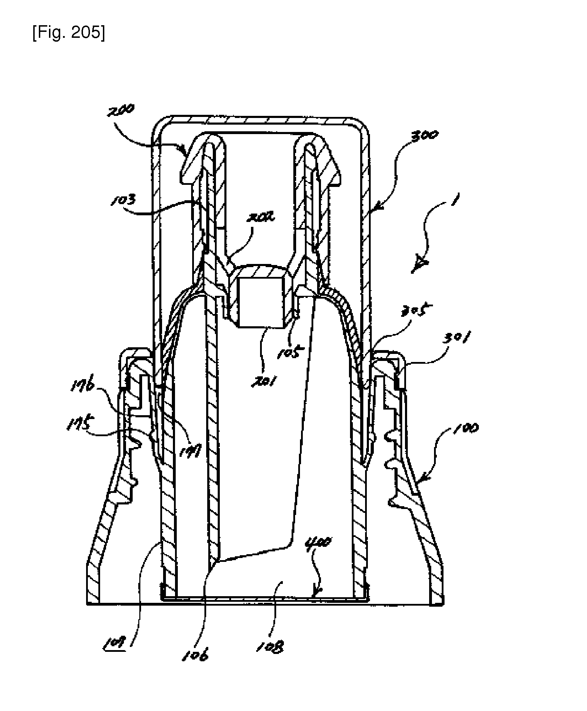

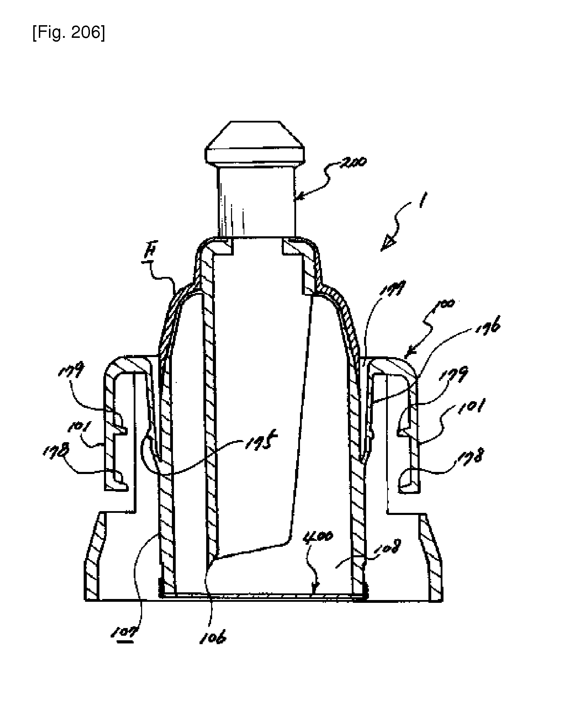

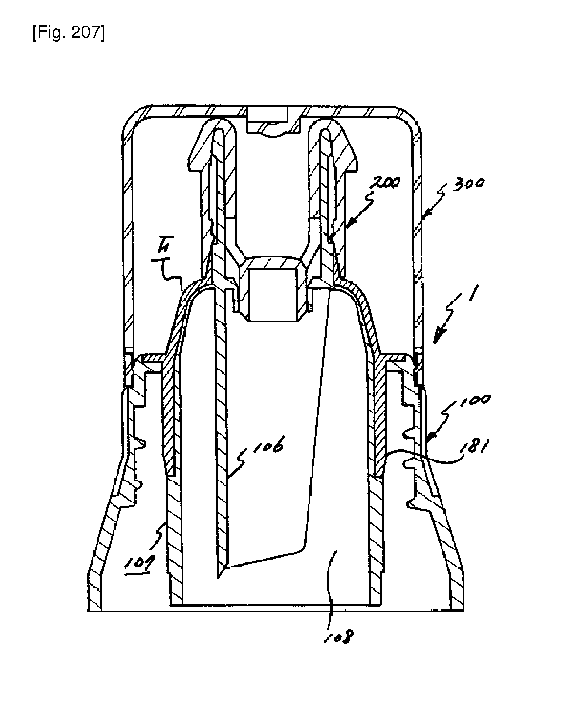

FIGS. 1 to 19 are views illustrating a first embodiment of the present invention, and FIG. 1 is a longitudinal cross-sectional view of a main body,
FIG. 2 is a longitudinal cross-sectional view illustrating a state in which an upper portion of a primarily injection-molded foldable connecting part of the main body is secondarily injection-molded,
FIG. 3 is a view of a state in which a check valve is integrally injection-molded to an inner portion of a sealing corresponding part of the main body,
FIG. 4 is a view of a state in which a sealing stopper is assembled around a main body mouth part of the main body,
FIG. 5 is a view of a state in which heterogeneous materials are being put into a storage space after a cover is assembled with an upper portion of the main body,
FIG. 6 is a view of a state in which an end of an accommodating part is sealed using an accommodating part sealing part after contents are put into the storage space of the main body,
FIG. 7 is a view of a state in which a soft upper part formed of a soft material is disposed on an upper portion of the main body,
FIG. 8 is a perspective view of a completed receiving apparatus, i.e., a perspective view illustrating an example of a change in design of the foldable part and the sealing stopper.
FIGS. 9 and 10 are views illustrating an example of a structure in which the foldable connecting part is connected with respect to the main body mouth part,
FIG. 11 a view illustrating a modified example of a main body of the receiving apparatus,
FIG. 12 is a perspective view of FIG. 11,
FIG. 13 is a longitudinal cross-sectional view of a main part showing an example in which the foldable part is folded,
FIG. 14 is a longitudinal cross-sectional view of a main part in a state where the sealing stopper is being opened,
FIG. 15 is a view of a state in which the accommodating part sealing part is being opened,
FIG. 16 is a longitudinal cross-sectional view of an exemplary example in which a cover coupled to an upper portion of the main body of the receiving apparatus is variously modified.
FIG. 17 is a view of an exemplary example in which the foldable part is widely changed in structure,
FIG. 18 is a longitudinal cross-sectional view of an exemplary example in which the accommodating part defined within the main body is substituted with an assembly type accommodating part,
FIG. 19 is a view of a state in which a sealing surface of the assembly type accommodating part is being opened as shown in FIG. 18.
FIG. 20 is a view of an exemplary example in which the foldable part applied to the upper portion of the main body has various shapes for pressing the foldable part having a protruding dome shape,

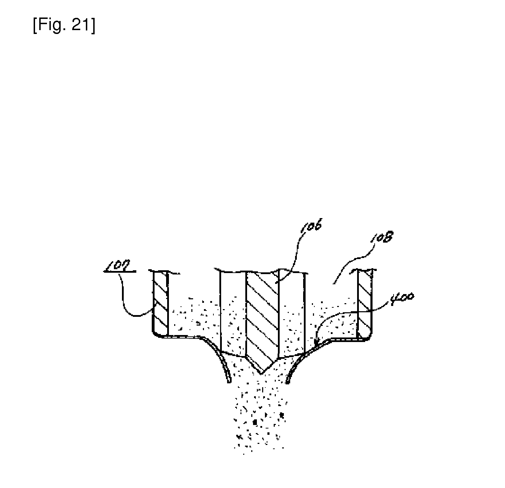

FIG. 21 is a view of a state in which the accommodating part sealing part of the main body of FIG. 20 is opened.
FIGS. 22 to 29 are views of a foldable part according to various embodiments of the present invention, and FIGS. 22 to 24 are perspective views of the foldable part on which various miniatures or characters are displayed,
FIG. 25 is a view of an example in which a transparent window is provided in a central portion of the foldable part,
FIG. 26 is a view of an example in which a cover is coupled to the foldable part,
FIG. 27 is a view of an example in which the foldable part is eccentrically folded,
FIG. 28 is a view of a state in which the foldable part of FIG. 27 is folded,
FIG. 29 is a longitudinal cross-sectional view of a main part in a state where a sealing stopper is disposed on an upper portion of an opening part, and while the opening part pushes the sealing stopper, the opening is being opened.
FIGS. 30 to 46 are views of another embodiment of the present invention, and FIGS. 30 to 32 are longitudinal cross-sectional views of an example in which a check valve or a discharge device (a sealing stopper) having various shapes is provided to a main body mouth part of a main body,
FIGS. 33 to 46 are views illustrating an example of a protective cover coupled around the main body mouth part of the main body, and FIG. 33 is a perspective view of a receiving apparatus to which a protective cover is assembled,
FIG. 34 is a perspective view of the main body,
FIG. 35 is a perspective view of the protective cover,
FIG. 36 is a perspective view illustrating a modified example of the protective cover,
FIG. 37 is a longitudinal cross-sectional view of the receiving apparatus to which the protective cover is assembled with an upper portion of the main body,
FIG. 38 is a view of a state in which a cover's outer shell is removed in the state of FIG. 37,
FIG. 39 is a perspective view of an example in which the receiving apparatus is coupled to a container as shown in FIG. 38,
FIG. 40 is a perspective view of a state in which an upper portion of a cover main body is pushed to mix heterogeneous materials in a space part of the container in the state of FIG. 39,
FIG. 41 is a view of a state in which a cover sealing part is opened in the state of FIG. 40,
FIGS. 42 to 44 are longitudinal cross-sectional views illustrating a slightly modified example of a protective cover, and FIG. 42 is a longitudinal cross-sectional view of the receiving apparatus,
FIG. 43 is a view of a state in which the cover's outer shell is removed in the state of FIG. 42,
FIG. 44 is a view of a state in which a cover main body is pressed in the state of FIG. 43.
FIG. 45 is a view of an example in which the protective cover is coupled to a receiving apparatus including a main body having a modified shape
FIG. 46 is a longitudinal cross-sectional view of the receiving apparatus in which a protective cover is changed in design and coupled to the main body having various shapes.
FIGS. 47 to 54 are views illustrating achievement possibility of various objects through a modified example of the present invention, and FIG. 47 is a longitudinal cross-sectional view of a state in which an openable cover having a hinge (a connecting part) shape is assembled with an upper portion of the main body of the receiving apparatus,
FIG. 48 is a view illustrating a possibility in which the foldable part disposed on the upper portion of the main body is injection-molded in various manners by partially changing a design thereof as necessary,
FIG. 49 is a view illustrating an exemplary configuration of an opened end for opening the accommodating part sealing part,
FIG. 50 is a view illustrating possibility in which the foldable part is folded in one direction,
FIG. 51 is a longitudinal cross-sectional view of a main body in a state where the foldable part of FIG. 50 is folded,
FIGS. 52 and 53 are longitudinal cross-sectional views illustrating a variation of an adhesion section of the accommodating part, and FIG. 52 is a longitudinal cross-sectional view of the receiving apparatus,
FIGS. 53A to 53C are views of a main part showing variously modified examples of an accommodating part adhesion section,
FIG. 54 is a longitudinal cross-sectional view of the receiving apparatus in which an opening part for opening the accommodating part sealing part is substituted with an assembly type opening part,
FIG. 55 to 61 are view of further another embodiment of the present invention, and FIG. 55 is a view illustrating possibility in which a foldable part disposed on an upper portion of a foldable connecting part is coated with a foil or other materials having a barrier property or vacuum-deposited or thermally adheres,
FIG. 56 is a view of a state in which the foldable part formed of a material having a barrier property is thermally bonded to an upper portion of the foldable connecting part of the main body,
FIGS. 57 and 58 are views of a state in which the material having the barrier property is coated, deposited, or bonded to the upper portion of the foldable connecting part,
FIG. 59 is a view of a configuration in which an upper central portion of the main body is recessed, and the foldable part (or the foldable connecting part) is disposed on the recessed portion,
FIG. 60 is a view of an example in which a main body upper sealing part is disposed on an upper portion of the main body of FIG. 59,
FIG. 61 is a view of a state in which the foldable part is coupled to an upper portion of the foldable connecting part in a fitting manner
FIGS. 62 to 71 are views according to further another embodiment of the present invention, and FIG. 62 is a view of an example in which the accommodating part is substituted with an assembly type accommodating part within the main body,
FIG. 63 is a longitudinal cross-sectional view of the assembly type accommodating part in FIG. 62,
FIG. 64 is a longitudinal cross-sectional view of a main part in a state where a sealing surface of the assembly type accommodating part is broken and then opened when the foldable part of FIG. 62 is pressed.
FIG. 65 is a longitudinal cross-sectional view of a state in which an upper foldable pressing surface of the foldable part protrudes,
FIG. 66 is a view of an example in which a main body mouth part for injecting is disposed on an upper portion of the foldable part,
FIG. 67 is a longitudinal cross-sectional view of one application example of the assembly type accommodating part,
FIG. 68 is a view illustrating a modified example of the assembly type accommodating part,
FIG. 69 is a longitudinal cross-sectional view of a main part in a state where a sealing surface is opened by a cutoff protrusion piece in FIG. 68,
FIG. 70 is a longitudinal cross-sectional view of the modified assembly type accommodating part and a receiving apparatus including the assembly type accommodating part having a different structure,
FIG. 71 a longitudinal cross-sectional view of a main part in a state where an opening end is opened in FIG. 70.
FIGS. 72 to 75 are views of an example in which an assembly type opening end or an insertion type accommodating part is coupled to the inside of the main body according to the present invention, and FIG. 72 is a longitudinal cross-sectional view of a receiving apparatus,
FIG. 73 is a view of a state in which the accommodating part sealing part is opened by the assembly type opening end,
FIG. 74 is a longitudinal cross-sectional view of a receiving apparatus according to another embodiment,
FIG. 75 is a view of a state in which a lower sealing part is opened by the insertion type accommodating part in FIG. 74.
FIGS. 76 to 95 are longitudinal cross-sectional views of an application state in which an operable sealing stopper and a rotational operable cover are coupled to the upper portion of the main body, and FIG. 76 is a longitudinal cross-sectional view of a receiving apparatus,
FIG. 77 is a longitudinal cross-sectional view of a main part in a state where the foldable part is folded downward when the operable sealing stopper is rotated,
FIG. 78 is a view of a state in which a sanitary cover is added,
FIG. 79 is a view illustrating a modified example of the operable sealing stopper,
FIG. 80 is a view of a state in which the assembly type opening end is coupled to the inside of the main body of the receiving apparatus,
FIG. 81 is a view of a state in which the accommodating part sealing part is opened by the assembly type opening end,
FIG. 82 is a view illustrating an another modified example of the operable sealing stopper,
FIG. 83 is a longitudinal cross-sectional view of a main part in a state where the foldable part is folded while the main body mouth part descends in FIG. 82.
FIGS, 84 and 85 are views of an example in which the assembly type accommodating part is coupled to the inside of the main body,
FIGS. 86 and 87 are views of an example in which a main body mouth part moves upward, and the foldable part is spread upward to break the accommodating part sealing part of the accommodating part when the operable sealing stopper operates,
FIG. 88 is a view of a state in which the rotational operable cover is coupled to the upper portion of the main body,
FIG. 89 is a view of a state in which a material having a barrier property is added to an upper portion of a foldable connecting part,
FIG. 90 is a view of a state in which an inner sealing part is added to the inside the rotational operable cover to improve the barrier property,
FIG. 91 is a view of a state in which the foldable connecting part is folded by a foldable part spacing part.
FIG. 92 is a view of an example designed so that the foldable part moves upward, and a storage space is opened when the rotational operable cover is rotated, and FIG. 92 is a longitudinal cross-sectional view of a receiving apparatus,
FIG. 93 is a longitudinal cross-sectional view of a main part in a state where the receiving apparatus of FIG. 92 operates.
FIG. 94 is a longitudinal cross-sectional view of a state in which an inner sealing part is added to the main body of the receiving apparatus,
FIG. 95 is a view of an example designed so that the storage space is opened while being further coupled to the main body when the rotational operable cover is rotated.
FIGS. 96 to 105 are views of further another modified example of the receiving apparatus, and FIG. 96 is a view of an example in which the receiving apparatus is assembled with a container, and then a contraction film is encapsulated to improve the safety of a product,
FIG. 97 is a view of a state in which the receiving apparatus having a cup shape is coupled to a container,
FIGS. 98 and 99 are views of an example in which the receiving apparatus is manufactured in the cup shape,
FIG. 100 is a view of a state in which a main body accommodating part sealing surface is being opened by a cover opening part in FIG. 99,
FIG. 101 is a longitudinal cross-sectional view of an example in which the receiving apparatus is changed in design to have a cup shape,
FIGS. 102 and 103 are views perspective view of the receiving apparatus having the cup shape,
FIG. 104 is a view illustrating a use example of the receiving apparatus,
FIG. 105 is a view of an example in which a film adhesion surface is provided to the receiving apparatus so that a pouch container is applicable.
FIGS. 106 and 107 are views of an example in which the receiving apparatus is coupled to the container through an external metallic packaging formed of aluminum or the like, and FIG. 106 is a longitudinal cross-sectional view of the receiving apparatus,
FIG. 107 is a front view of a state in which the receiving apparatus is coupled to a container neck.
FIGS. 108 to 125 are views of an example in which a plurality of storage spaces are defined within the receiving apparatus, and FIG. 108 is a longitudinal cross-sectional view of the receiving apparatus,

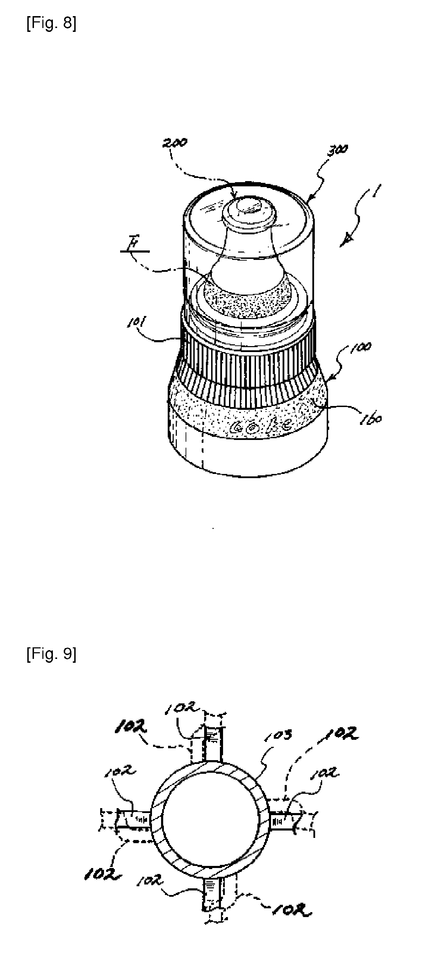

FIG. 9 is a longitudinal cross-sectional view of a main part in a state where the plurality of storage spaces within the main body of the receiving apparatus are being opened,

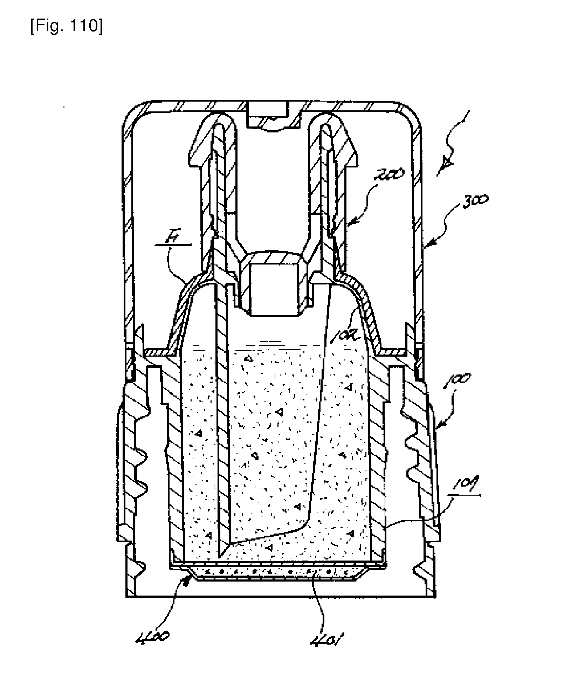

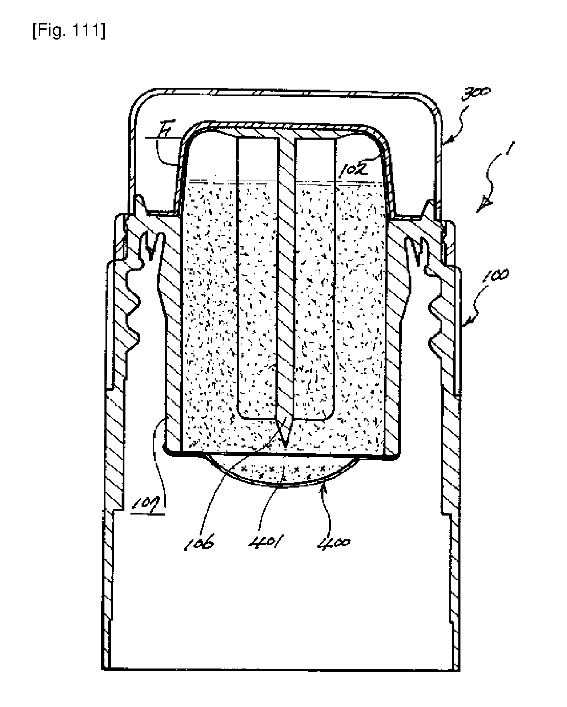

FIGS. 110 and 111 are longitudinal cross-sectional views of a receiving apparatus according to another embodiment of the present invention,

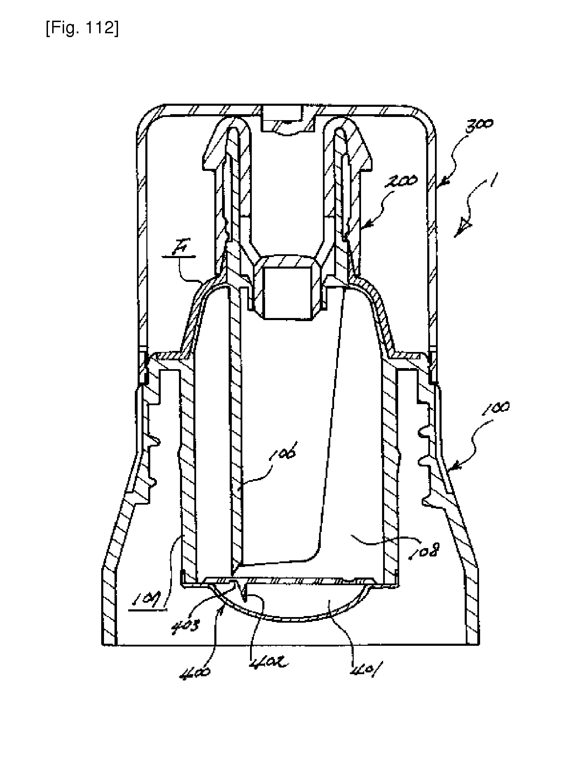

FIG. 112 is a longitudinal cross-sectional view of a receiving apparatus according to further another embodiment of the present invention,

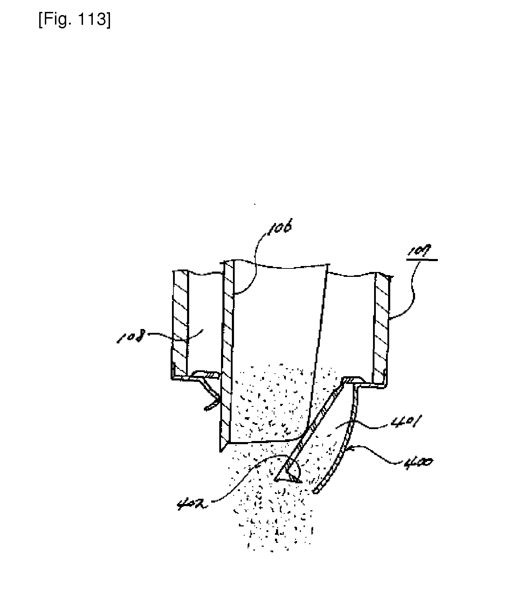

FIG. 113 is a longitudinal cross-sectional view of a main part in a state where a plurality of storage spaces within a main body of the receiving apparatus of FIG. 112 is opened.

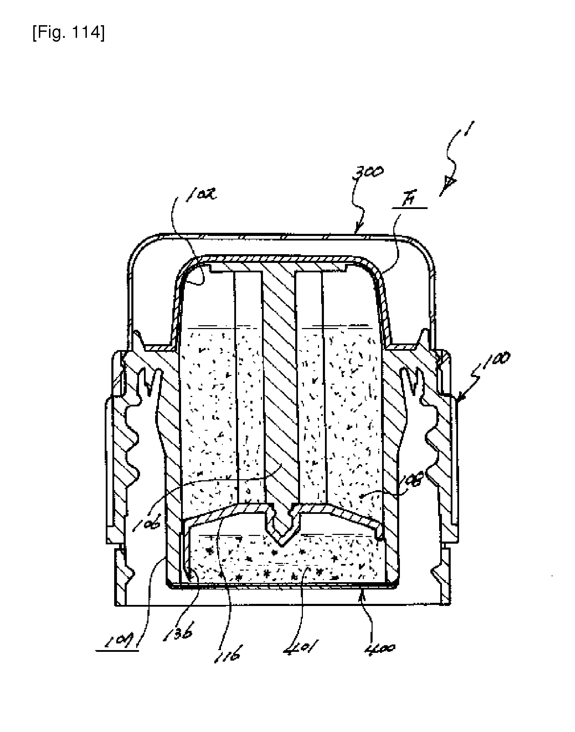

FIG. 114 is a longitudinal cross-sectional view of a receiving apparatus according to further another embodiment of the present invention,

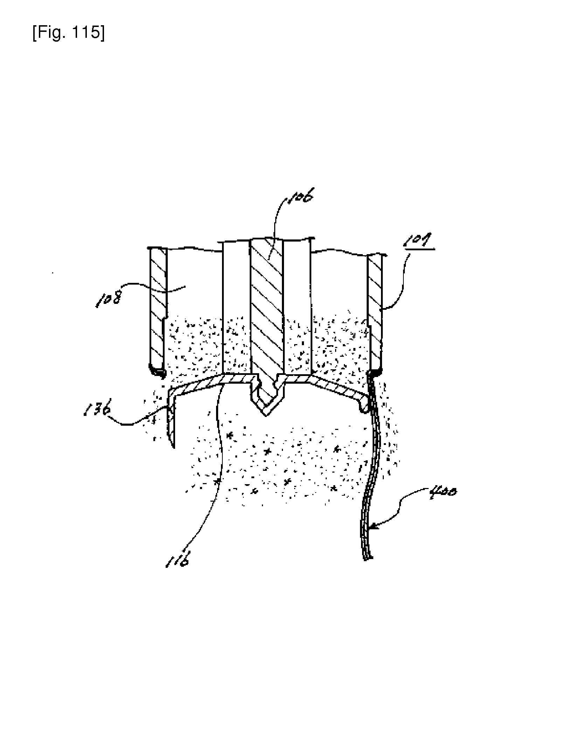

FIG. 115 is a longitudinal cross-sectional view of a main part in a state where a plurality of storage spaces within the receiving apparatus of FIG. 114 is being opened,

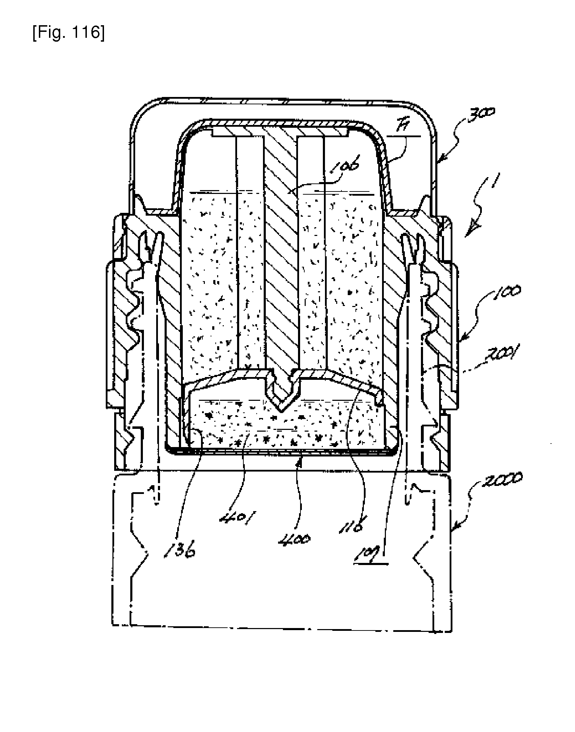

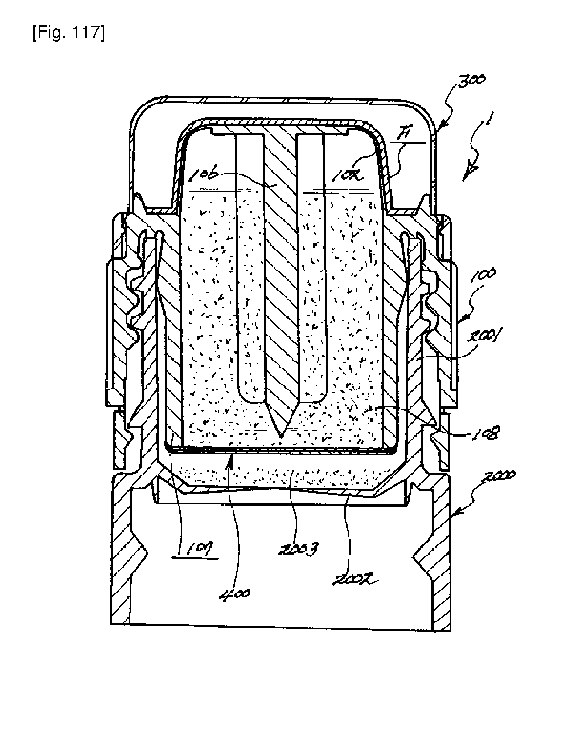

FIGS. 116 and 117 are longitudinal cross-sectional views of a receiving apparatus according to further another embodiment of the present invention,

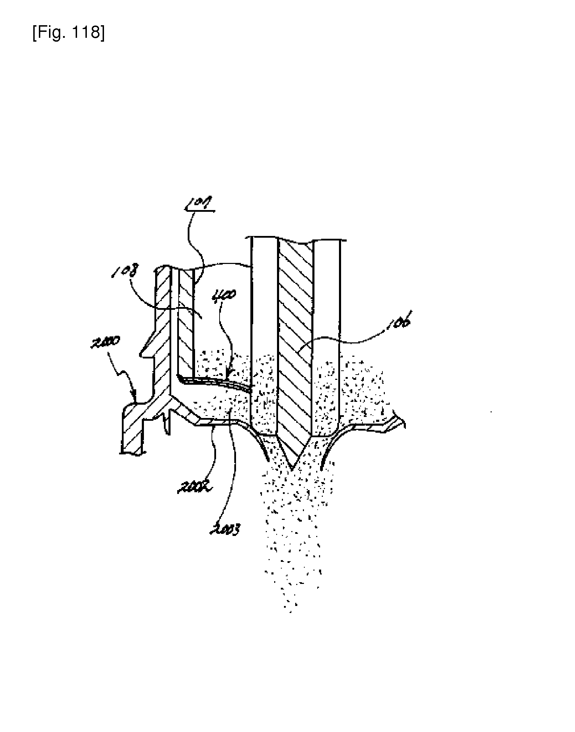

FIG. 118 is a longitudinal cross-sectional view of a main part in a state where a plurality of storage spaces within the receiving apparatus of FIG. 117 is being opened.

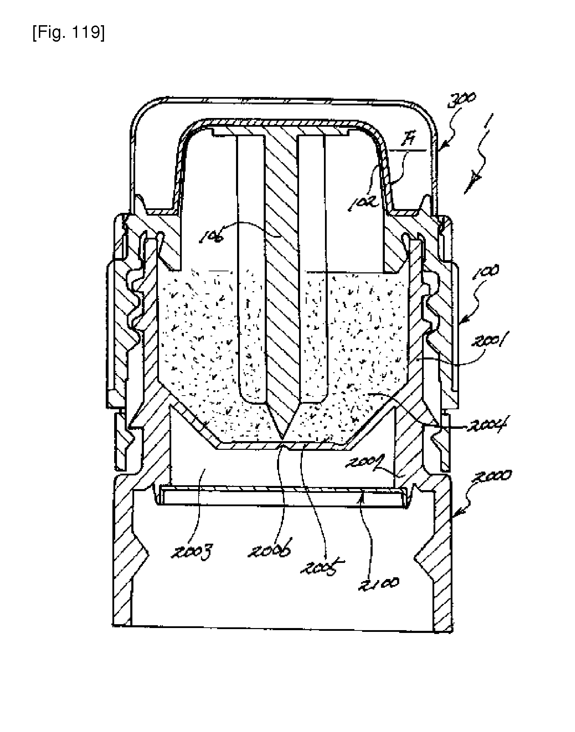

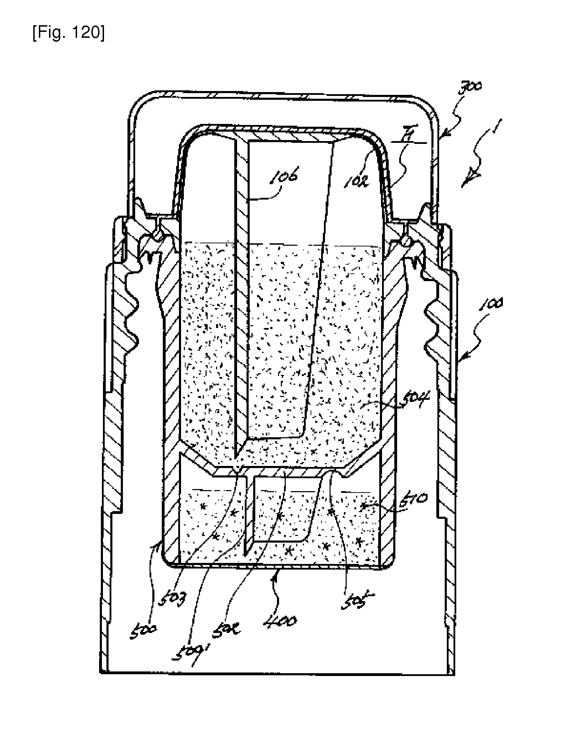

FIGS. 119 and 120 are views of a receiving apparatus according to further another embodiment of the present invention,

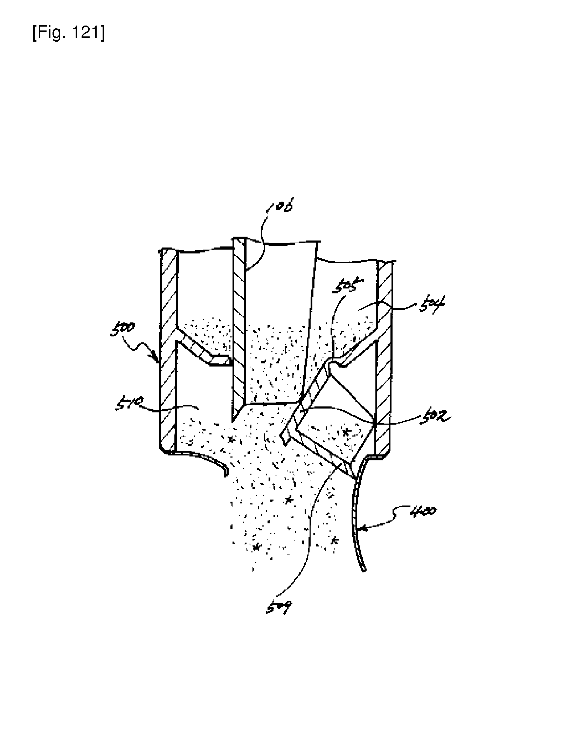

FIG. 121 is a longitudinal cross-sectional view of a main part in a state where a plurality of storage spaces within the receiving apparatus of FIG. 120 is being opened.

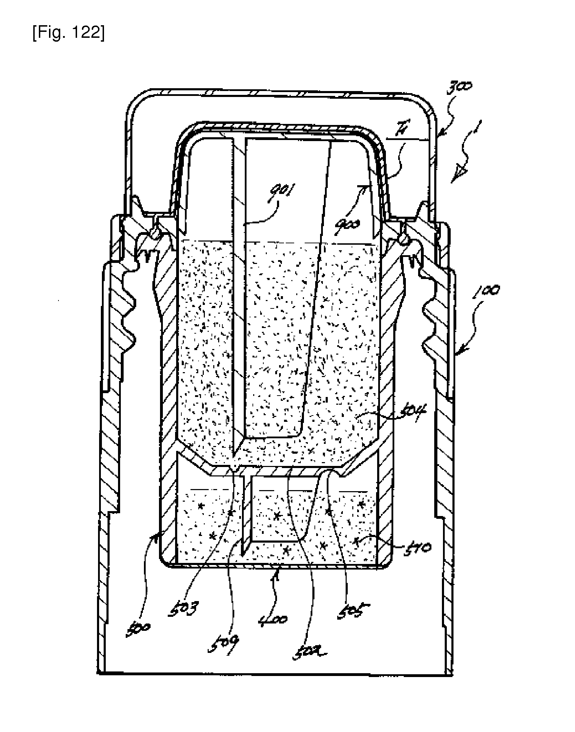

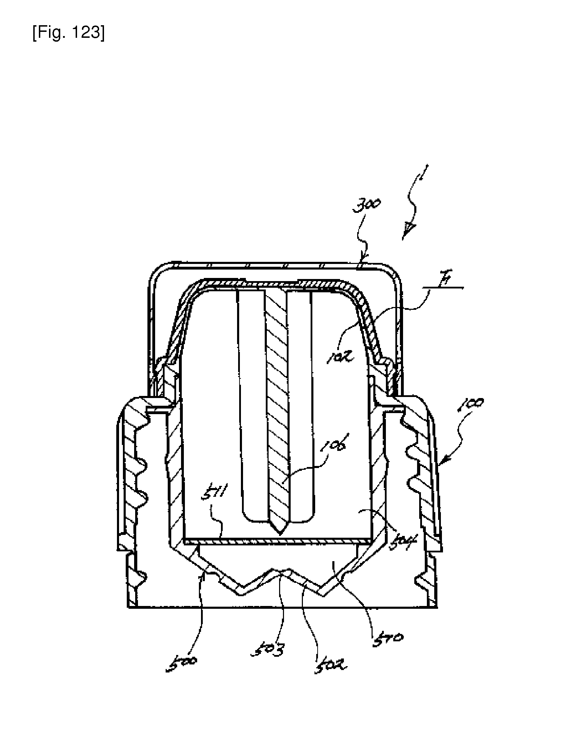

FIGS. 122 and 123 are longitudinal cross-sectional views of a receiving apparatus according to further another embodiment of the present invention,

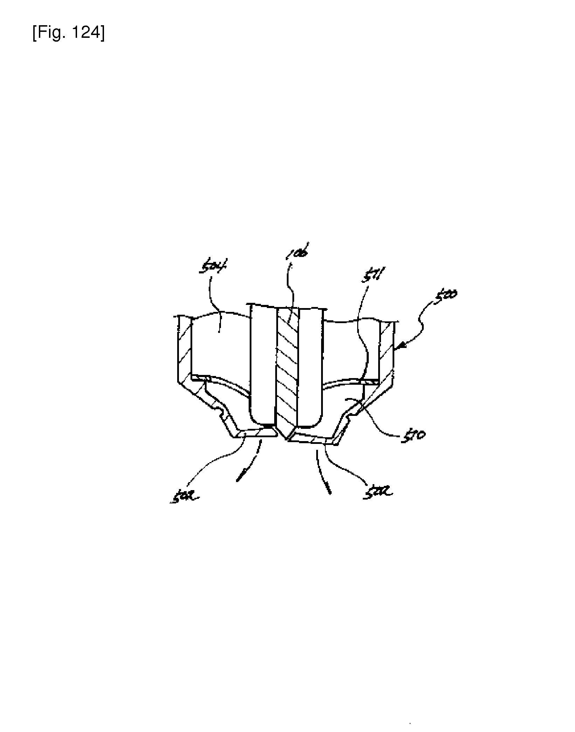

FIG. 124 is a longitudinal cross-sectional view of a main part in a state where a plurality of storage spaces within the receiving apparatus of FIG. 123 is opened.

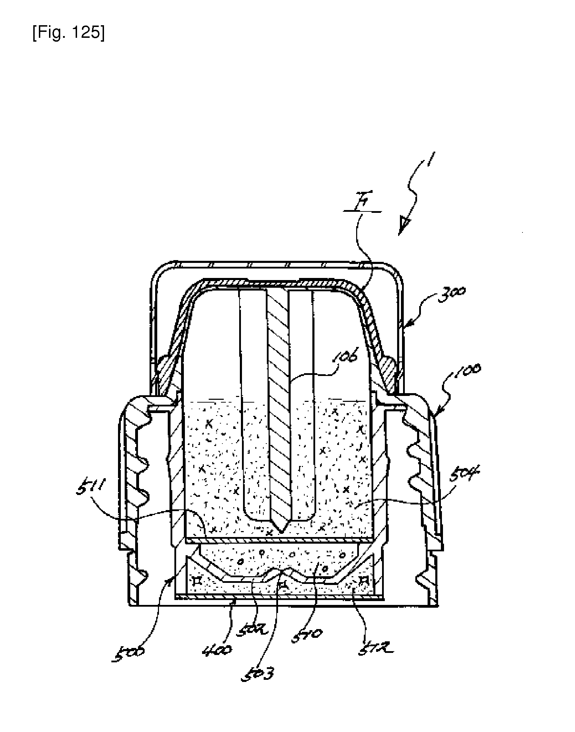

FIG. 125 is a longitudinal cross-sectional view of a receiving apparatus according to further another embodiment of the present invention,

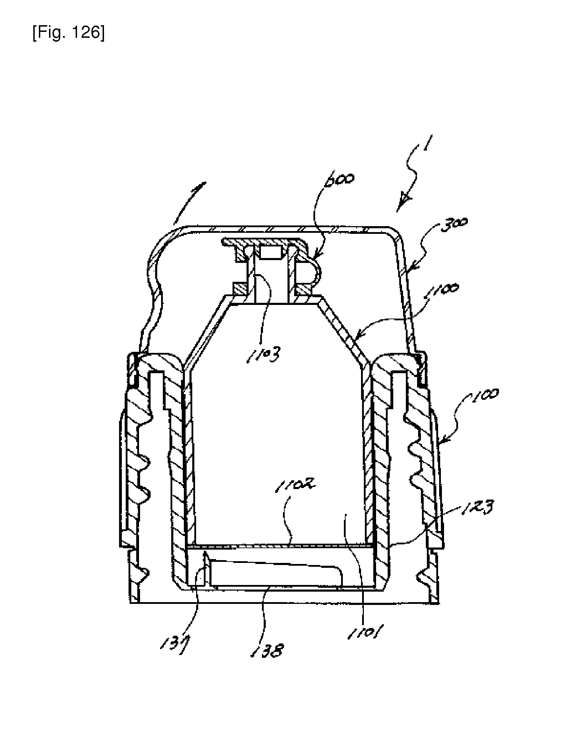

FIGS. 126 to 128 are views of a state in which an insertion type accommodating part is coupled to the inside of the main body, and FIG. 126 is a longitudinal cross-sectional view of the receiving apparatus,

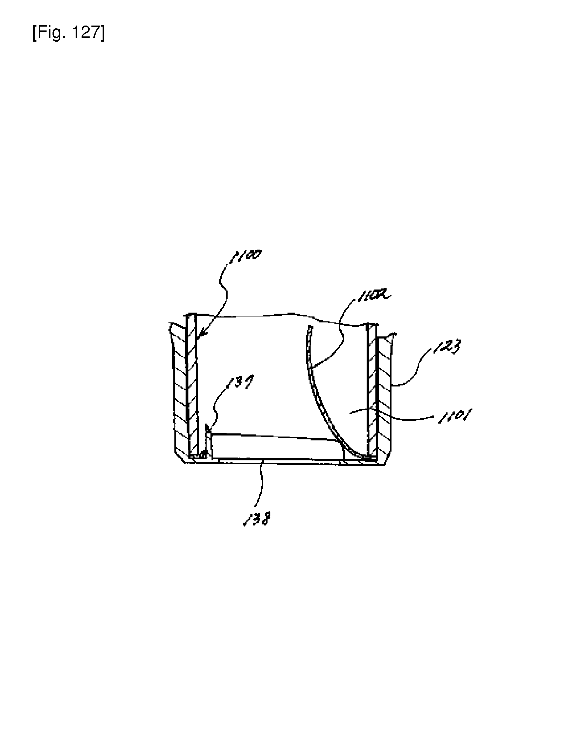

FIG. 127 is a view of a state in which a lower sealing part of the receiving apparatus of FIG. 126 is being opened,

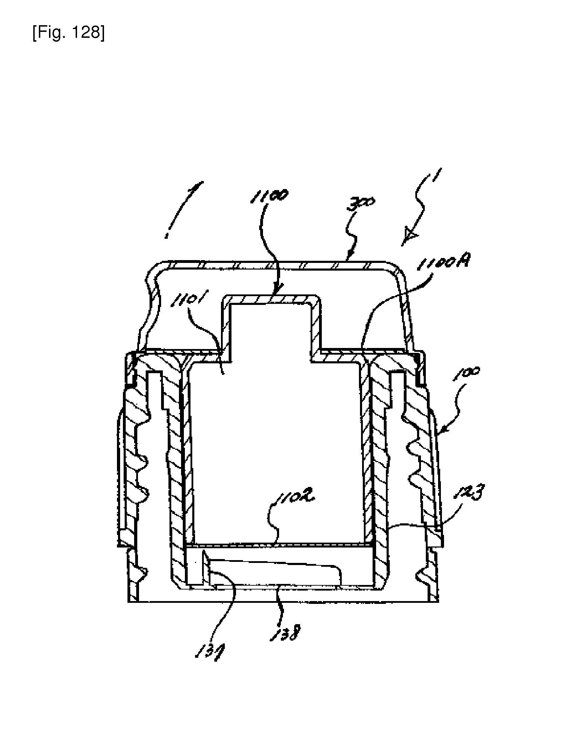

FIG. 128 is a longitudinal cross-sectional view of a receiving apparatus according to further another embodiment of the present invention.

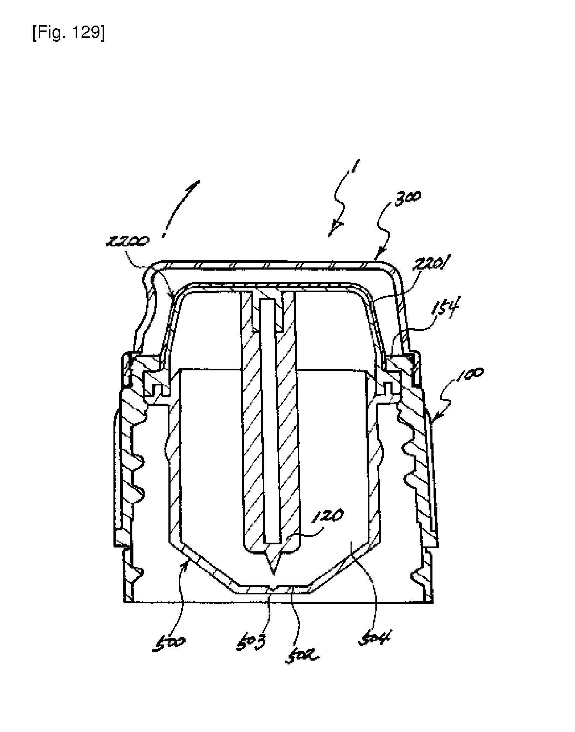

FIGS. 129 to 137 are views of an example in which an assembly type foldable part is provided to the main body in various manners, and FIGS. 129 to 134 are longitudinal cross-sectional views of the receiving apparatus,

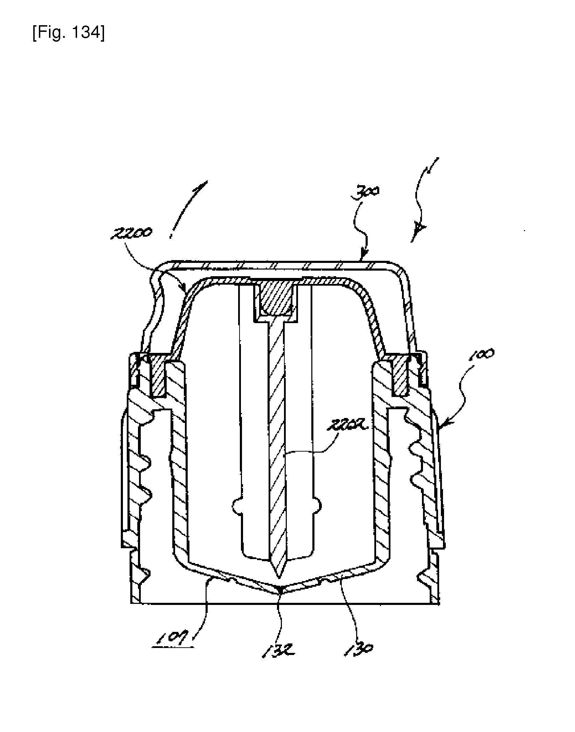

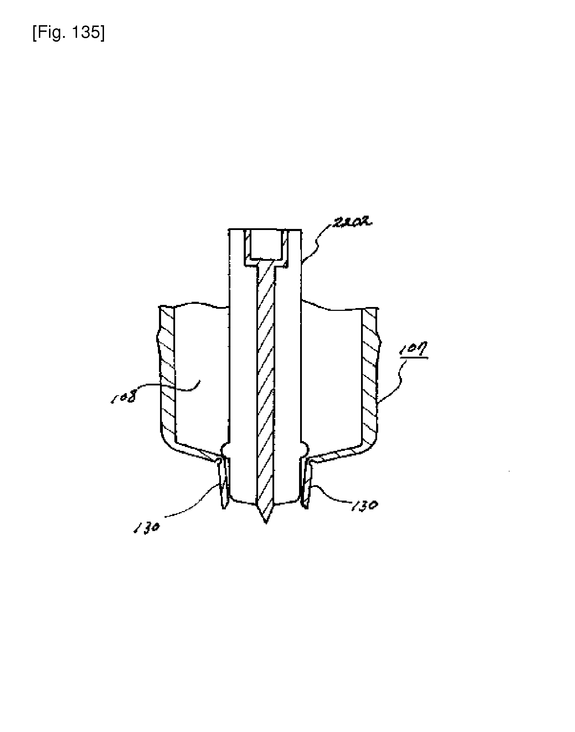

FIG. 135 is a longitudinal cross-sectional view of a main part showing a use state of the receiving apparatus of FIG. 134,

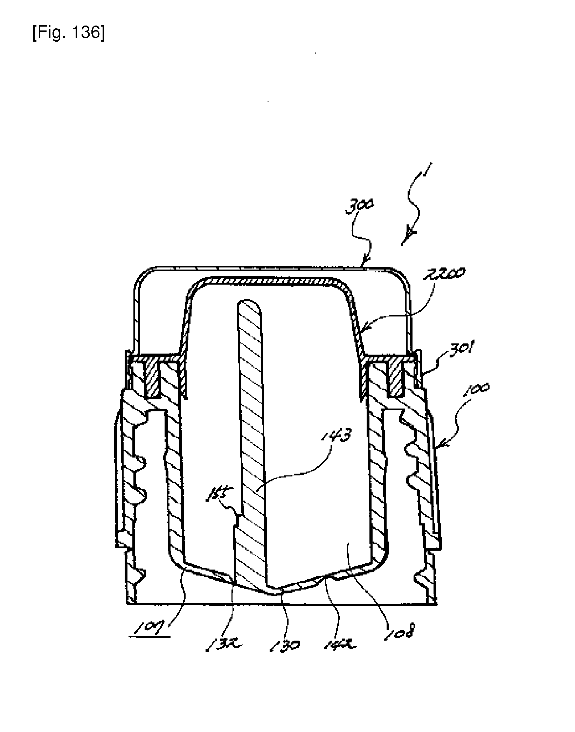

FIG. 136 is a longitudinal cross-sectional view of a receiving apparatus according to further another embodiment of the present invention,

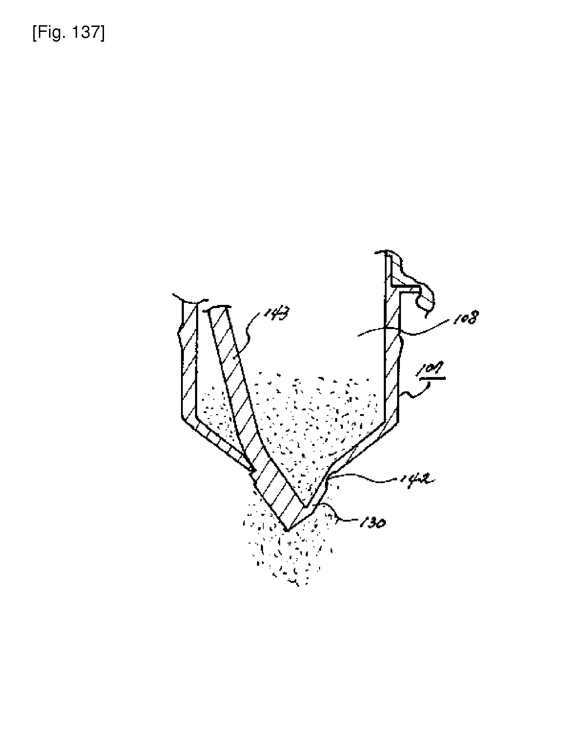

FIG. 137 is a longitudinal cross-sectional view of a main part showing a use state in FIG. 136,

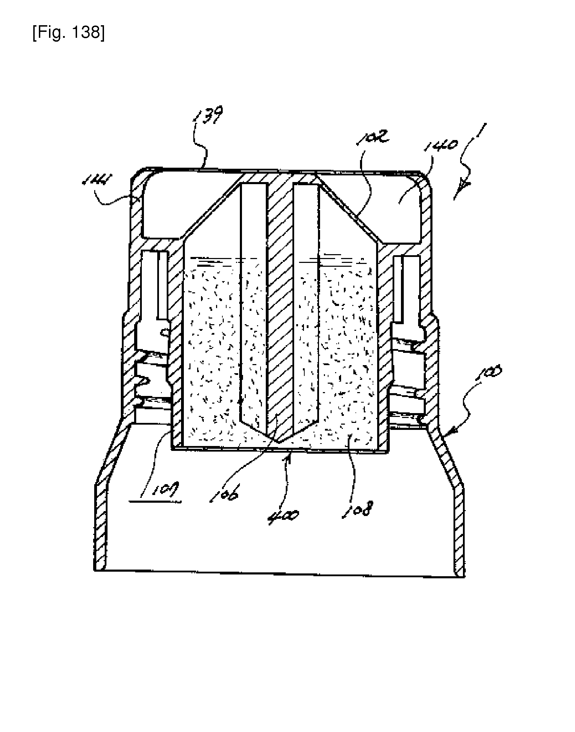

FIGS. 138 to 143 are views of various examples in which a material having a barrier property is added to an upper portion of a foldable connecting part.

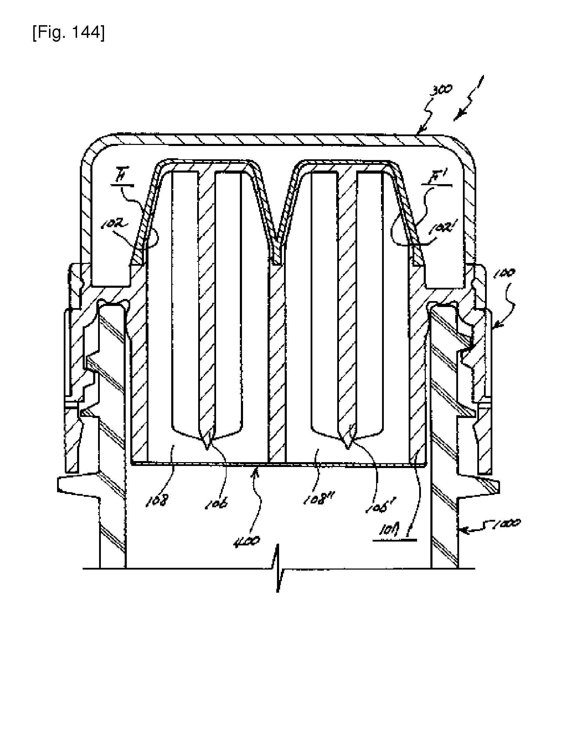

FIGS. 144 to 153 are views according to further another embodiment of the present invention, particularly, a receiving apparatus having a plurality of functions, and FIG. 144 is a view of an example in which the receiving apparatus having a plurality of storage spaces is coupled to a container neck,

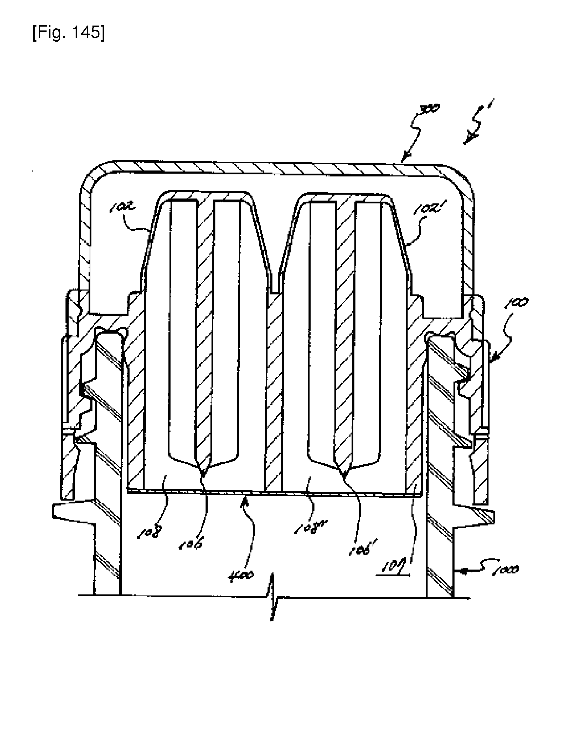

FIG. 145 is a longitudinal cross-sectional view of a state in which a receiving apparatus having a different shape and including a plurality of storage spaces is coupled to a container neck,

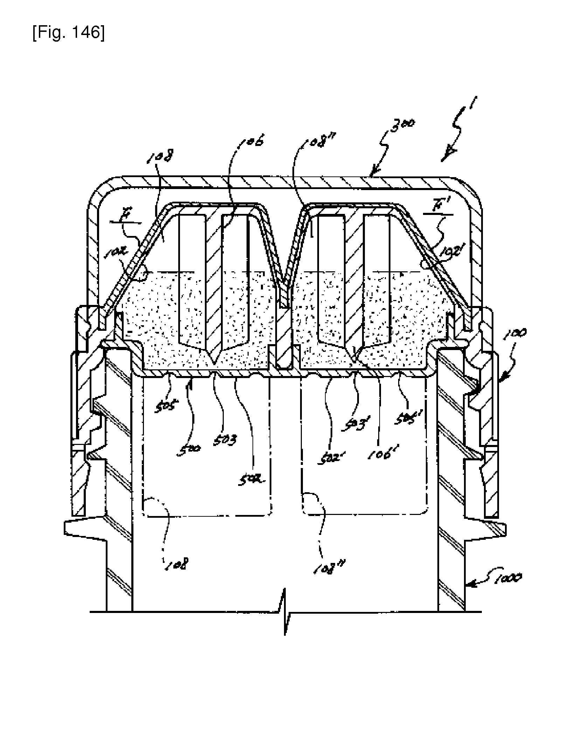

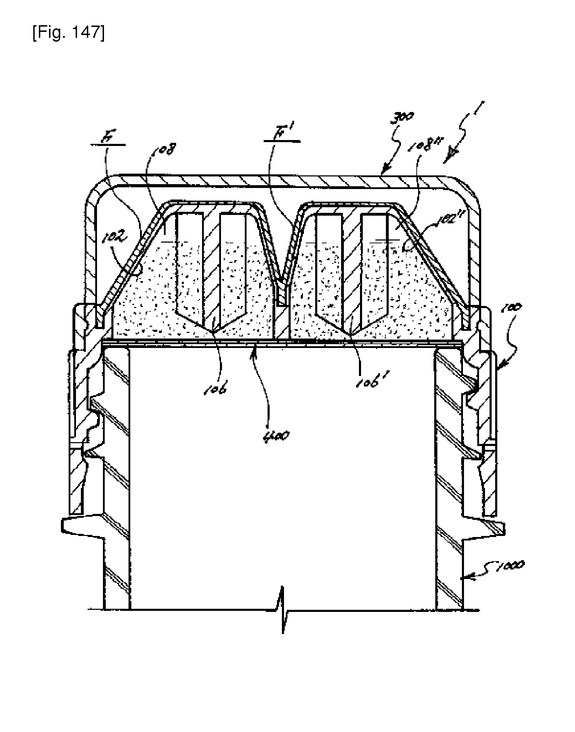

FIGS. 146 and 147 are longitudinal cross-sectional views of a receiving apparatus having a plurality of storage spaces according to further another embodiment of the present invention.

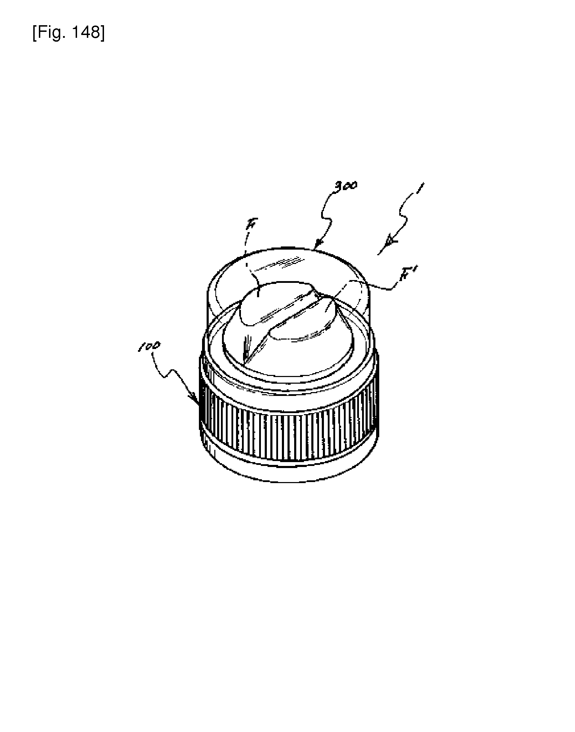

FIG. 148 is a perspective view illustrating an example of the receiving apparatus having the plurality of storage spaces,

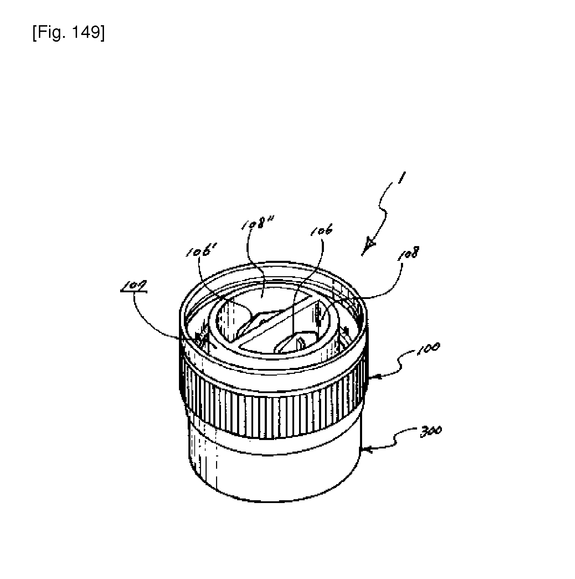

FIG. 149 is a view of an accommodating part of the receiving apparatus, in which heterogeneous materials are put, and particularly, a bottom perspective view illustrating a state of the storage space of the accommodating part,

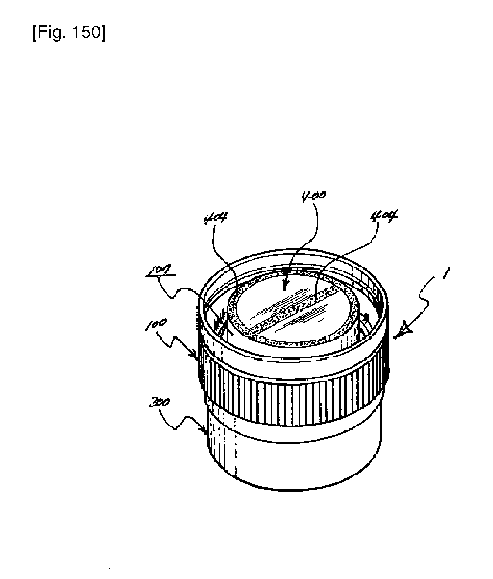

FIG. 150 is a view of a state in which a lower end of the accommodating part is sealed by using an aluminum seal member in a thermal adhesion manner,

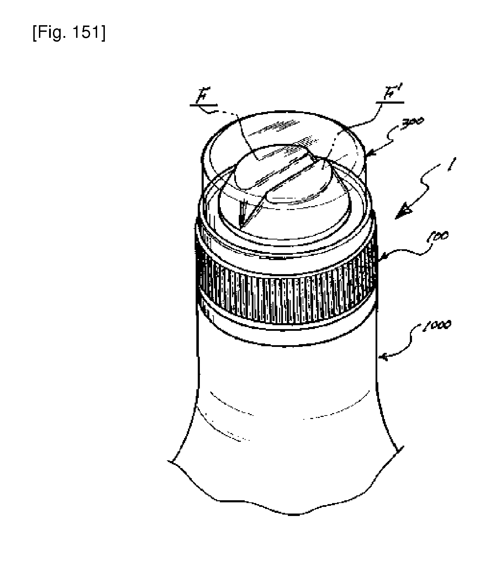

FIG. 151 is a view of a state in which the completed receiving apparatus is coupled to a container neck,

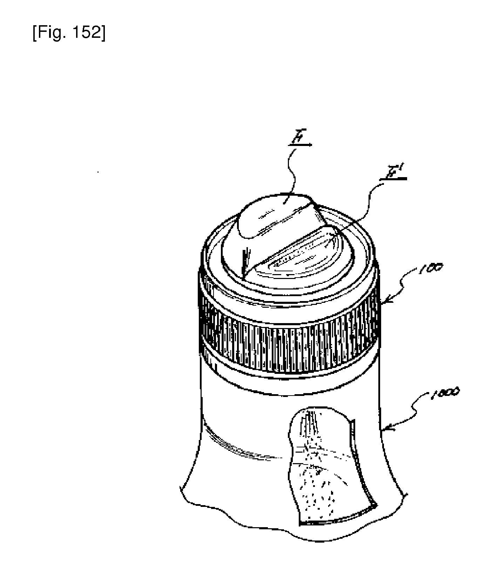

FIG. 152 is a view of a state in which any portion of the foldable part of the receiving apparatus is pressed in the state of FIG. 151 to allow heterogeneous materials within the storage space to drop into a container space part within a container, thereby mixing the heterogeneous materials,

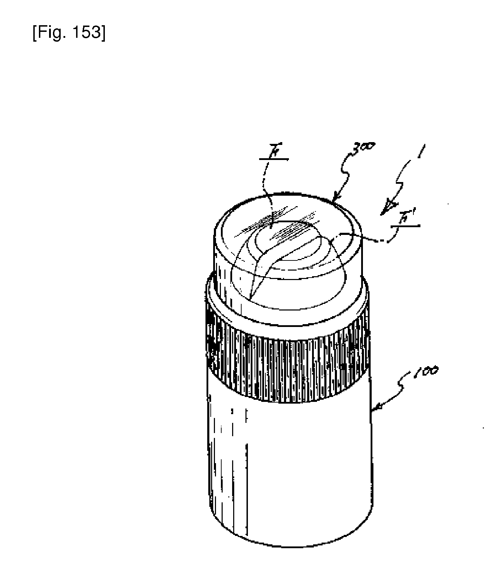

FIG. 153 is a perspective view of an example in which the receiving apparatus is variously changed in design of a main body, as shown in FIG. 153, wherein the main body is capable of being elongated.

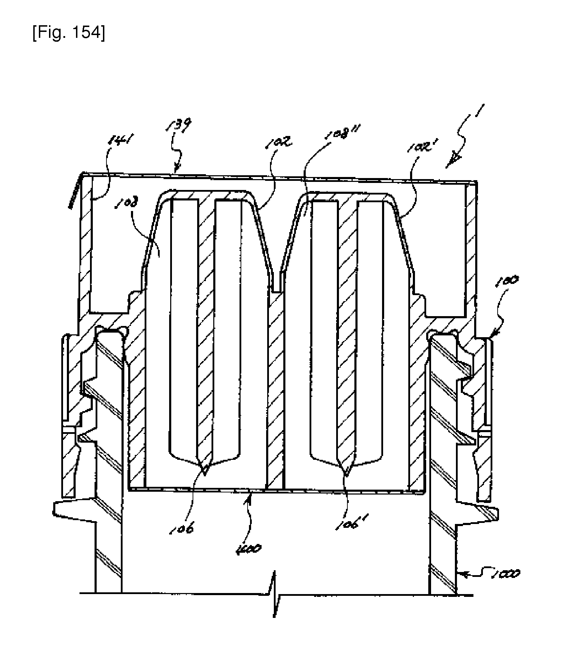

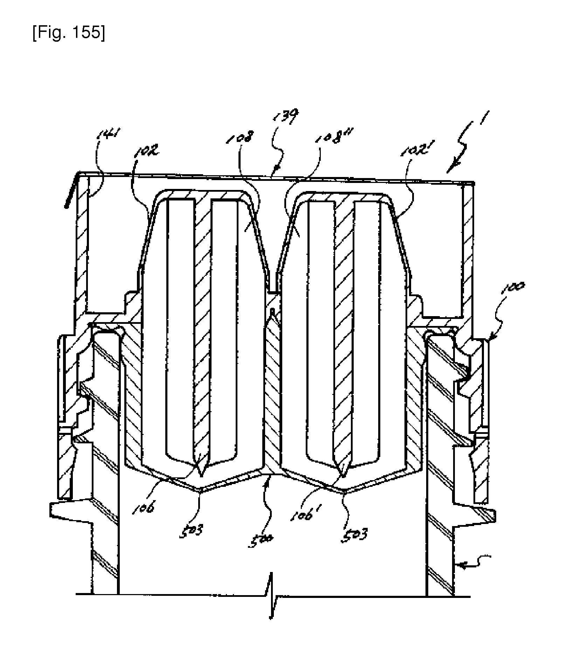

FIGS. 154 and 155 are views according to further another embodiment of the present invention, and illustrate a receiving apparatus having a plurality of storage spaces and a state in which an upper portion of a foldable connecting part is sealed by a main body upper sealing part to improve a gas barrier property of the upper foldable connecting part of the receiving apparatus.

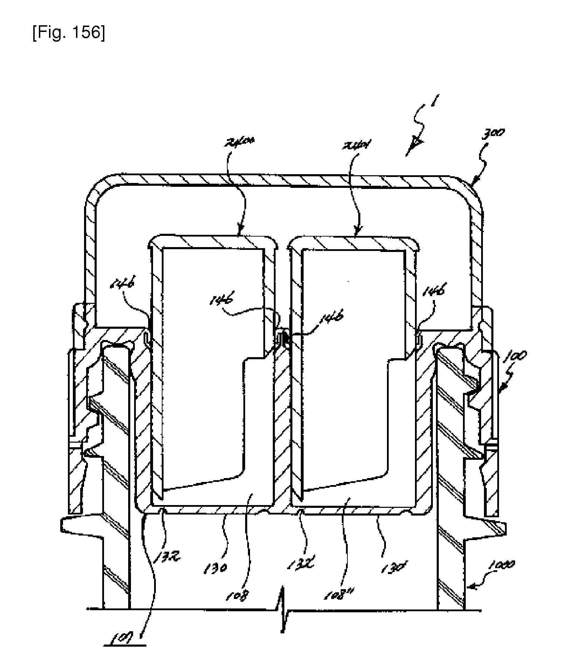

FIGS. 156 to 160 are views of a state in which a plurality of press type assembly accommodating parts is coupled to the inside of the main body of the receiving apparatus, for example, FIGS. 156 to 159 are longitudinal cross-sectional views of an example in which the receiving apparatus is coupled to a container neck,

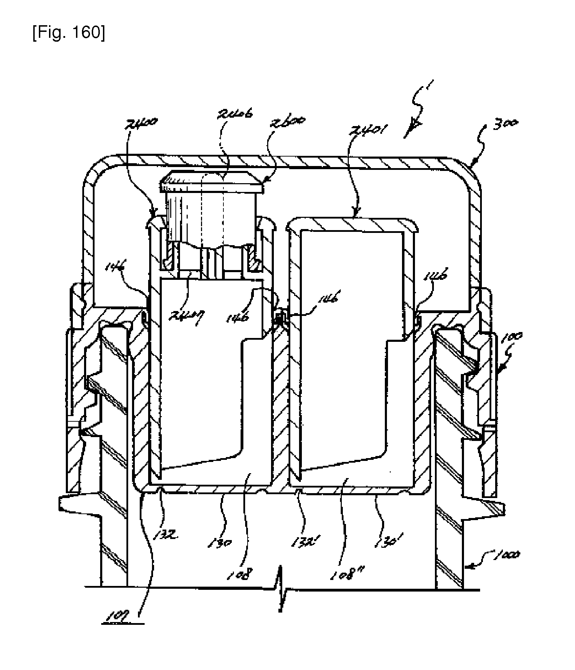

FIG. 160 is a view of a state in which the sealing stopper that is a discharge unit for discharging mixed contents is added to a portion of an upper portion of the press type assembly accommodating part.

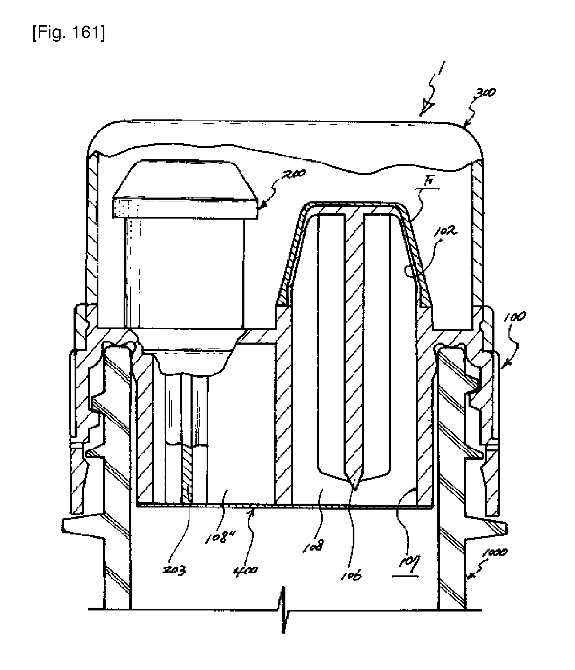

FIGS. 161 to 168 are views of the discharge unit for discharging the mixed contents together with a storage space is provided in an upper portion of the main body of the receiving apparatus according to the present invention, and FIG. 161 is a longitudinal cross-sectional view of a state in which the sealing stopper is installed on a side of the storage space,

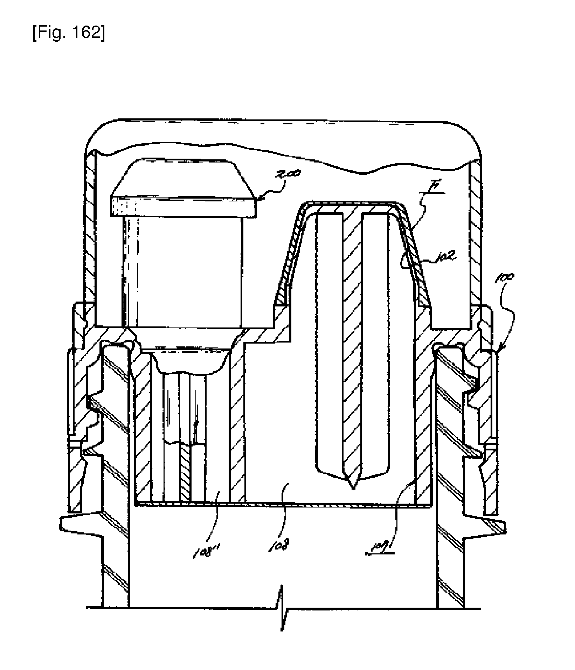

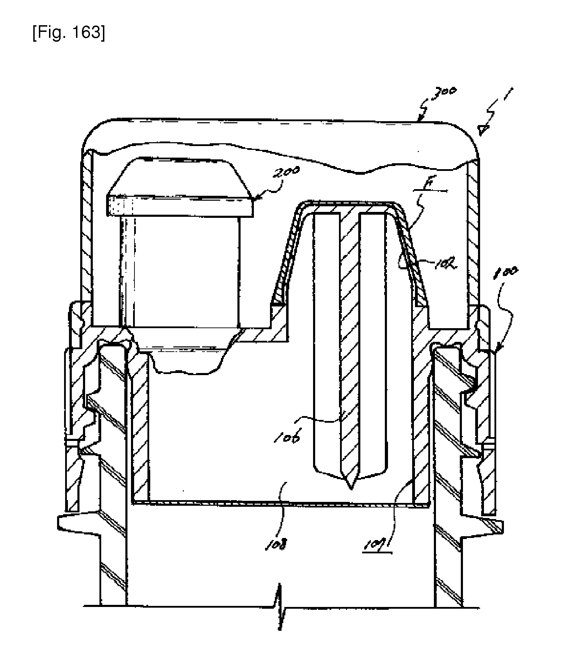

FIGS. 162 and 163 are longitudinal cross-sectional views of a state in which a receiving apparatus that is changed in design as necessary is coupled to the container neck,

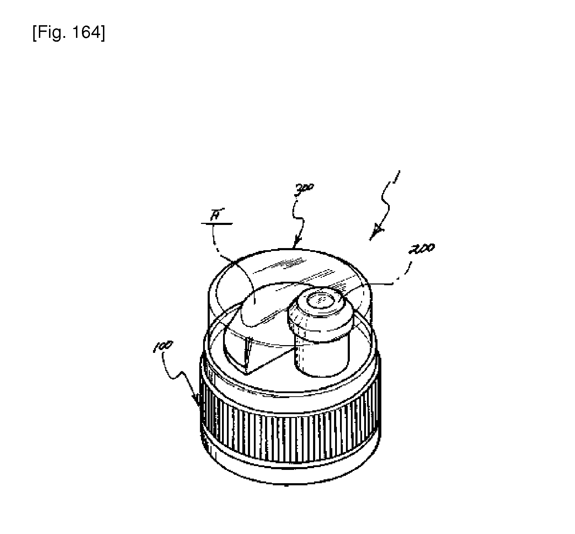

FIG. 164 is a perspective view of the receiving apparatus including the storage space and the sealing stopper,

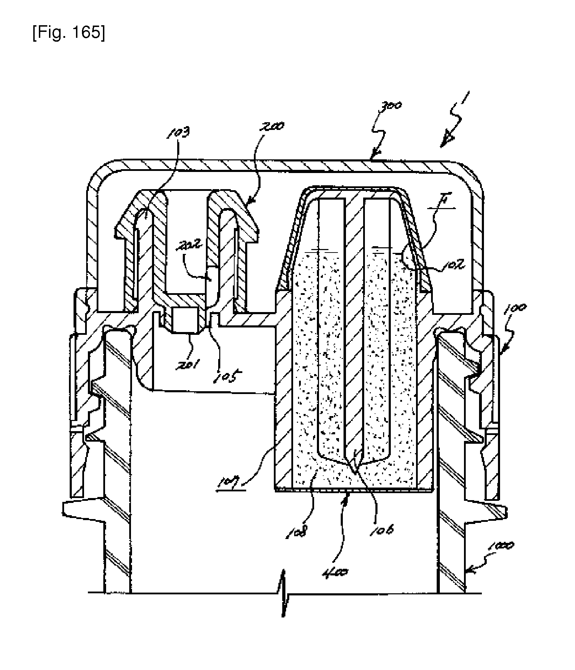

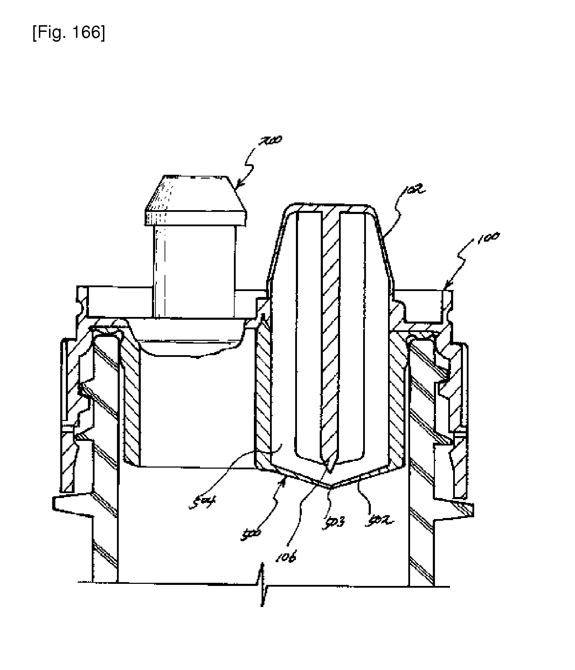

FIGS. 165 and 166 are views illustrating another example of the receiving apparatus,

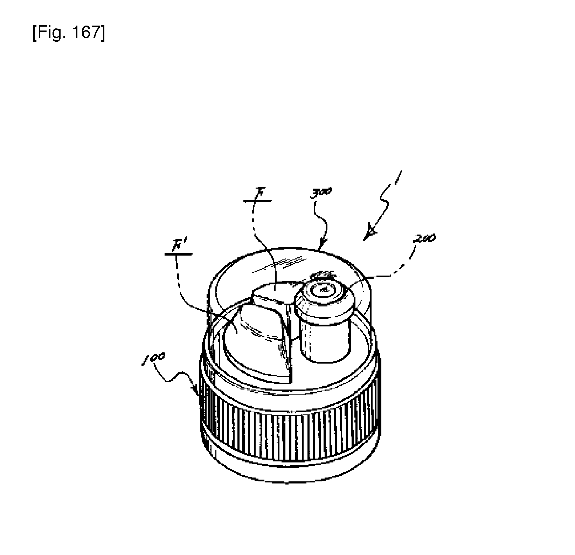

FIG. 167 is a perspective view of the receiving apparatus in a state where the sealing stopper is installed on a side of the plurality of storage spaces,

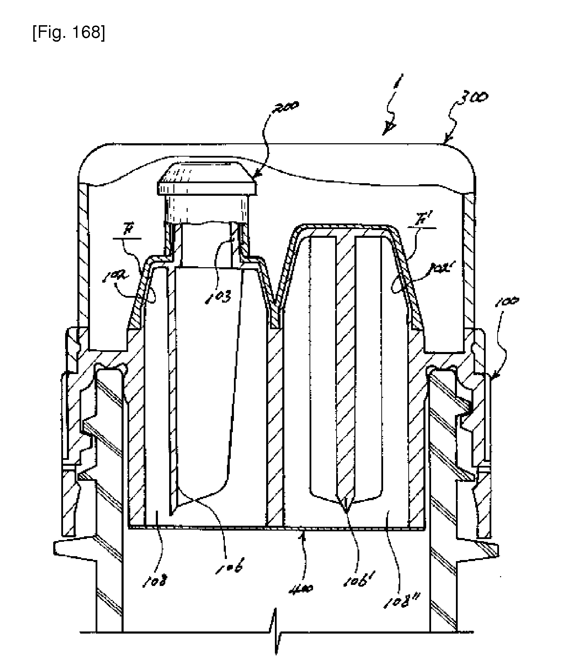

FIG. 168 is a view of a state in which the sealing stopper for discharging the mixed contents is installed above any storage space in the receiving apparatus having the plurality of storage spaces.

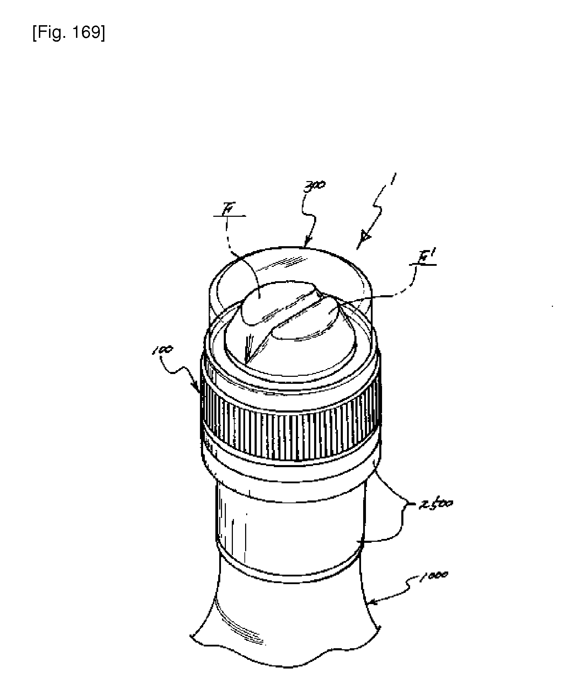

FIG. 169 is a view of a state in which a coupling unit is added to a lower portion of the main body of the receiving apparatus so that the receiving apparatus having the storage spaces are capable of being applied to various container necks, and is a perspective view of a state in which the receiving apparatus is coupled to the container neck.

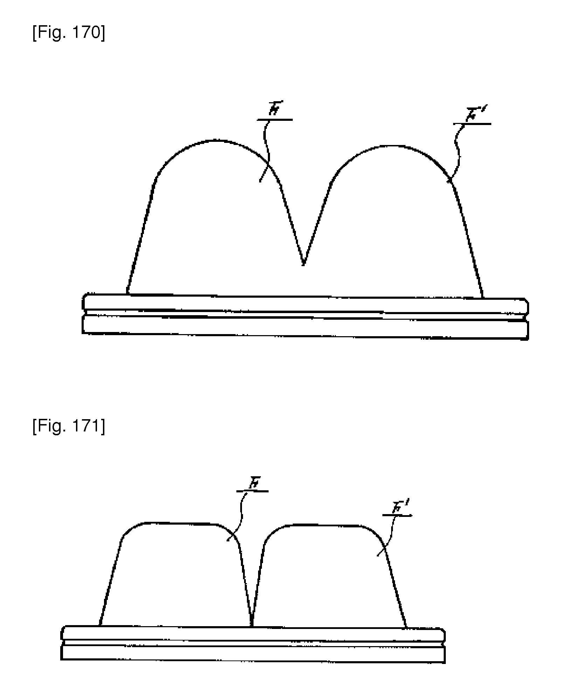

FIGS. 170 to 180 are views of an example in which the storage space and the foldable part (the foldable connecting part) constituting a main part of the discharge unit is variously modified, and FIGS. 170 and 171 are views of a modified example of the foldable part.

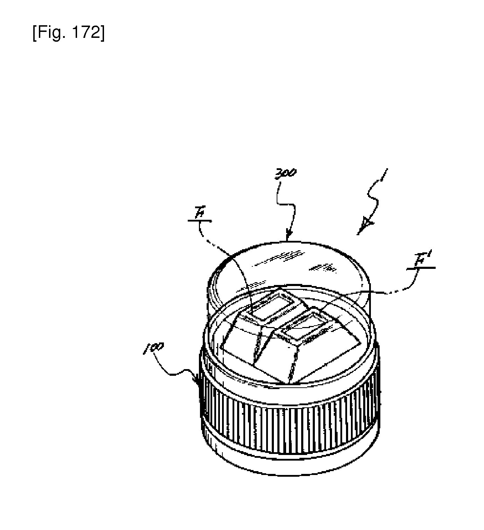

FIG. 172 is a perspective view of an example in which the foldable part (the foldable connecting part) of the receiving apparatus is variously expressed as a character, a miniature, a figure, a letter, or a combination thereof, or various brands,

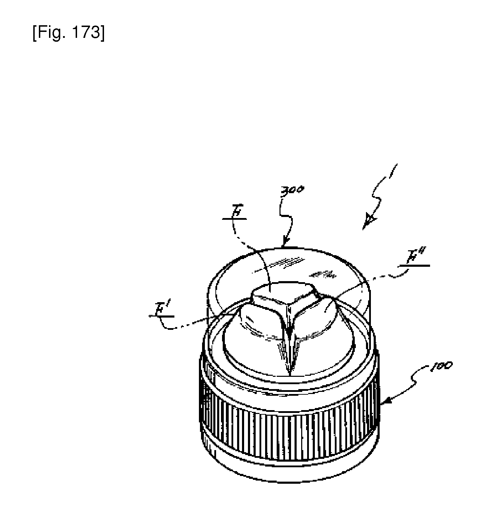

FIG. 173 is a perspective view of an example in which the foldable part (the foldable connecting part) of the receiving apparatus is provided in plurality, for example, three foldable parts are provided.

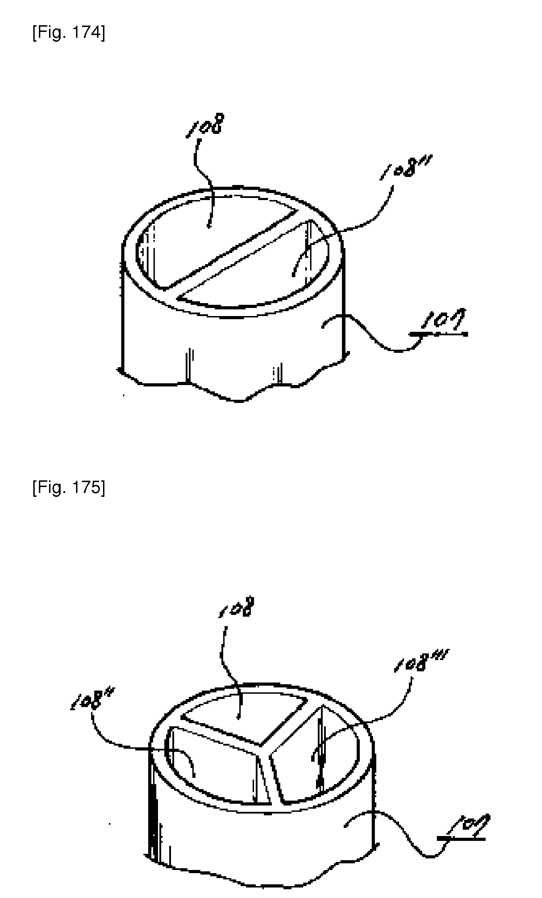

FIGS. 174 and 175 are perspective views of a main part of only the accommodating part that includes the storage space as one example,

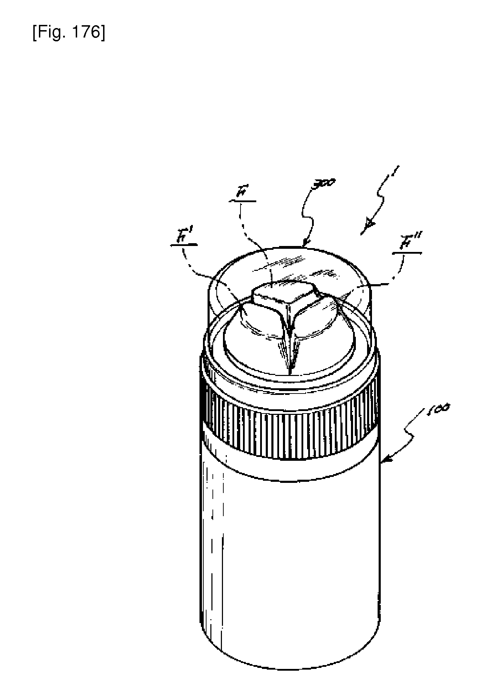

FIG. 176 is a view of an example in which the receiving apparatus having the plurality of storage spaces is variously changed in design, for example, a perspective view of a receiving apparatus having three storage spaces,

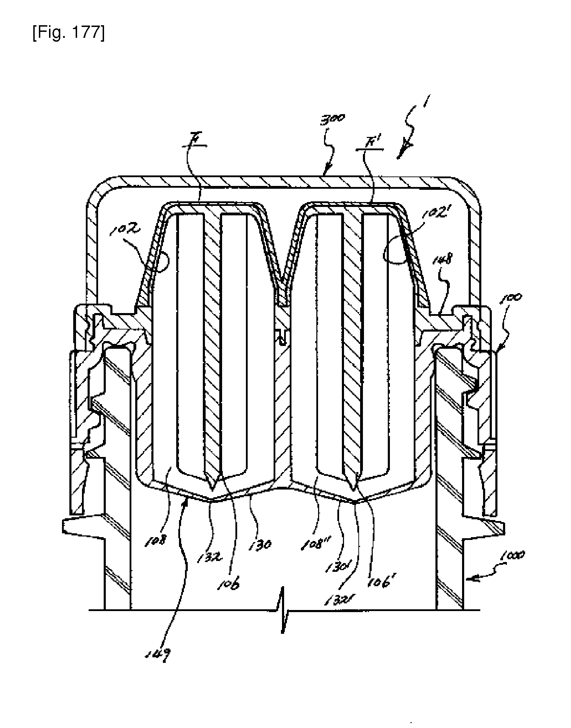

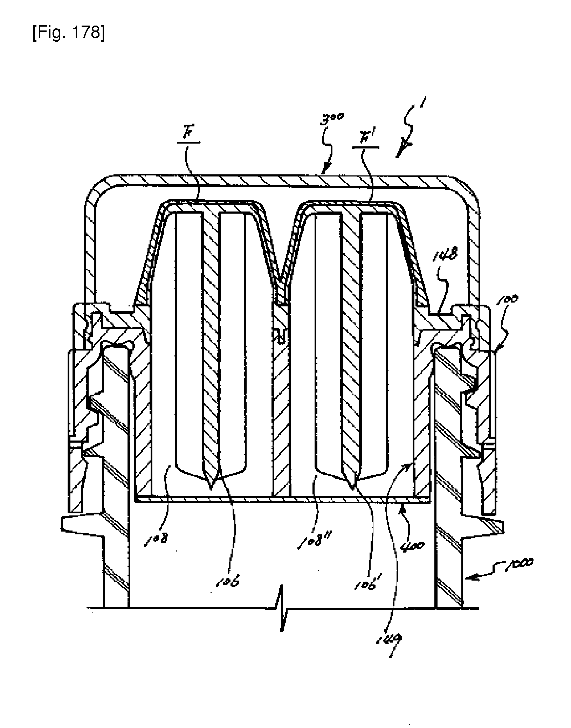

FIGS. 177 and 178 are longitudinal cross-sectional views of a state in which the main body constituting the receiving apparatus is separated into a lower main body and an upper main body, and the upper and lower main bodies are coupled to each other to complete the plurality of storage spaces and the plurality of foldable parts (the foldable connecting parts).

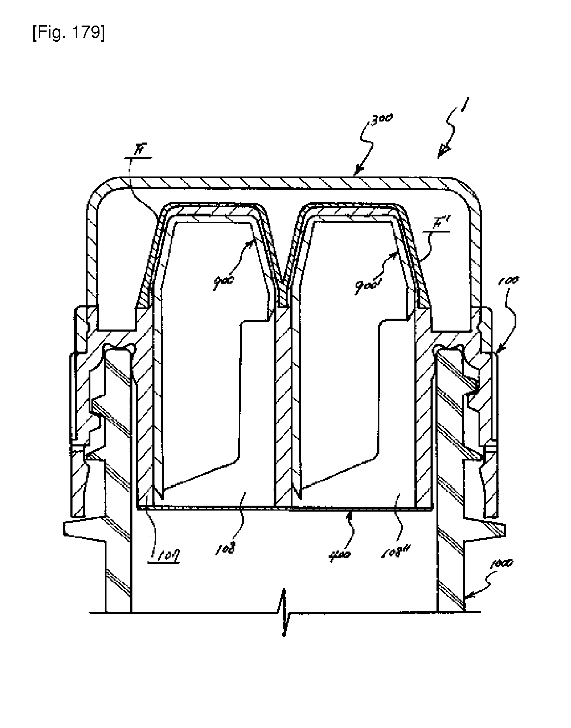

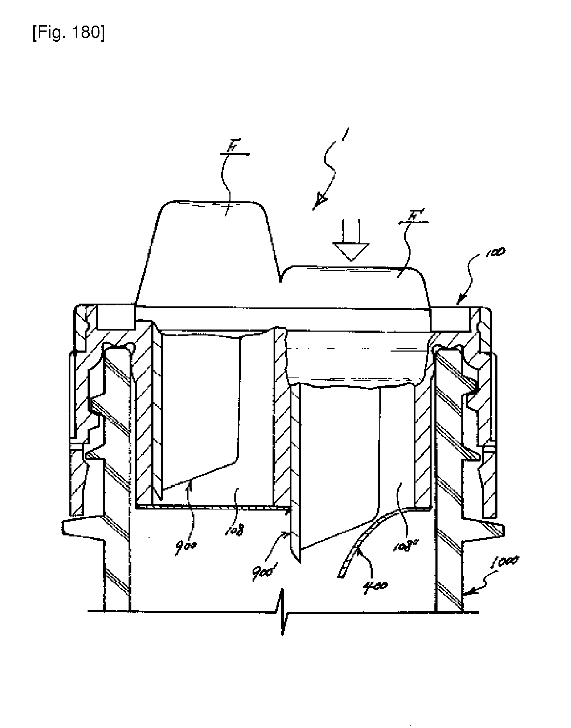

FIGS. 179 and 180 are view of a state in which an assembly type opening end that is capable of being pushed downwardly is inserted into the foldable part (the foldable connecting part) of the receiving apparatus, and FIG. 179 is a longitudinal cross-sectional view of a state in which the receiving apparatus is coupled to the container neck,
FIG. 180 is a view of a state in which any foldable part is operated (pushed) in the state of FIG. 179 to allow the assembly type opening end to break the corresponding accommodating part sealing part.

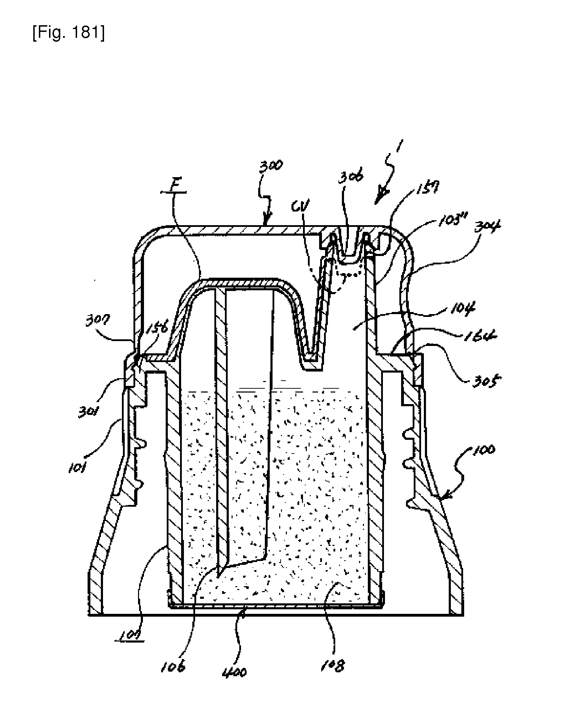

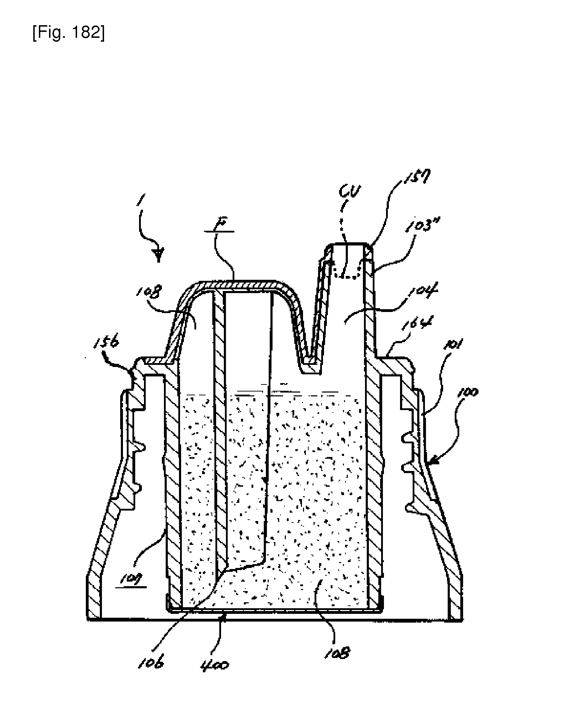

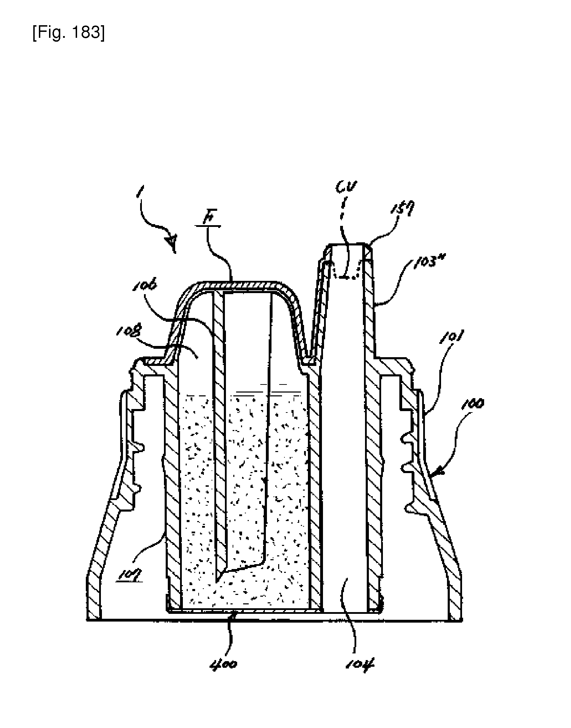

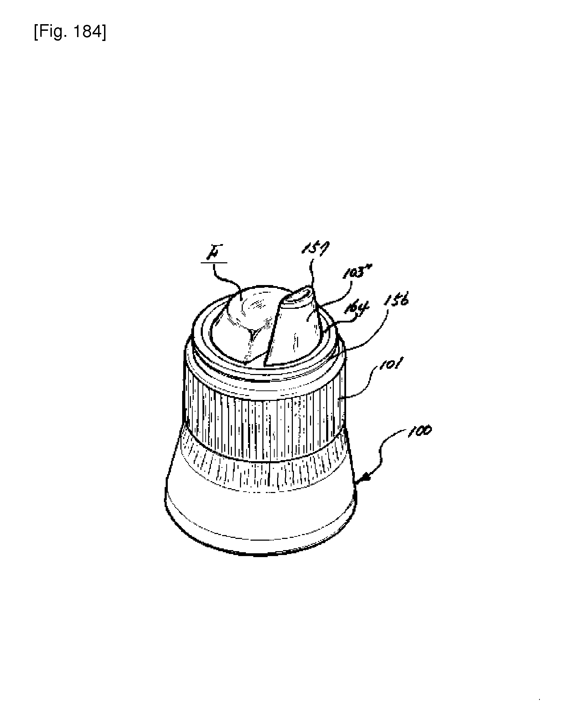

FIGS. 181 to 186 are views of an example in which a main body mouth part is disposed on a side of the foldable part, FIG. 183 is a longitudinal cross-sectional view of the completed assembly, FIG. 182 is a longitudinal cross-sectional view illustrating a modified example of the main body, and FIG. 184 is a perspective view of the main body.
Also, FIG. 185 is a perspective view of a state in which a cover is assembled with an upper portion of the main body, and FIG. 186 is a perspective view of a state in which the main body is changed in design, and the receiving apparatus including the main body is coupled to the container neck, and then the cover is opened.

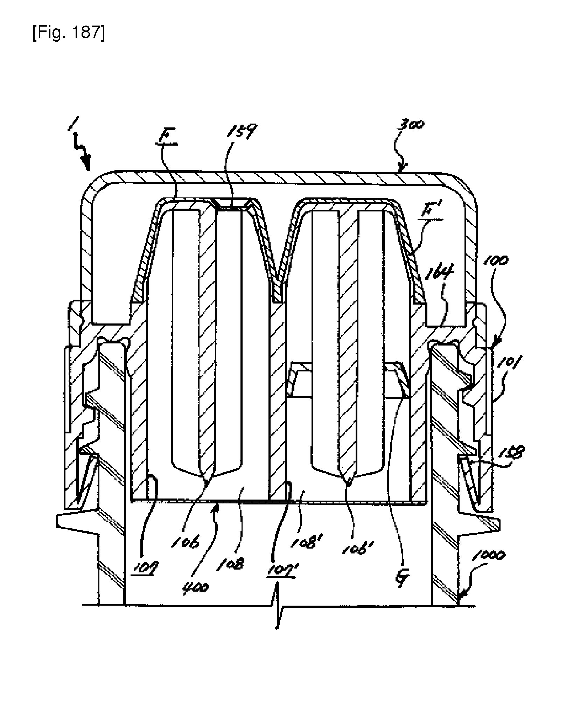

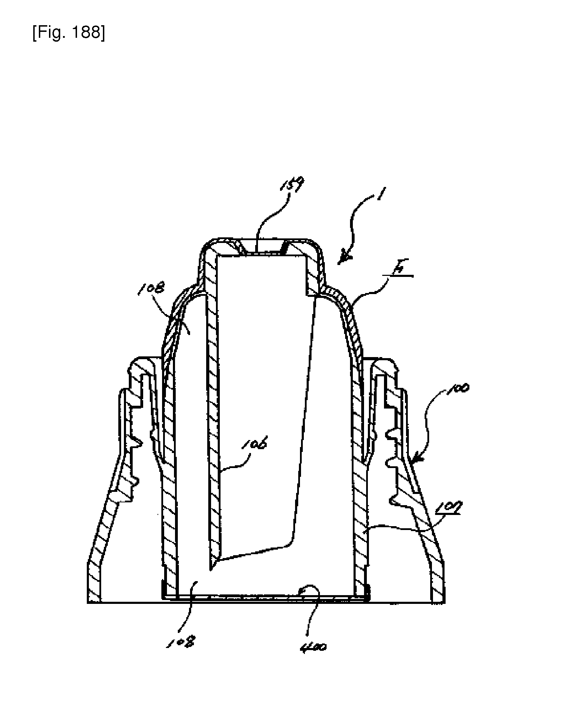

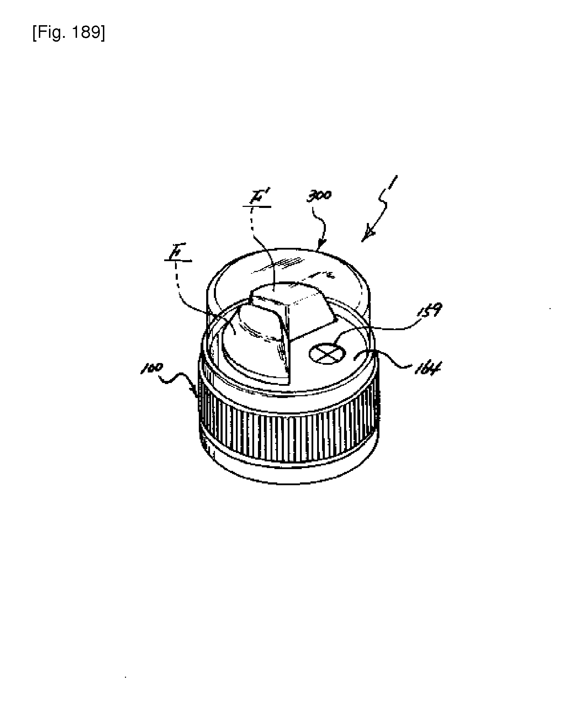

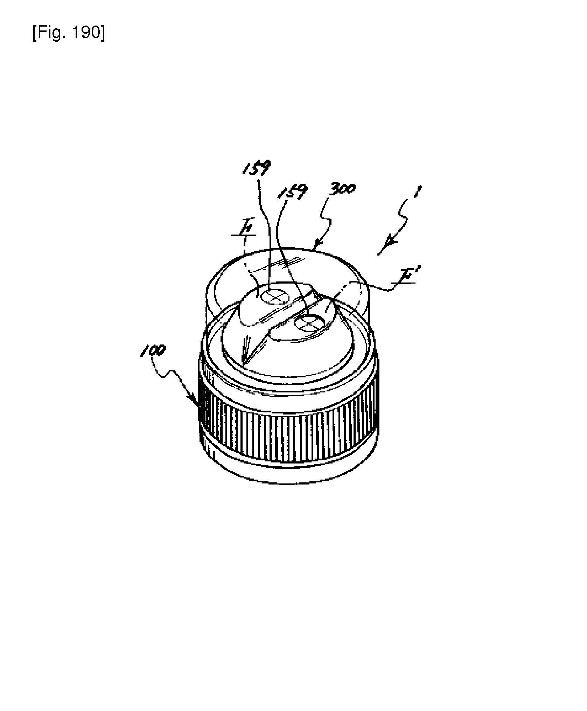

FIGS. 187 to 192 are views of an example in which a straw insertion part is added to the receiving apparatus, FIG. 187 is a longitudinal cross-sectional view of a state in which the receiving apparatus is coupled to the container neck, FIG. 188 is a longitudinal cross-sectional view illustrating a modified example of the main body, and FIGS. 189 and 190 are views illustrating a modified example of the receiving apparatus.
Also, FIG. 191 is a longitudinal cross-sectional view of illustrating another modified example of the receiving apparatus, and FIG. 192 is a perspective view of a state in which the receiving apparatus is coupled to the container neck, and then a straw is coupled to the straw insertion part.

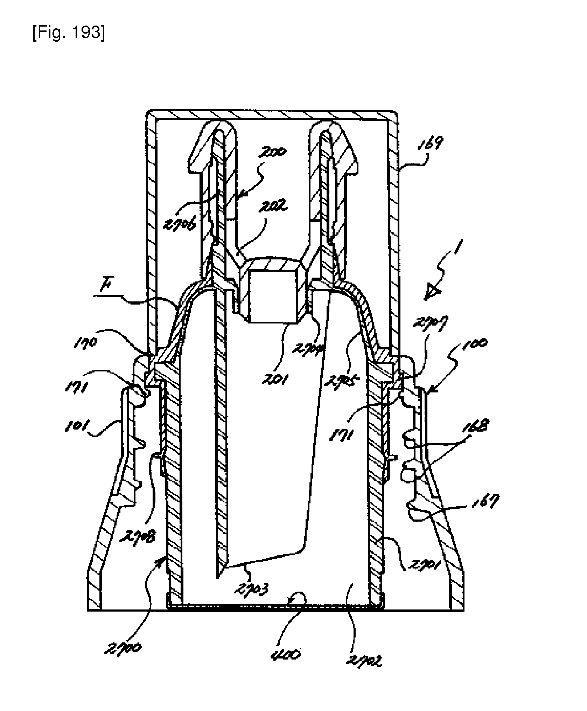

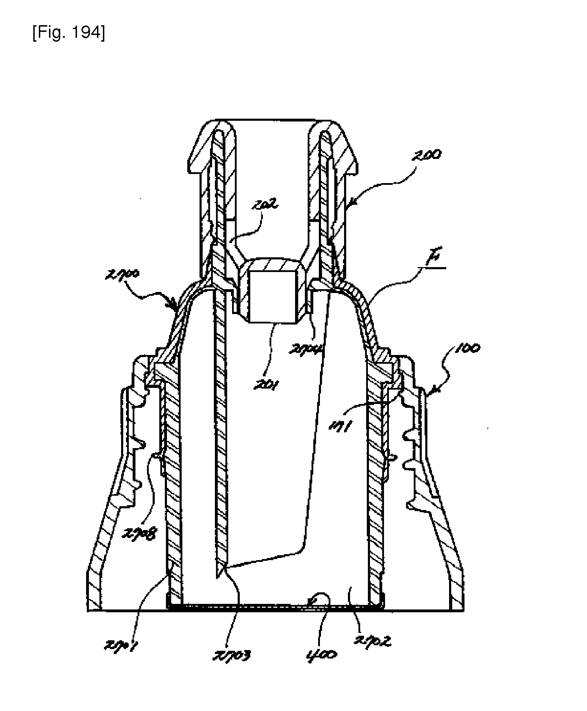

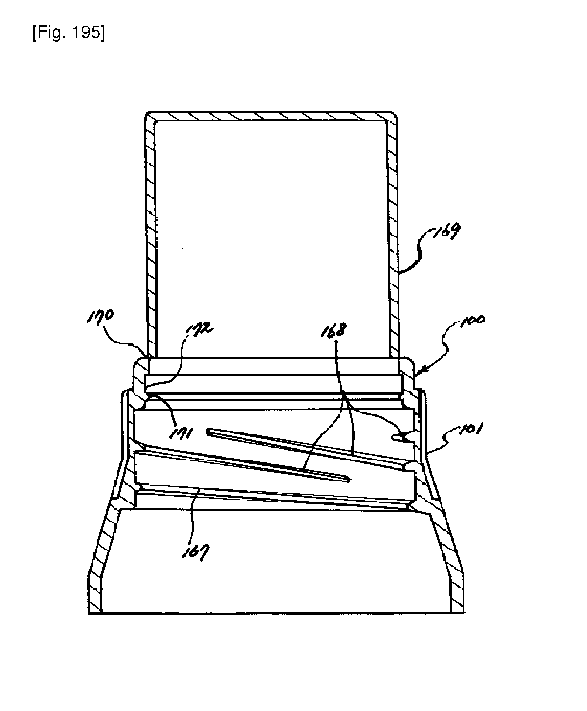

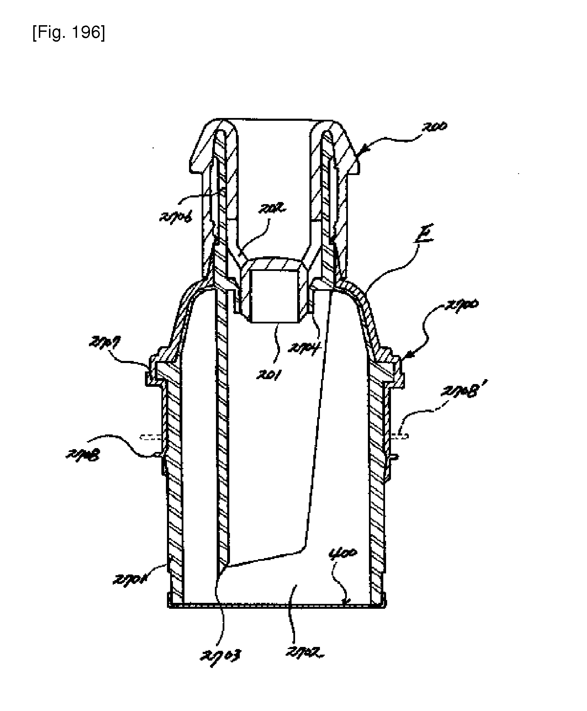

FIGS. 193 to 200 are views according to further another embodiment of the present invention, FIG. 193 is a longitudinal cross-sectional view of a receiving apparatus, FIG. 194 is a longitudinal cross-sectional view of a state in which an integrated cover is removed from a main body of the receiving apparatus, FIG. 195 is a longitudinal cross-sectional view of the main body, and FIG. 196 is a longitudinal cross-sectional view of an independent accommodating part coupled to the inside of the main body.
Also, FIGS. 197 and 198 are views of a modified example, FIG. 197 is a longitudinal cross-sectional view of a receiving apparatus, FIG. 198 is a longitudinal cross-sectional view of an independent accommodating part, and FIGS. 199 and 200 are longitudinal cross-sectional views illustrating a modified example of the receiving apparatus.

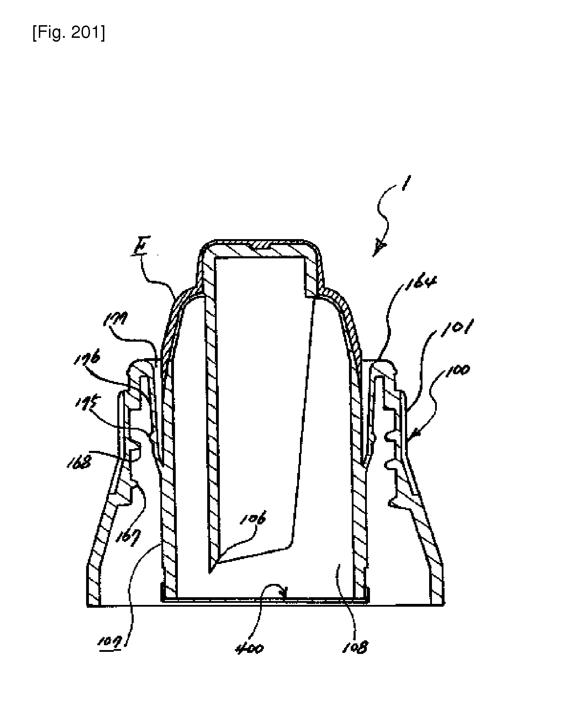

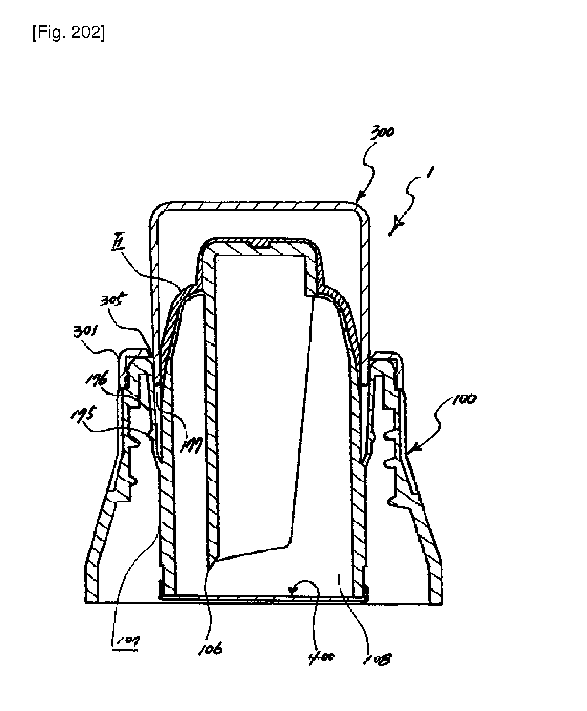

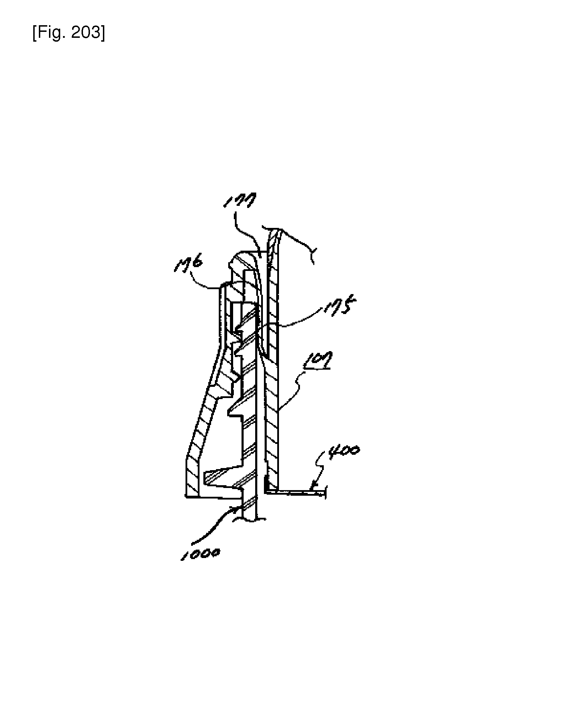

FIGS. 201 to 207 are views according to further another embodiment of the present invention, FIG. 201 is a longitudinal cross-sectional view of a main body, FIG. 202 is a longitudinal cross-sectional view of a state in which a cover is coupled to the main body, and FIG. 203 is a longitudinal cross-sectional view illustrating a main part in a state where an elastic sealing part is coupled to a container and thus is sealed.
Also, FIG. 204 is a view of a modified example of the main body, FIG. 205 is a longitudinal cross-sectional view of a state in which a cover is coupled to the main body, and FIGS. 206 and 207 are longitudinal cross-sectional views of another modified example.

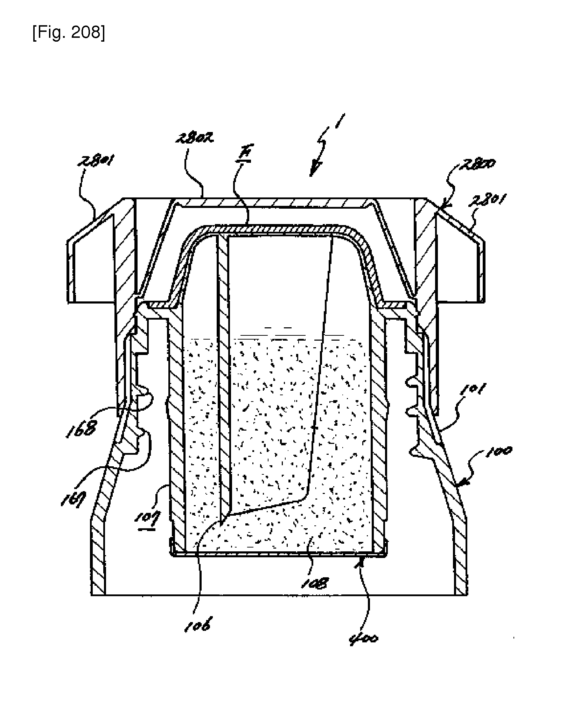

FIG. 208 is a longitudinal cross-sectional view of the receiving apparatus in which an auxiliary cover is coupled to an upper portion of the main body thereof.

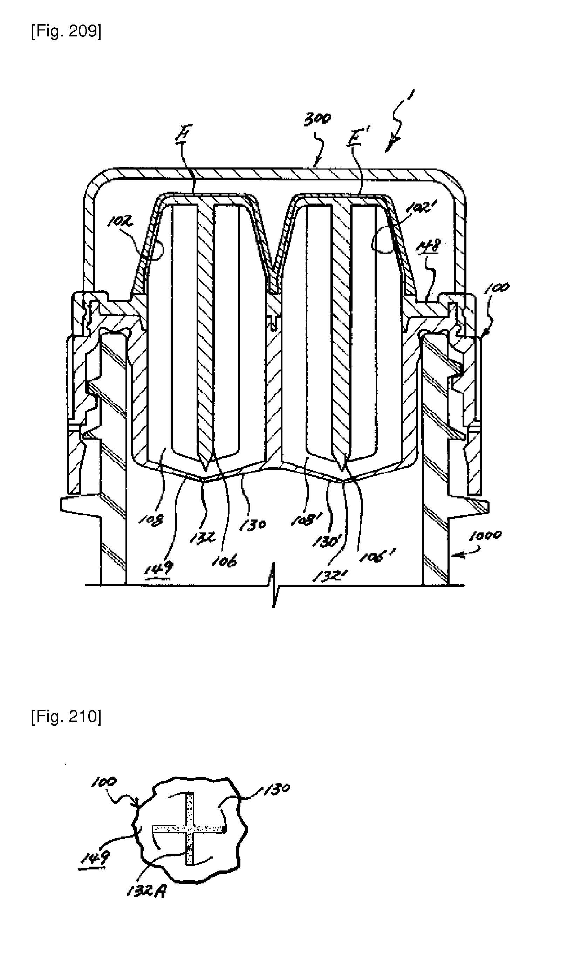

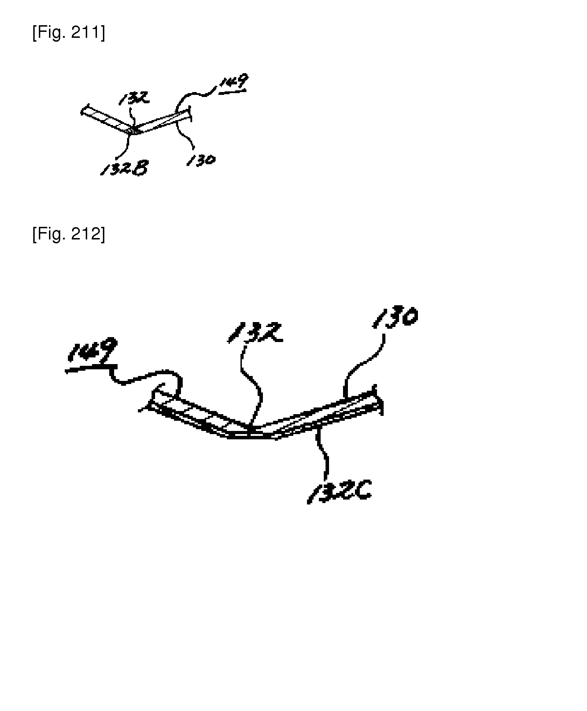

FIGS. 209 to 212 are views according to further another embodiment of the present invention, FIG. 209 is a view of a state in which a receiving apparatus is coupled to a container, FIG. 210 is a plan view of a main part in a state where an auxiliary cutoff line protection part is disposed on a main body accommodating part cutoff line of the receiving apparatus, and FIGS. 211 and 212 are longitudinal cross-sectional views of a state in which the auxiliary cutoff line protection part is disposed on the main body accommodating part cutoff line.

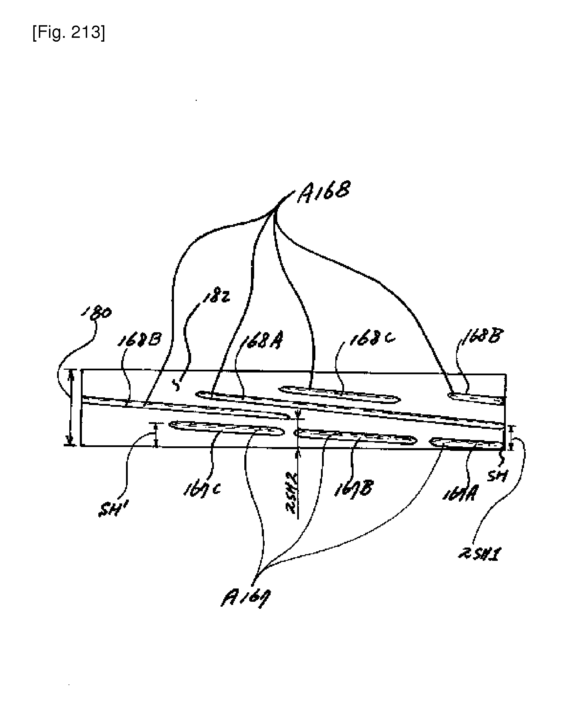

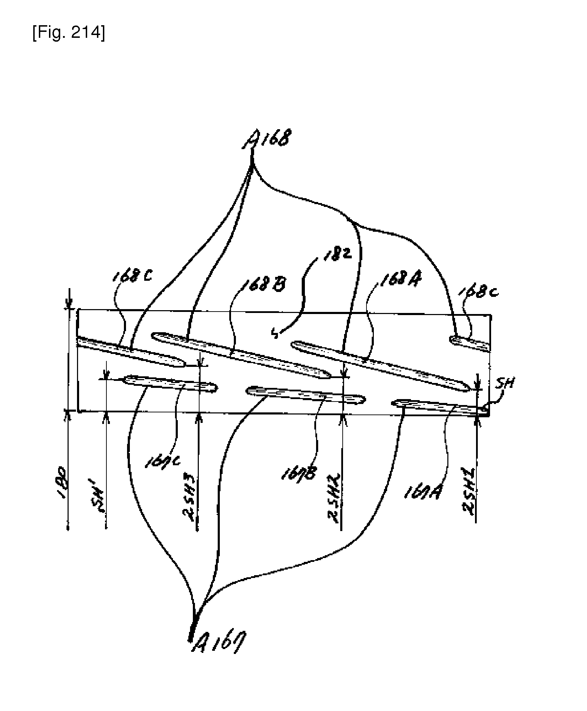

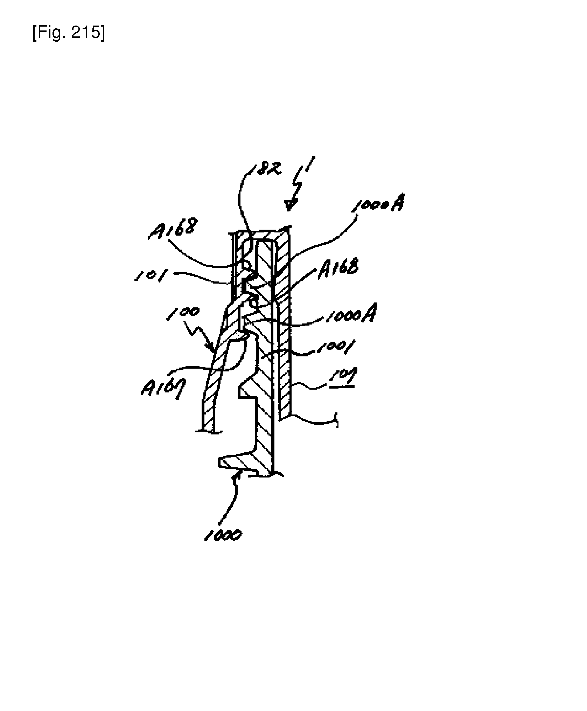

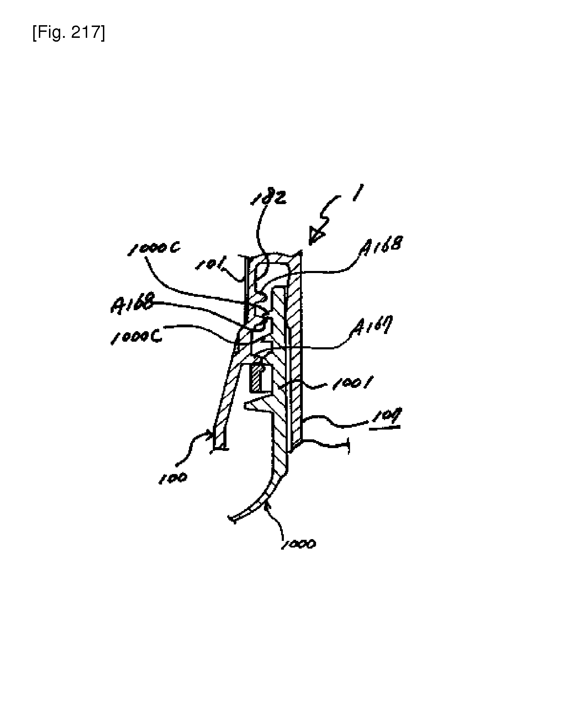

FIGS. 213 and 217 are views according to further another embodiment of the present invention, FIGS. 213 and 214 are planar views of an inner wall of a main body which is an example of a screw thread, FIGS. 215 to 217 are longitudinal cross-sectional views of a main part of a receiving apparatus in a state where the main body having the screw thread is coupled to a container neck.

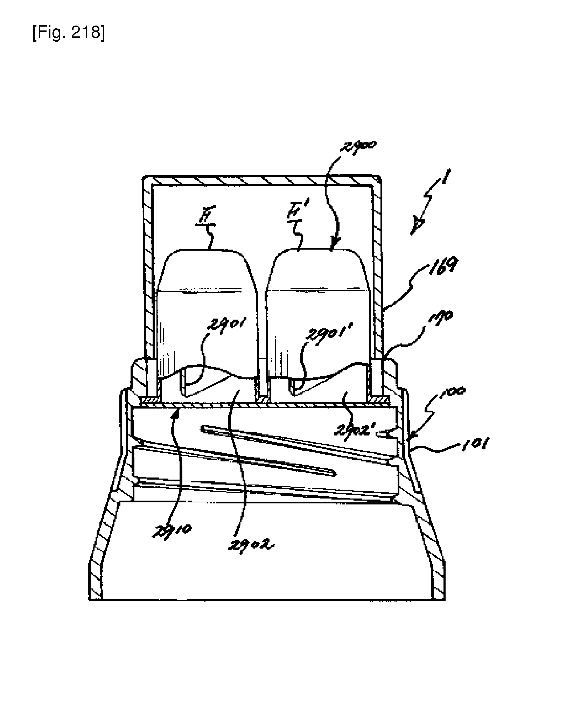

FIG. 218 is a view according to further another embodiment of the present invention, for example, a longitudinal cross-sectional view of an example in which a plural independent accommodating part is coupled to the main body.

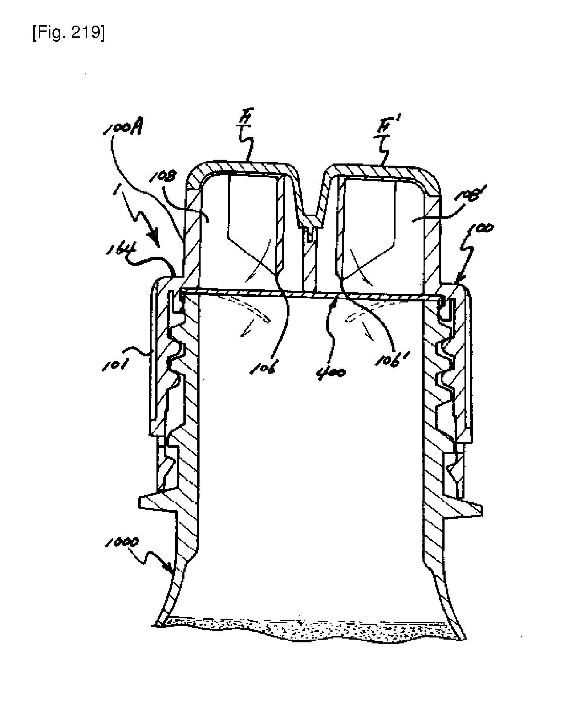

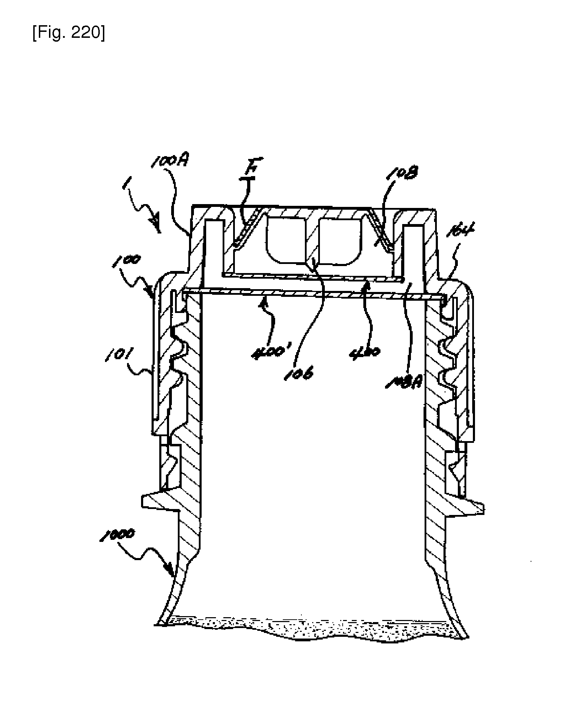

FIGS. 219 to 220 are views according to further another embodiment of the present invention, FIG. 219 is a view of a state in which a protruding accommodating part protrudes upward, and FIG. 220 is a view of a modified example of FIG. 219.

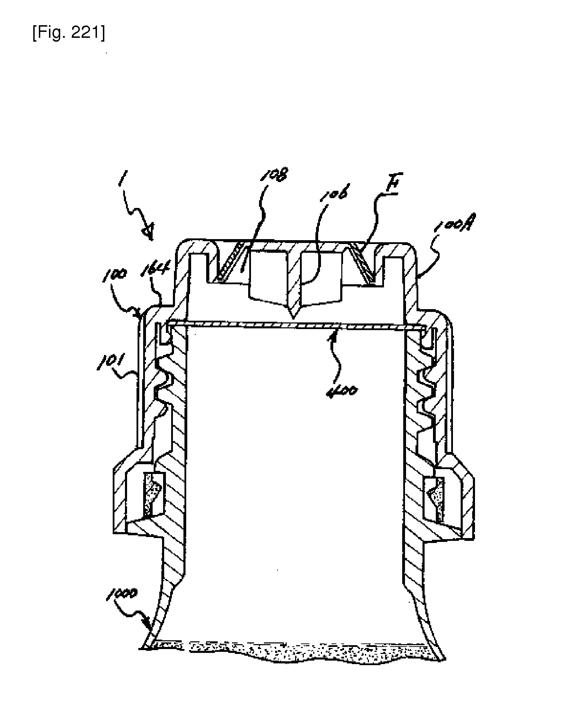

FIG. 221 is a view of an example in which the protruding accommodating part protrudes upward, and a foldable part formed of a material having a barrier property is added to an upper portion of the protruding accommodating part.

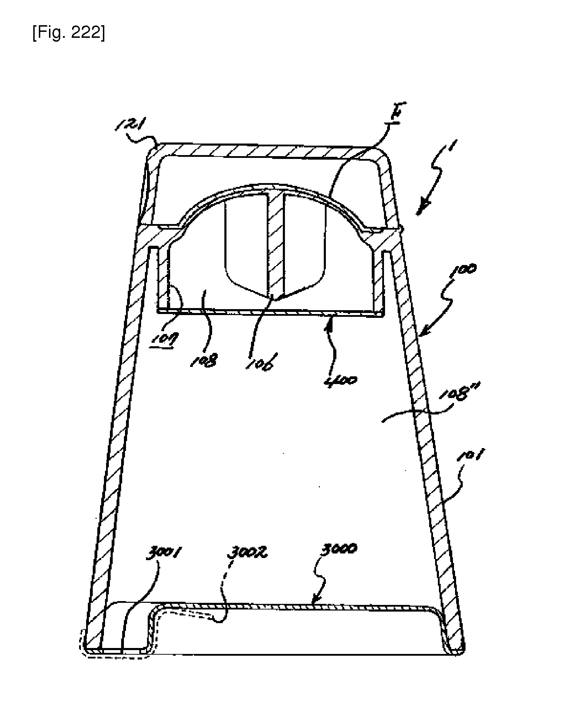

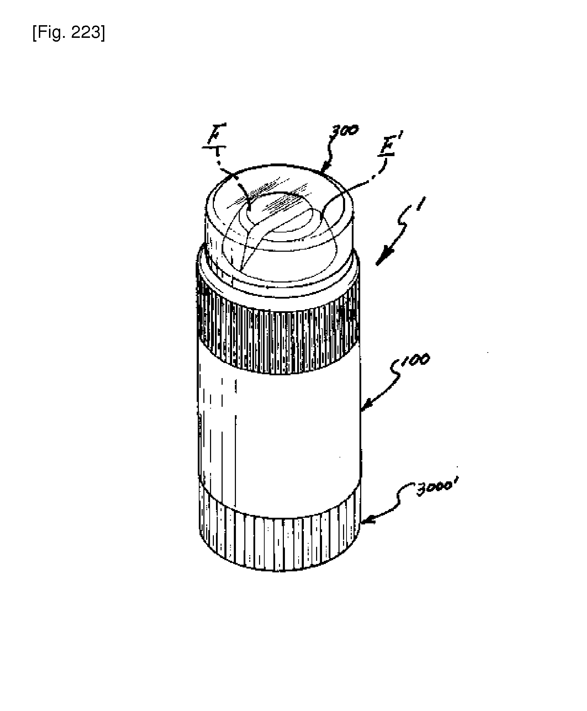

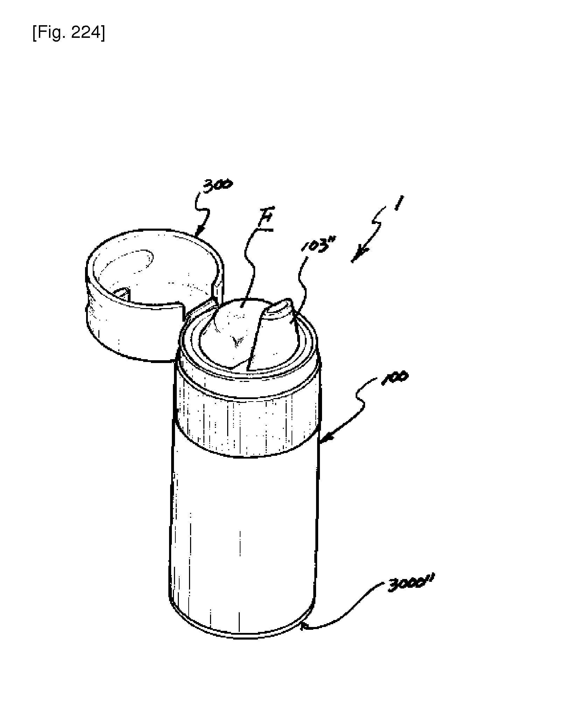

FIGS. 222 to 224 are views according to further another embodiment of the present invention, FIG. 222 is a view of an example in which a receiving apparatus has a container shape, and FIGS. 223 and 224 are views of a modified example of FIG. 222.

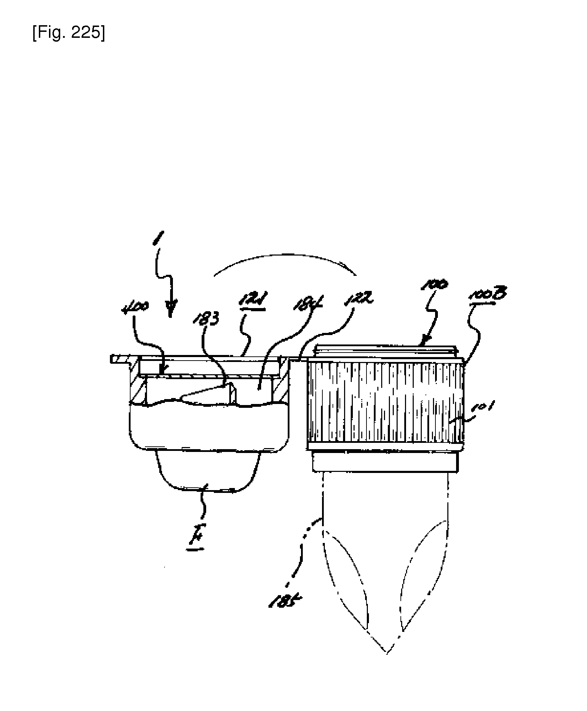

FIG. 225 is a view according to further another embodiment of the present invention, for example, a view of an example in which a foldable part is disposed on an integrated cover of a receiving apparatus.

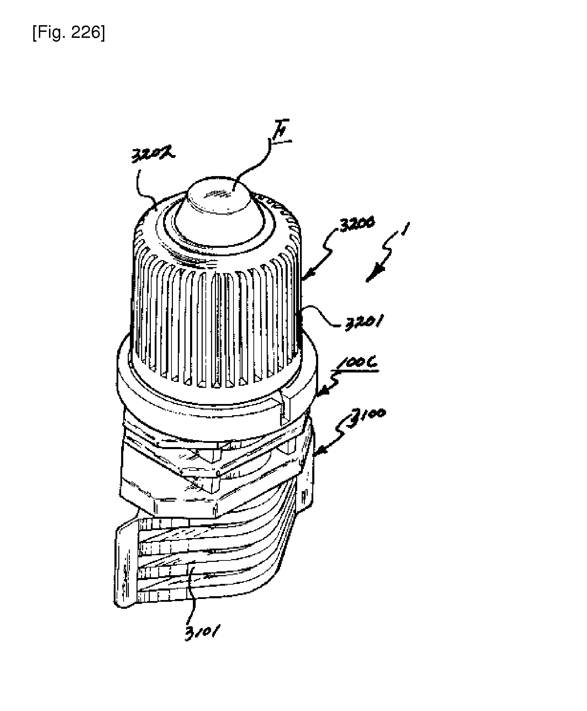

FIG. 226 is a view according to further another embodiment of the present invention, for example, a view of an example in which a receiving apparatus is designed so that the receiving apparatus is used in a pouch container.

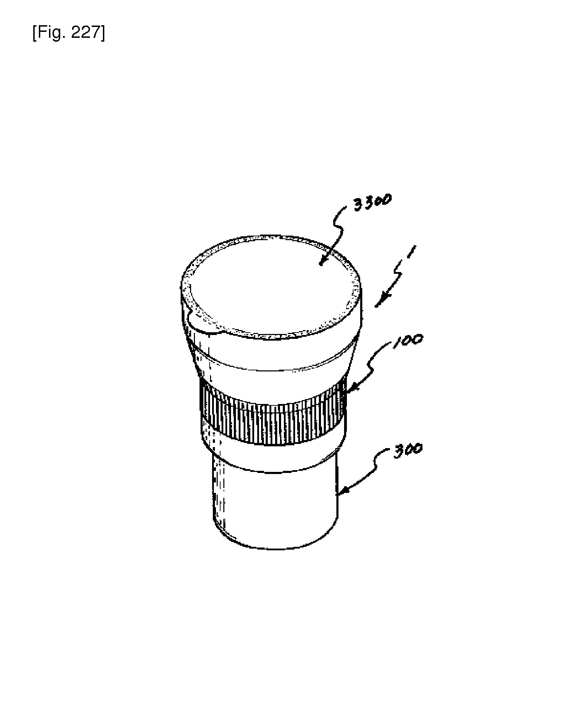

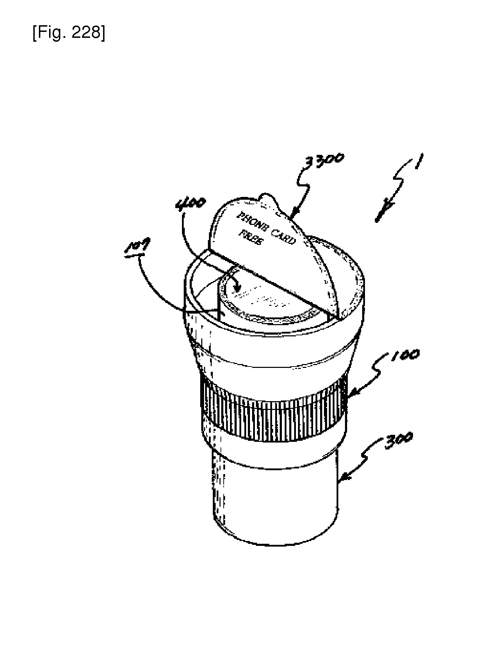

FIGS. 227 and 228 are views of an example in which a gift coupon is printed on the inside of the receiving apparatus, or a content with respect to a gift certificate is printed on a lower sealing surface of a main body of the receiving apparatus.

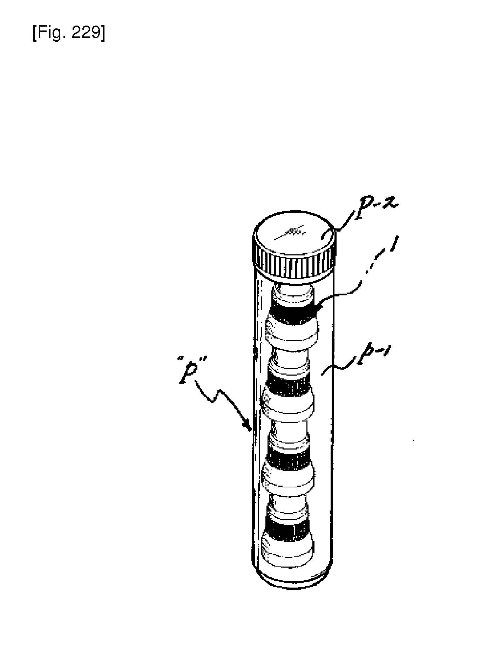

FIGS. 229 to 239 are views of a method for packaging the receiving apparatus, particularly, an example for corresponding to an after market except for a before market.

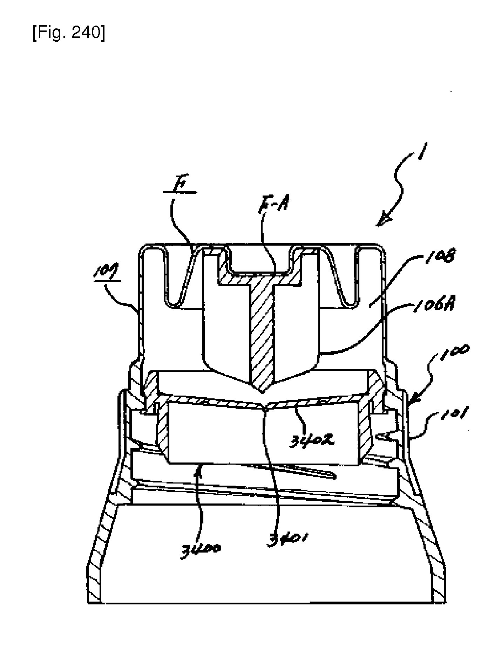

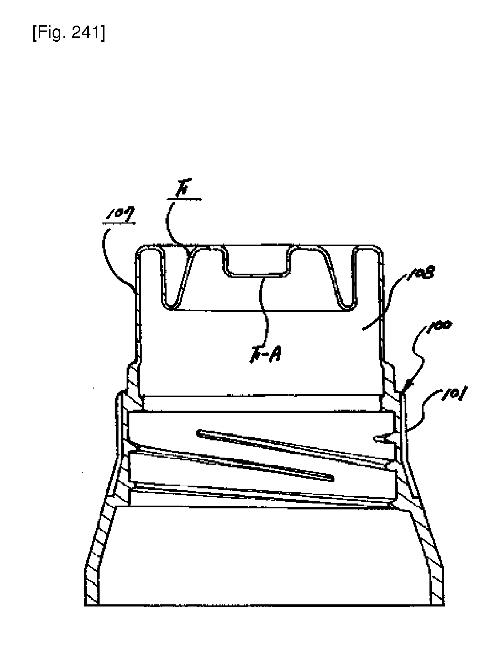

FIGS. 240 to 248 are views according to further another embodiment of the present invention, for example, an example in which an accommodating part disposed in an upper portion of the main body is molded by using a blow blooding process, FIG. 240 is a view of a state in which an opening part and a part for sealing a lower portion of the accommodating part are coupled to the accommodating part of the main body that is manufactured by using the blow molding process, and FIG. 241 is a view of the accommodating part and the main body which are manufactured by using the blow molding process.

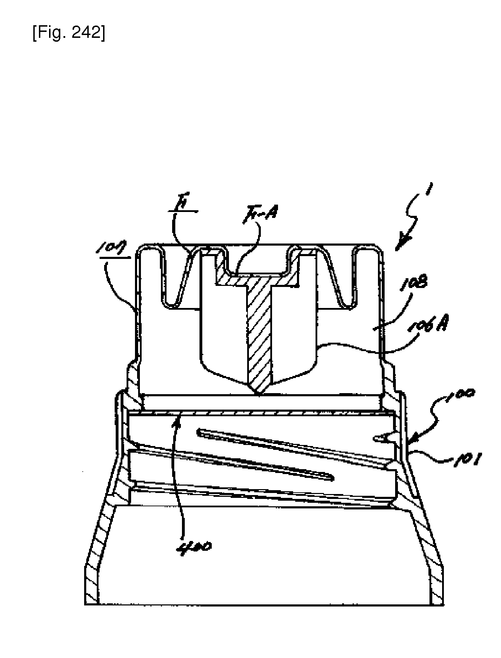

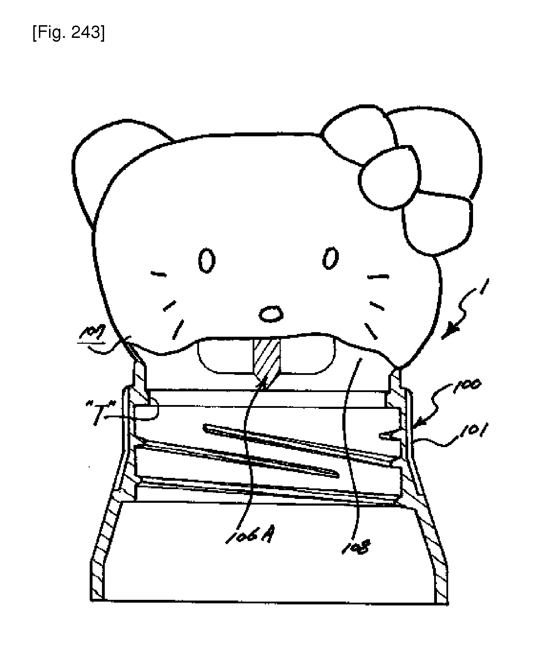

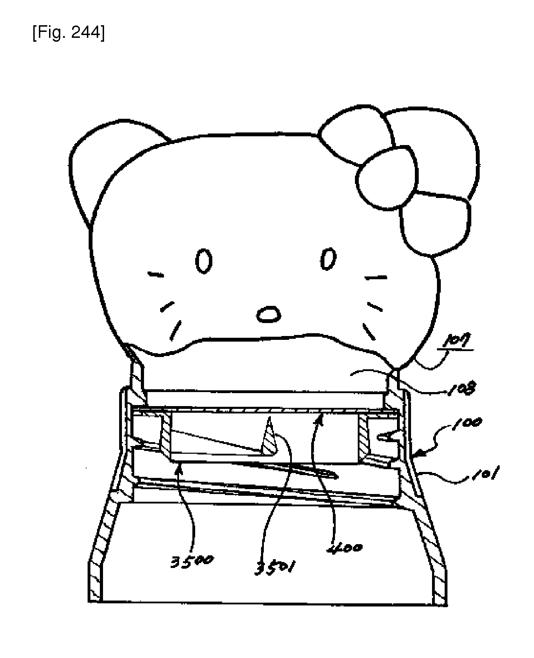

FIG. 242 is a view of a state in which a sealing treatment state of the lower portion of the accommodating part is differently expressed, and FIGS. 243 and 244 are views of an example in which the accommodating part is expressed as a character.

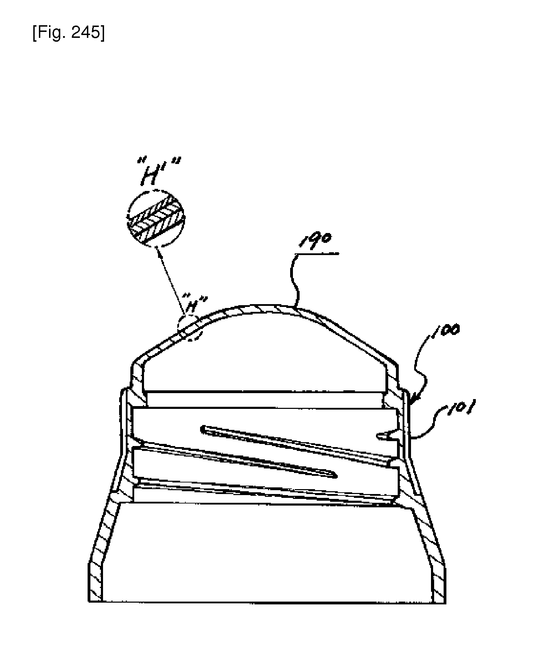

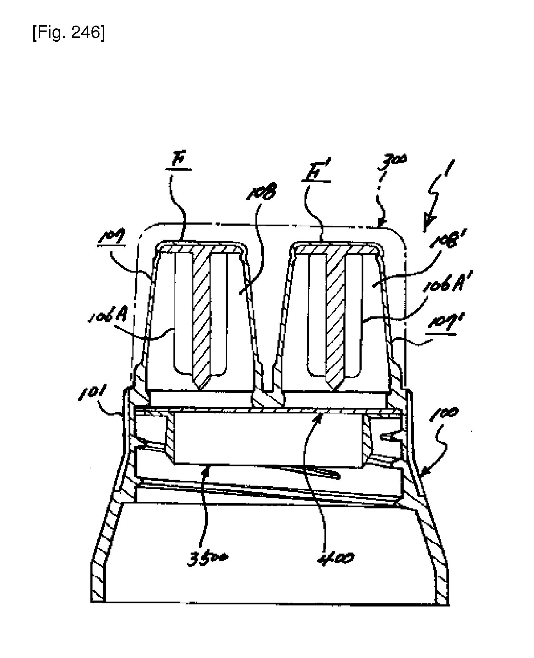

FIG. 245 is a view of a state in which a preform portion for forming the accommodating part is disposed on an upper portion of the main body to form the accommodating part, and FIG. 246 is a view of a modified example of the present invention, for example, an example in which the accommodating part is provided in plurality.

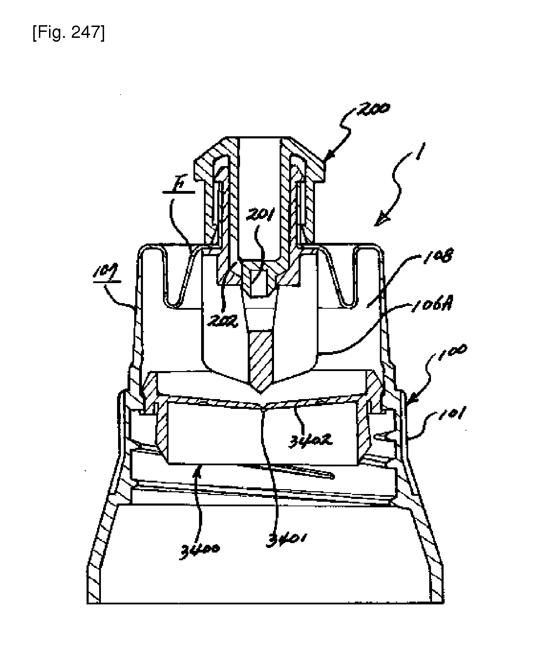

FIG. 247 is a view of a state in which a sealing stopper is installed on the receiving apparatus.

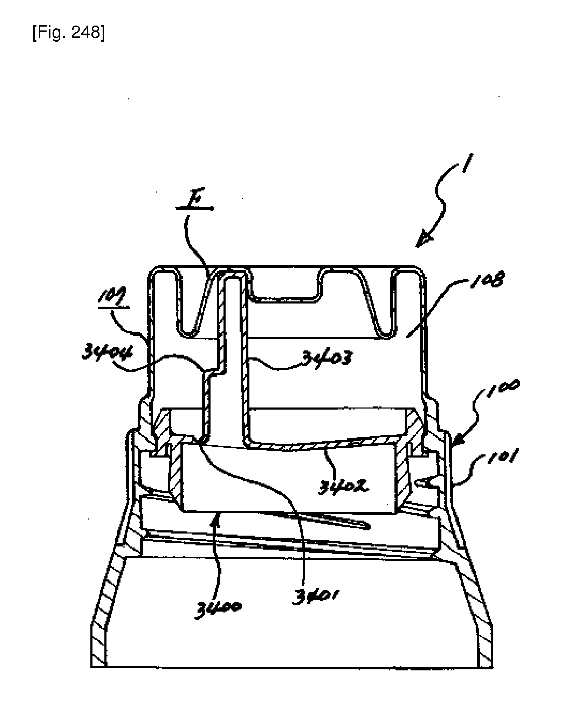

FIG. 248 is a longitudinal cross-sectional view illustrating further another modified example of the receiving apparatus.

### MODE FOR CARRYING OUT THE INVENTION

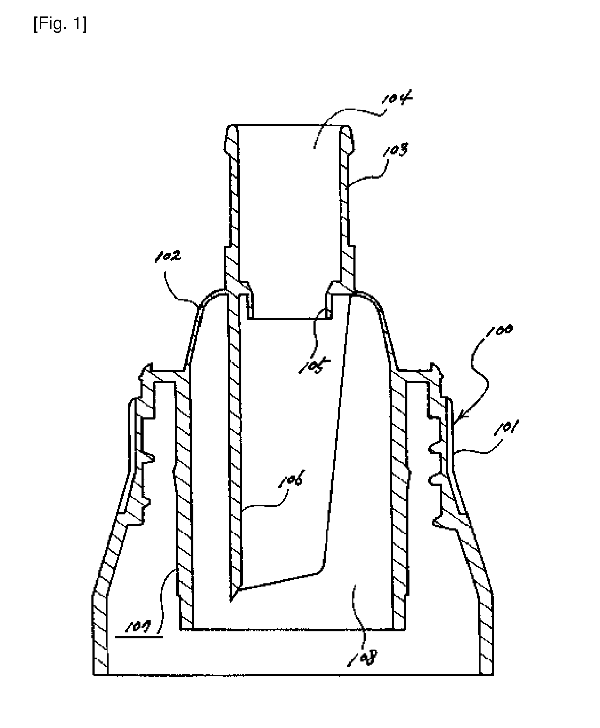

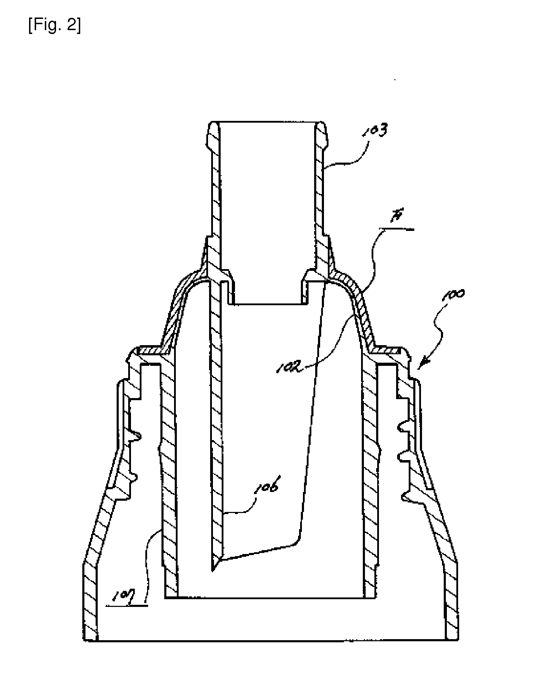

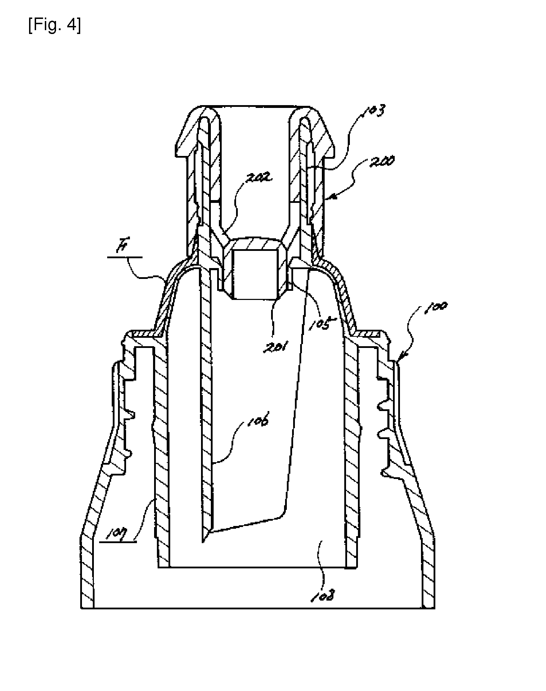

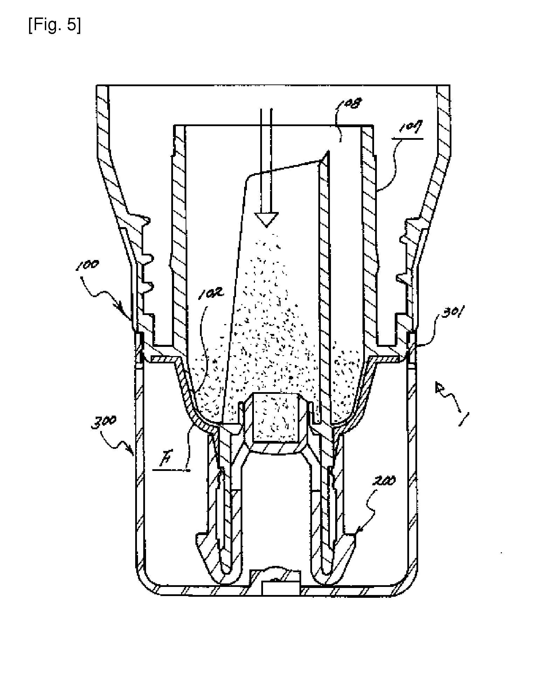

Hereinafter, embodiments of the present invention will be selectively described with reference to FIGS. 1 to 19.

An apparatus 1 for receiving heterogeneous materials, which is coupled to a mouth part of a container containing the contents such as liquid includes a main body 100 coupled and fixed to the mouth part of the container and an accommodating part 107 having a storage space 108 within the main body 100. The storage space 108 within the accommodating part 107 is configured so that a foldable connecting part 102 disposed in an upper portion of the storage space 108 and an opening part 106 disposed on a lower portion of the foldable connecting part 102 break an accommodating part sealing part 400 sealing a lower end of the accommodating part 107 to allow the contents within the storage space of the accommodating part 107 to drop into the container, thereby mixing the contents with each other.

Also, a foldable soft resin is added to the foldable connecting part 103. Here, a rubber material such as silicone or a soft synthetic resin may be injection-molded by using a co-injection mold to form a foldable part F.

That is, a soft resin is injection-molded on the upper portion of the foldable connecting part 102 through the co-injection molding to form the foldable part F.

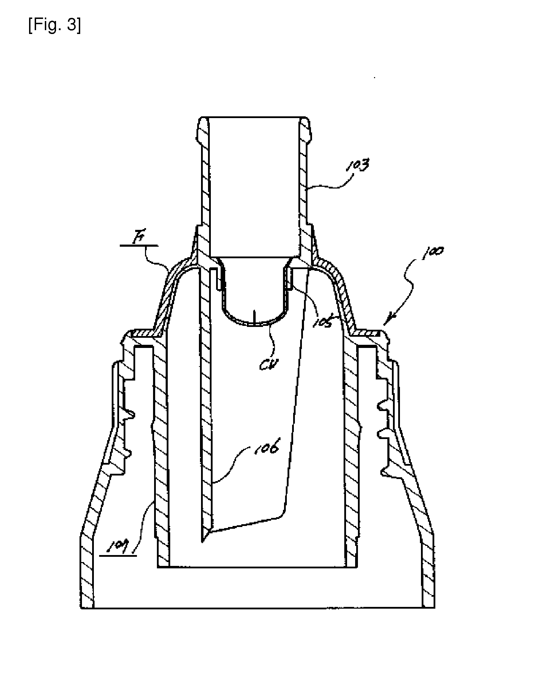

Also, a main body mouth part 103 is disposed on an upper portion of the foldable connecting part 102. As necessary, as shown in FIG. 3, a check valve CV is disposed within the main body mouth part 103.

Also, an openable sealing stopper 200 or a hinge type sealing stopper is coupled to the main body mouth part 103.

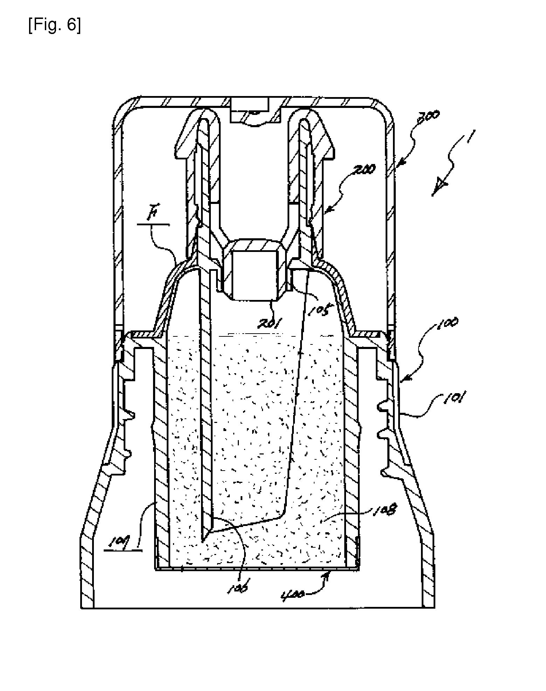

As described above, when coupled to the container in a state of FIG. 6, FIG. 6 illustrates a screw thread having a specific shape and disposed on an inner wall of a side surface part 101 of the main body 100. The screw thread is configured to be easily coupled to a neck of each of various containers (having different standards).

When a cover 300 is removed in a state of FIG. 6 or 8 or FIGS. 11 and 12, the cover 300 is removed from an anti-forgery frame 301.

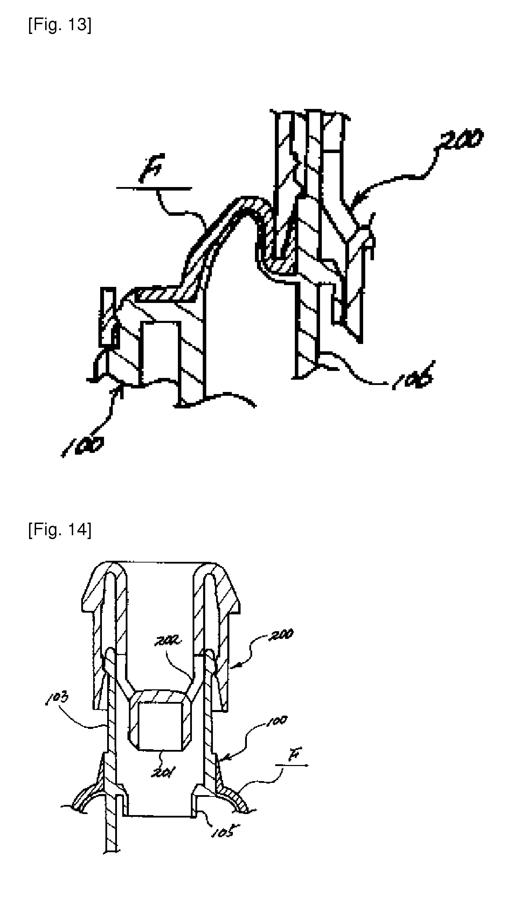

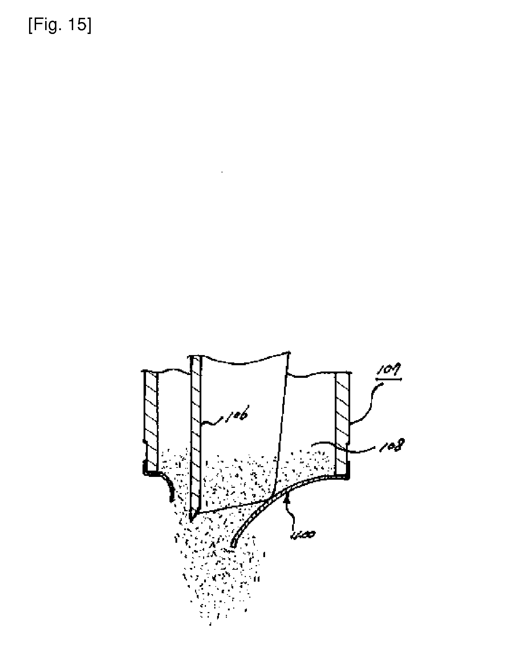

When the sealing stopper 200 is pressed in the above-described state, the foldable part F is folded as shown in FIG. 13, and simultaneously, the opening part 106 cuts the accommodating part sealing part 400 as shown in FIG. 15. In this process, the heterogeneous materials contained in the storage space 108 may drop into the container and then be mixed with each other.

As described above, when the sealing stopper 200 is lifted upward, the mixed contents, as shown in FIG. 14, allow the sealing part 201 of the sealing stopper 200 to get out of a sealing corresponding part 105 of the main body 100.

In this state, the mixed contents within the container are discharged through a discharge space 202 of the sealing stopper 200.

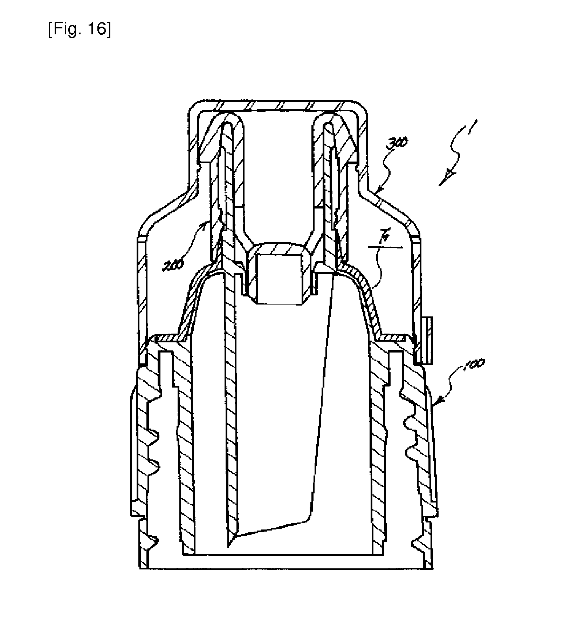

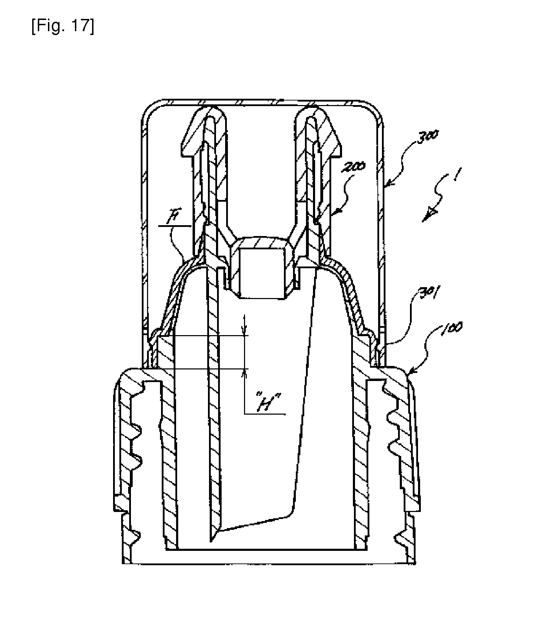

Also, FIG. 16 is a view of a cover 300 having a different shape, and FIG. 17 illustrates an example in which the foldable part F is capable of having various shapes. Here, it may be possible to freely adjust a height "H" illustrated in a lower side of the foldable part F to change a size and shape of the foldable part F.

Also, the foldable part F is disposed on an upper or lower portion of the foldable connecting part 102. The foldable part F may be injection-molded by using a soft material, or may adhere to or be deposited or coated with a film having a barrier property such as a soft packaging material such as aluminum.

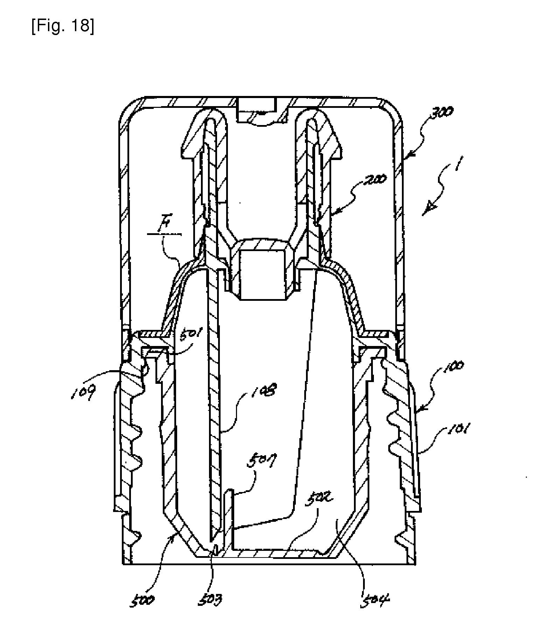

FIG. 18 is a view of a state in which an assembly type accommodating part 500 is coupled to the inside of the main body 100. Although the assembly type accommodating part 500 is assembled in a method in which an assembly frame 501 is fitted into a hook 109 of the main body 100, the present invention is not limited thereto. For example, the assembly type accommodating part 500 may adhere to the main body 100 by using a thermal adhesion method or an ultra wave method.

Also, a sealing surface 502 of a lower end of the assembly type accommodating part 500 is partitioned by an accommodating part cutoff line 503, and an accommodating part storage space 504 is defined above the sealing surface 502.

When the present invention is applied as described above, an end of the opening part 106 breaks the accommodating part cutoff line 503 to open the sealing surface 502 during the above-described process, and simultaneously, the contents within the accommodating part storage space 504 drop down and then are mixed with each other.

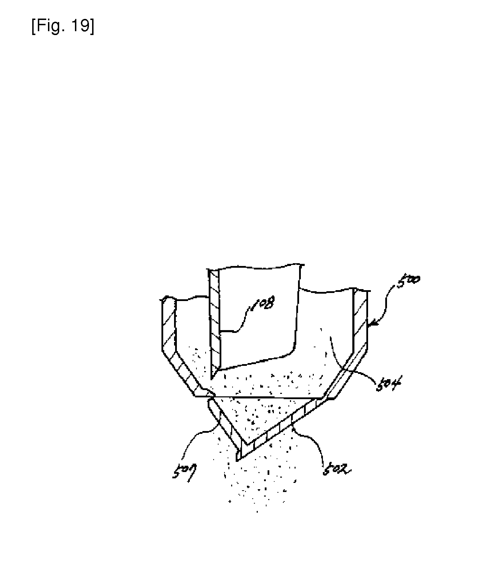

Also, a protruding piece 507 for cutting (hereinafter, referred to as a cutoff protruding piece) that protrudes upward is disposed above the sealing surface 502. The cutoff protruding piece 507 does not return to its original shape because the cutoff protruding piece 507 is hang on the cut end as show in FIG. 19. Thus, the contents within the accommodating part storage space 504 may easily drop down.

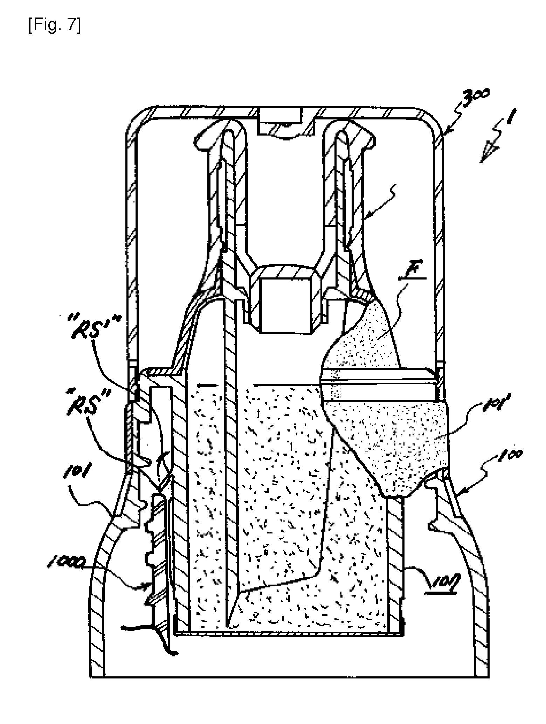

Also, as shown in FIG. 7, a logo shape or character shape may be added to a side part 1 of the main body 100 through various methods. Preferably, a soft shape part 101' may be provided to express logos or various expressions on the soft shape part 101'. For example, while the foldable part F is molded, the soft shape part 101' may be formed at the same time.

Also, various shapes such as mountain or fields shapes may be expressed on a stepped portion extending upward from a lower portion of the side surface part 101. The various shapes may be formed at the same time while the foldable part F is molded.

In addition, for reference, an annular wing sealing part RS having a wing shape is connected to an external annular part of the accommodating part 107 by using an annular wing sealing part connecting part RS'. This referentially shows one state in which the receiving apparatus 1 is coupled to the container 1000 and is sealed.

When used as described above, as shown in FIG. 7, the annular wing sealing part RS is disposed on an upper end of the neck of the container 1000 and thus meets with resistance. In this process, the annular wing sealing part connection part RS' turns inside out and thus is more firmly and elastically attached to an inner wall of the container neck to maintain the sealing force.

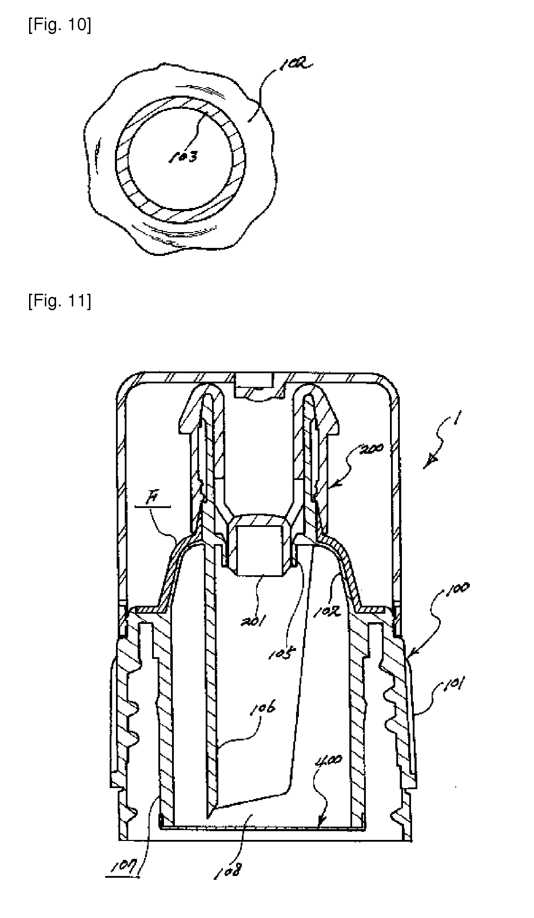

Also, referring to FIG. 9, a portion of the foldable connecting part 102 is connected to the main body mouth hole 103 in a net shape or is provided as a thin film as shown in FIG. 10. This is done because the foldable connecting part 102 is not folded during the use thereof when the foldable connecting part 102 has a thick thickness.

In addition, as shown by dotted line of FIG. 9, to easily fold the foldable connecting part 102, the foldable connecting part 102 may be modified in a laterally curved shape or other streamlined shapes without being connected in a straight-line shape so that the foldable connecting part 102 is easily folded while an upper portion of the foldable connecting part 102 is pressed.

Also, as shown in FIG. 8, the sealing stopper 200 may be variously modified in shape, i.e., the sealing stopper 200 has a streamlined shape to improve a design thereof. Also, an advertisement surface 160 may also be disposed on a lower side of the main body 100 to express a log or brand thereon. In one method, various marks may be displayed through a co-injection method while the foldable part F is co-injected.

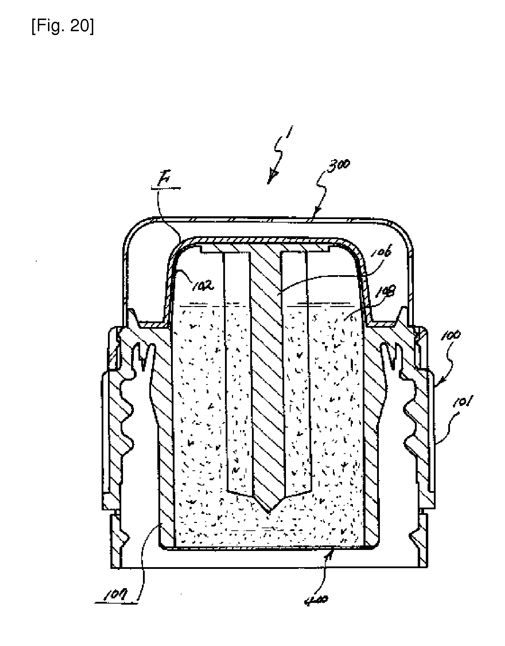

Continuously, FIG. 20 illustrates a structure in which a top surface of the receiving apparatus 1 is provided as the foldable part F having a dome shape or the foldable connecting part 102. In a case where the above-described structure is used, when the foldable part F is pressed, the opening part 106 breaks the accommodating part sealing part 400 to allow the heterogeneous materials stored in the storage spaces 108 to drop down, and thus are mixed with each other.

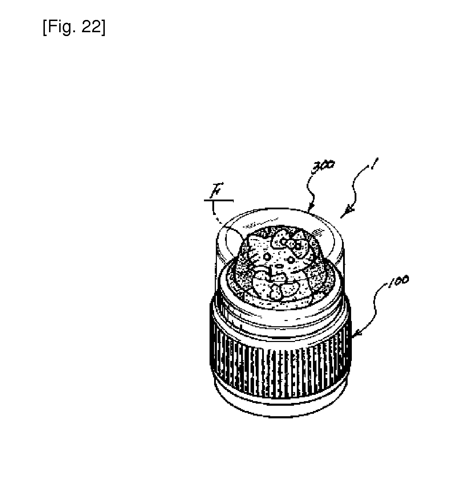

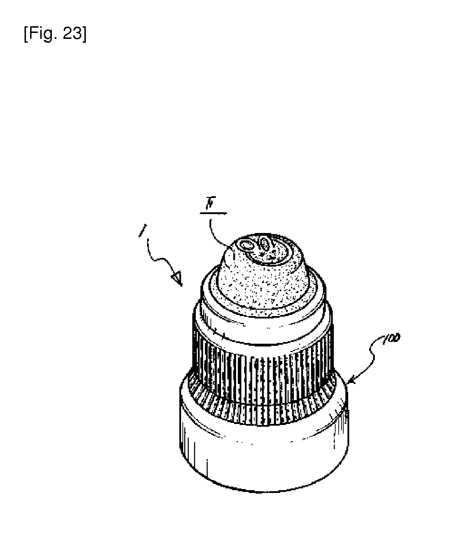

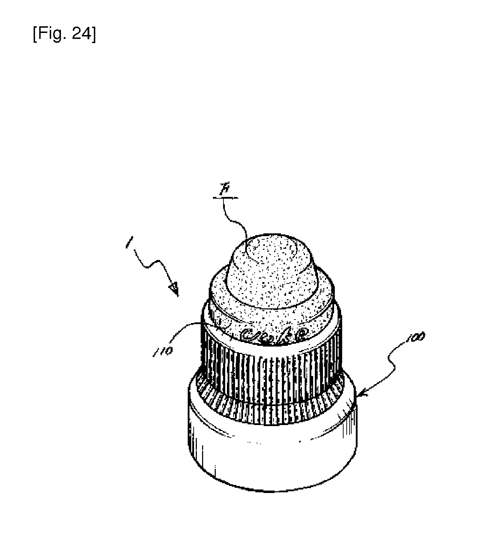

Referring to further another embodiment (see FIGS. 22 to 29),

As shown in FIGS. 22 to 24, when the above-described foldable connecting part 102 or foldable part F are additionally provided, the foldable connecting part 102 or the foldable part F may be selected from miniatures, characters, letters, figures, or various shapes, and the foldable part F may be co-injection molded.

Alternatively, the characters formed on the foldable part F may be separately manufactured and then be thermally attached on the upper portion of the main body 100 or coupled to the upper portion of the main body 100 by other methods.

Also, when the characters and the like are formed on the foldable connecting part 102, a material having a barrier property may be applied or deposited on an upper portion of the foldable connecting part 102.

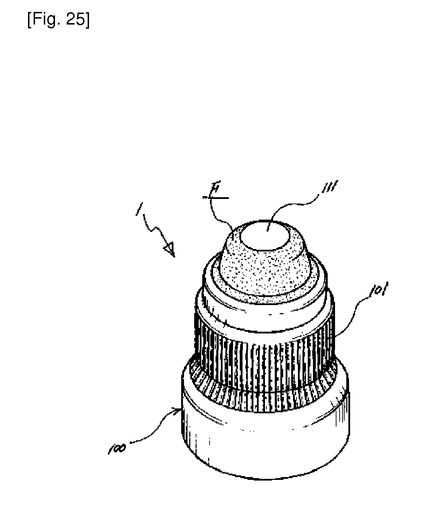

Also, as shown in FIG. 25, a transparent window 111 is disposed in a center of the foldable part F so that the heterogeneous materials within the storage spaces are distinguished from each other.

In the present invention as described above, the foldable connecting part 102 may be coated with a material having a barrier property or adhere through deposition or thermal contraction.

Also, the cover 300 may be coupled to the upper portion of the main body 100 to protect the foldable part F.

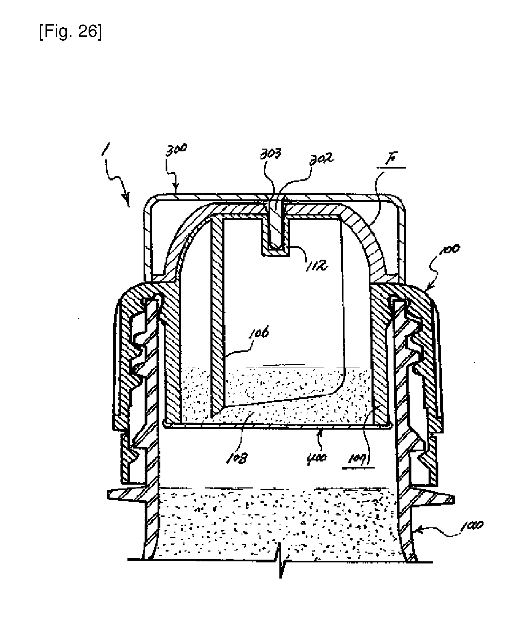

Referring to FIG. 26, an assembly type protrusion injection part 112 may be disposed on a center of the upper portion of the foldable part F, and an assembly protrusion 302 of the cover 300 may be assembled with the assembly type protrusion insertion part 112.

When the above-described structure is used, if the cover 300 is removed, a top surface cutoff line 303 is broken to separate the cover 300 from the foldable part F.

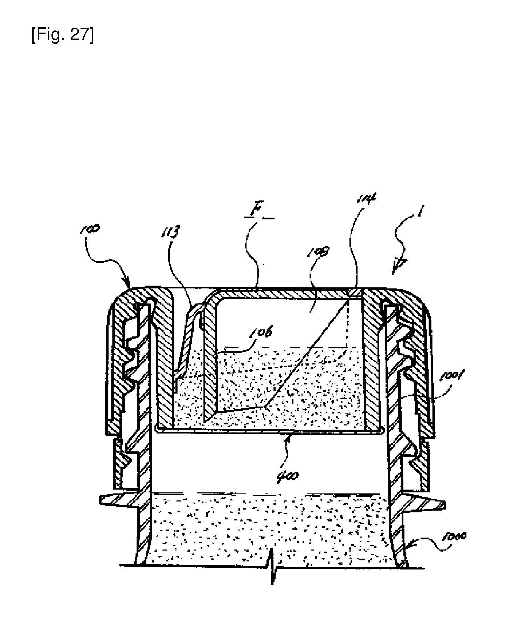

Also, as shown in FIG. 27, the foldable connecting part (the foldable part F) may include an auxiliary foldable part 113 disposed on a side opposite to a foldable reference surface 114 so that the foldable part F is folded toward one side with respect to the foldable reference surface 114. In use, when the auxiliary foldable part 113 is pressed, the accommodating part sealing part 400 of the opening part 106 is opened.

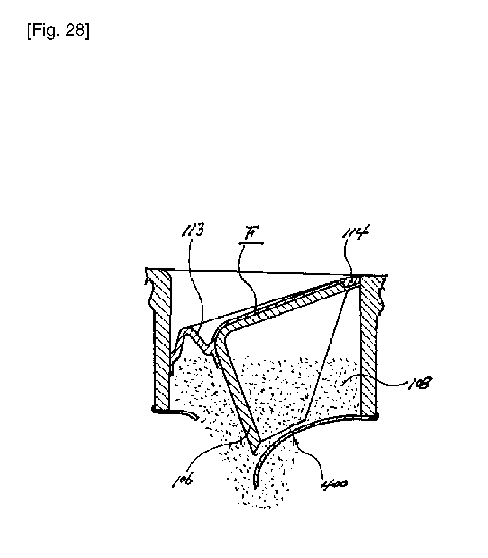

As described in FIG. 28, the opening of the opening part 106 represents that the auxiliary foldable part 113 is folded, and then, the opening part 106 is rotated along a trace of a circle with respect to the foldable reference surface 114 to break the accommodating part sealing surface.

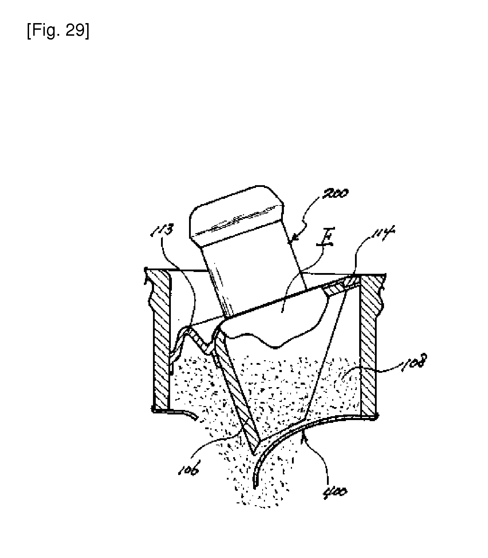

Also, FIG. 29 illustrates a structure in which the sealing stopper 200 for discharging the mixed content is installed on the foldable part. As shown in FIG. 29, when the sealing stopper 200 is lifted after the contents are mixed with each other, the discharge hole is opened. The sealing stopper 200 may be changed in design to manufacture discharge devices by using various methods.

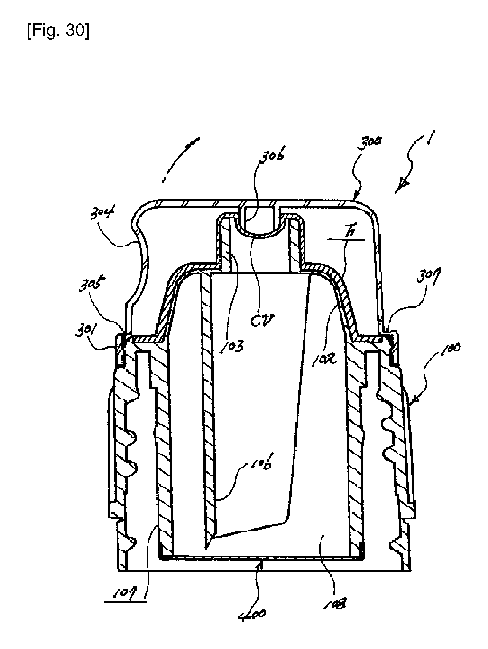

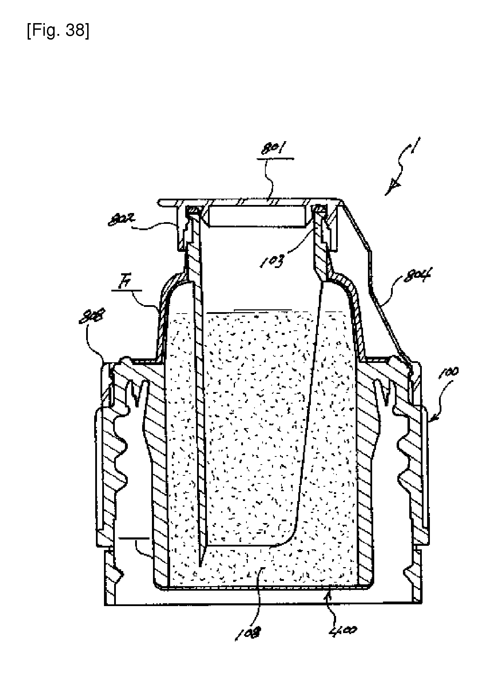

In another embodiment (see FIGS. 30 to 46), as shown in FIG. 30, a check valve CV is disposed in the main body mouth part 103, and the cover 300 is assembled with an upper portion of the main body mouth part 103. Here, a mouth part sealing part 306 of the cover 300 is closely attached to the check valve CV.

In a case of FIG. 30, when an opening guide part 305 of the cover 300 is lifted, a separation cutoff line 305 is broken, and thus the mouth part sealing part 306 ascends. The cover 300 is fixed to the main body 100 by a cover connecting part 307.

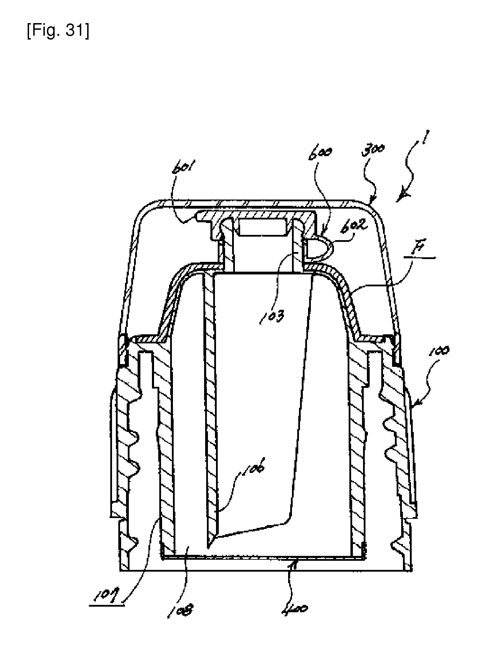

In a case of FIG. 31, a hinge type sealing stopper 600 is coupled to the main body mouth part 103 of the main body 100. In use, when the cover 300 assembled with the upper portion of the main body mouth part 103 is removed to lift the guide part 601, the hinge type sealing stopper 600 may be opened. Thus, the hinge type sealing stopper 600 may be connected to the main body mouth part 103 by a stopper connecting part 602.

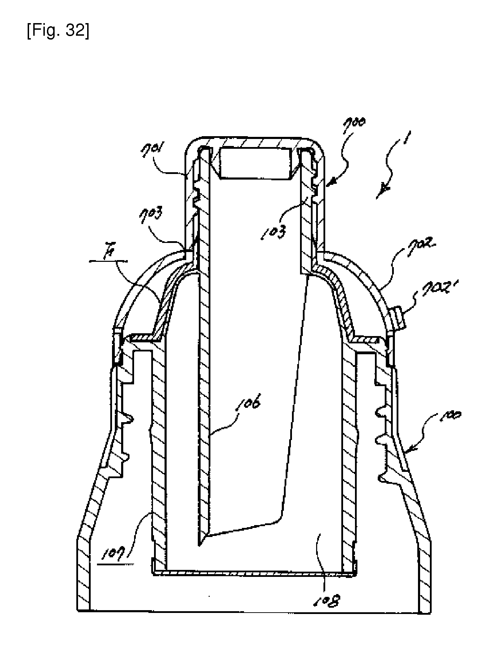

Also, as shown in FIG. 32, a rotational sealing stopper 700 is coupled to the main body mouth part 103. The rotational sealing stopper 700 is disposed on the upper portion of the main body 100 and protected by the cover part 702.

As described above, in use according to the present invention, when a rotational sealing stopper body 701 is pressed, the cover part cutoff line 703 is broken, and simultaneously, the opening part 106 descends to mix the contents of the accommodating part 107 with each other.

Alternatively, the cover part 702 may be removed first, and then the rotational sealing stopper 700 may be pressed.

Also, as necessary, a pulling part 702' may be pulled to remove the cover part 702.

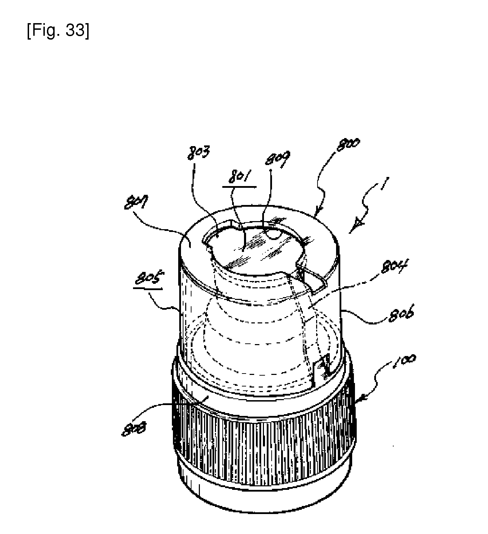

Continuously, as shown in FIGS. 33 to 46, a protective cover 800 is coupled to the main body mouth part 103. The protective cover 800 has a top surface 807 and a side surface 806. Also, the cover body 801 is disposed on a center of the protective cover 800. The cover body 801 forms a boundary with a cover's outer shell 805 by a cover top surface cutoff line 809. In the cover body 801, a cover sealing part 802 sealing the main body mouth part 103 is connected to a portion of the cover anti-forgery frame 808 constituting a lower end of the cover's outer shell 805 by the cover connecting part 804.

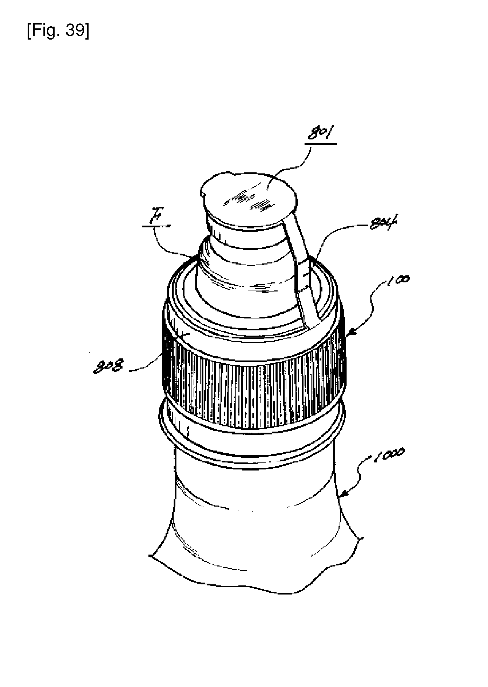

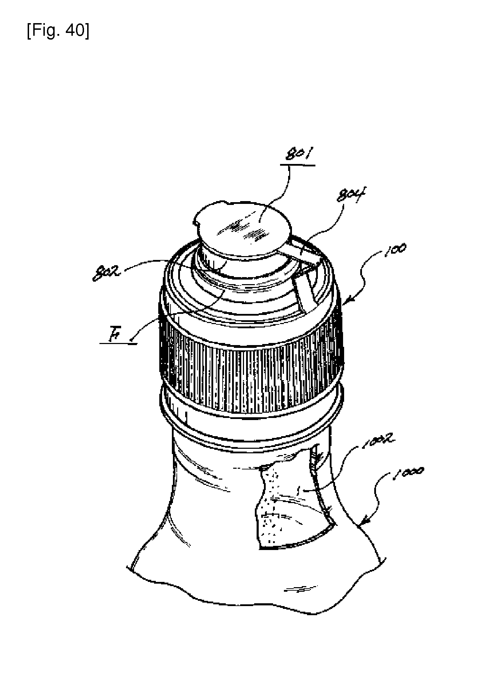

As described above, according to the present invention, when the cover's outer shell 805 is removed, a state shown in FIG. 32 or 39 may become. In this state, when the cover body 801 is pressed, as shown in FIG. 40, the foldable part F is folded, and thus, the contents drop into an inner container space part 1002 of the container 1000 and are mixed with each other.

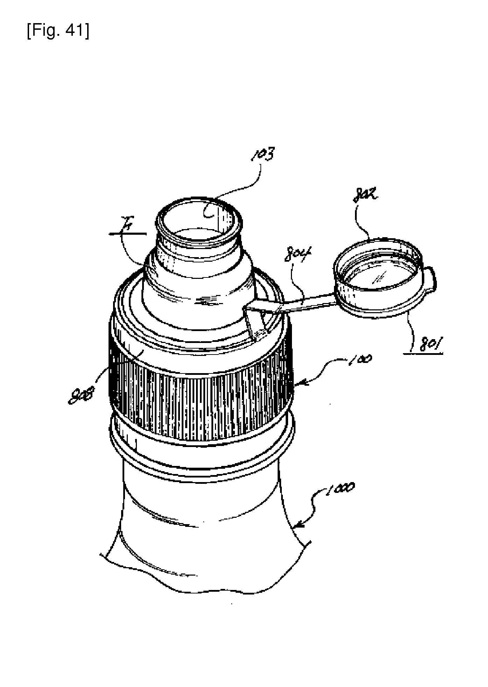

Also, when it is intended to discharge the mixed content, if the cover guide part 803 is lifted, as shown in FIG. 41, the cover sealing part 802 is opened.

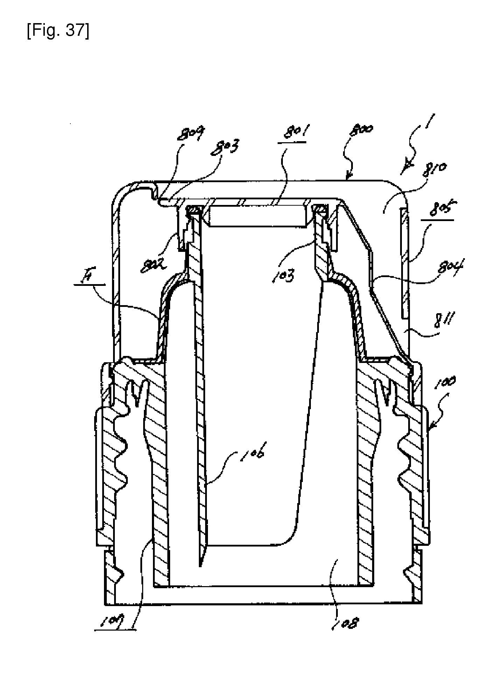

Also, as shown in FIG. 37, if a vertical space 810 is defined in an upper side, and a horizontal space 811 is defined in a side surface to form the cover connecting part 804, a mold may be easily manufactured, and also, the injection molding may be easily performed.

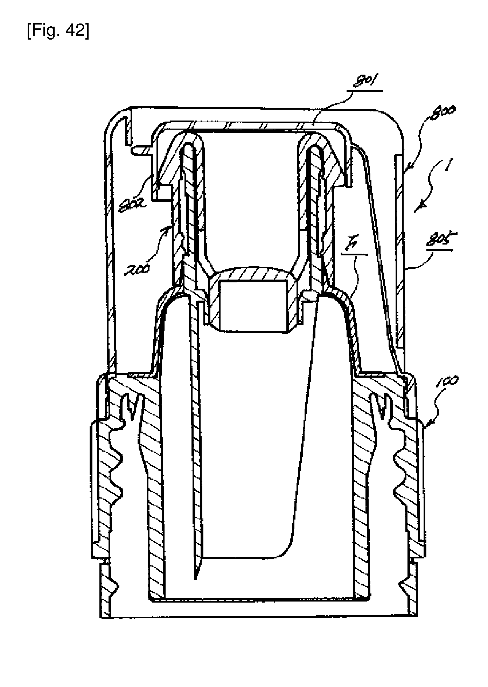

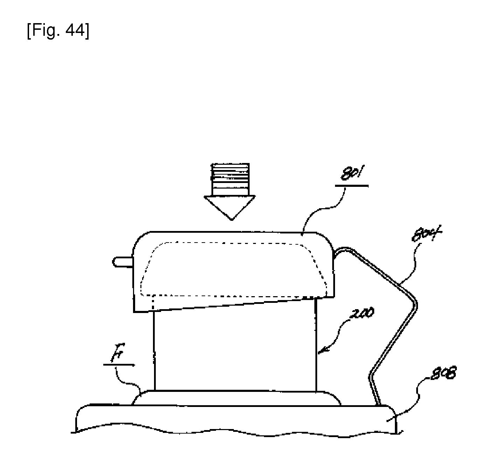

FIGS. 42 to 44 illustrate a state in which the protective cover 800 is used for the receiving apparatus 1 in a similar manner, and also, FIG. 44 illustrates a use state.

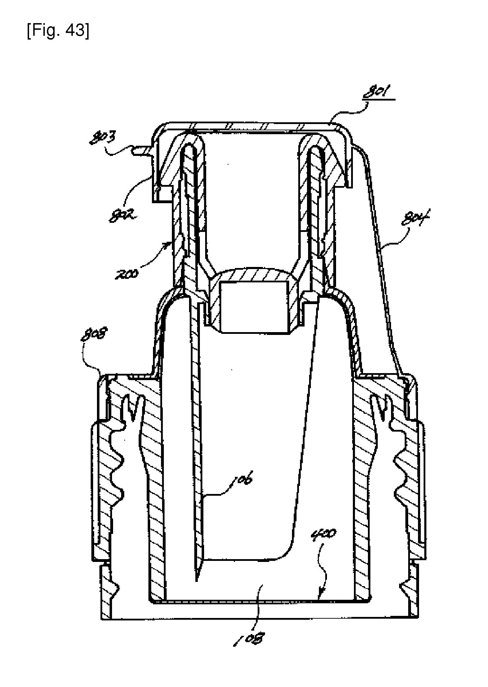

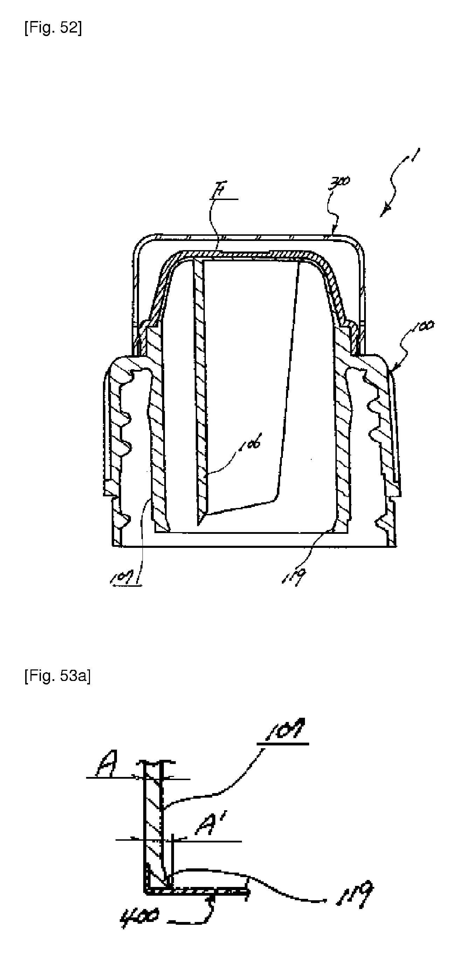

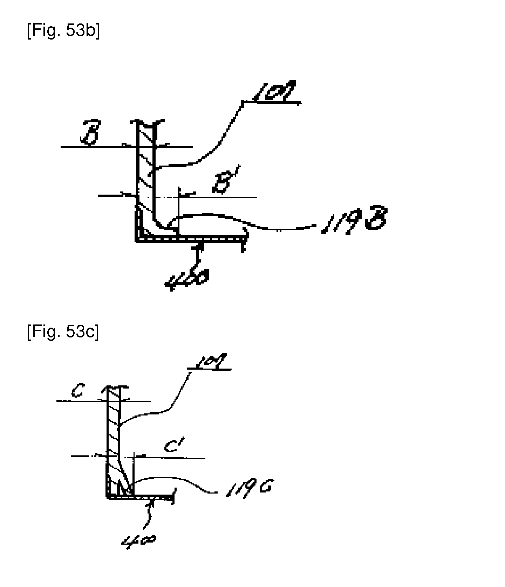

Particularly, in a case of FIG. 42, when the cover's outer shell 805 is removed, and then (see FIG. 53), the cover main body 801 is pressed, as shown in FIG. 44, the foldable part F is folded, and the opening part 106 of FIG. 43 breaks the accommodating part sealing part 400 in the above-described process.

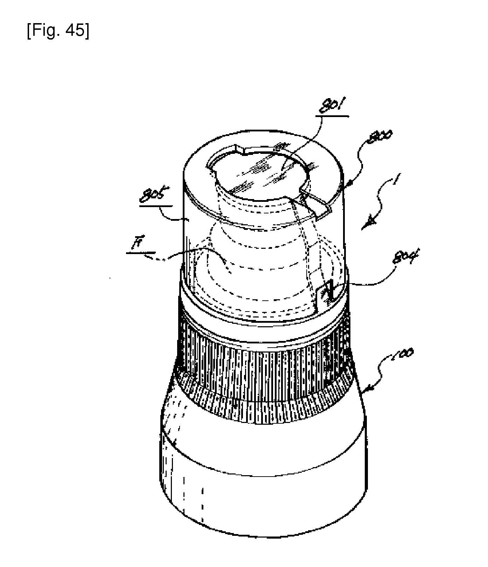

FIG. 45 illustrates a state in which the protective cover 800 is coupled to the main body 100 of the receiving apparatus 1 in other similar manner.

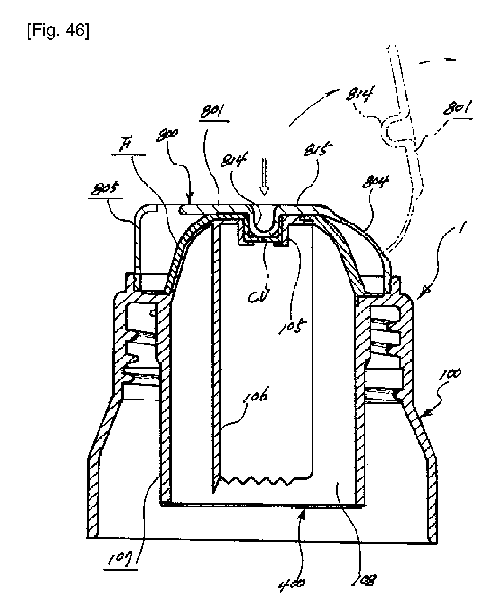

FIG. 46 illustrates a state in which the check valve CV is disposed on a portion of the sealing corresponding part 105, and the protective cover 800 in which a cover body sealing part 814 seals an upper portion of the check valve CV is coupled to an upper portion of the check valve CV.

In use, when the cover's outer shell 805 is removed, and a sealing part top surface 815 is pressed, the opening part 106 opens the accommodating part sealing part 400.

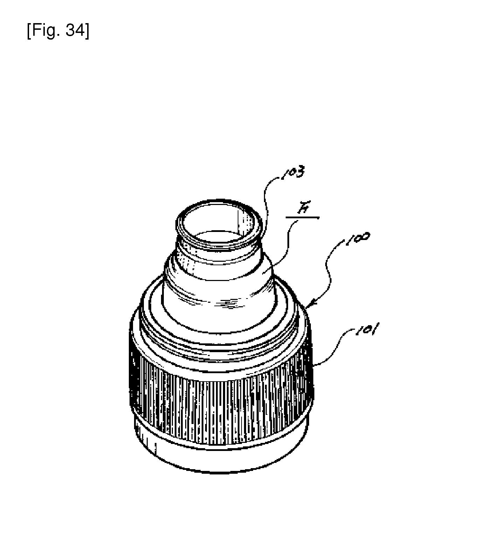

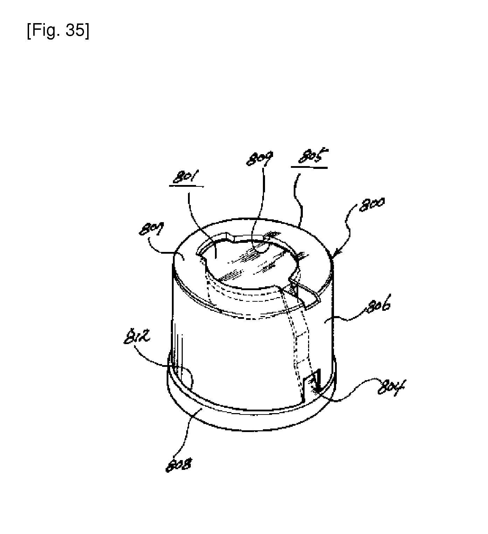

In additional descriptions, FIG. 34 illustrates an example in which the main body mouth part 103 is disposed on the upper portion of the foldable part F of the main body 100, and FIG. 35 illustrates a perspective view of the protective cover 800.

As shown in FIG. 35, the cover connecting part 804 is connected from the cover anti-forgery frame 808 to the cover main body 801 disposed on a center of the cover's outer shell 805.

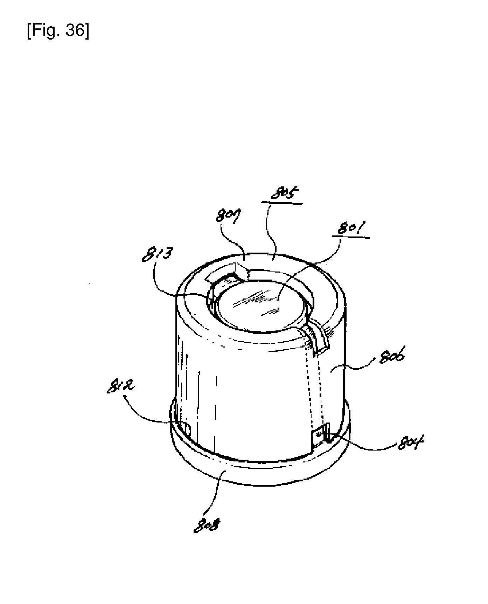

Also, FIG. 36 illustrates a structure in which the cover main body 801 disposed inside the cover top surface part 807 of the cover's outer shell 805 is punched with a minimized cutoff line, i.e., is provided as a separating space 810 to easily separate the cover's outer shell 805 in use.

Also, as shown in FIG. 42, the protective cover 800 may be applied to the receiving apparatus 1 including the sealing stopper 200. FIG. 42 illustrates an example in which the protective cover 800 is coupled with respect to the sealing stopper 200, and FIG. 43 illustrates a state in which the cover's outer shell 805 is separated. FIG. 44 illustrates a state in which the upper portion of the cover main body 801 is pressed to fold the foldable part F in the state of FIG. 43.

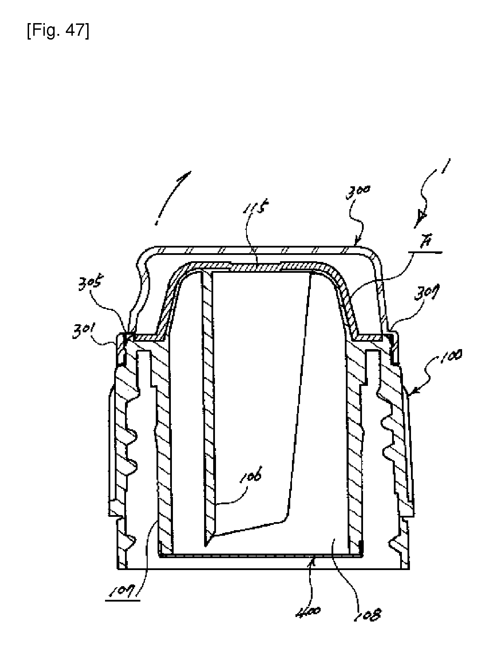

In further another embodiment (see FIGS. 47 to 54), FIG. 47 illustrates a state in which a soft part 115 in which a syringe may be usable is disposed in a center of the foldable part F.

In detail, when the cover 300 is opened, the foldable part F is pressed, the opening part 106 opens the accommodating part sealing part 400 to allow the contents of the storage spaces 108 to drop, thereby mixing the contents with each other.

In this state, the mixed content may be used by inserting a needle of the syringe into the soft part 115. The soft part 115 having the above-described feature may be formed of a resin such as silicon.

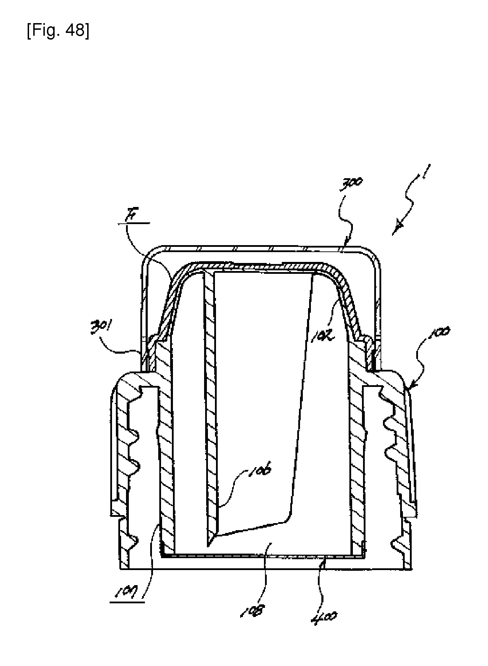

FIG. 48 illustrates an example in which the foldable part F may be freely modified in shape or configuration. For example, to expand the storage space 108 of the accommodating part 107, the foldable part F that is expanded upward is enabled.

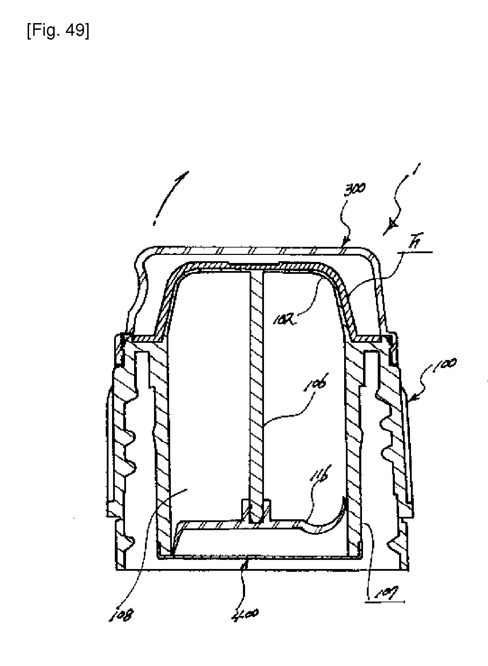

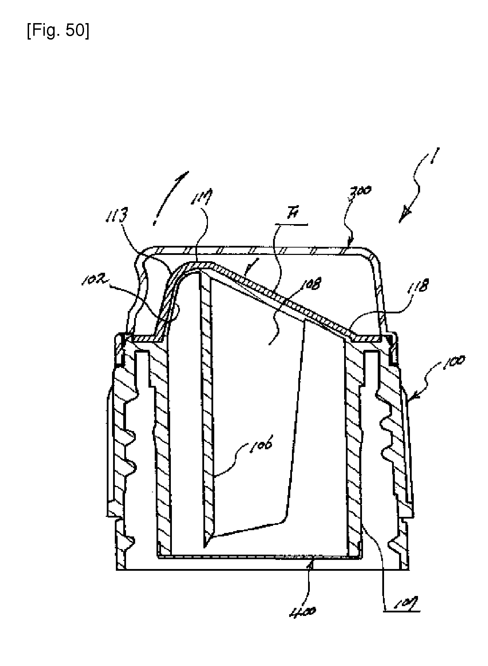

FIG. 49 illustrates a state in which an opening end 116 is disposed on an end of the opening part 106, and FIG. 50 illustrates a state in which the foldable reference surface 118 is disposed on a side opposite to a foldable pressing surface 117 protruding so that the foldable part F is folded toward one side.

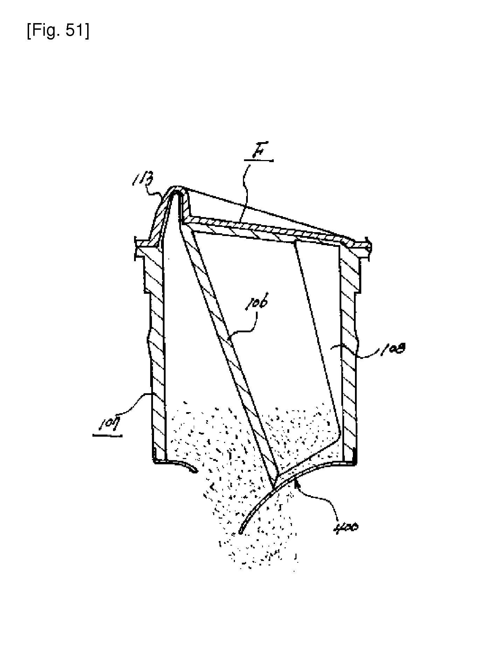

Also, in the state of FIG. 50, when the foldable pressing surface 117 is pressed, the auxiliary foldable part 113 is folded, and simultaneously, the foldable pressing surface 117 descends downward along a track of a circle with respect to the foldable reference surface 118. In this process, the opening part 106 breaks the accommodating part sealing part 400 as shown in FIG. 51.

In addition, the opening part 106 is disposed on a bottom surface of the foldable pressing surface 117, and the auxiliary foldable part 113 is formed of a soft resin. As necessary, the auxiliary foldable part 113 may be injection-molded by using a single material through the foldable connecting part 102.

In FIG. 52, an adhesion sectional surface 119 is provided as shown in FIG. 53A to expand a sectional area of the adhesion sectional surface 119 of the accommodating part 107. As shown in FIG. 52, the accommodating part 106 has a thickness "A" greater than that "A" of the adhesion sectional surface 119.

Also, in case of FIGS. 53B and 53C, an adhesion sectional surface 199B has a thickness B' greater than that B of the accommodating part 107. In this case of 53C, a adhesion sectional surface 119C has a thickness C' greater than that C of the accommodating part 107.

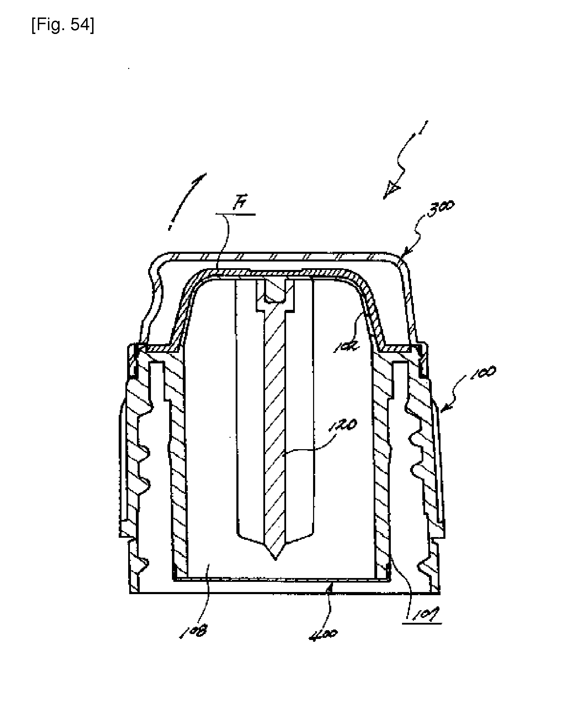

FIG. 54 illustrates a state in which an assembly type opening part 120 is provided. Here, the assembly type opening part 120 may be variously changed in design.

In more detail, the assembly type opening part 120 may be integrally injection-molded while the foldable connecting part 102 is formed or may be separately manufactured and then coupled to each other as shown in FIG. 54.

Thus, the assembly type opening part 120 may have a sharp shape or a cross, triangular, or circular shape when viewed in a cross-section.

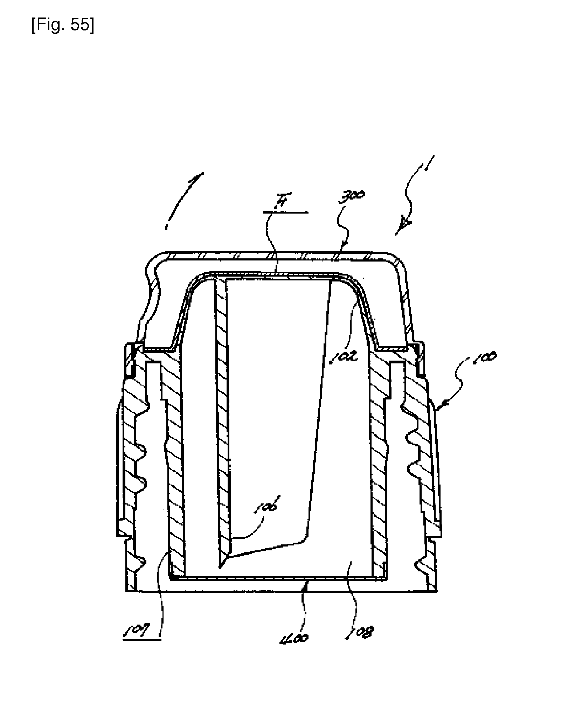

In further another embodiment (see FIGS. 55 to 61), FIG. 55 illustrates a state in which a material having a barrier property is applied, deposited, or adheres to an upper portion of the foldable connecting part 102.

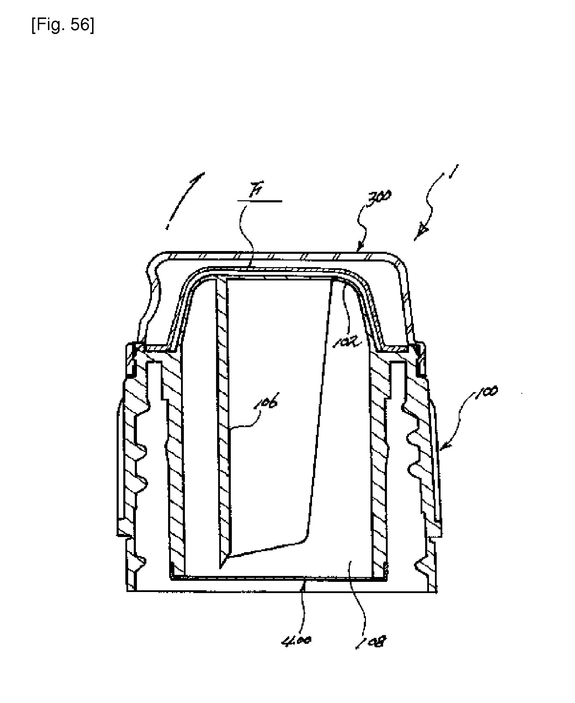

FIG. 56 illustrates a state in which the material having the barrier property such as a tray is disposed (coupled or adheres) on the upper portion of the foldable connecting part 102.

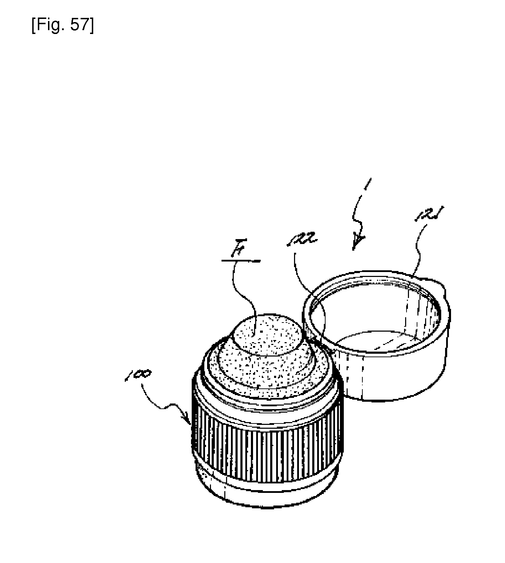

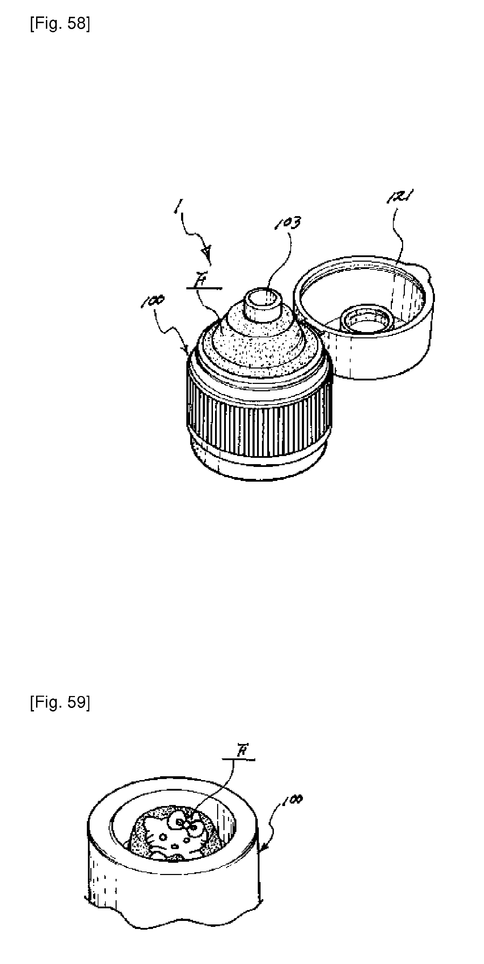

FIGS. 57 and 58 illustrate an example in which the foldable part F is applied or adheres by using the material having the barrier property. Here, the foldable part F of the receiving apparatus 1 may have a dome shape as shown in FIG. 57. Thus, an integrated cover 121 may be disposed on the main body 100 to protect the foldable part F having the dome shape, or as shown in FIG. 58, the main body mouth part 103 for discharging the mixed content may be disposed on a center of the upper portion of the foldable part F. That is, the material having the barrier property may be added to the foldable part F with respect to a circumference of the main body mouth part 103.

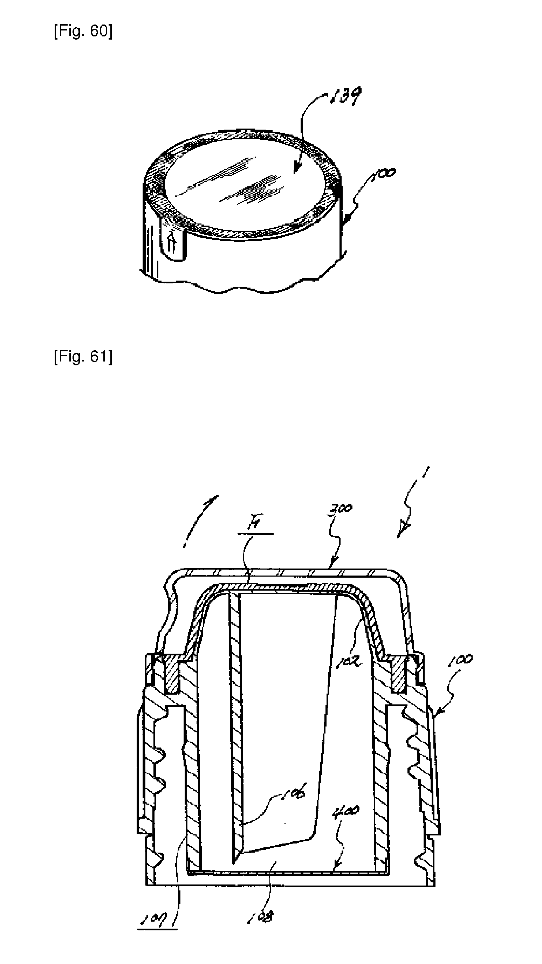

In FIGS. 59 and 60, the foldable part F may be disposed on a center of the main body, and a character or miniature may be exposed on the foldable part F. When the foldable part F is formed of a material that does not have the barrier property, a main body upper portion sealing part 139 may be disposed on the upper portion of the main body 100 to improve the barrier property as shown in FIG. 60.

FIG. 51 illustrates an example in which the foldable part F is fitted into the upper portion of the foldable connecting part 102. In this case, the barrier property may be improved.

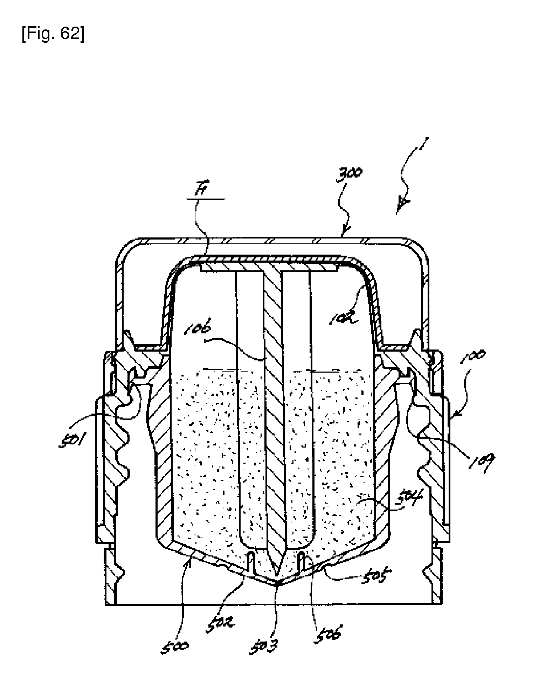

In another embodiment (see FIGS. 62 to 71), in case of FIG. 62, an apparatus 1 for receiving heterogeneous materials, which is coupled to a mouth part of a container containing contents such as liquid includes a main body 100 coupled and fixed to the mouth part of the container and an accommodating part having an accommodating part storage space 504 within the main body 100 and coupled to an assembly type accommodating part 500. The inner accommodating part storage space 504 within the assembly type accommodating part 500 is configured so that a foldable connecting part 102 disposed on an upper portion of the storage space 500 and an opening part 106 disposed on a lower portion of the foldable connecting part 102 break an accommodating part sealing surface 502 sealing a lower end of the assembly type accommodating part 500, i.e., a sealing surface 502 to allow contents within the accommodating part storage space 504 of the assembly type accommodating part to drop into the container, thereby mixing the contents with each other.

The foldable connecting part 102 and a foldable part F is injection-molded by a co-injection molding machine

Alternatively, an upper protrusion 506 is disposed on the sealing surface 502 so that the opening part 106 easily seals the sealing surface 502.

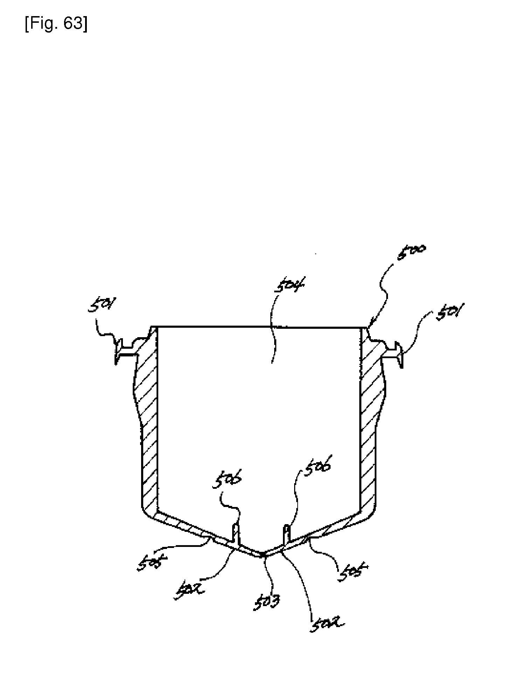

FIG. 63 illustrates the assembly type accommodating part 500. Here, an assembly type frame 501 is hung on a hook 109 of the main body, and a sealing surface connecting part 505 is disposed on a side opposite to an accommodating part cutoff line 503 so that the sealing surface 502 is easily opened.

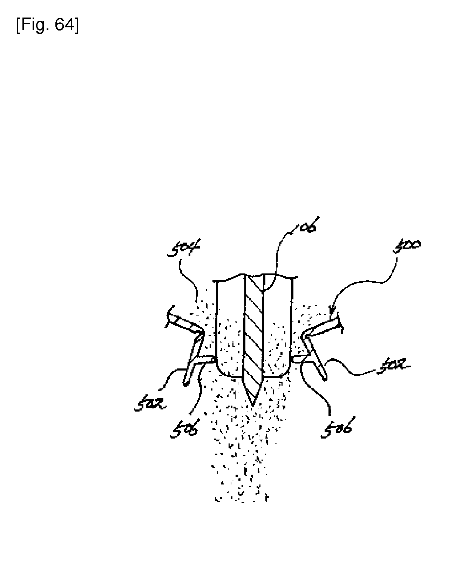

In case of FIG. 64, while the opening part 106 breaks the accommodating part cutoff line 503, the accommodating part storage space 504 is opened

In the additional description of the present invention as described above, when the foldable part F is pressed in the state of FIG. 62, the foldable part F is folded. In this process, the accommodating part cutoff line 503 is cut, and simultaneously, a protruding portion constituting an annular part of the opening part 106 pushes an upper protrusion 506 disposed on an upper portion of the sealing surface 502 to open the sealing surface 502 as shown in FIG. 64.

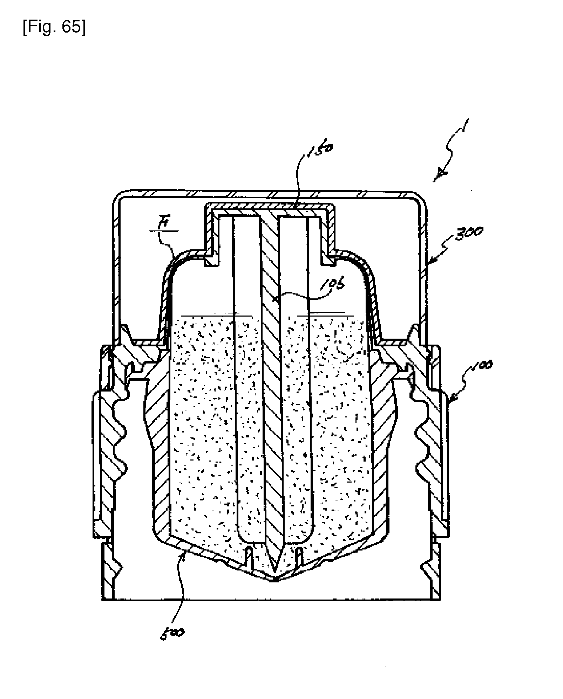

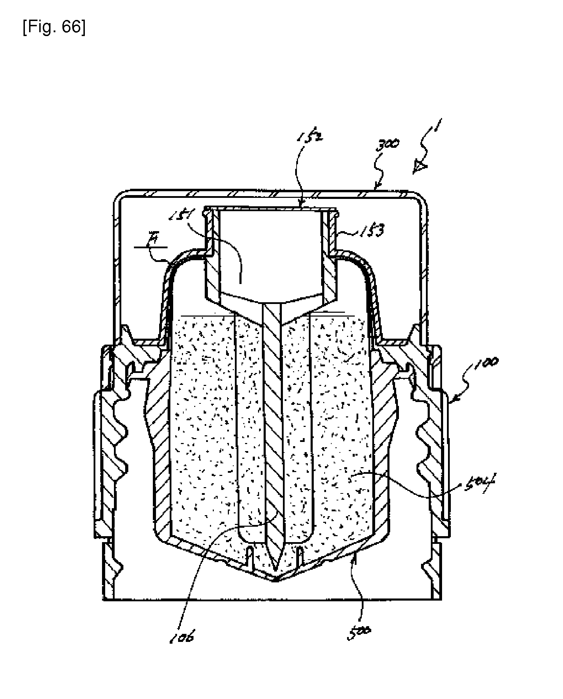

In case of FIG. 65, a foldable part pressing surface 150 having a protruding shape may be disposed on an upper portion of the foldable part F so that the foldable part F is easily folded when the foldable part F is pressed. In case of FIG. 66, although it is provided as the same purpose, the contents may be put into the accommodating part storage space 504 through an injection main body mouth part 153 protruding from the upper portion of the foldable part F, and then an upper portion of the injection main body mouth part 153 may be sealed by using a main body mouth part sealing surface 152.

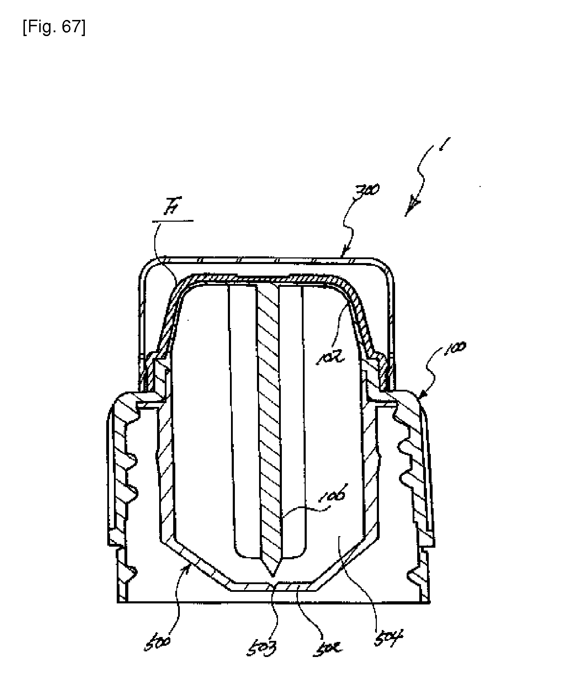

FIG. 67 illustrates an example in which the assembly type accommodating part 500 is assembled to the inside of the main body 100. In an example in use, when the foldable part F is pressed, the opening part 106 disposed under the foldable part F breaks the accommodating part cutoff line 503 of the assembly type accommodating part 500 to open the sealing surface 502.

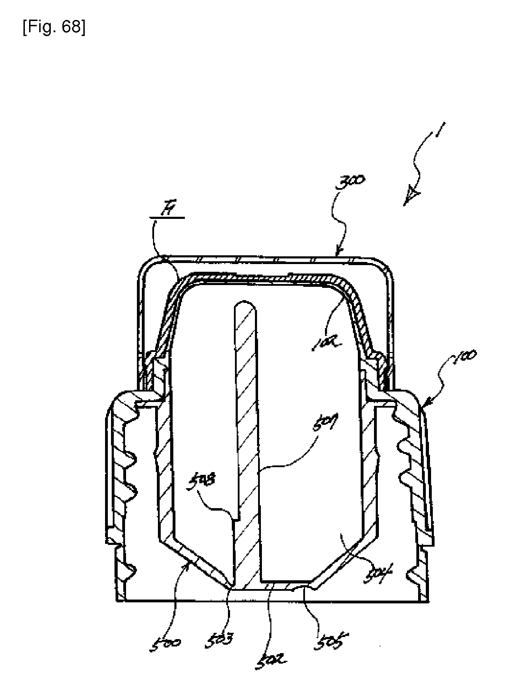

Also, in case of FIG. 68, the assembly type accommodating part 500 is configured so that a cutoff protrusion piece 507 breaks the accommodating part cutoff line 503 formed on the assembly type accommodating part 500 while the foldable connecting part 102 is folded downward to open the accommodating part storage space 504 of the assembly type accommodating part 500. A protruding piece hook 508 is configured to prevent the accommodating part storage space 504 from being closed after being opened.

In more detail, when the cover 300 is removed, and the foldable part F is pressed in the state of FIG. 68, a bottom portion of the foldable part F may press an upper end of the cutoff protrusion piece 507, and then force generated by the pressing of the bottom portion may be concentrated into the accommodating part cutoff line 503. As a result, the accommodating part cutoff line 503 is broken to open the sealing surface 502.

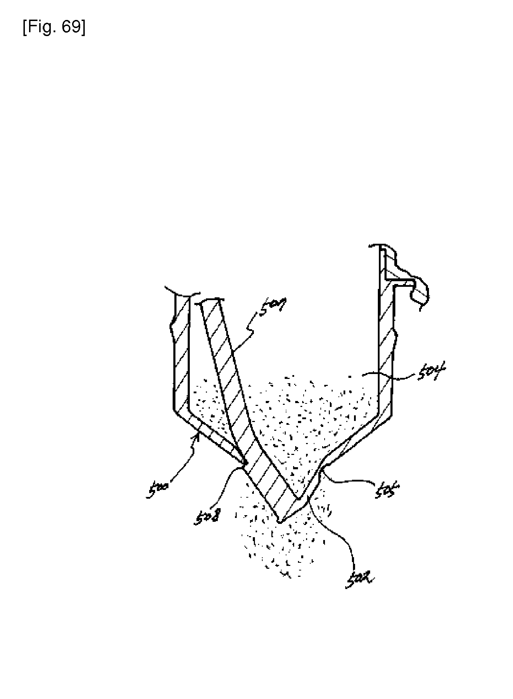

Also, while the sealing surface 502 is opened, the protruding piece hook 508 is hooked on a portion of a cut hook as shown in FIG. 69.

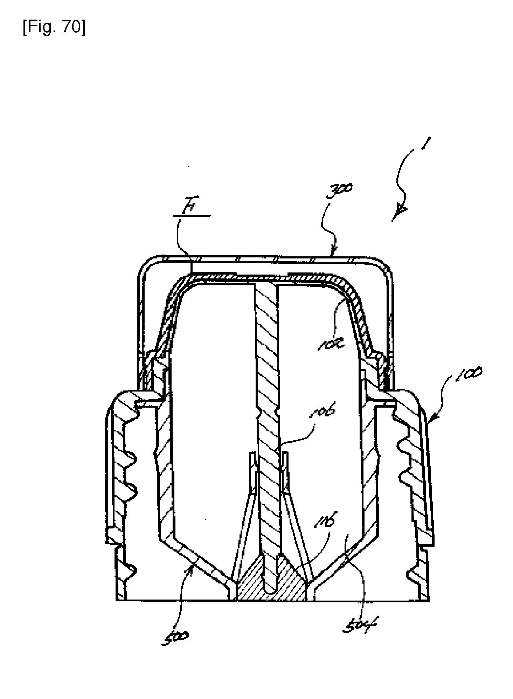

FIG. 70 illustrates a structure in which an opening end 116 closing a lower opening hole of the assembly type accommodating part 500 is disposed on a lower end of the opening part 106 to allow the accommodating part storage space 504 to be easily opened.

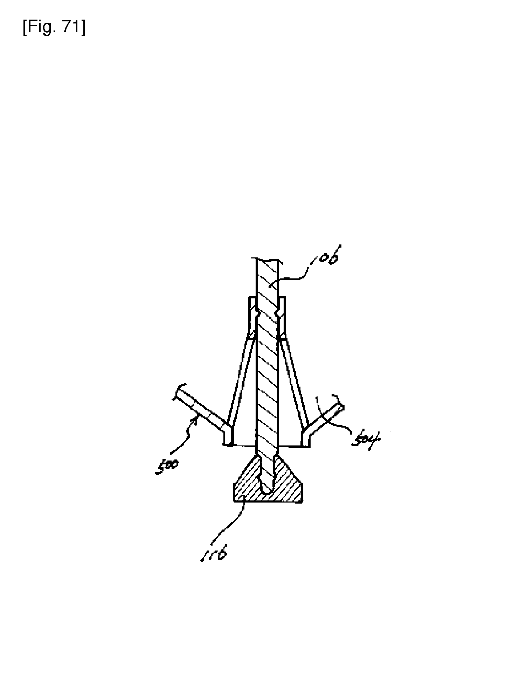

In use as described above, when the foldable part F is pressed, the opening part 106 descends, and simultaneously, the opening end 116 disposed on the lower end of the opening part 106 is opened to allow the heterogeneous materials to drop, thereby mixing the heterogeneous materials with each other as shown in FIG. 71.

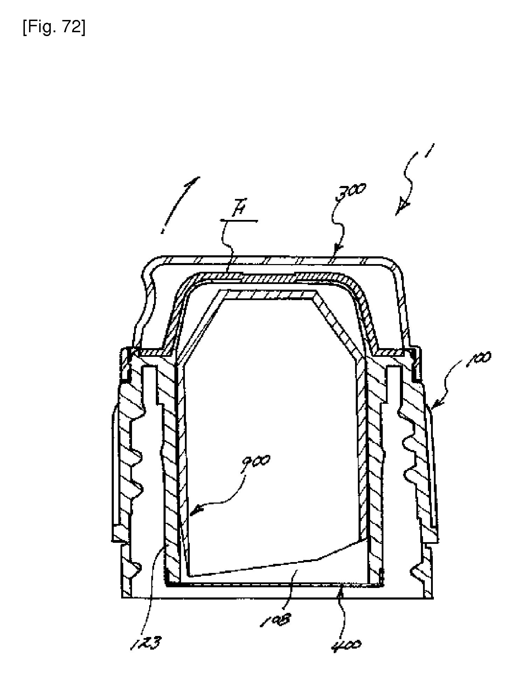

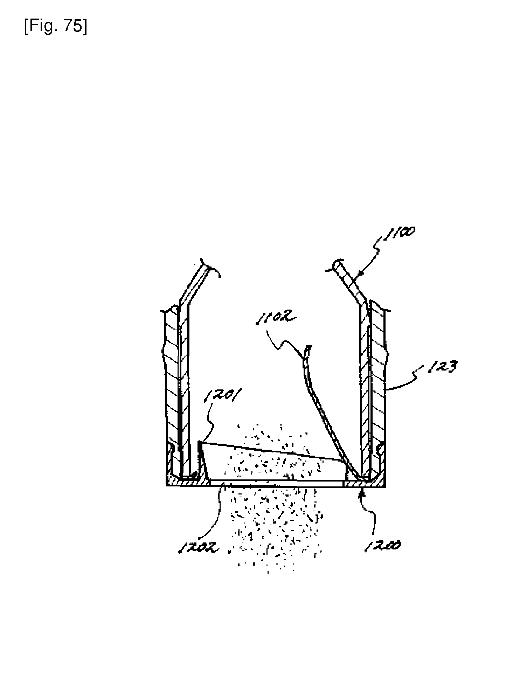

In further another embodiment (see FIGS. 72 to 75), FIG. 58 illustrates a structure in which, when the foldable part F is pressed, an assembly type opening end 900 breaks the accommodating part sealing part 400 sealing a lower end of an opening end guide 123.

Preferably, the apparatus 1 for receiving the heterogeneous materials, which is coupled to the mouth part of the container containing the contents, includes a main body 100 coupled to the mouth part of the container and a foldable part F formed of a material having a barrier property and disposed on an upper portion of the main body 100. An assembly type opening end 900 designed to move downward is disposed on a lower portion of the foldable part F. A lower end of the opening end guide 123 of the main body 100 on which the assembly type opening end 900 is disposed is sealed by the accommodating part sealing part 400.

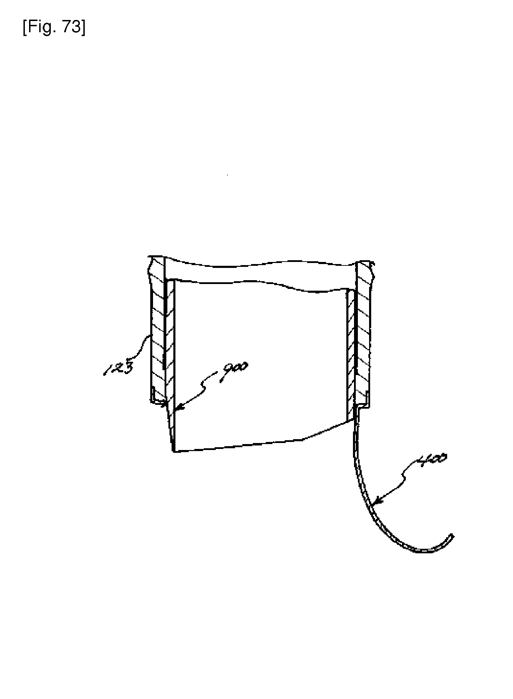

As described above, in use of the receiving apparatus 1, when the foldable part F is pressed, the foldable part F is folded to push an upper end of the assembly type opening end 900. In this process, a lower end of the assembly type opening end 900 punches the accommodating part sealing part 400 as shown in FIG. 73.

The lower end of the assembly type opening end 90 may be variously designed. For example, the lower end for punching the accommodating part sealing part 400 may be collected to a center, and a shape portion formed at the center may break the accommodating part sealing part 400.

FIG. 59 illustrates a configuration in which, when the foldable part F is pressed, an insertion type accommodating part 1100 within the opening end guide 123 descends, and in this case, a lower sealing part 1102 is broken by an opening guide pin 1201 to open an insertion type accommodating part storage space 1101 of the insertion type accommodating part 1100.

In other words, the apparatus 1 for receiving the heterogeneous material, which is coupled to the mouth part of the container containing contents, includes the main body 100 coupled to the mouth part of the container and the foldable part F disposed on an upper portion of the main body 100. The insertion type accommodating part 1100 designed to move downward is assembled with the lower portion of the foldable part F. The heterogeneous material is contained within the insertion type accommodating part 1100, and an end of the insertion type accommodating part 1100 is sealed by the lower sealing part 1102. The lower sealing part 1102 is punched by the opening guide pin 1201 disposed on the opening end guide 123 of the main body.

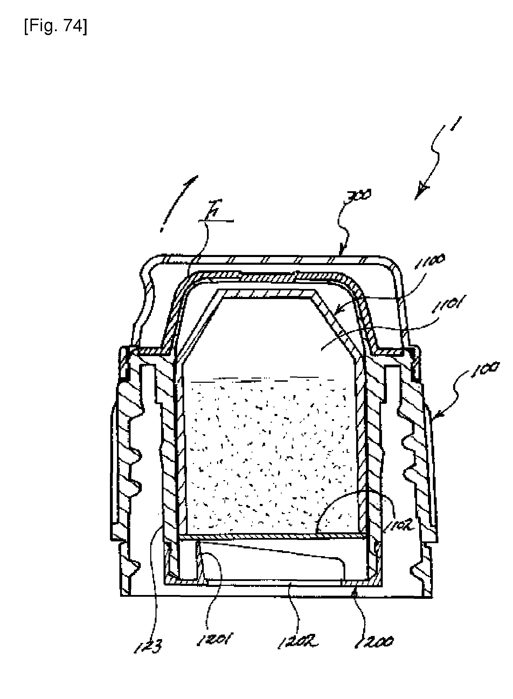

Particularly, in the state of FIG. 74, when the foldable part F is pressed, the insertion type accommodating part 1100 descends while the foldable part F is folded. In this process, the lower sealing part 1102 meets with the resistance from the opening guide pin 1201 to open the lower sealing part 1102 as shown in FIG. 25.

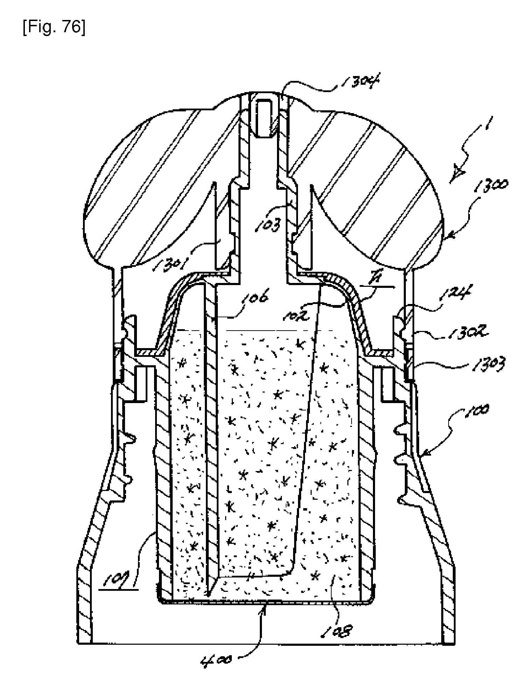

In another embodiment (see FIGS. 76 to 95), an apparatus 1 for receiving the heterogeneous materials, which is coupled to the mouth part of the container, includes a main body 100 coupled to the mouth part of the container and an integrated or assembled accommodating part 107 having the storage space 108 within the main body 100. The storage space 108 of the accommodating part 107 is opened by the foldable part F disposed on the upper portion of the main body 100. The foldable part F is configured so that, when a rotational operable sealing stopper 1300 assembled with the upper portion of the main body 1000 is rotated, the accommodating part sealing part 400 sealing the storage space 108 of the accommodating part 107 is opened.

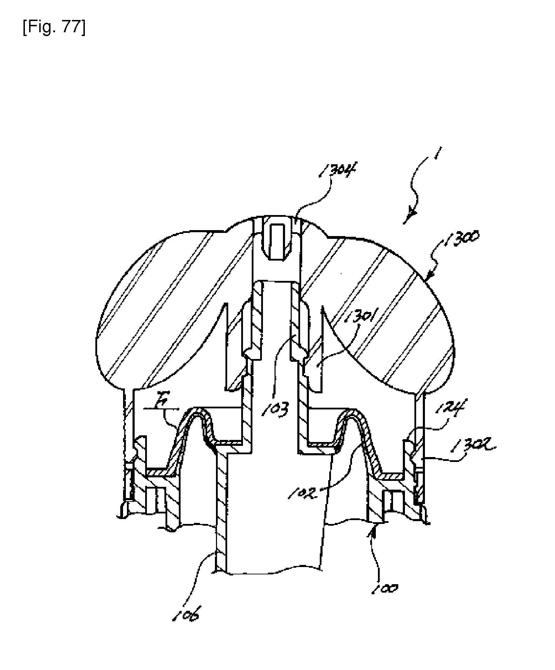

When described with reference to FIG. 76, if the operable sealing stopper 130 is rotated, a main body hole corresponding part 1301 corresponds to a screw thread or screw groove so that the main body hole 103 descends as shown in FIG. 77. In this process, the opening part 106 opens the accommodating part sealing part 400.

Also, the operable sealing stopper 1300 is configured so that the opening part 106 descends while a support part 1302 is rotated on a support corresponding part 124. When operating, since an operable sealing stopper anti-forgery frame 1303 is broken, it may be confirmed whether the apparatus 1 is tampered.

Also, the mixed content is discharged through a sealing stopper discharge hole 1304.

Continuously, in more detail, the main body mouth part 103 is disposed above the foldable part F. A main body mouth part corresponding part 1301 disposed on the operable sealing stopper 1300 meets with the main body mouth part 103, and the main body mouth part 103 and the main body mouth part corresponding part 1301 are coupled to each other so that the main body mouth part 103 and the main body mouth part corresponding part 1301 are operated by rotation method of a screw thread or screw groove. When the operable sealing stopper 1300 is rotated, the main body mouth part corresponding part 1301 pushes the main body mouth part 103 coupled to correspond to the main body mouth part corresponding part 1301 downward.

Also, an upper portion of the main body mouth part 103 is in an opened state, and an upper end of the main body mouth part 103 is assembled with the sealing stopper discharge hole 1304 and thus is opened or closed.

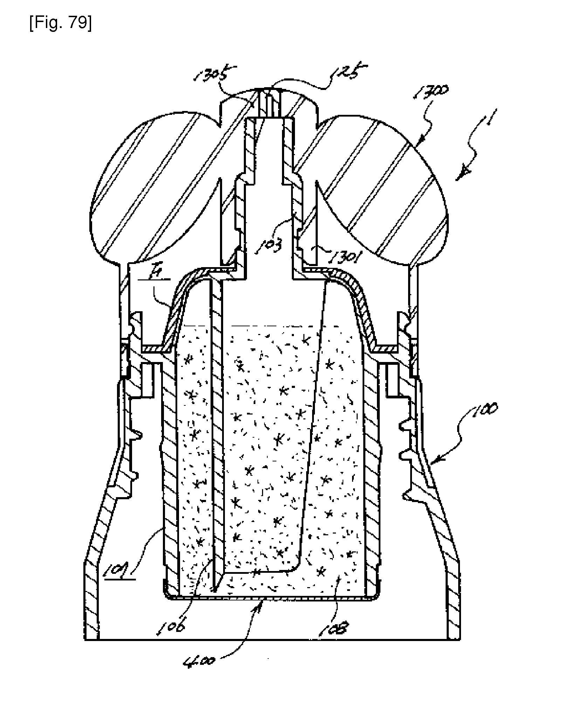

Also, the upper portion of the main body mount part 103 is in an opened state, and an upper end of the main body mouth part is coupled to the sealing stopper upper discharge surface 1305 to open or close the sealing stopper upper discharge surface 1305 according to a vertical operation of the foldable part F. (See FIG. 79).

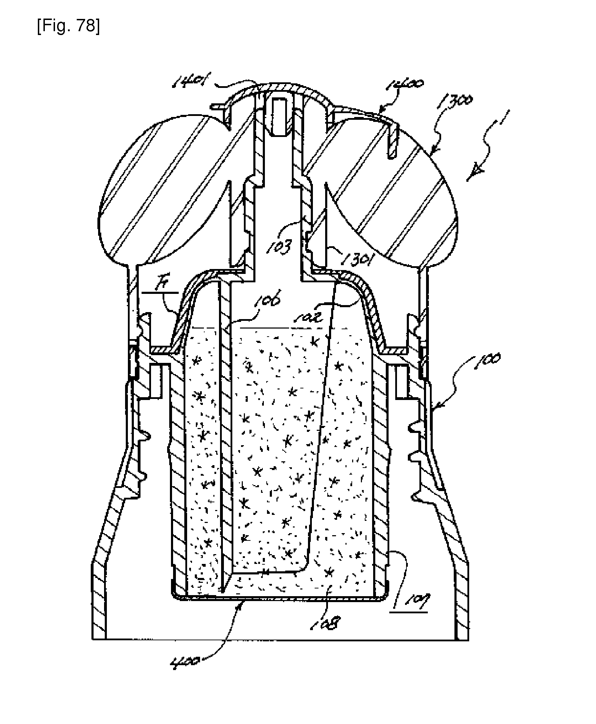

Continuously, FIG. 78 illustrates a structure in which a sanitary cover sealing surface 1401 includes a sanitary cover 1400 to prevent dusts from being attached to an upper portion of the operable sealing stopper 1300.

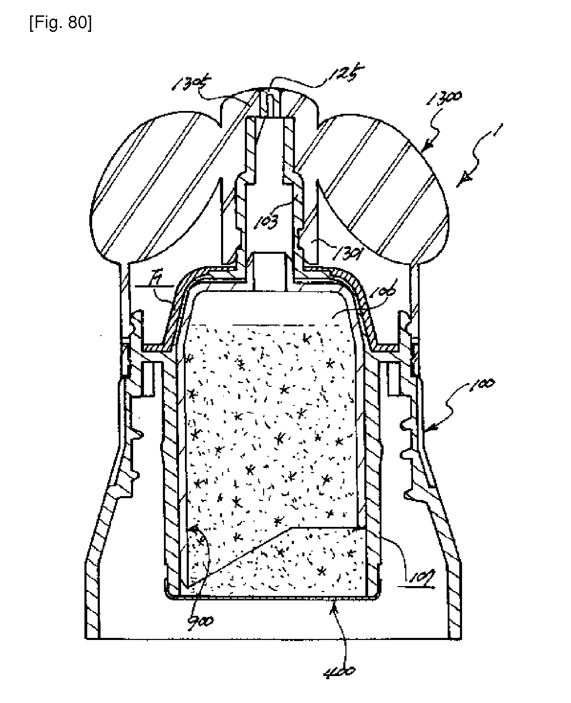

Also, an assembly type opening end 900 is inserted into the accommodating part 107 that is disposed under the foldable part F as shown in FIG. 80.

Preferably, the assembly type opening end 900 is disposed inside the accommodating part 107, and a portion of a lower end of the assembly type opening end 900 is sharped to easily break the accommodating part sealing part 400. Also, an upper portion of the assembly type opening end 900 is configured to be pushed to a lower side while the foldable part F is folded.

In reference, an upper portion of the assembly type opening end 900 may be fitted into an inner wall of the main body mouth part 103. Here, this structure should not block a passage through which the mixed content is discharged.

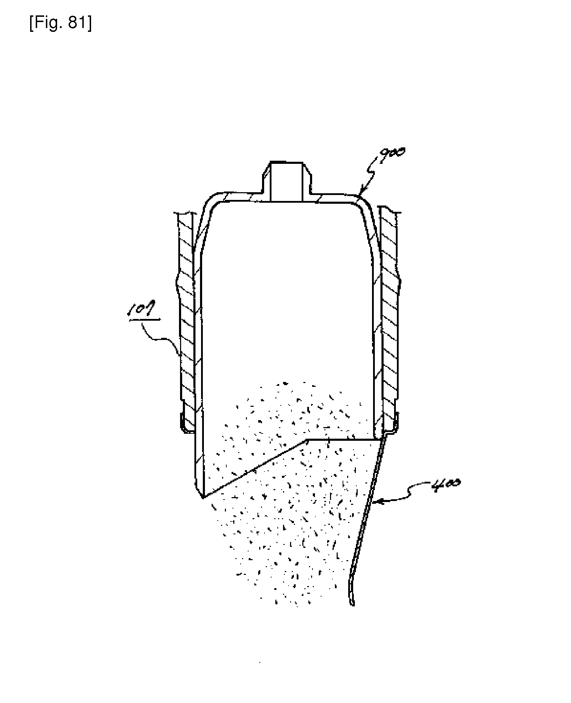

Also, in the state of FIG. 80, when the operable sealing stopper 1300 is operated, the main body mouth part corresponding part 1301 moves the main body mouth part 103 to descend. In this process, the assembly type opening end 900 opens the accommodating sealing part 400 as shown in FIG. 81.

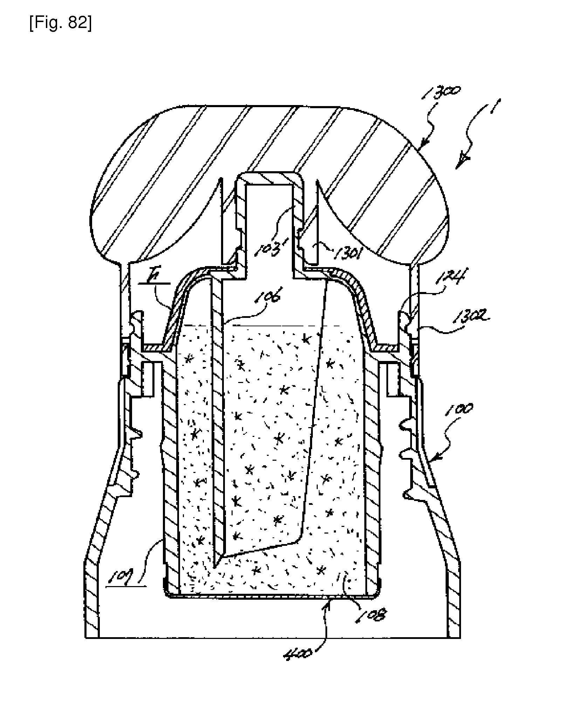

As another modified example, FIG. 82 illustrates an example in which the main body mouth part corresponding part 1301 pushes a main body mouth part 103' to break the accommodating part sealing part 400.

In more detail, the main body mouth part 103' having a screw thread or screw groove protrudes from a center of an upper portion of the foldable part F, and the main body mouth part corresponding part 1301 of the operable sealing stopper 1300 is coupled to the main body mouth part 103'.

Also, the main body mouth part corresponding part 1301 is coupled to match the configuration of the screw thread or screw groove of the main body mouth part 103'. When the operable sealing stopper 1300 is rotated, the main body mouth part corresponding part 1301 has a structural surface that is engaged so that the main body mouth part 103' ascends or descends.

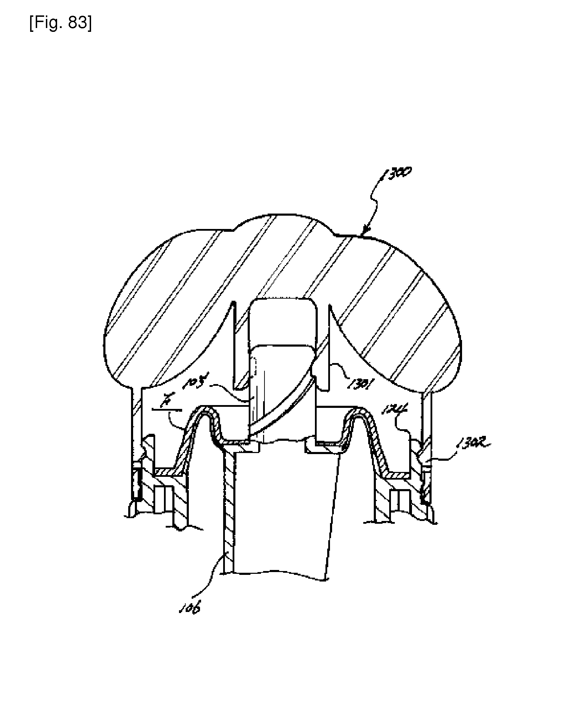

In the state of FIG. 82, the operable sealing stopper 1300 is operated (rotated), the main body mouth part corresponding part 1301 pushes the main body mouth part 103' downward. In this process, the foldable part F is folded downward as shown in FIG. 83.

Also, in the state of FIG. 83, the opening part 106 breaks the accommodating part sealing part 400 disposed under thereof, and thus, the heterogeneous materials stored in the storage spaces 108 may drop into the container and are mixed with each other.

In reference, the foldable part F having the barrier property may be additionally provided to the foldable connecting part 102 or an upper portion of or the foldable connecting part 102. Alternatively, as necessary, the foldable part F and the foldable connecting part 102 may be separately manufactured and then coupled to each other.

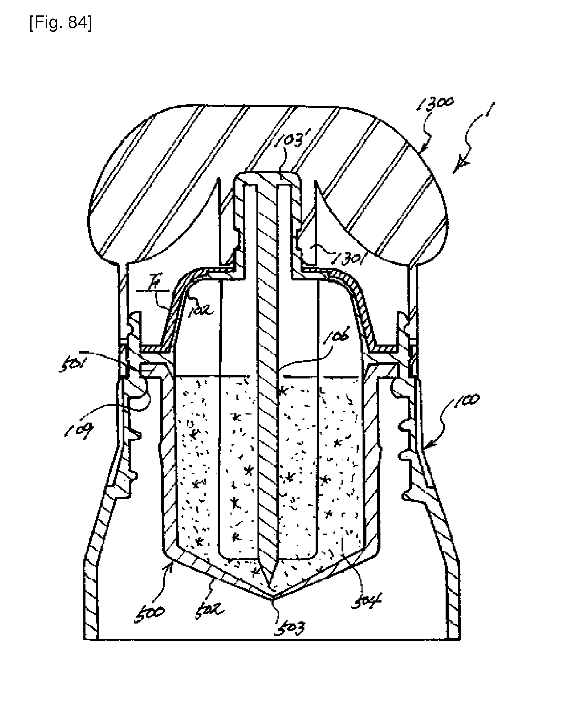

In FIG. 84, an apparatus 1 for receiving the heterogeneous materials, which is coupled to the mouth part of the container, includes a main body 100 coupled to the mouth part of the container and an accommodating part 504 having the storage space 500 within the main body 100. The storage space 500 of the accommodating part 504 is opened by the foldable part F disposed on the upper portion of the main body 100. The foldable part F is configured so that, when a rotational operable sealing stopper 1300 assembled with the upper portion of the main body 1000 is rotated, the accommodating part sealing surface 502 sealing the storage space 500 of the accommodating part 107 is opened by the opening part 106.

Also, an accommodating part cutoff line 503 is formed on the sealing surface 502 of the assembly type accommodating part 500. In addition, the assembly type accommodating part 500 is configured so that an assembly frame 501 is hang and fixed on a hook 109 disposed inside the main body 100.

Also, the assembly type accommodating part 500 may be coupled to the main body 100 by using thermal adhesion or ultrasonic waves.

In more detail, in the state of FIG. 84, when the operable sealing stopper 1300 is rotated, the main body mouth part 103' descends. In this process, the opening part 106 breaks the accommodating part cutoff line 503 to open the sealing surface 502.

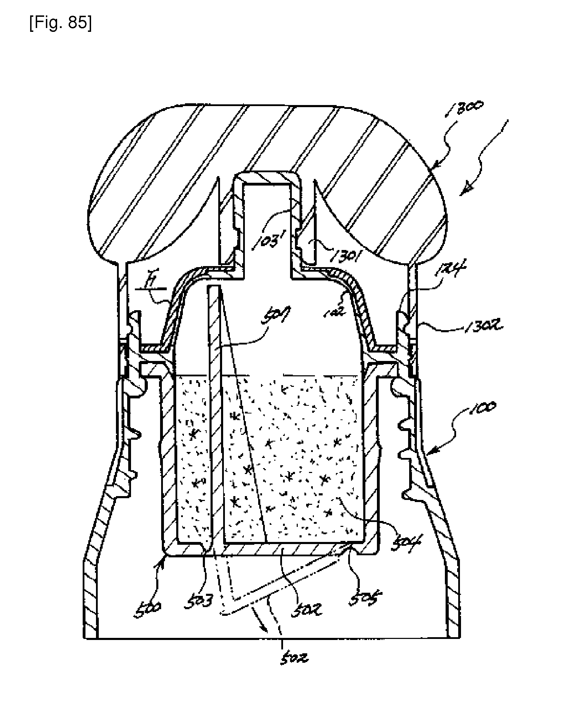

In FIG. 85, an apparatus 1 for receiving the heterogeneous materials, which is coupled to the mouth part of the container, includes a main body 100 coupled to the mouth part of the container and an accommodating part 504 having the storage space 500 within the main body 100. The storage space 500 of the accommodating part 504 is opened by the foldable part F disposed on the upper portion of the main body 100. The foldable part F is configured so that, when a rotational operable sealing stopper 1300 assembled with the upper portion of the main body 1000 is rotated, the accommodating part sealing surface 502 sealing the storage space 500 of the accommodating part 107 is opened.

Also, a cutoff protruding piece 507 extending up to a lower side of the foldable F is disposed on an upper portion of the sealing surface 502. Here, the accommodating cutout line 503 may extend by a predetermined length on an outer circumference of the cutoff protruding piece 507 and extend up to the sealing surface 502 that is opposite to the cutoff protruding piece 507.

As described above, in use according to the present invention, when the operable sealing stopper 1300 is operated in the state of FIG. 85, the foldable part F is folded while the main body mouth part 103' descends. In this process, the cutoff protruding piece 507 breaks the accommodating part cutoff line 503 that is a weak portion on the sealing surface 502 to open the sealing surface 502 at the same time.

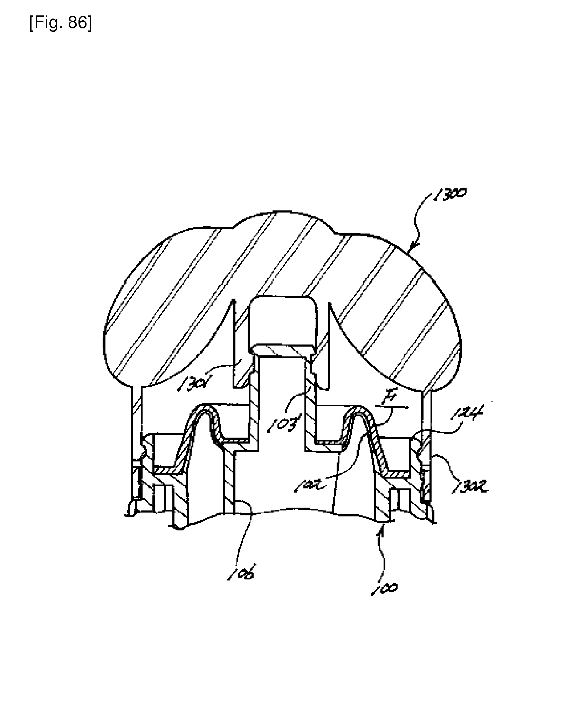

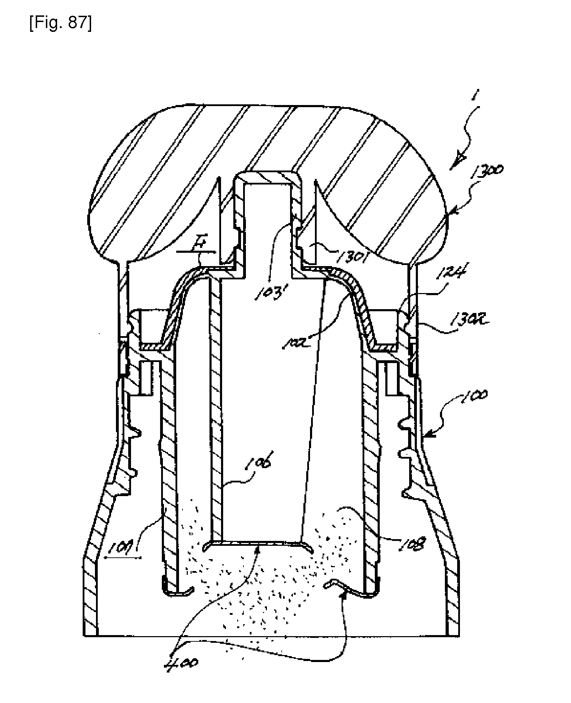

In FIGS. 86 and 87, an apparatus 1 for receiving the heterogeneous materials, which is coupled to the mouth part of the container containing contents, includes a main body 100 coupled to the mouth part of the container and an integrated or assembled accommodating part 107 having the storage space 108 within the main body 100. The storage space 108 of the accommodating part 107 is opened by the foldable connecting part 102 or the foldable part F disposed on the upper portion of the main body 100. Also, the foldable connecting part 102 or the foldable part F is configured so that, when a rotational operable sealing stopper 1300 assembled with the upper portion of the main body 1000 rotates, the accommodating part sealing part 400 sealing the storage space 108 of the accommodating part 107 is opened.

Also, the main body mouth part 103' is disposed above the foldable part F. A main body mouth part corresponding part 1301 disposed on the operable sealing stopper 1300 meets with the main body mouth part 103, and the main body mouth part 103 and the main body mouth part corresponding part 1301 are coupled to each other so that the main body mouth part 103 and the main body mouth part corresponding part 1301 are operated by rotation method of a screw thread or screw groove. When the operable sealing stopper 1300 is rotated, the main body mouth part corresponding part 1301 lift the main body mouth part 103 coupled to correspond to the main body mouth part corresponding part 1301 upward. Thus, in this process, the foldable connecting part 102 or the foldable part F is spread upward to allow the lower end of the opening part 106 to open the accommodating part sealing part 400.

Also, the accommodating part sealing part 400 disposed on the lower end of the accommodating part 107 may adhere to the lower end of the opening part 106 through thermal adhesion.

Also, the opening of the storage space 108 of the accommodating part 107 by the opening part 106 may be realized through various methods according to the present invention.

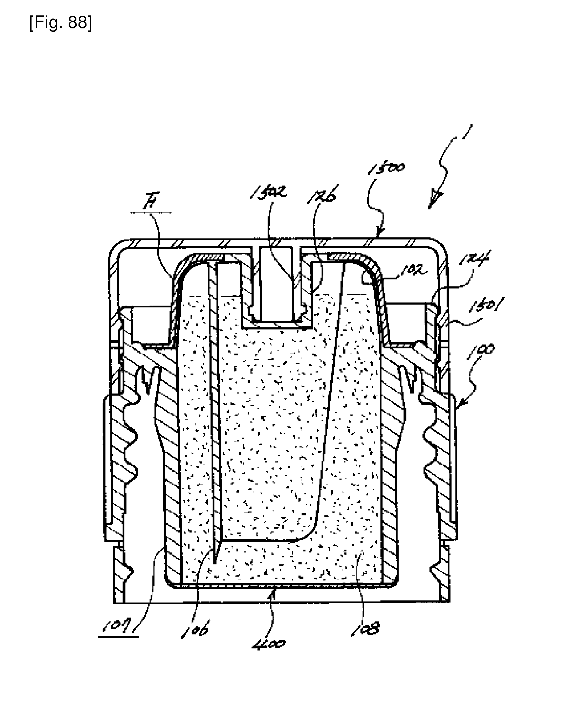

In FIG. 88, an apparatus 1 for receiving the heterogeneous materials, which is coupled to the mouth part of the container, includes a main body 100 coupled to the mouth part of the container and an integrated or assembled accommodating part 107 having the storage space 108 within the main body 100. The storage space 108 of the accommodating part 107 is opened by the foldable connecting part 102 or the foldable part F disposed on the upper portion of the main body 100. Also, the foldable connecting part 102 or the foldable part F is configured so that, when a rotational operable sealing stopper 1500 assembled with the upper portion of the main body 1000 rotates, a foldable part spacing part 1502 pushes a spacing part corresponding part 126 downward to seal the storage space of the accommodating part 107 and open the accommodating part sealing part 400.

Also, the foldable part spacing part 1502 is disposed on the bottom of a top surface of the rotational operable cover 1500, and the spacing part corresponding part 126 is disposed at a center of the foldable connecting part 102. The foldable part spacing part 1502 and the spacing part corresponding part 126 may be coupled to each other by using a screw thread or screw groove.

Also, the opening part 106 lengthily extending downward is disposed on the bottom of the foldable connecting part 102. The rotational operable cover 1500 is configured so that a cover support part 1501 is coupled to the support corresponding part 124 and then rotated.

Also, the foldable part F formed of the material having the barrier property may be provided on the upper portion of the foldable connecting part 102, and the foldable part F may be injection-molded by using a foldable soft resin. As necessary, a film may adhere, or a material having the barrier property may be applied or deposited. In this case, a separate foldable part F formed of the material having the barrier property may be coupled (assembled).

As described above, in use according to the present invention, when the rotational operable cover 1500 is rotated, the cover support part 1501 hung on the support corresponding part 124 is rotated by a predetermined angle. In this process, the foldable part spacing part 1052 pushes the spacing part corresponding part 126 corresponding thereto downward. Here, the foldable connecting part 102 or the foldable F is folded downward.

Also, in the above-described process, the opening part 106 breaks the accommodating part sealing part 400.

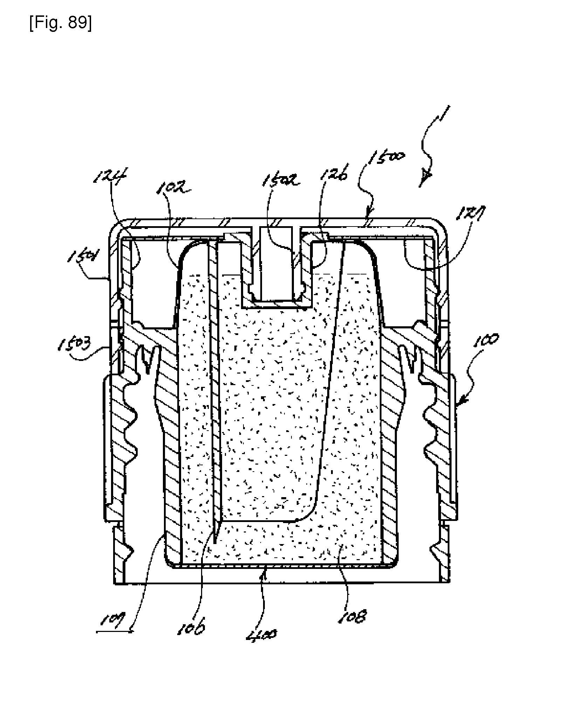

In the description of FIG. 89, an upper auxiliary sealing part 127 is additionally provided on the upper portion of the foldable connecting part 102. Particularly, the upper auxiliary sealing part 127 may be sealed with respect to the support corresponding part 124 extending upward from the upper portion of the foldable connecting part 102 and an outer annular part of the main body 100.

In use, when the rotational operable cover 1500 is rotated, the rotational operable cover 1500 is rotated by the cover support part 1501 hung on the support corresponding part 124. In this process, the foldable part spacing part 1502 pushes the spacing part corresponding part 126 downward.

Also, in the above-described process, the upper auxiliary sealing part 127 adhering to the upper portion of the foldable connecting part 102 may be broken or elongated according to a physical property thereof to descend together with the foldable connecting part 102.

In this process, the opening part 106 opens the accommodating part sealing part 400.

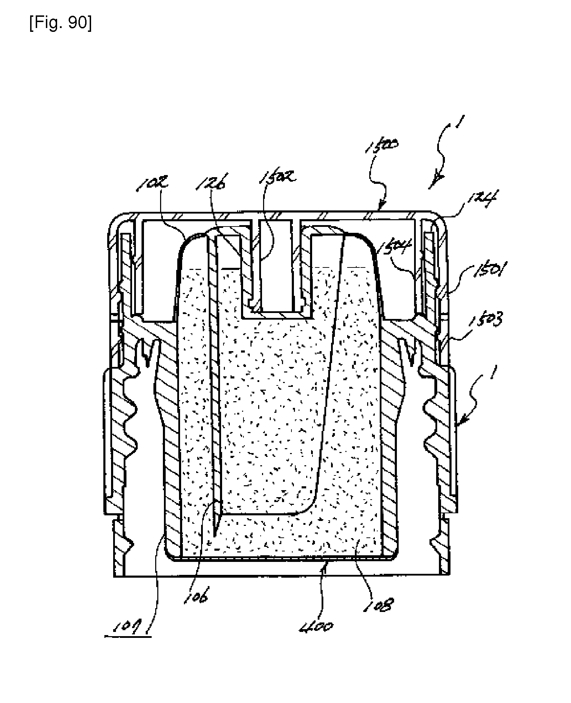

In the description of FIG. 90, the support corresponding part 124 is disposed on an upper portion of an outer annular part of the main body 100, and an inner sealing part 1504 closely attached to the support corresponding part 124 to maintain the sealing force is disposed on the bottom of the top surface of the rotational operable cover 1500 corresponding thereto.

In use, when the rotational operable cover 1500 is rotated in the state of FIG. 90, by the cover support part 1504 hung on the support corresponding part 124 is rotated, and simultaneously, the inner sealing part 1504 is closely attached to an inner wall of the support corresponding part 124 and then is rotated while maintaining the sealing force.

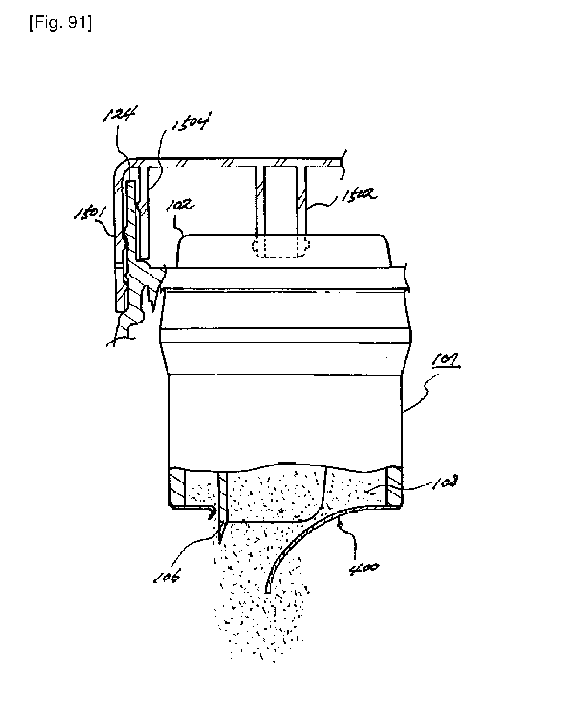

In this process, the accommodating part sealing part 400 is opened while the opening part 106 descends as shown in FIG. 91.

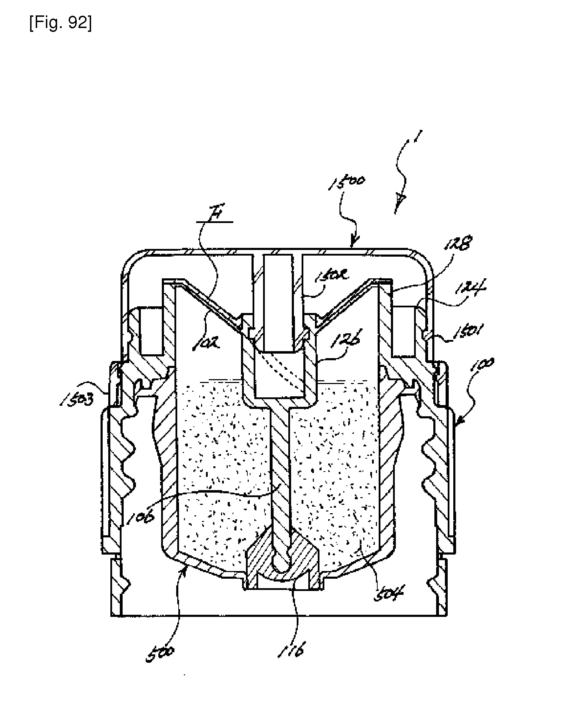

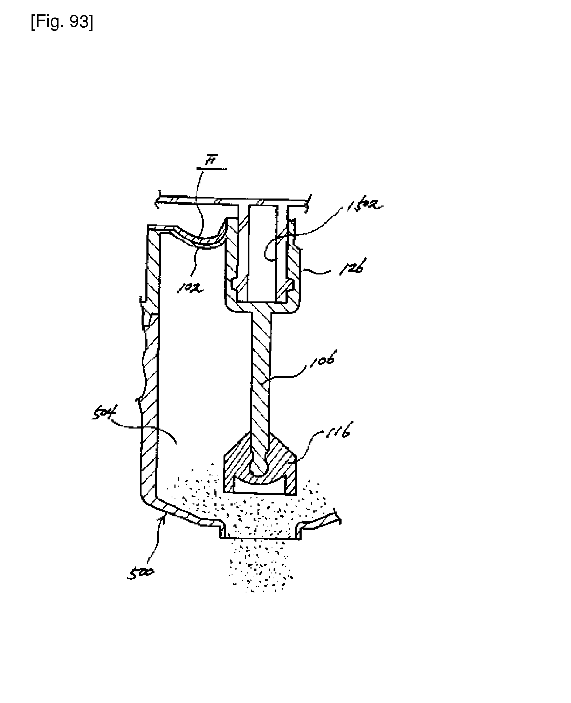

FIGS. 92 and 93 relate to a technology in which, when the rotational operable cover 1500 is rotated, the foldable connecting part 102 or the foldable part F ascends to open the accommodating part storage space 504.

In more detail of the receiving apparatus 1 as described above, the apparatus 1 for receiving the heterogeneous materials, which is coupled to the mouth part of the container includes a main body 100 coupled to the mouth part of the container and a foldable connecting part 102 or foldable part F disposed on an upper portion of the main body 100. A spacing part corresponding part 126 is disposed on the foldable connecting part 102, and an opening part 106 is disposed under the foldable connecting part 102.

Also, the assembly type accommodating part 500 having the accommodating part storage space 504 is disposed within the main body 100, and a lower portion of the assembly type accommodating part 500 is sealed by the opening end 116 of the opening part 106. Also, the support corresponding part 124 is disposed on the outer annular part of the upper portion of the main body 100, and the cover support part 1501 is hung to correspond to the support corresponding part 124. The rotational operable cover 1500 including the foldable part spacing part 1502 is disposed on the bottom of the top surface.

Also, the foldable part spacing part 1502 is disposed on the bottom of the top surface of the rotational operable cover 1500, and the foldable part spacing part 1502 is coupled to the spacing corresponding part 126 by using a screw thread or screw groove.

In the receiving apparatus 1 as described above, when the rotational operable cover 1500 is rotated, the foldable part spacing part 1502 lifts the spacing part corresponding part 126 corresponding thereto upward to open the opening end 116 blocking an opening hole define din a lower end of the accommodating part storage space 504 as shown in FIG. 93.

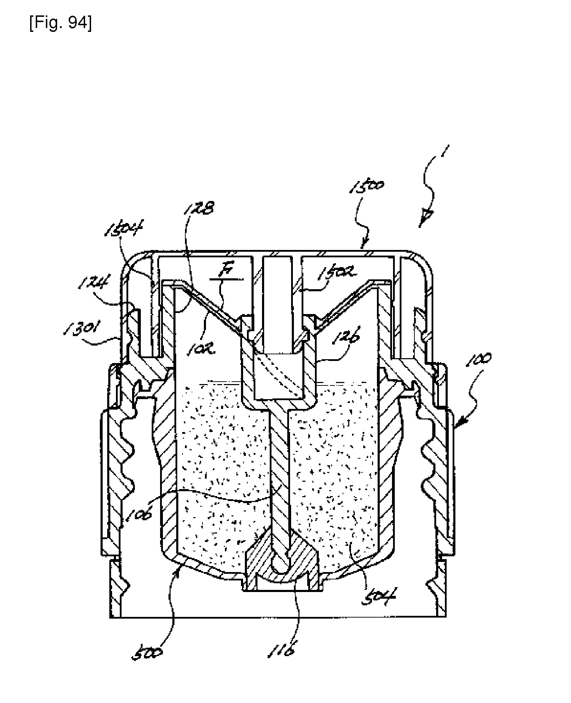

In the description of FIG. 94, the foldable connecting part 102 or the foldable part F is disposed on the upper end of an upper foldable part accommodating surface 128 of the main body 100. The inner sealing part 1504 of the rotational operable cover 1500 is sealed on the foldable part accommodating part 128 to maintain the sealing force.

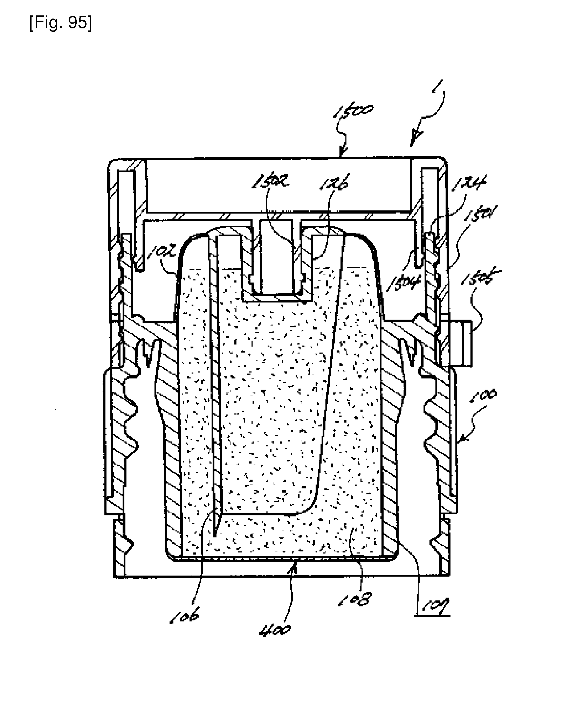

In the description of FIG. 95, when the rotational operable cover 1500 is rotated, the foldable part spacing part 1502 pushes the spacing part corresponding part 126 downward while the cover support part 1501 is coupled along the support part corresponding part 124. In this process, the opening part 106 opens the accommodating part sealing part 400.

Also, the inner sealing part 1504 of the rotational operable cover 1500 is closely attached to the support part corresponding part 124 to maintain the sealing force. Also, an anti-forgery frame removing piece 1505 is disposed on a lower end of the cover support part 1501. Thus, in use, the anti-forgery frame removing piece 1505 is removed to rotate the rotational operable cover 1500.

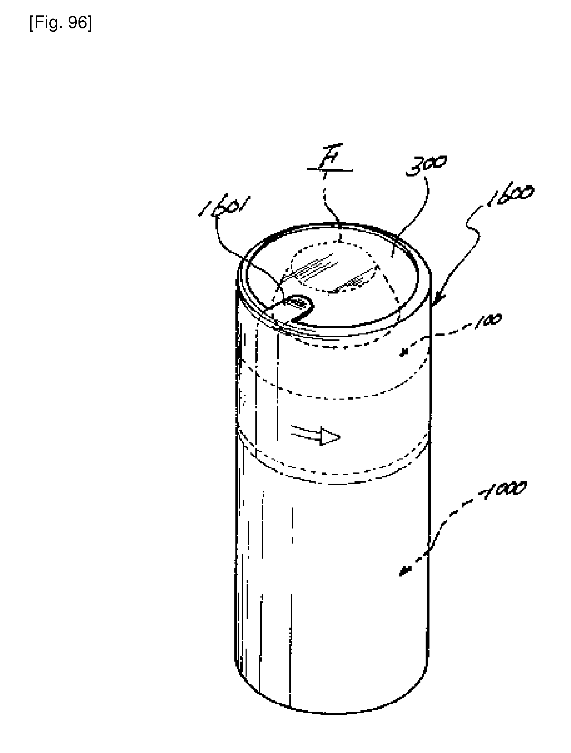

In another embodiment (see FIGS. 96 to 105), in descriptions of FIG. 96, an apparatus 1 for receiving the heterogeneous materials, which is coupled to the mouth part of the container, includes a main body 100 coupled to the mouth part of the container and an integrated or assembled accommodating part 300 having the storage space 108 within the main body 100. The storage space 108 of the accommodating part 107 is opened by the foldable connecting part or foldable part F disposed on the upper portion of the main body 100 when the foldable connecting part or foldable part F disposed on the upper portion of the main body 100 is pressed.

Also, after the receiving apparatus 1 is coupled to the mouth part of the container 1000, an outer portion of the receiving apparatus 1 is packaged by using a contraction film 1600. In use, when the contraction film 1600 is pulled, the cutoff line is cut to remove the contraction film 1600 from the receiving apparatus 1. In this state, the cover 300 is removed, and the foldable part F is pressed to mix the contents with each other.

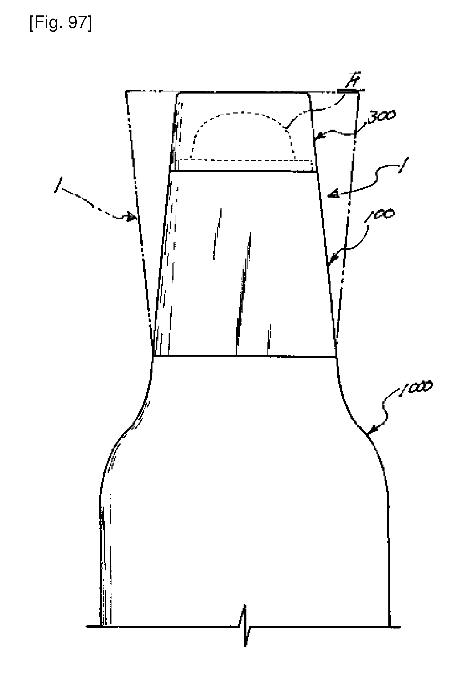

FIGS. 97 to 104 illustrate various examples in which the receiving apparatus 1 has a cup shape on the whole. Among these, FIG. 97 illustrates a front view (or a side view) of a state in which the receiving apparatus 1 having the cup shape is coupled to a container 1000.

In the receiving apparatus 1 as described above, when the cover 300 is removed, the foldable part F is pressed, the contents within the storage spaces are mixed with each other. Since this principle has been previously described, detail description thereof will be omitted.

In reference, as shown by dotted line of FIG. 97, the cut shape of the receiving apparatus 1 may stand upright, but not turn inside out.

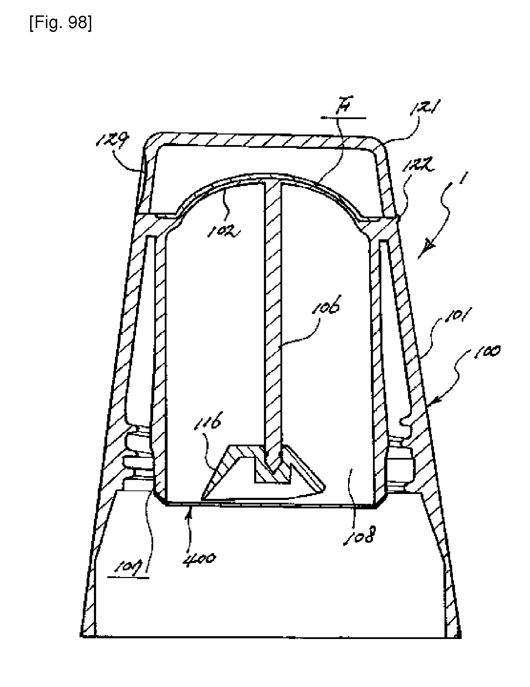

FIG. 98 is a view for explaining a configuration principle of the receiving apparatus 1 having the cup shape (configuration). As described above, the receiving apparatus 1 has a general cup shape on which whole in an isosceles trapezoid shape between an upper end constituting the integrated cover 121 and a lower end constituting the main body 100.

In the technical contents of the receiving apparatus 1 as described above, the inner configurations are not largely changed even though the technical contents approach to various aspects. However, the present invention has a feature in that the storage space constituted by a side surface part 101 of the main body 100 and the inside of the main body 100 may be changed in size according to conditions.

Additionally explaining the above-described structure with reference to FIG. 98, the receiving apparatus 1 includes a main body 100 having a side surface part 101 coupled to the container and a foldable connecting part 102 or foldable part F having an opening part 106 on an upper portion of the main body 100. Here, an integrated cover 121 for protecting the foldable connecting part 102 or the foldable part F is integrated with an integrated cover connecting part 122 on an upper end of the main body 100. In the overall shape of the receiving apparatus 1, the receiving apparatus 1 has a narrow upper portion and a wide lower portion.

Also, an accommodating part 107 having the storage space 108 is disposed within the main body 100, and a lower end of the accommodating part 107 is sealed by an accommodating part sealing part 400.

In use, when the integrated cover 121 is opened, and the upper foldable part F is pressed, the opening end 116 disposed on the lower end of the opening part 106 is broken, and simultaneously, the heterogeneous materials stored in the storage spaces drop down and then are mixed with each other.

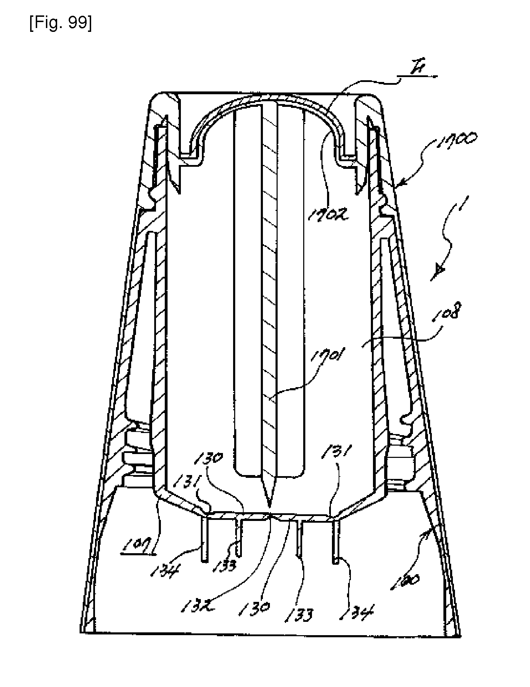

FIG. 99 illustrates the receiving apparatus 1 having the cup shape, in which the foldable connecting part 1702 or the foldable part F are protected without using a separate protective part even though the foldable connecting part 1702 or the foldable part F is disposed on the upper end of the receiving apparatus 1.

For convenience of descriptions, different inner configurations of the receiving apparatus 1 having the cup shape will be described below.

An accommodating part 107 having the storage space 108 is disposed within the main body 100, a main body accommodating part sealing surface 130 having a cutoff line as a main body accommodating part cutoff line 132 is disposed on a lower end of the accommodating part 107.

Also, a cover opening part 1701 for breaking the main body accommodating part sealing surface 130 is disposed on the bottom of the foldable connecting part 1702 of a main body upper portion coupling cover 1700 coupled to a mouth part of an upper end of the main body 100.

Also, a lower protrusion 133 is disposed on the bottom of the main body accommodating part sealing surface 130 to prevent the main body accommodating part sealing surface 130 from being closed after being opened. Also, a lower protrusion hook part 134 having a hook shape that is hooked by meeting the resistance of the lower protrusion 133.

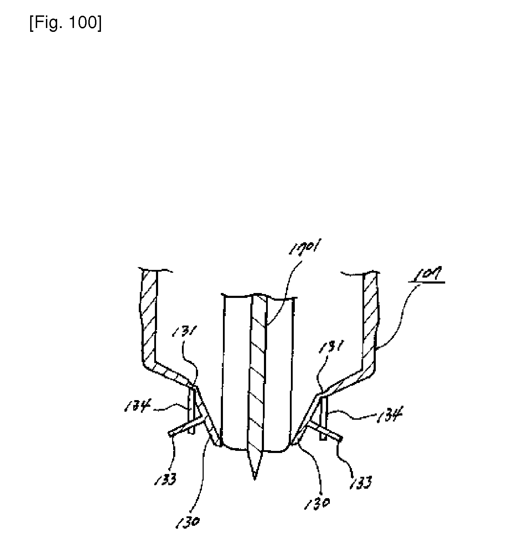

In use of the receiving apparatus 1, when the foldable part F is pressed, the cover opening part 1701 breaks and pushes the main body accommodating part sealing surface 130. In this process, the lower protrusion 133 is hung and fixed to a lower protruding hook part 134. An example of this state is illustrated in FIG. 100.

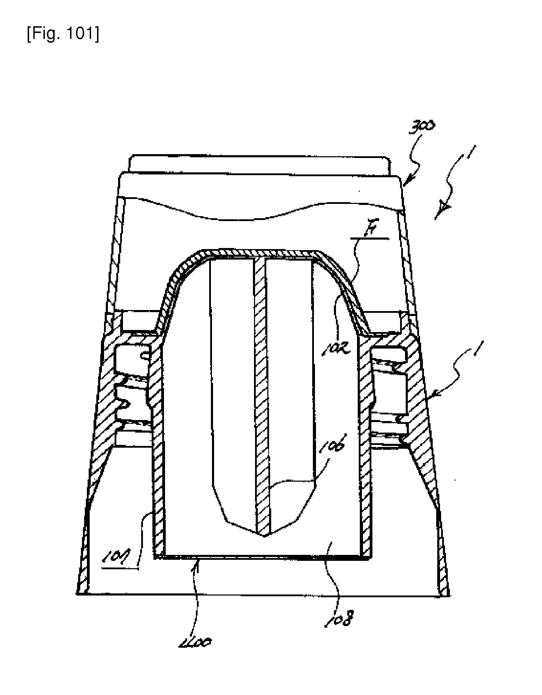

FIG. 101 illustrates a structure in which the cover 300 is separated to press the foldable part F, unlike the above-described structure, even though the receiving apparatus 1 has the cup shape on the whole.

In use according to the present invention, when the cover 300 is removed, and the foldable part F is pressed, the opening part 106 breaks the accommodating part sealing part 400 sealing the lower portion of the storage space 108 of the storage space 106 so that the contents of the storage spaces108 drop down and than are mixed with each other.

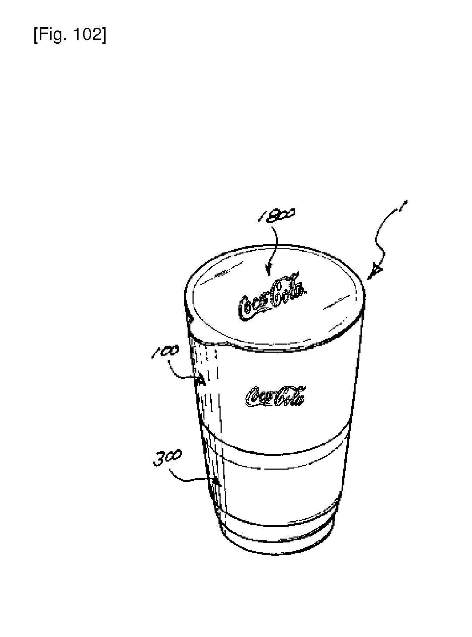

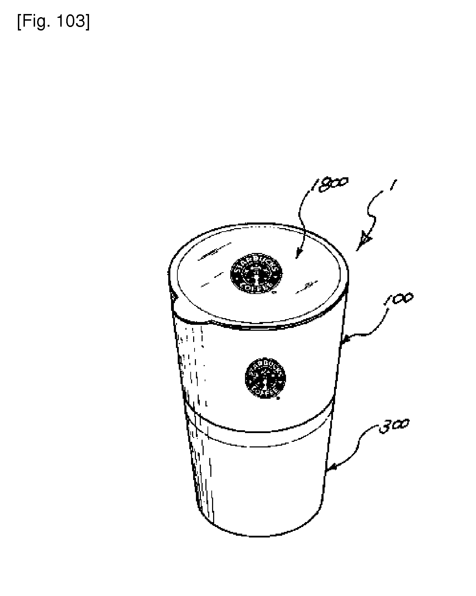

FIGS 102 and 103 illustrate a state in which the end of the main body 100 of the receiving apparatus 1 having the cup shape is finished by using a sanitary sealing part 1800.

In use according to the present invention, the sanitary sealing part 1800 is removed, and then the receiving apparatus 1 is coupled to the container in which the contents are contained. Then, when the foldable connecting part or the foldable part F is pressed, the heterogeneous materials contained in the storage spaces drop into the container and are mixed with each other.

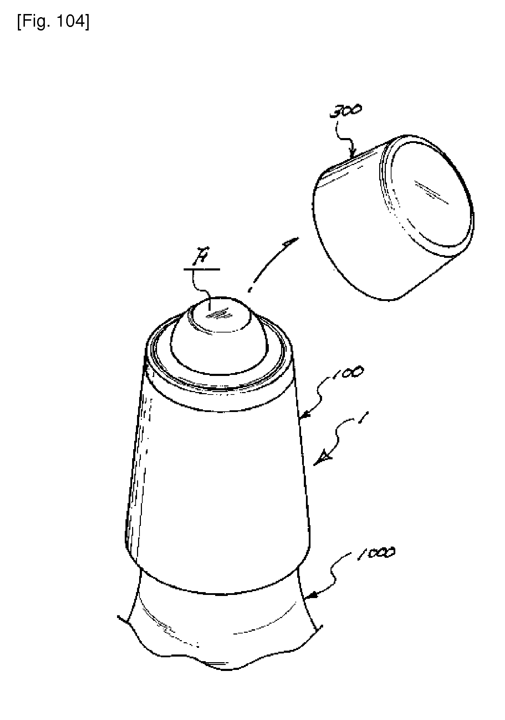

FIG. 104 illustrates an example in use after the receiving apparatus 1 of FIGS. 102 and 103 is coupled to the container 1000.

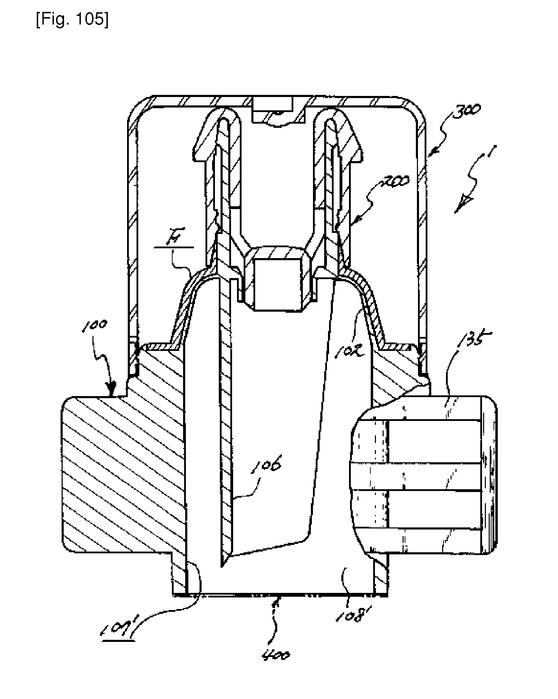

FIG. 105 illustrates an example in which a film adhesion surface 135 is disposed on an outer portion of the main body 100 so that the receiving apparatus 1 in which the sealing stopper 200 that is a discharge unit is disposed above the foldable part F thermally adheres to a pouch container that is widely used.

As described above, according to the present invention, in use after being coupled to the pouch container, when the cover 300 is removed, and the sealing stopper 200 is pressed, the opening part 106 breaks the accommodating part sealing part 400 disposed on the lower end of the accommodating part 107, and simultaneously, the heterogeneous materials stored in the storage spaces 108' drop into the pouch container and then are mixed with each other.

Then, the mixed content may be discharged through the sealing stopper 200.

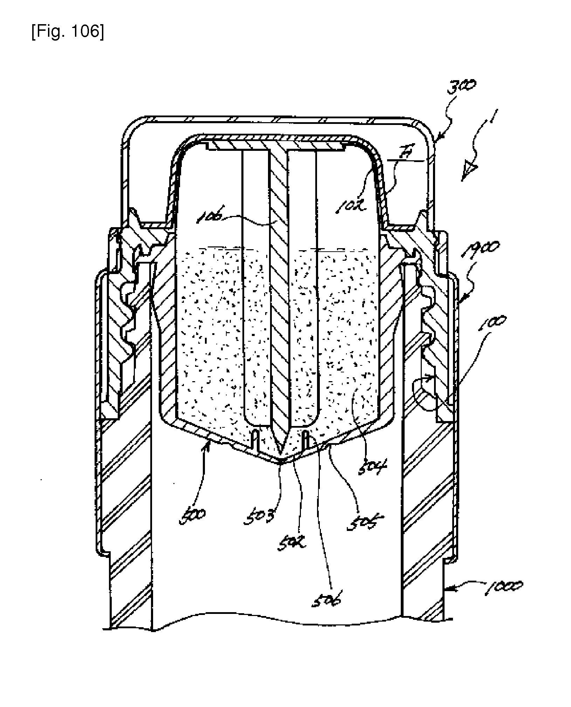

In further another embodiment (see FIGS. 106 to 107), when described with reference to FIG. 106, an apparatus 1 for receiving heterogeneous materials, which is coupled to a mouth part of a container containing contents such as liquid includes a main body 100 coupled and fixed to the mouth part (container neck) of the container and an accommodating part (including the assembly type accommodating part 500) having a storage space (including an accommodating part storage space 504) within the main body 100. An inner storage space (including the accommodating part storage space 504) of the accommodating part (including the assembly type accommodating part 500) is configured so that a foldable connecting part 102 disposed on an upper portion of the storage space 500 and an opening part 106 disposed on a lower portion of the foldable connecting part 102 break an accommodating part sealing part (including the sealing surface 502) sealing a lower end of the accommodating part (including the assembly type accommodating part 500) to allow the contents within the storage space (including the accommodating part storage space 504) of the accommodating part (including the assembly type accommodating part 500) to drop into the container, thereby mixing the contents with each other.

Also, the main body 100 is assembled with the mouth part of the container 1000. An outer portion of the main body 100 together with the container mouth part of the container is surrounded by an external packing material 1900. The external packing material may be an aluminum material.

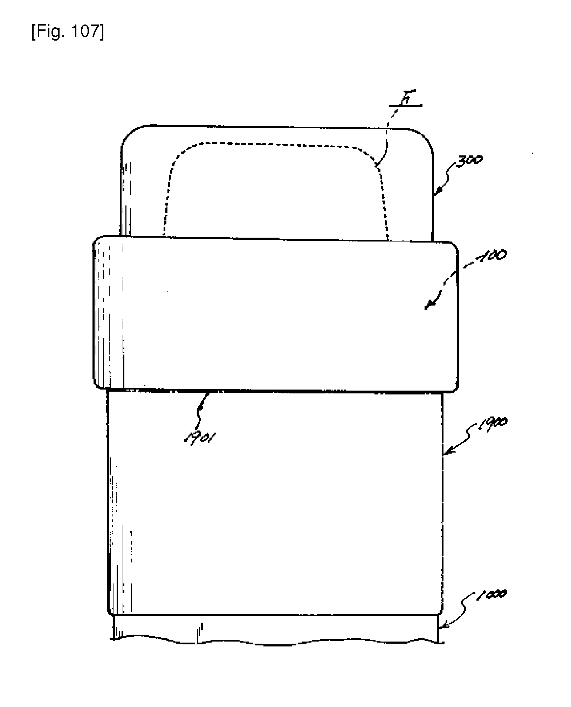

Also, as shown in FIG. 107, an external packing material cutoff line 1901 is drawn on the external packing material 1900.

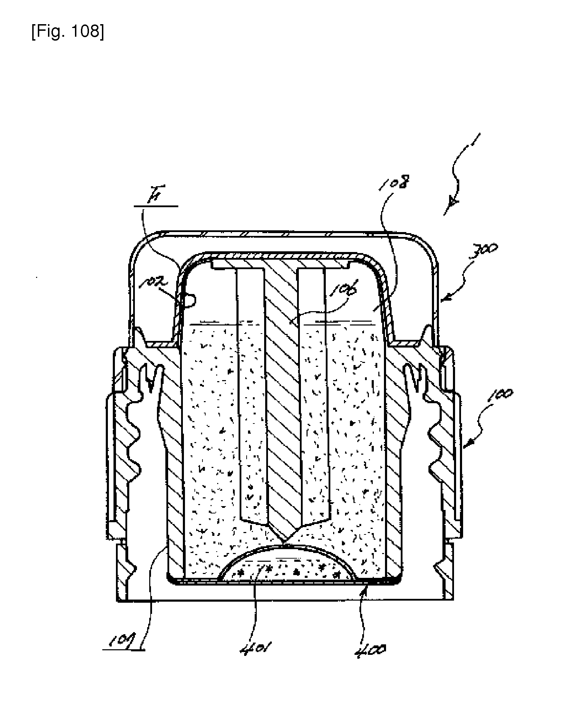

In further another embodiment (see FIGS. 108 to 125), when described with reference to FIG. 108, an apparatus 1 for receiving heterogeneous materials, which is coupled to a mouth part of a container containing the contents such as liquid includes a main body 100 coupled and fixed to the mouth part of the container and an accommodating part 107 having a storage space 108 within the main body 100. The storage space 108 within the accommodating part 107 is configured so that a foldable connecting part 102 disposed on an upper portion of the storage space 108 and an opening part 106 disposed on a lower portion of the foldable connecting part 102 break an accommodating part sealing part 400 sealing a lower end of the accommodating part 107 to allow the contents within the storage spaces of the accommodating part 107 to drop into the container, thereby mixing the contents with each other.

Also, a second storage space 401 is defined within the accommodating part sealing part 400. The second storage space 401 within the accommodating part sealing part 400 may be a space formed by two sealing surfaces that meet each other.

Also, the second storage space 401 of the accommodating part sealing part 400 is punched by an end of the opening part 106 while the opening part 106 descends, and simultaneously, the second storage space 401 is opened. Upper and lower sealing surfaces constituting the second storage space 401 may be formed of a film having a barrier property or synthetic resin material.

Also, the upper thin film sealing surface constituting the second storage space 401 may be, as shown in FIG. 112, formed of a synthetic resin material, and the lower sealing surface may be formed of a film having a barrier property.

Also, a second storage space cutoff piece 402 is disposed on the bottom of the upper thin film sealing surface constituting the second storage space 401, and an upper sealing surface cutoff line 403 having a predetermined length is disposed on the outside of the second storage space cutoff piece.

In the present invention as described above, in the state of FIG. 108, when the foldable part F is pressed, the opening part 106 descends while the foldable part F is folded. In this process, the end of the opening part 106 breaks the accommodating part sealing part 400.

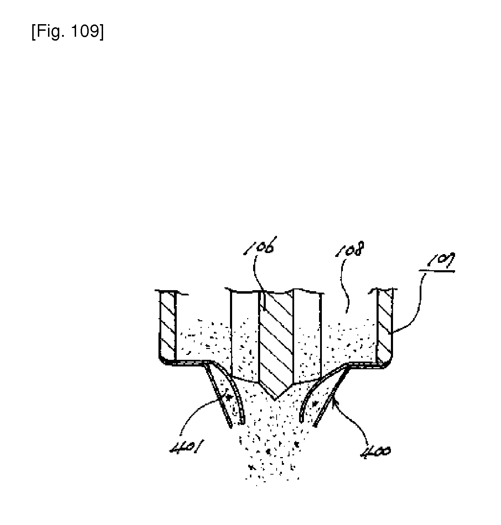

Also, while the accommodating part sealing part 400 is broken, the second storage space 401 drops, and simultaneously, the heterogeneous materials stored in the inner storage space 108 of the accommodating part 107 drop down. An example of this state is illustrated in FIG. 109.

As described above, FIG. 110 illustrates an example in which the second storage space 401 is capable of being coupled to various receiving apparatuses and being variously modified.

If the upper sealing surface of the accommodating part sealing surface 400 of FIG. 108 is expanded upward, the lower sealing surface of the FIG. 110 may be folded with a predetermined volume downward.

Particularly, since the lower sealing surface is relatively flat, the lower sealing surface may be commercialized without performing a separate process for forming the lower sealing surface having a dome shape.

FIG. 111 illustrates an example in which the main body 100 is lengthily expanded. Thus, the second storage space 401 formed within the main body 100 may have a shape of which the lower sealing surface is expanded downward.

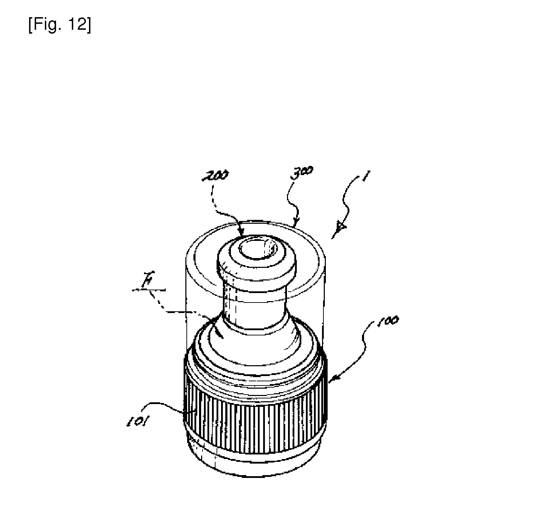

FIG. 12 illustrates an example in which the upper sealing surface is formed of a synthetic resin material having a thin film shape, and a second storage space cutoff piece 402 having a sharp shape is disposed on the bottom of the upper sealing surface. In use, when the upper end of the sealing stopper 200 is pressed, the foldable part F is folded. In this process, the end of the opening part 106 breaks the upper sealing surface cutoff line 403 and pushes the upper sealing surface. Also, in this process, the second storage space cutoff piece 402 cuts the lower sealing surface (see FIG. 113).

In this process, the heterogeneous materials contained in the second storage space 401 and the upper storage space 108 drop down and then are mixed with each other.

Referring to FIG. 114, an apparatus 1 for receiving heterogeneous materials, which is coupled to a mouth part of a container containing the contents such as liquid includes a main body 100 coupled and fixed to the mouth part of the container and an accommodating part 107 having a storage space 108 within the main body 100. The storage space 108 within the accommodating part 107 is configured so that a foldable connecting part 102 disposed on an upper portion of the storage space 108 and an opening part 106 of a lower portion of the foldable connecting part 102 break an accommodating part sealing part 400 sealing a lower end of the accommodating part 107 to allow the contents within the storage space of the accommodating part 107 to drop into the container, thereby mixing the contents with each other.

Also, an opening end 116 for partitioning the storage space 108 of the accommodating part 107 is disposed on an end of the opening part 106. Here, a storage space 108 is defined in an upper side, and a second storage space 401 is defined in a lower side with respect to the opening end 116.

As described above, in use of the receiving apparatus 1, when the foldable part F is pressed, the opening end 116 disposed on the end of the opening part 106 breaks the accommodating part sealing part 400 disposed thereunder to allow the content of the second storage space 410 to drop down, and simultaneously, the heterogeneous materials stored in the upper storage spaces may drop down and then mixed with each other. This state is illustrated in FIG. 115.

Additionally, the opening end 116 is closely attached to an inner wall of the storage space 108 of the accommodating part 107 to partition the upper and lower spaces.

Also, a punching pin 136 is disposed on the opening end 116 to easily break the accommodating part sealing part 400 disposed thereunder.

Referring to FIG. 116, in the receiving apparatus 1 having the second storage space 401, the main body 100 may be coupled to a separate auxiliary main body 200 through various methods, and also, the auxiliary main body may be coupled to a neck of a container having a different standard so that the receiving apparatus 1 is capable of being applied to a container neck having a different standard.

Referring to FIGS. 117 and 118, an accommodating part 107 having a storage space 108 is disposed within a main body 100 containing heterogeneous materials such as liquid. The storage space 108 within the accommodating part 107 is configured so that a foldable connecting part 102 disposed on an upper portion of the storage space 108 and an opening part 106 of a lower portion of the foldable connecting part 102 break an accommodating part sealing part 400 sealing a lower end of the accommodating part 107 to allow the contents within the storage space of the accommodating part 107 to drop into the container, thereby mixing the contents with each other. The main body 100 is coupled to an auxiliary body 2000 having a second storage space 2003 of the other auxiliary main body to constitute the whole receiving apparatus 1.

Also, the main body 100 is coupled with respect to an auxiliary main body mouth part 2001 of the auxiliary main body 2000. The auxiliary main body secondary storage space 2003 may be a space which is defined by sealing a lower side of the auxiliary main body 2000 by using an auxiliary main body storage space sealing surface 2002 and coupling the main body 100 to the auxiliary main body 2000 at an upper portion thereof.

Also, while the foldable part F is folded to descend, the opening part 106 of the main body 100 is lengthily expanded to extend up to a portion close to the accommodating part sealing part 400 so that an end of opening part 106 of the main body 100 breaks a portion that partitions the accommodating part sealing part 400 from the auxiliary main body second storage space 2004.

In use as described above, when the foldable part F is pressed, the foldable F is folded. In this process, the opening part 106 breaks the accommodating part sealing part 400. Then, the opening part 106 breaks the auxiliary main body storage space sealing surface 2002 disposed thereunder allow the heterogeneous materials contained in the auxiliary main body second storage space 2003 to drop as shown in FIG. 118.

Referring to FIG. 119, a main body 100 including a foldable connecting part 102 or foldable part F and an opening part 106 disposed on a lower portion of the foldable connecting part 102 of the main body 100 are provided. The main body 100 is coupled to an auxiliary main body 200 having a plurality of storage spaces. The auxiliary main body 2000 has an auxiliary main body storage space 2004 above an inner auxiliary main body sealing surface 2005 of an auxiliary main body mouth part 2001 and an auxiliary main body second storage space 203 under the inner auxiliary main body sealing surface 2005. A lower side of the auxiliary main body second storage space may be sealed by an auxiliary main body sealing part 2100.

Also, an auxiliary main body cutoff line 2006 is formed on the auxiliary main body sealing surface 2005.

According to the receiving apparatus 1 described above, the opening part descends when the foldable part F is pressed. In this process, the auxiliary main body sealing surface 2005 and the auxiliary main body sealing part 2100 are broken to allow the heterogeneous materials to drop and then be mixed with each other.

Also, a hook or screw thread may be freely formed on an inner wall of the auxiliary main body 2000, and the portion on which the hook or screw thread is formed may correspond to a coupling portion that is formed on a container neck.

In addition, the term "foldable part F" has been continuously expressed from FIG.1 and will be expressed below. A main technical content of the foldable part F may represent a part that is capable of being foldable by being pushed by a finger. The foldable part F may be injection-molded through the co-injection molding, or a material having a barrier property may adhere thereto.

Also, the material having the barrier property may be deposited or applied to the foldable connecting part 102. Furthermore, the foldable connecting part 102 itself may be injection-molded to the main body 100 by using a co-injection molding machine.

Alternatively, the foldable part F formed of the material having the barrier property may be separately manufactured, and then be coupled to the main body 100.

Referring to FIGS. 120 and 121, an apparatus 1 for receiving heterogeneous materials, which is coupled to a mouth part of a container containing the contents such as liquid includes a main body 100 coupled and fixed to the mouth part of the container and an accommodating part or an assembly type accommodating part 500 having a storage space 500 within the main body 100. The storage space 500 within the accommodating part or the assembly type accommodating part 500 is configured so that a foldable connecting part 102 disposed on an upper portion of the inner storage space of the accommodating part or the assembly type accommodating part 500 and an opening part 106 of a lower portion of the foldable connecting part 102 or the foldable part F break an accommodating part sealing part 400 sealing a lower end of the accommodating part 500 to allow the contents within the storage space of the accommodating part 500 to drop into the container, thereby mixing the contents with each other.

Also, a plurality of storage spaces are formed within the accommodating part or the assembly type accommodating part 500. A sealing surface 502 for vertically partitioning a space is disposed on a predetermined portion within the accommodating part or the assembly type accommodating part 500. Here, an upper side of the sealing surface 502 is defined as an accommodating part storage space 504, and a lower side is defined as the other storage space (i.e., an assembly type accommodating part second storage space 510), and a lower side of the other storage space is sealed by an accommodating part sealing part 400.

Also, an accommodating part lower punching part 509' is disposed on the bottom of the sealing surface 502, and an accommodating part cutoff line 503 is disposed on the sealing surface 502.

As described above, when foldable part F is pressed, the opening part 106 pushes the sealing surface 502 downward while breaking the accommodating part cutoff line 503. In this process, the accommodating part lower punching part 509' may break the accommodating part sealing part 400 disposed thereunder as shown in FIG. 121.

FIG. 122 illustrates an example in which an assembly type opening end 900 is assembled with a lower portion of the main body 100.

In use, when the foldable part F is pressed, the assembly type opening end 900 is pushed downward from the accommodating part storage space 504 of the assembly type accommodating part 500 to descend. In this process, the sharp lower end cuts the accommodating part cutoff line 503, and simultaneously, the sealing surface 502 is pushed downward.

Referring to FIGS. 123 and 124, an apparatus 1 for receiving heterogeneous materials, which is coupled to a mouth part of a container containing the contents such as liquid includes a main body 100 coupled and fixed to the mouth part of the container and an assembly type accommodating part 500 having an accommodating part storage space 500 within the main body 100. The accommodating part storage space 500 within the assembly type accommodating part 500 is partitioned so that a lower side thereof is defined as an assembly type accommodating part second storage space 510. Also, an upper end of the assembly type accommodating part second storage space 510 is divided by a storage space mouth part boundary surface 511.

Also, the storage space mouth part boundary surface 511 may be formed of an aluminum thin film.

Also, a lower end of the assembly type accommodating part second storage space 510 may be provided as a sealing surface 502 having the accommodating part cutoff line 503 thereon.

In use according to the present invention, when the foldable connecting part 102 or the foldable part F is pressed, the opening part descends. In this process, the opening part 106 may break the storage space mouth part boundary surface 511 and the sealing surface 502 disposed thereunder to allow the heterogeneous materials to drop down, thereby mixing the heterogeneous materials with each other as shown in FIG. 124.

Referring to FIG. 125 in addition to FIGS. 123 and 124, a lower storage space 512 is defined under the sealing surface 502, and a lower side of the lower storage space 512 is sealed by the accommodating part sealing part 400.

As described above, while the opening part 106 descends, the storage space mouth part boundary surface 511, the sealing surface 502, and the accommodating part sealing part 400 are broken at the same time and thus are opened.

Referring to FIGS. 126 and 127, a main body 100 is coupled to a container in a direction in which the contents are discharged, and an opening end guide 123 is disposed within the main body 100. A main body opening guide pin 137 is disposed on a lower end of the opening end guide 123, and a main body opening guide space 138 is defined under the opening end guide 123. Also, an insertion type accommodating part 1100 having an insertion type accommodating part storage space 1101 therein is coupled to the inside of the opening end guide 123 in a state where the insertion type accommodating part 1100 is sealed.

Also, a lower end of the insertion type accommodating part 1100 is sealed by a lower sealing part 1102, and an insertion type accommodating part mouth part 1103 is disposed on the insertion type accommodating part 1100. Also, a sealing stopper is disposed on the insertion type accommodating part mouth part 1103.

Also, the sealing stopper may be substituted by a hinge type sealing stopper 600 or a sealing stopper having various shapes.

In use, when the upper cover 300 is opened, and the hinge type sealing stopper 600 is pressed in the state where the upper cover 300 is opened, the insertion type accommodating part 600 descends. In this process, the lower sealing part 1102 may meet with resistance applied from the main body opening guide pin 137 corresponding thereto and thus be broken as shown in FIG. 127.

In this state, the hinge type sealing stopper 600 may be opened to discharge the mixed content.

FIG. 128 illustrates a structure in which the hinge type sealing stopper 600 is omitted.

In more detail, heterogeneous materials are contained in the insertion type accommodating part storage space 1101 of the insert type accommodating part 1100, and a lower end of the insertion type accommodating part 1100 is sealed by the lower sealing part 1102.

In the above-described insertion type accommodating part 1100, the lower sealing part 1102 is opened by the lower punching pin 137. Also, even though the insertion type accommodating part 1100 has superior sealing performance, the insertion type accommodating part 110 may communicate through a gas occurring between an inner wall of the opening end guide 123 and an outer wall of the insertion type accommodating part 1100. According to the present invention, an upper portion of the opening end guide 123 and an upper portion of the insertion type accommodating part 1100 are formed of aluminum thin films to form an upper sealing part 1100A.

As described above, in use, when the upper end of the insertion type accommodating part 1100 is pressed, the insertion type accommodating part 1100 descends while the upper sealing part 1100A is broken. In this process, the lower sealing part 1102 is opened by the punching pin 137.

According to further another embodiment (see FIGS. 129 or 137), a main body 100 constituting a portion of an apparatus 1 for receiving heterogeneous materials is provided, and an assembly type foldable part coupling part 154 is disposed on an upper end of the main body 100. Also, an assembly type foldable part 2200 and an assembly type accommodating part 500 are coupled to each other with respect to the assembly type foldable part coupling part 154.

Also, a sealing surface 502 partitioned by an accommodating part cutoff line 503 is provided in the assembly type accommodating part 500, and an assembly type opening part 120 for opening the assembly type accommodating part 500 is disposed on the assembly type foldable part 2200.

In use, when a cover 300 assembled with an upper portion thereof is removed, and the assembly type foldable part 2200 is pressed, the assembly type foldable part 2200 is folded downward, and also, a lower end of the assembly type opening part 120 breaks the accommodating part cutoff line 503, and simultaneously, the lower end of the assembly type opening part 120 pushes the sealing surface 502 downward to allow the heterogeneous materials to drop down, thereby mixing the heterogeneous materials with each other.

Particularly, according to the present invention, a material having a barrier property is added to an upper pushing part 2201 to improve the barrier property of the assembly type foldable part 2200.

The material having the barrier property may be a film, or a soft resin may be added to the material through the co-injection molding. Alternatively, the material having the barrier property may be vacuum-deposited or adhere.

Thus, preservability of the heterogeneous materials contained in the accommodating part storage space 504 may be significantly improved.

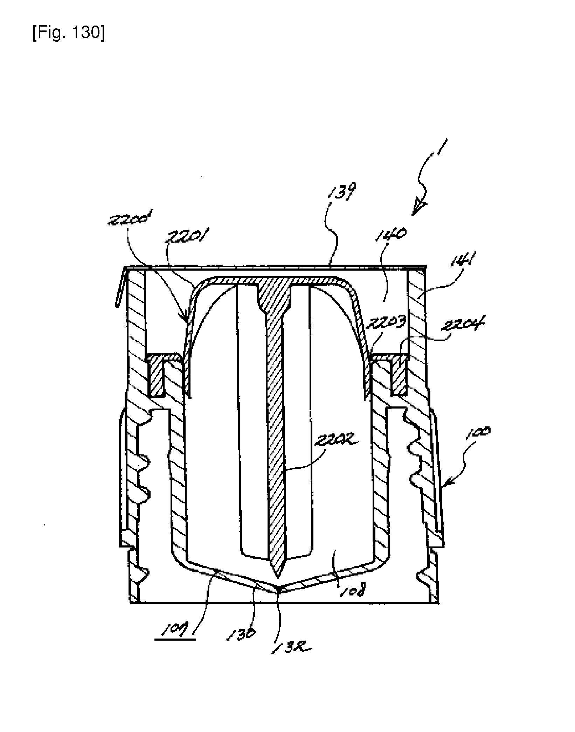

Referring to FIG. 130, a main body 100 including an accommodating part 107 having a storage space 108 is provided, and an assembly type pressing part 2200' is coupled to an upper portion of the main body 100. An assembly type lower opening part 2202 is disposed within the pressing part 2200'.

Also, a main body accommodating part sealing surface 130 having a main body accommodating part cutoff line 132 is disposed under the accommodating part 107, and a fitting part cutoff line 2203 is disposed on the pressing part 2200'.

Also, a main body upper end guide 141 is disposed on an upper portion of the main body 100, and an end of the main body upper end guide 141 is sealed by a main body upper sealing part 139.

In use, when the main body upper sealing part 139 is removed, and the pressing part 2200' is pressed, the pressing part 2200' descends while the fitting part cutoff line 2203 is broken. In this process, the assembly type lower opening part 2202 cuts the main body accommodating part cutoff line 132.

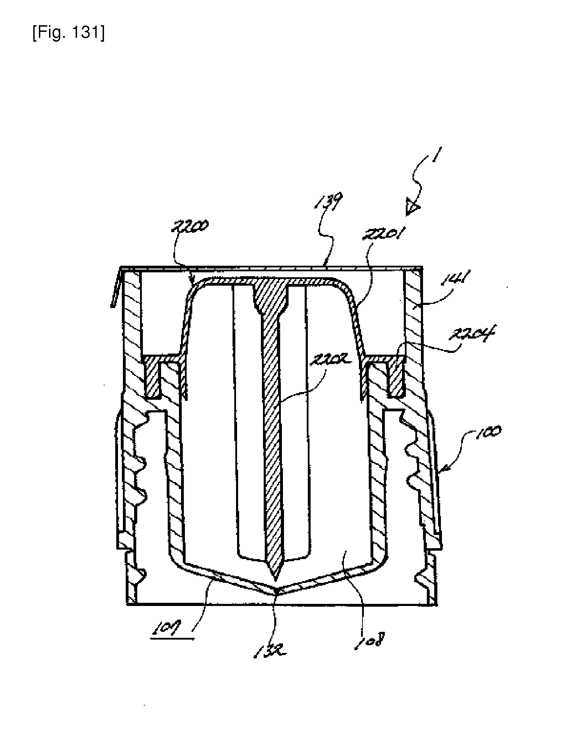

Referring to FIG. 131, a main body 100 including an accommodating part 107 having a storage space 108 is provided, and an assembly type foldable part 2200 is coupled to a fitting part 2204 on the upper portion of the main body 100. Also, an assembly type lower opening part 2202 is disposed on a lower portion of the assembly type foldable part 2200.

Also, a main body upper end guide 141 is disposed on the upper portion of the main body 100, and an upper portion of the main body upper end guide 141 is sealed by the main body upper portion sealing part 139.

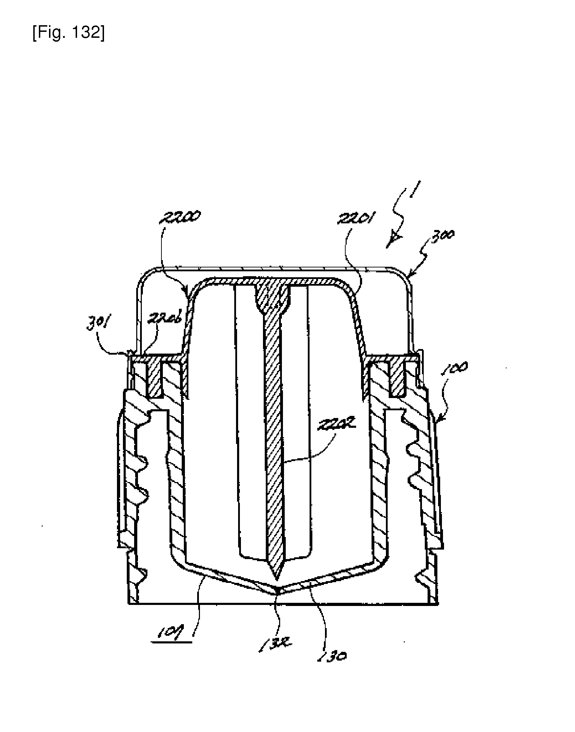

FIG. 132 illustrates an example in which the assembly type foldable part 2200 is hung on an anti-forgery frame 301 of the cover 300 and thus is not easily separated.

That is, the anti-forgery frame 301 hangs the assembly type foldable part end 2206 and is coupled to the main body 100. As a result, it may prevent the assembly type foldable part 2200 from being separated for impure intention.

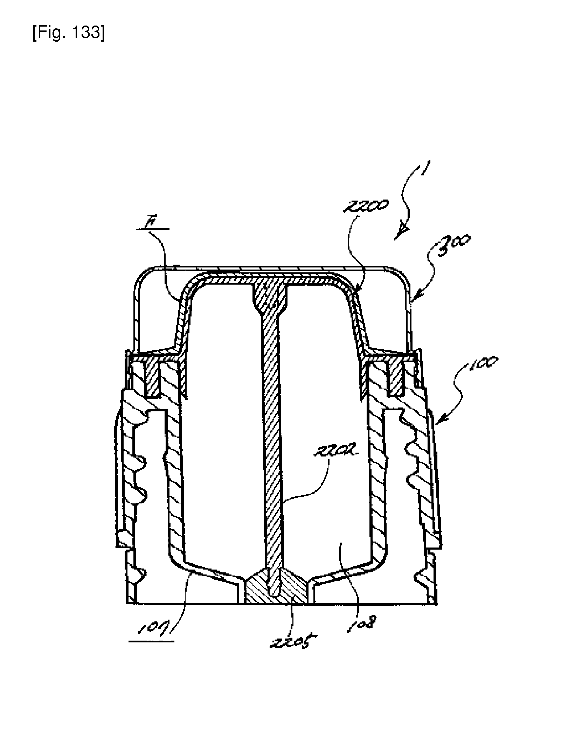

FIG. 133 illustrates a state in which a lower opening hole of the accommodating part 107 is sealed by an assembly type foldable part opening end sealing surface 2205.

Also, it is seen that a soft foldable part F is added to the assembly type foldable part 2200.

Thus, the barrier property may be improved, and also, the foldable part F may be pressed with low force. This may be possible because the foldable part F is formed of the soft resin or the film formed of the material having the barrier property.

FIG. 134 illustrates a state in which the assembly type lower portion opening part 2202 is separately manufactured and then is coupled to a lower portion of the assembly type foldable part 2200, and FIG. 135 illustrates a state in which the main body accommodating part sealing surface 130 is opened.

Referring to FIGS. 136 and 137, a main body 100 is coupled to a mouth part of a container, and an accommodating part 107 having a storage space 108 is disposed within the main body 100. A main body cutoff protruding piece 143 protruding from an upper portion of a main body accommodating part sealing surface 130 partitioned by a main body accommodating part cutoff line 132 is disposed on a lower end of the accommodating part 107. An assembly type foldable part 2200 is coupled to an upper portion of the main body 100.

Also, a protrusion 155 is disposed on the main body cutoff protruding piece 143.

In use, when the assembly type foldable part 2200 is pressed in the state of FIG. 136, the main body cutoff protruding piece 143 descends. In this process, the main body accommodating part cutoff line 132 is cut, and simultaneously, the main body accommodating part sealing surface 130 is opened downward as shown in FIG. 137.

Here, the protrusion 155 is hung and fixed to a portion of a hook generated when the main body accommodating part sealing surface 130 is retreated.

In further another embodiment (see FIGS. 138 to 143), referring to FIG. 138, an apparatus 1 for receiving the heterogeneous materials is provided. In the receiving apparatus 1, an accommodating part 107 having a storage space 108 is disposed within a main body 100, and a lower portion of the accommodating part 107 is sealed by an accommodating part sealing part 400. An upper end of the accommodating part 107 is connected to a foldable connecting part 102. Also, an opening part 106 for opening the accommodating part sealing part 400 is disposed on a lower portion of the foldable connecting part 102. A main body upper end guide 141 extends from the main body 100, and an upper side of the main body upper end guide 141 is sealed by a main body upper portion sealing part 139.

Also, the main body upper portion sealing part 139 may adhere through thermal adhesion to prevent the main body upper portion sealing part 139 from being separated. Preferably, the main body upper portion sealing part 139 may be formed of a film having elasticity and adhere through the thermal adhesion.

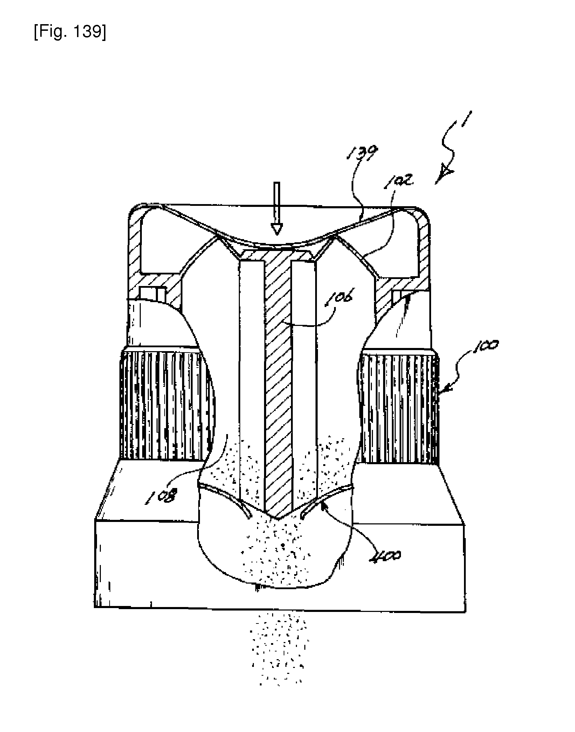

As shown in FIG. 139, when an upper portion of the main body upper portion sealing part 139 is pressed by a finger without taking off, the foldable connecting part 102 is folded together with the main body upper portion sealing part 139. In this process, the opening part 106 opens the accommodating part sealing part 400.

Also, the main body upper portion sealing part 139 may be formed of a material that is easily broken. When the main body upper portion sealing part 139 is pressed by a finger, the main body upper portion sealing part 139 may be cut, and simultaneously, the foldable connecting part 102 may be pressed.

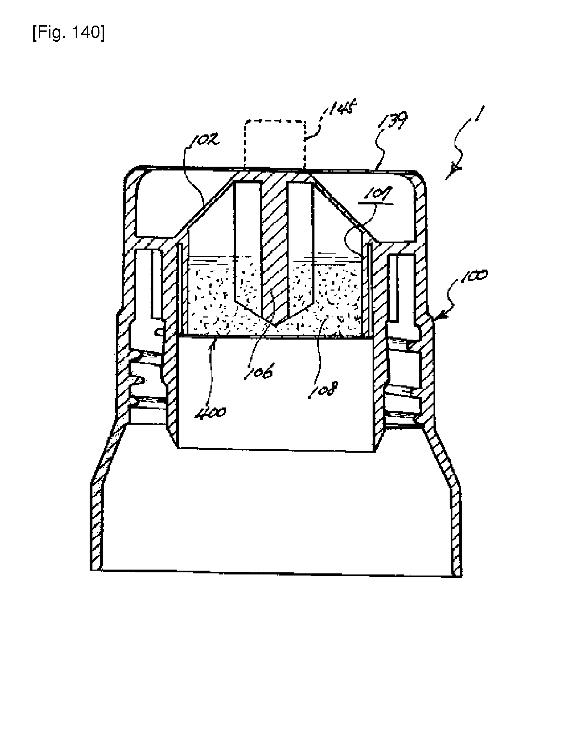

FIG. 140 illustrates a feature in which a protruding pressing part 145 is provided to easily press the foldable connecting part 102.

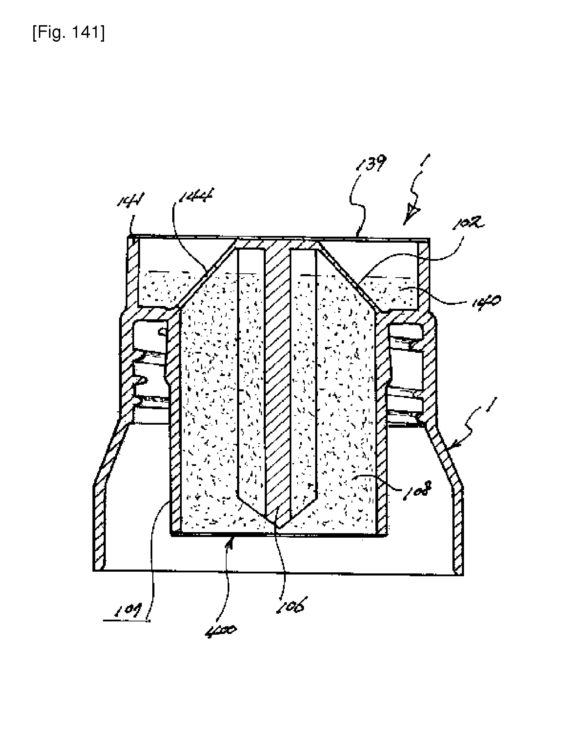

FIG. 141 illustrates a structure in which a moving space 144 is defined between an upper portion of the foldable connecting part 102 and the main body upper end guide 141. The moving space 144 is defined in the foldable connecting part 102.

Due to the above-described feature, the heterogeneous materials may be moved upward through the moving space 144 so that a large amount of heterogeneous materials is put into the storage space 108.

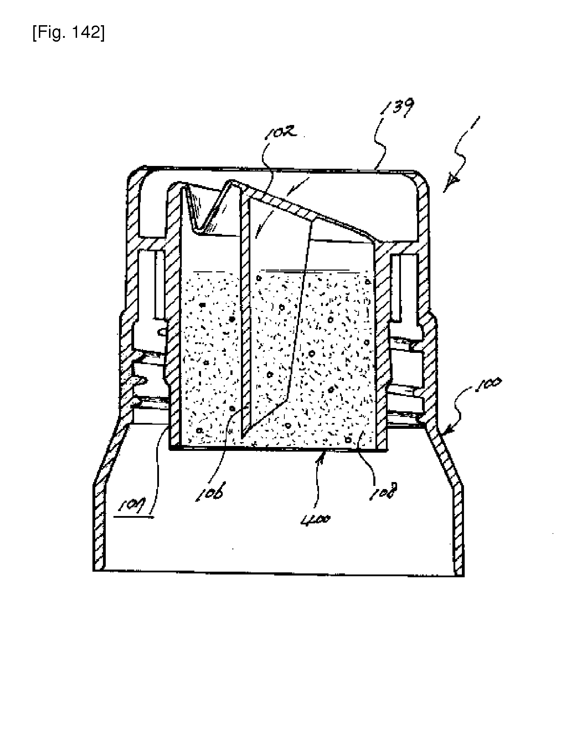

In the description of FIG. 142, the foldable connecting part 102 may be foldable in one direction. In use, when the foldable connecting part 102 disposed on the protruding portion is pressed, the foldable connecting part descends along a track of the circle. In this process, the opening part 106 opens the accommodating part sealing part 400.

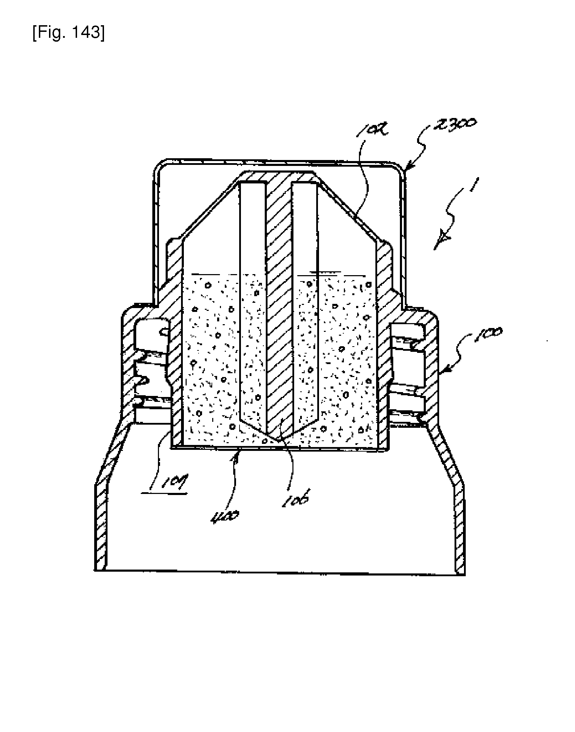

In the description of FIG. 143, an apparatus 1 for receiving the heterogeneous materials is provided. In the receiving apparatus 1, an accommodating part 107 having a storage space 108 is disposed within a main body 100, and a lower portion of the accommodating part 107 is sealed by an accommodating part sealing part 400. Also, an upper end of the accommodating part 107 is connected to a foldable connecting part 102, and an opening part 106 for opening the accommodating part sealing part 400 is disposed on a lower portion of the foldable connecting part 102.

Also, a protective cover 2300 formed of a soft material having a barrier property is disposed on an upper portion of the main body 100 including the foldable connecting part 102. The protective cover 2300 is coupled through thermal adhesion.

Also, the protective cover 2300 may be a film having the barrier property.

In use according to the present invention, when the protective cover 2300 is pressed in the state of FIG. 143, the protective cover 2300 is folded together with the foldable connecting part 102 to allow the opening part 106 to open the accommodating part sealing part 400.

Also, after the protective cover 2300 is removed, the foldable connecting part 102 may be pressed.

In further another embodiment (see FIGS. 144 to 153), when described with reference to FIG. 144, an apparatus 1 for receiving heterogeneous materials, which is coupled to a mouth part of a container containing the contents such as liquid includes a main body 100 coupled and fixed to the mouth part of the container and an accommodating part 107 having a plurality of storage spaces (a storage space 108 and a storage space B 108") within the main body 100. The storage spaces (the storage space 108 and the storage space B 108") within the accommodating part 107 is configured so that foldable connecting parts 102 and102' or foldable parts F and F' respectively disposed on upper portions of the storage spaces 108 and 108" and opening parts 106 and 106' respectively disposed on lower portions of the foldable parts F and F' or the foldable connecting parts 102 and 102' break an accommodating part sealing part 400 sealing a lower end of the accommodating part 107 to allow the contents within the storage spaces (the storage space 108 and the storage space B 108") of the accommodating part 107 to drop into the container, thereby mixing the contents with each other.

Also, the storage spaces (the storage space 108 and the storage space B 108") are constituted by a plurality of storage spaces (the storage space 108 and the storage space B 108") on the accommodating part 107. Also, the plurality of foldable connecting parts 102 and 102' or the foldable parts F and F' are disposed on upper ends of the plurality of storage spaces (the storage space 108 and the storage space B 108").

Also, each of the plurality of foldable connecting parts 102 and 102' or the foldable parts F and F' may be formed of a material having a barrier property. For example, the plurality of foldable connecting parts 102 and 102' or the foldable parts F and F' may be injection-molded through co-injection molding.

Also, a film having the barrier property may adhere or be coupled to an upper portion of each of the plurality of foldable connecting parts 102 and 102'.

Alternatively, a material having the barrier property may be deposited or applied to the upper portion of each of the foldable connecting parts 102 and 102'.

When additionally explained on the basis of the above-described structure, FIG. 144 illustrates a state in which a soft material having the barrier property adheres or is applied or deposited to the upper portion of each of the foldable connecting parts 102 and 102'.

Also, FIG. 145 illustrates an example in which a single foldable connecting parts 102 and 102' is provided. In this case, the foldable connecting parts 102 and 102' may be injection-molded by using a soft material having the barrier property through the co-injection molding.

In use according to the present invention, when the foldable parts F and F' or the foldable connecting parts 102 and 102' are pressed, the opening parts 106 and 106' break the accommodating part sealing part 400 so that the contents of the storage spaces (the storage space 108 and the storage space B 108") drop down and than are mixed with each other.

Also, the foldable parts F and F' or the foldable connecting parts 102 and 102' are provided in plurality (at least two). Thus, desired contents may be selectively used.

Also, a kind of component or other marks for identification may be displayed on the upper portion of each of the foldable part F and F' or the foldable connecting parts 102 and 120'.

In the description of FIG. 146, an apparatus 1 for receiving heterogeneous materials, which is coupled to a mouth part of a container containing the contents such as liquid includes a main body 100 coupled and fixed to the mouth part of the container and an assembly type accommodating part 500 for sealing storage spaces (a storage space 108 and a storage space B 108") within the main body 100. The storage spaces (the storage space 108 and the storage space B 500") defined above the assembly type accommodating part 500 is configured so that foldable connecting parts 102 and102' or foldable parts F and F' disposed on an upper portion of the storage spaces 108 and 108" and opening parts 500 and 106' respectively disposed on lower portions of the foldable part F and F' or the foldable connecting parts 102 and 102' break an accommodating part sealing part 502 sealing a lower end of the accommodating part 107 to allow the contents within the storage spaces (the storage space 108 and the storage space B 108") of the accommodating part 107 to drop into the container, thereby mixing the contents with each other.

Also, the storage spaces (the storage space 108 and the storage space B 108") are constituted by a plurality of storage spaces (the storage space 108 and the storage space B 108") on the accommodating part 107. Also, sealing surfaces 502 and 502' of the assembly type accommodating part 500 respectively disposed on the lower ends of the plurality of storage spaces (the storage space 108 and the storage space B 108") may be provided in plurality to respectively seal the storage spaces (the storage space 108 and the storage space B 108").

Also, an accommodating part cutoff lines 503 and 503' are disposed on the sealing surfaces 502 and 502', respectively.

In use according to the present invention, when one of the foldable parts F and F' is pressed, the opening parts 106 and 106' break the accommodating part cutoff lines 503 and 503', and simultaneously, the sealing surfaces 502 and 502' are pushed downward allow the contents to drop down.

FIG. 147 illustrates a state in which lower portions of the plurality of storage spaces 108 and 108" are sealed by the accommodating part sealing part 400.

In use, when one of the foldable parts F and F' is pressed, the corresponding opening parts 106 and 106' break the accommodating part sealing part 400 disposed thereunder to allow the contents within the corresponding storage spaces 108 and 108" to drop down and then be mixed with each other.

FIG. 148 is a perspective view illustrating an example of a receiving apparatus including a plurality of storage spaces and a plurality of foldable parts F and F', and FIG. 149 is a bottom perspective view of the receiving apparatus 1 in which an accommodating part 107 has a single cylindrical structure, and a plurality of storage spaces 108 and 108" are defined within the accommodating part 107.

FIG. 150 illustrates a state in which different heterogeneous materials are respectively stored in the storage spaces 108 and 108" in the state of FIG. 149, and then an end of each of the storage spaces 108 and 108" is sealed by the receiving part sealing part 400.

As described above, when the accommodating part sealing part 400 is sealed by the thermal adhesion or the like, a thermal adhesion surface 404 may occur.

FIG. 151 illustrates a state in which the receiving apparatus 1 is coupled to the container 1000, and FIG. 152 illustrates an example in which the foldable part F' is selected in the state of FIG. 151 and then pressed.

FIG. 153 illustrates an example in which the main body 1000 is variously changed in structure.

In further another embodiment (see FIGS. 154 to 155), FIG. 154 illustrates a structure in which a main body upper end guide 141 is disposed on an upper portion of the main body 100, and a main body upper surface sealing part 139 seals an end of the main body upper end guide 141 to improve the barrier property.

Also, FIG. 155 illustrates a structure in which a main body upper end guide 141 is coupled to an upper portion of the main body 100, and an assembly type accommodating part 500 having a plurality of storage spaces 108 and 108" is coupled to the inside of the main body 100 of which the upper end is sealed by a main body top surface sealing part 139.

In further another embodiment (see FIGS. 156 to 160), referring to FIG. 156, a main body 100 is coupled to a mouth part of a container, and an accommodating part 107 having a plurality of storage spaces 108 and 108" is disposed within the main body 100. Also, main body accommodating part sealing surfaces 130 and 130' partitioned by main body accommodating part cutoff lines 132 and 132' are disposed on lower portions of the plurality of storage spaces 108 and 108", and press type assembly accommodating parts 2400 and 2401 are respectively assembled to the insides of the plurality of storage spaces 108 and 108".

Also, the press type assembly accommodating parts 2400 and 2401 are closely attached to an accommodating part attaching surface 146 disposed on upper ends of the storage spaces 108 and 108" of the main body 100. Here, when the press type assembly accommodating parts 2400 and 2401 are pressed, lower ends of the press type assembly accommodating parts 2400 and 2401 break the main body accommodating part cutoff lines 132 and 132', and simultaneously, push the main body accommodating part sealing surfaces 130 and 130' to allow the heterogeneous materials to drop down.

Also, a cover 300 is coupled to an upper portion of the main body 100.

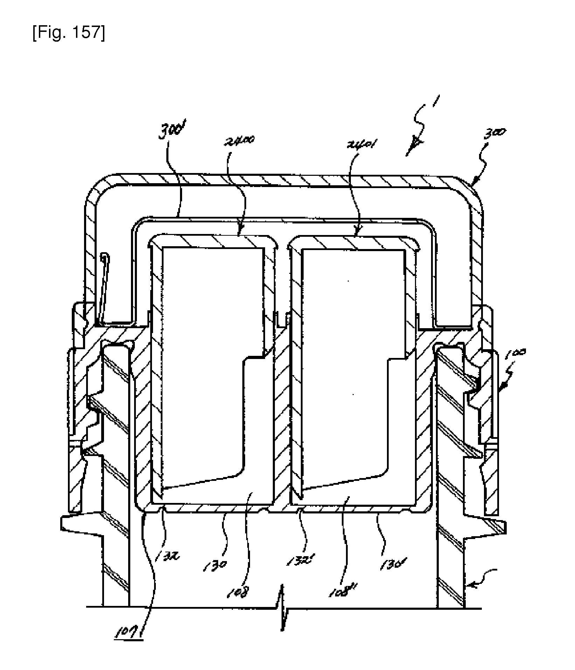

Also, a cover 300' formed of a material having a barrier property adheres to a top surface of the main body 100 having the press type assembly accommodating parts 2400 and 2401 as shown in FIG. 157.

Also, the cover 300' may be a packing material having a film shape (see FIG. 157).

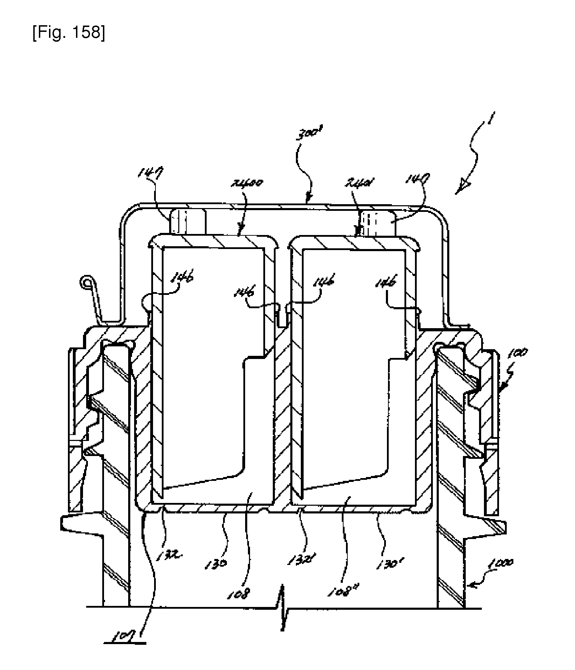

Also, as shown in FIG. 158, a protective cover support part 147 for protecting the film is disposed on the top surface of the main body 100 within the packing material (the cover 300') having the film shape.

Also, a press type accommodating part sealing stopper 2600 for discharge the mixed content is disposed on one of the press type assembly accommodating part 2400 and 2401 (see FIG. 160).

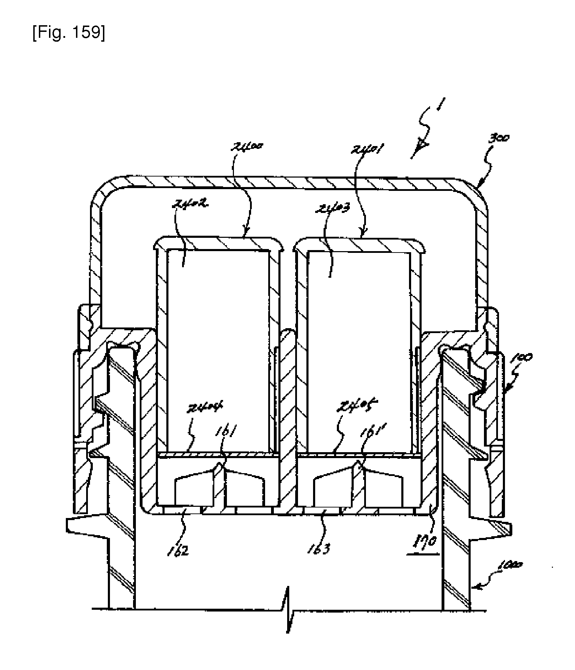

Referring to FIG. 159, a main body 100 is coupled to a mouth part of a container, and an accommodating part 170 having a plurality of spaces is disposed within the main body 100. Also, a plurality of accommodating part opening guides 161 and 161' and dropping spaces 162 and 163 are defined under the plurality of spaces. In the plurality of spaces, press type assembly accommodating part storage spaces 2402 and 2403 are coupled to the press type accommodating parts 2400 and 2402 sealed by press type accommodating part sealing surfaces 2404 and 2405.

In use as described above, when the press type accommodating parts 2400 and 2401 are selected and pressed, the press type assembly accommodating parts 2400 and 2401 descend. In this process, the press type accommodating part sealing surfaces 2404 and 2405 are broken by the corresponding accommodating part opening guides 161 and 161' to allow the heterogeneous materials to drop down through the dropping spaces 162 and 163, thereby mixing the heterogeneous materials with each other.

Also, in the case of FIG. 160, the dropping and mixed content may be discharged through the press type accommodating part sealing stopper 2600. The press type accommodating part sealing stopper 2600 is coupled to an upper end of the press type assembly accommodating part 2400. Here, the press type accommodating part sealing stopper 2600 may be opened according to a degree of vertical movement of the press type accommodating part sealing stopper 2600.

For example, when the press type accommodating part sealing stopper 2600 is lifted, the press type accommodating part sealing part 2406 is opened. Thus, the mixed content may be discharged through a press type accommodating part opening hole.

In further another embodiment (see FIGS. 161 to 168), referring to FIG. 161, an apparatus 1 for receiving heterogeneous, which is materials coupled to a container in a direction in which the contents are discharged is provided. In the receiving apparatus 1, an accommodating part 107 having a storage space 108 is disposed within a main body 100, and a foldable connecting part 102 or a foldable part F including an opening part 106 is disposed on an upper portion of the accommodating part 107. A lower end of the accommodating part 107 is sealed by an accommodating part sealing part 400, and a sealing stopper 200 for discharging the contents is disposed on a side of the foldable connecting part 102 or the foldable part F on the main body 100.

Also, a sealing stopper opening part 203 lengthily extending to a lower end thereof is disposed on the sealing stopper 200, and a lower end of the sealing stopper opening part 203 is sealed by the receiving part sealing part 400.

As described above, in the receiving apparatus 1, when the foldable part F is pressed as shown in FIG. 161, the opening part 106 breaks the accommodating part sealing part 400 to allow the heterogeneous materials into drop into the container 1000. If it is intended to discharge the mixed content, when the sealing stopper 200 is lifted, the accommodating part sealing part 400 adhering to the lower end of the sealing stopper opening part 203 is broken to open the storage space 108".

FIG. 162 illustrates an example in which the storage space 108 is expanded.

Referring to FIG. 163, an apparatus 1 for receiving heterogeneous materials, which is coupled to a container in a direction in which the contents are discharged is provided. In the receiving apparatus 1, an accommodating part 107 having a storage space 108 is disposed within a main body 100, and a foldable connecting part 102 or a foldable part F including an opening part 106 is disposed on an upper portion of the accommodating part 107. A lower end of the accommodating part 107 is sealed by an accommodating part sealing part 400, and a sealing stopper 200 for discharging the contents is disposed on a side of the foldable connecting part 102 or the foldable part F and in upper portion of the storage space 108 of the main body 100.

FIG. 164 is a perspective view of the receiving apparatus 1 including the foldable part F and the sealing stopper 200.

FIG. 165 illustrates a state in which the sealing stopper 200 is independently distinguished.

In use, the foldable part F is pressed to mix the heterogeneous materials within the storage space 108 with each other. Here, the mixed content may be discharged through the sealing stopper 200.

When the sealing stopper 200 is lifted, the sealing part 201 gets out of a sealing corresponding part 105, and simultaneously, a discharge space 202 is opened.

FIG. 166 illustrates a state in which an assembly type accommodating part 500 is assembled to the inside of the main body 100.

Preferably, the opening part 106 is disposed on a power portion of the foldable connecting part 102, and the assembly type accommodating part 500 having the accommodating part storage space 504 is coupled to the lower portion of the foldable connecting part 102. In use, when the foldable connecting part 102 is pressed, the opening part 106 opens the receiving part cutoff line 503 and the sealing surface 502 of the assembly type accommodating part 500 to allow the heterogeneous materials contained in the accommodating part storage space 504 to drop down. The mixed content may be discharged through the sealing stopper 200 disposed on a side of the foldable connecting part 102.

FIG. 167 illustrates a structure in which the foldable connecting parts or the foldable parts F and F' are provided in plurality, and the plurality of storage spaces are defined in the accommodating part under the foldable connecting parts or the foldable parts F and F'. FIG. 167 is a schematic perspective view of the receiving apparatus 1 having the above-described feature.

FIG. 168 illustrates an example in which the sealing stopper 200 is disposed on the upper portion of one foldable part F or F' of the plurality of foldable parts F and F'.

In use according to the present invention, when the foldable parts F and F' are pressed to allow the content within the storage space 108" to drop, the sealing stopper 200 is pressed to allow the opening part 106 to break the accommodating part sealing part 400, thereby allowing the content of the storage space 108 to drop and to be mixed with each other.

Also, the mixed content may be discharged through the sealing stopper 200.

In further another embodiment (see FIG. 169), an apparatus 1 for receiving heterogeneous materials, which is coupled to a container in a direction in which the contents are discharged is provided. In the receiving apparatus 1, an accommodating part having a plurality of storage spaces is disposed within a main body 100, and a plurality of foldable parts F and F' are disposed on upper portions of the plurality of accommodating parts. The main body 100 including the plurality of foldable parts F and F' is coupled to the mouth part of the container of the main body 100 by a coupling unit 2500 coupled to the mouth part of the container 1000.

That is, the main body 100 is not independently coupled to the container 1000, but is coupled to the container 1000 by using the coupling unit 2500 that is an auxiliary unit.

In further another embodiment (see FIGS. 170 to 190), each of the foldable parts F and F' may have various forms or shapes through which a specific character is associated or having a mountain shape and the like.

Also, as shown in FIG. 172, each of the foldable parts F and F' may have a specific shape such as chocolate.

Also, as shown in FIG. 173, the foldable parts F, F', and F" of the receiving apparatus 1 may be provided in various number such as three. Also, various expressions such as a character or miniature or a letter or figure may be expressed on each of the foldable parts F, F', and F".

As described above, each of the foldable parts F, F', and F" may be formed of a soft resin and be injection-molded by using a co-injection molding machine.

FIGS. 174 and 175 illustrate an example in which storage spaces 108, 108', and 108" of the accommodating part 107 are provided.

FIG. 176 is a perspective view of an example in which the main body 100 of the receiving apparatus 1 including the plurality of foldable parts F, F', and F" is variously modified, for example, the main body 100 lengthily extends.

Referring to FIGS. 177 and 178, a main body 100 of an apparatus 1 for receiving heterogeneous materials is divided into an upper main body 148 and a lower main body 149. A plurality of foldable connecting parts 102 and 102' and foldable parts F and F' are provided in the upper main body 148, and opening parts 106 and 106' are respectively disposed on lower portions of the foldable connecting parts 102 and 102' or the foldable parts F and F'. The lower main body 149 has a plurality of storage spaces 108 and 108" to which the plurality of foldable connecting parts 102 and 102' or the foldable parts F and F' are coupled.

Also, main body accommodating part sealing surfaces 130 and 130' on which main body accommodating part cutoff lines 132 and 132' are disposed are disposed on lower portions of the storage spaces 108 and 108", respectively.

In use according to the present invention, when the foldable parts F and F' are pressed, the opening parts 106 and 106' break the main body accommodating part cutoff surfaces 130 and 130' to allow the contents to drop down and then be mixed with each other.

Also, in the case of FIG. 178, the lower portions of the storage spaces 108 and 108" are sealed by an accommodating part sealing part 400.

Referring to FIG. 179, assembly type opening ends 900 and 900' are assembled to the inside of the main body 100 having the plurality of storage spaces 108 and 108", and a lower portion of the accommodating part 107 that is lower ends of the storage spaces 108 and 108' is sealed by the receiving part sealing part 400. The foldable connecting parts or the foldable parts F and F' including the assembly type opening ends 900 and 900' are disposed on the upper portions of the storage spaces 108 and 108" and the upper portion of the main body 100.

As described above, in the state of FIG. 179, when the foldable part F is pressed, the foldable part F is folded. In this process, the assembly type opening end 900' descends to open the accommodating part sealing part 400 as shown in FIG. 180.

Referring to FIGS. 181 and 186, an apparatus 1 for receiving heterogeneous materials, which is coupled to a container in a direction in which the contents are discharged, includes a side surface part 101 and a top surface 164. An accommodating part 107 having a storage space 108 is disposed inside the side surface part 101, and a foldable part F is disposed on the top surface part 164 that is an upper portion of the accommodating part 107.

Also, an opening part 106 is disposed on a lower portion of the foldable part F, and a sealing part 400 sealing the lower portion of the storage space 108 is disposed on the lower portion of the accommodating part 107 including the opening part 106.

Also, a main body mouth part 103" having a discharge hole 104 is disposed on an upper portion of the storage space 108 of the accommodating part 107 including the sealing part 400 and a side of the foldable part F, and an opening cover 300 for sealing the discharge hole 104 of the main body mouth part 103" is disposed on the main body 100 including the main body mouth part 103".

Also, a mouth part sealing part 306 for sealing the discharge hole 104 within the main body mouth part 103" is disposed on the cover 300. A main body mouth part upper end 157 formed of a soft resin is disposed on an upper end of the main body mouth part 103".

Also, a check valve CV is disposed within the upper end of the main body mouth part 103". The check valve CV may be injection-molded by using the same soft resin as that of the foldable part F or may be separately manufactured and then be assembled.

As described above, in the receiving apparatus 1, the cover 300 is coupled after the main body 100 is manufactured as shown in FIG. 182. Alternatively, in a state where the opened cover 300 is connected to the main body 100, the cover 300 and the main body 100 may be injection-molded at the same time.

Here, referring to FIG. 182, it is seen that an anti-forgery frame coupling part 156 is disposed on an outer annular part of the top surface part 164 of the main body so that the cover 300 is easily coupled. Here, an anti-forgery frame 301 of the cover 300 is coupled with respect to the anti-forgery frame coupling part 156.

In use according to the present invention, as shown in FIG. 181, when the receiving apparatus 1 is coupled to the container, and then an opening guide part 304 of the cover 300 is lifted, a separation cutoff line 305 is cut, and thus, the mouth part sealing part 306 of the cover 300 gets out of the main body mouth part upper end 157.

As described above, although the opened cover 300 gets out of the main body 100, the cover may be continuously connected to the main body 100 by a cover connecting part 307 in the present invention. That is, this structure may be an option in the present invention.

Also, in this state, when the foldable part F is pressed, an end of the opening part 106 breaks the accommodating part sealing part 400 disposed thereunder, and simultaneously, the contents of the storage space 108 may drop into the container and be mixed with each other.

Also, when the container is tilted in one direction, the mixed content may be discharged through the discharge hole 104.

Also, if existence, when the container is compressed, the content within the container may suddenly expand the cutoff line of the check valve CV, and thus, the mixed content may be discharged.

In reference, various screw threads or coupling part may be disposed on an inner wall of the side surface part 101 of the main body 100. The main body 100 may be prevented from being separated from a container neck after the main body 100 is coupled to the container neck, or may be coupled to a carton pack or tetra pack. In addition, the main body 100 may be modified so that the main body 100 is coupled to a pouch container.

Also, after the accommodating part 107 having the storage space 108 is separately manufactured, the accommodating part 107 may be coupled or attached thereto. In this case, the accommodating part sealing part 400 may be formed of the same material as that of the accommodating part 107. Also, a cutoff line having a predetermined shape may be disposed so that the accommodating part sealing part 400 is opened by the opening part 106.

Also, the foldable part F may be co-injection-molded by using a soft resin. Alternatively, after the foldable part F is separately manufactured, the foldable part F may adhere or be coupled. Alternatively, the foldable part F may be vacuum-deposited to improve the barrier property, or a film having the barrier property may adhere to the foldable part F.

Continuously (FIG. 183), the discharge hole 104 of the main body mouth part 103" is separated from the storage space 108 of the accommodating part 107. After the heterogeneous materials are put into the storage space 108, the lower end of the accommodating part 107 may be sealed by the accommodating part sealing part 400.

FIG. 184 is a perspective view of the main body 100. In detail, the foldable part F and the main body mouth part 103" are disposed on the upper portion of the top surface part 164. The main body mouth part 103" may be variously modified in shape and size.

FIG. 185 illustrates an example in which the cover 300 is coupled to the upper portion of the main body 100 of the receiving apparatus 1, but the present invention is not limited thereto. For example, the cover 300 may be variously modified in design.

FIG. 186 illustrates a modified example of the main body 100 of the receiving apparatus 1. That is, the main body 100 is coupled to a neck of the container 1000 and opened through the opening guide part 304. Here, the opened cover 300 is connected to the anti-forgery frame 301 by the cover connecting part 307.

In this state, after the foldable part F is pressed to mix the contents with each other, when the container 1000 is tilted in one direction, the mixed content may be discharged through the main body mouth part 103".

In further another embodiment (FIGS. 187 to 192), an apparatus 1 for receiving heterogeneous materials, which is coupled to a container in a direction in which the contents are discharged, includes a side surface part 101 and a top surface 164. An accommodating part 107 having storage spaces 108 and 108' is disposed inside the side surface part 101, and foldable parts F and F' are disposed on the top surface part 164 that is an upper portion of the accommodating part 107.

Also, opening part 106 and106' are respectively disposed on lower portions of the foldable parts F and F', and an accommodating part sealing part 400 sealing the lower portions of the storage spaces 108 and 108' is disposed on the lower portion of the accommodating part including the opening parts 106 and 106'.

Also, when the foldable parts F and F' are pressed, the opening parts 106 and 106' breaks the accommodating part sealing part 400 disposed thereunder, and simultaneously, the contents of the storage spaces 108 and 108' may drop into the container and be mixed with each other.

Although the above-described receiving apparatus 1 is provided as a basic structure, the foldable part F and F' and the storage spaces 108 and 108' of the receiving apparatus 1 may be provided in single, but in plurality. Referring to FIG. 187, a straw insertion part 159 that has a thin thickness or is formed of a soft resin so that the straw insertion part 159 can be punched through a straw end thereof may be disposed on an upper portion of at least one portion of the foldable parts F and F'.

In use according to the present invention, after the foldable parts F and F' are pressed to allow the contents within the storage spaces 108 and108' to drop and then be mixed with each other, a straw is inserted into the straw insertion part 159 to drink (suction) the mixed heterogeneous materials within the container 1000.

In reference, although a guide G is illustrated in the drawings, the guide G may assist the movement of the opening part 106' that is moved downward by a predetermined distance. Alternatively, the opening part 106' may be separately manufactured so that the opening part 106' is moved downward without the guide G and then may be assembled.

FIG. 188 illustrates an example in which a straw insertion part 149 is disposed on the main body 100 of the receiving apparatus 1 having the single foldable part F. The straw insertion part 159 may be formed by using a soft resin at the same time while the foldable part F is formed. Here, the straw insertion part 159 may have a thin thickness so that the straw insertion part 159 is punched by a straw end having a sharp shape, or a cutoff line may be thinly formed on a specific portion of the straw insertion part 159.

In the receiving apparatus 1 as described above, after the foldable part F is pressed to open the accommodating part sealing part 400, the straw is inserted into the straw insertion part 159 to drink the mixed content within the container.

In FIG. 189, the plurality of foldable parts F and F' are provided on the top surface part 164 of the main body 100. Also, the stew insertion part 159 having a thin thickness is disposed on a predetermined portion of the top surface part 164. The straw insertion part 159 may be formed while the foldable parts F and F' are injection-molded by using the co-injection molding machine.

However, as necessary, the straw insertion part 159 has been punched, and an upper portion of the straw insertion part 159 may be sealed by a material such as an aluminum thin film.

FIG. 190 illustrates an example in which the plurality of foldable parts F and F' are provided, and the straw insertion part 159 is disposed on the upper portion of each of the foldable parts F and F'.

FIG. 191 illustrates a modified example in which the straw insertion part is replaced with a sealing film pulling part 166 as shown in FIG. 191 even though the straw insertion part is partitioned by a thin film such as aluminum or cutoff line.

In use according to the present invention, in the state of FIG. 191, when the foldable part F is pressed, the opening part 106 breaks the accommodating part sealing part 400 to allow the heterogeneous materials to drop and be mixed with each other. Then, the sealing film pulling part 166 is pulled, and the straw is inserted into a straw insertion hole 165 generated when the sealing film pulling part 166 is pulled, thereby drinking the mixed content.

Also, as a modified example of FIG. 191, if the sealing film pulling part 166 is not provided, the straw insertion part 404 may be formed while a lower end of the straw insertion hole 165 is formed together with the accommodating part sealing part 400. In this case, when the straw is disposed on the straw insertion hole 165 and then is pressed, the straw insertion part 404 having the thin film shape may be easily opened.

Also, a main body fixing part 158 may be disposed on the main body 100 to prevent the main body 100 from being separated after the main body 100 is coupled to the neck of the container 1000. Here, whether the cover 300 is coupled may be an option.

FIG. 192 illustrates a state in which a straw S is inserted into the straw insertion part.

In further another embodiment (FIGS. 193 to 200), an apparatus 1 for receiving heterogeneous materials, which is coupled to a container in a direction in which the contents are discharged, includes a main body 100 and an independent accommodating part 2700. The main body 100 has screw threads 167 and 168 on the inside of a side surface part 101, and a coupling protrusion 171 or coupling groove 172 is disposed on an inner wall of an upper portion of each of the screw threads 167 and 168.

Also, an integrated cover 169 that is partitioned by an integrated cover cutoff line 170 is disposed on an upper portion of the side surface part 101 having the coupling protrusion or the coupling groove 172. When the independent accommodating part 2700 is coupled to the inside of the main body 100 including the integrated cover 169, an accommodating part main body 2701 having an accommodating part storage space 2702 is disposed on a lower portion of the independent accommodating part 2700.

Also, a soft foldable part F is disposed on an upper portion of the accommodating part main body 2701, and an accommodating part opening part 2703 lengthily extending downward is disposed on a lower portion of the foldable part F. A lower end of the accommodating part main body 2701 that is a lower end of the accommodating part opening part 2703 is sealed by the accommodating part sealing part 400.

Also, a container neck sealing part 2706 formed of a soft resin is disposed on an outer annular part of the accommodating part main body 2701 of the independent accommodating part 2700.

Also, a coupling surface 2707 inserted into the coupling grove 172 of the main body 100 is disposed on an outer annular part of the lower end of the foldable part F of the independent accommodating part 2700. Also, a discharging mouth part 2706 lengthily extending is disposed on the upper portion of the foldable part F.

Also, a sealing stopper 200 that is vertically moved to open or close the discharge mouth part 2707 is disposed on the discharge mouth part 2707. The sealing stopper 200 includes a sealing part 201 closely attached to a sealing part corresponding part 2704 that is a lower portion of the mouth part 2706 of the main body 100 to seal the sealing part corresponding part 2704 and a discharge space 202 that is intermittently formed in the side surface part of an upper portion of the sealing part 201.

In use according to the present invention, when the receiving apparatus 1 is coupled to the neck of the container, the main body mouth part sealing part 2708 formed of a soft resin is closely attached to an inner wall of the container neck to maintain the sealing. In this state, when the integrated cover 169 is twisted in one direction, the integrated cover cutoff line 170 is cut and separated.

Then, when an upper portion of the sealing stopper 200 is pressed, the accommodating part opening part 2703 breaks the accommodating part sealing part 400, and simultaneously, the heterogeneous materials within the accommodating part storage space 2702 may drop into the container and be mixed with each other.

In this state, when the sealing stopper 200 is lifted upward, the sealing part 201 gets out of the sealing corresponding part 2704. In this process, the discharge space 202 is opened. Also, in this process, when the container is tilted in one direction, the mixed content within the container may be discharged through the discharge space 202.

Particularly, the present invention may have a feature in that, since the soft foldable part F is moved to the lower accommodating part 2701 to form at least one container neck sealing part 2708 while the foldable F is formed, the sealing between the receiving apparatus 1 and the container may be significantly improvised in the state where the receiving apparatus 1 is coupled to the container.

FIG. 194 illustrates a state in which the integrated cover 169 is removed from the main body 100. Thus, as necessary, the integrated cover 169 may be separately manufactured, and then may be coupled to the main body 100.

FIG. 195 is a longitudinal cross-sectional view of the main body 100. That is, FIG. 195 illustrates an example in which the screw threads 167 and 168 disposed on the inner wall of the side surface part 101 of the main body 100 are variously modified, and also, the screw threads 167 and 168 are different in shape so that the main body 100 is capable of being coupled to various container necks.

Also, as shown in the drawings, since the coupling protrusion 171 and the coupling groove 172 are used for coupling the coupling surface 2707 of the independent accommodating part 2700, this may be variously changed in design, and be included in the ideas of the present invention.

FIG. 196 is a longitudinal cross-sectional view of the independent accommodating part 2700. For example, the independent accommodating part 2700 in which heterogeneous materials are put into the accommodating part storage space 2702 of the independent accommodating part 2700, and then a lower end thereof is sealed by the accommodating part sealing part 400 may be coupled to the main body 100.

Also, as shown in the drawings, the container neck sealing part 2708 may be provided in at least one. As shown by dotted line in the drawings, a container neck sealing part 2708' having a different outer diameter and a different standard may be provided.

FIG. 197 illustrates variously modified examples of the independent accommodating part 2700. For example, the foldable part F may be merely a use for mixing the heterogeneous materials. In this case, the foldable part F is pressed to mix the heterogeneous materials, and also, various contents such as a product, a giveaway, a miniature, or a character, or the like may be stored in the main body upper space 173 defined above the foldable part F.

FIG. 198 illustrates variously modified examples of the independent accommodating part 2700.

FIG. 199 illustrates an example in which a main body mouth part sealing part 2709 formed of a soft material such as a foil is disposed on an upper portion of the discharge mouth part 2706 disposed on an upper end of the independent accommodating part 2700.

In use, when the integrated cover 169 is opened, and the upper foldable part F is pressed, the opening end 2703 disposed on the lower end of the opening part 2706 is broken, and simultaneously, the heterogeneous materials stored in the storage spaces drop down and then are mixed with each other.

In this state, when the container is tilted in one direction after the main body mouth part sealing part 2709 is removed, the mixed content is discharged through the mouth part 2706.

In reference, to reinforce the sealing of the mouth part 2706, a main body mouth part sealing part 174 may be disposed on the integrated cover 169.

Referring to FIG. 200, a mouth part sealing film 2710 including a mouth part sealing film pulling part 2711 is

disposed on an upper portion of the discharge mouth part 2706 disposed on the upper portion of the foldable part F of the independent accommodating part 2700, and the mouth part sealing film 2710 is distinguished from the mouth part 2706 by a mouth part sealing film cutoff line 2712.

In use, when the integrated cover 169 is removed, and the mouth part 2706 is pressed in the above-described state, the foldable part F is folded to allow the accommodating part opening part 2703 to open the accommodating part sealing surface 400, thereby allow the content of the accommodating part storage space 2702 to drop into the container and be mixed with each other.

In this state, when the mount part sealing film pulling part 2711 is pulled, the mouth part sealing film cutoff line 2712 is broken to separate the mouth part sealing film 2710 from the mouth part 2706.

Also, in this state, when the container is tilted in one direction, the mixed content within the container may be discharged through the mouth part 2706.

In further another embodiment (FIGS. 201 to 207), an apparatus 1 for receiving heterogeneous materials, which is coupled to a container in a direction in which the contents are discharged, includes a side surface part 101 and a top surface 164. An accommodating part 107 having a storage space 108 is disposed inside the side surface part 101, and a foldable part F is disposed inside the top surface part 164 that is an upper portion of the accommodating part 107.

Also, an opening part 106 is disposed on a lower portion of the foldable part F, and an accommodating part sealing part 400 sealing the lower portion of the storage space 108 is disposed on the lower portion of the accommodating part 107 including the opening part 106.

Also, screw threads 167 and 168 coupled to a container neck are disposed on an inner wall of the side surface part 101, and an elastic space 177 having an empty with a predetermined volume is disposed at a position that extends downward from an inner portion of a portion at which an upper portion and the top surface part 164 of the accommodating part 107 meet each other. An elastic part 176 including an elastic sealing part 175 is disposed on an outer annular part of the elastic space 177.

Also, when a cover 300 is coupled to the main body 100, a portion of a lower end of the cover 300 is inserted into the elastic space 177 of the main body 100.

According to the present invention, when an end of the cover 300 or an anti-forgery frame 301 is coupled to the main body 100 in the state of FIG. 201, the completed receiving apparatus 1 as shown in FIG. 202 may be provided. In this state, when the receiving apparatus 1 is coupled to the container neck, the elastic sealing part 175 is closely attached to an inner wall of the container neck to maintain the sealing.

Also, after the above-described process, when the cover 300 is twisted in one direction, the cover 300 is removed while the separation cutoff line 305 is broken. Then, when the foldable part F is pressed, the opening part 106 breaks the accommodating part sealing part 400 to allow the heterogeneous materials within the storage space 108 to drop down and thus be mixed with each other.

FIG. 203 illustrates a state in which the elastic sealing part 175 disposed on the outer annular part of the accommodating part 107 is closely attached to the inner wall of the container neck of the container 1000 and thus sealed. In this feature, while the elastic part 176 is moved into the elastic space 177, the elastic part 175 may elastically closely attach the elastic sealing part 175 to the container neck.

FIGS. 204 and 205 are views of a modified example, for example, an example in which the main body mouth part 103 for discharging the mixed content is disposed on the upper portion of the foldable part F, and the sealing stopper 200 is disposed on the main body mouth part 103.

Although this principle is described in FIG. 203, when the sealing stopper 200 is pressed after the cover 300 is removed, the opening part 106 breaks the accommodating part sealing part 400, and simultaneously, the heterogeneous materials stored in the storage spaces 108 drop into the container and then are mixed with each other.

Then, the mixed content may be discharged through the discharge space 202 that is defined by lifting the sealing stopper 200.

FIG. 206 illustrates an example in which a unit for coupling the main body 100 to the container neck is variously provided in the main body 100 including the elastic sealing part 175. According to the present invention, the main body 100 is pushed to the container neck to couple the main body 100 to the container neck having various standards.

On the basis of the above-described structure, when the main body 100 is pushed to a container neck having a different standard, a first protrusion 178 and a second protrusion 179 disposed on an inner wall of the side surface part 101 and having a branched shape may be operated and then hung on an annular frame disposed on the outer annular of the container neck.

Here, the elastic sealing part 175 disposed on the outer annular part of the accommodating part 017 is elastically closely attached to the container neck to maintain the sealing.

In this state, when the sealing stopper 200 is pressed, the opening part 106 breaks the accommodating part sealing part 400. In this process, the heterogeneous materials stored in the storage spaces 108 may drop into the container and are mixed with each other. Then, the mixed content may be discharged through the sealing stopper 200.

FIG. 207 illustrates a state in which the container neck sealing part 181 formed of a soft resin is disposed on the outer annular part of the accommodating part 107. The container neck sealing part 181 may be formed at the same time while the foldable part F is formed on the upper portion of the container neck sealing part 181. For example, the container neck sealing part 181 may be injection-molded by using a co-injection molding machine.

As described above, in the receiving apparatus 1, when the main body 100 is coupled to the container neck, the soft container neck sealing part 181 is closely attached to the inner wall of the container neck to maintain the sealing. In use, when the sealing stopper 200 is pressed, the opening part 106 disposed thereunder descends to break the existing accommodating part sealing part. In this process, the heterogeneous materials contained in the storage space 108 may drop down and thus be mixed with each other.

In further another embodiment (FIG. 208), an apparatus 1 for receiving heterogeneous materials, which is coupled to a container in a direction in which the contents are discharged, includes a side surface part and a top surface 164. An accommodating part 107 having a storage space 108 is disposed inside the side surface part 101, and a foldable part F is disposed inside the top surface part 164 that is an upper portion of the accommodating part 107.

Also, an opening part 106 is disposed on a lower portion of the foldable part F, and an accommodating part sealing part 400 sealing the lower portion of the storage space 108 is disposed on the lower portion of the accommodating part 107 including the opening part 106.

Also, screw threads 167 and 168 coupled to the container neck are disposed on an inner wall of the side part 101. At least one protruding handle 2801 is coupled to an auxiliary cover 2800 with respect to an outer annular part of the side surface part 101.

Also, an upper foldable part 2801 that is a thin and easily foldable is disposed on a central portion of the auxiliary cover 2800.

According to the present invention, since the handle 2801 is provided, the main body 100 may be easily coupled to the container neck. This is done because the protruding handle 2801 is stably disposed on a palm.

Also, in the above-described receiving apparatus 1, an upper foldable part 2802 is provided to protect the foldable part F until the foldable part F is used. Then, when a consumer presses the upper foldable part 2802, the upper foldable part 2802 is folded, and simultaneously, the upper foldable part 2802 presses the foldable part F. In this process, the opening part 106 breaks the accommodating part sealing part 400.

Also, in this process, the heterogeneous materials contained in the storage space 108 may drop into the container and then be mixed with each other.

In further another embodiment (FIGS. 209 to 212), an apparatus 1 for receiving heterogeneous materials, which is coupled to a container in a direction in which the contents are discharged, includes a main body 100 constituted by an upper main body 148 and a lower main body 149. Storage spaces 108 and 108' are defined in a lower portion of the lower main body 149.

Also, lower ends of the storage spaces 108 and 108' have main body accommodating part sealing surfaces 130 and 130' having main body accommodating part cutoff lines 132 and 132'.

In further another embodiment (FIG. 149), foldable parts F and F' are disposed inside a top surface part that is an upper portion of the lower main body 149, and opening parts 106 and 106' are respectively disposed on lower portions of the foldable parts F and F'. The upper main body 148 including the opening parts 106 and 106' and the lower main body 149 disposed on the lower portion of the upper main body 148 are integrated with each other through coupling or adhesion therebetween.

Also, auxiliary cutoff line protective parts 132A, 132B, and 132C are disposed on upper or lower portions of the main body accommodating part cutoff lines 132 and 132' respectively disposed on the main body accommodating part sealing surfaces 130 and 130'.

Also, each of the auxiliary cutoff line protective parts 132A, 132B, and 132C may be a film having a barrier property such as a soft resin or foil.

Also, the auxiliary cutoff line protective parts 132A, 132B, and 132C may provide spaces in a shape in which the main body accommodating part cutoff lines 132 and 132' are cut, and then the auxiliary cutoff line protective parts 132A, 132B, and 132C are formed in the main body accommodating part cutoff liens 132 and 132' that are provided as spaces.

In use according to the present invention, it is coupled to the container 1000 in the state of FIG. 209. In this state, when the foldable parts F and F' are pressed, the opening parts 106 and 106' break the main body accommodating part cutoff lines 132 and 132' and the auxiliary cutoff line protective parts 132A, 132B, and 132C to open the main body accommodating part sealing surfaces 130 and 130'.

Also, in this process, the heterogeneous materials contained in the storage spaces 108 and 108' may drop into the container and then be mixed with each other.

Also, the foldable parts F and F', the opening parts 106 and 106', and the main body accommodating part sealing surfaces 130 and 130' may be provided in single, but in plurality. In FIG. 209, for convenience, they are provided in plurality.

Also, the foldable parts F and F' may be injection-molded by using a soft resin through a dual injection manner, and thin portions of the foldable connecting parts 102 and 102' may be replaced with the foldable parts F and F' alone.

Also, the cover 300 assembled with the upper portion of the main body 100 may be option.

In further another embodiment (FIGS. 213 and 214), as described in various examples of the present invention, the structure in which the screw threads 167 and 168 are disposed on the inner wall of the side surface part of the main body to couple the main body to the container neck may be provided for detailed descriptions. An example thereof will be described as follows.

For example, a container that is commercialized with various standards within a size of about 25 MM to 28 MM and of which an outer diameter of a neck has a margin of error within a size of about 3 MM may be an object of the present invention.

The container neck, for example, a container neck having various standards such as a size of about 25.2 MM, about 26.2 MM, about 26.78 MM, or about 28 MM may be an object of the present invention. Here, a coupling part (a portion on which a screw thread is formed) of the container neck may vary in height.

Also, to provide a receiving apparatus 1 that can be coupled to above-described various container necks as an apparatus 1 for receiving heterogeneous materials, a plurality of screw threads 167A, 167B, 167C, 168A, 168B, and 168C are disposed an inner wall 182 of a side surface part to be coupled to the inside of the main body of the receiving apparatus 1.

The plurality of screw threads 167A, 167B, 167C, 168A, 168B, and 168C includes a main body including a first screw thread A167 disposed on a lower portion and a second screw thread A168 disposed on an upper portion so that the plurality of screw threads 167A, 167B, 167C, 168A, 168B, and 168C are coupled to the container neck according to shapes of the screw threads. Thus, the main body may be coupled to container necks having standards different from each other (As described above, since the main body of the apparatus for receiving the heterogeneous materials is previously described with the foregoing drawings and descriptions, their detailed descriptions will be omitted).

Also, an accommodating part having a storage space is disposed on the inside or an upper portion of the main body, and

a lower portion of the accommodating part is sealed, and an opened part for opening the sealed accommodating part is disposed on an upper portion of the sealed accommodating part. When the opening part is touched or pressed or opens the sealing accommodating part, the heterogeneous materials contained in the storage space drop into the container and thus are mixed with each other.

However, the receiving apparatus may be variously modified in application.

An application example of the receiving apparatus 1 is illustrated in FIGS. 215 to 217.

In a case of FIG. 215, an example in which the main body 100 of the receiving apparatus 1 is coupled to a container neck 1001 having a size of about 28 MM is illustrated. In this case, the first screw thread A146 is closely hung on a container neck screw thread 1000A having a sized of about 28 MM, and the other second screw thread A168 is formally disposed.

Also, in this case, the second screw thread A168 disposed on an upper portion of an inner wall 182 of the side surface part 101 is not coupled to a container neck screw thread 1000An having a size of about 28 MM even though the second screw thread A168 is hung on the container neck screw thread 1000A. This is done because the lower first screw thread A167 does not match the container neck screw thread 1000A having the size of about 28 MM.

In reference, in a case of FIG. 215, a state in which an outer annular part of the accommodating part 107 is closely attached to the inner wall of the container neck 1001 and thus is sealed is illustrated.

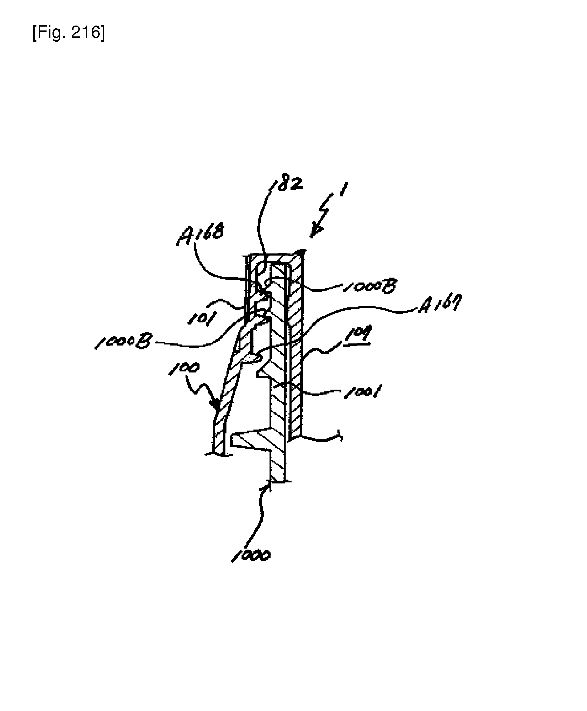

In a case of FIG. 216, an example in which the main body 100 of the receiving apparatus 1 is coupled to a container neck 1001 having a size of about 26 is illustrated. 78 MM is illustrated. In this case, the second screw thread A148 is closely hung on a container neck screw thread 1000B having a sized of about 26.78 MM, and the other first screw thread A167 is formally disposed in an empty space.

In a case of FIG. 217, an example in which the main body 100 of the receiving apparatus 1 is coupled to a container neck 1001 having a size of about 26.2 MM is illustrated. In this case, at least one portion of the second screw thread A168 is closely hung on a container neck screw thread 1000C having a sized of about 26.2 MM, and the other first screw thread A167 is formally disposed.

The receiving apparatus 1 as described above will be described below with reference to FIGS. 213 and 214.

A first screw thread height SH' (on a planar figure) from a starting point at which the first screw thread A167 is disposed on the inner wall 182 of the side surface part of the main body to an ending point of the first screw thread A167 may be about 3.63 MM.

Also, the first screw thread A167 may have a screw rotation of about 360 degrees.

Also, second screw thread starting references 2SH1, 2SH2, and 2SH3 may have a height of about 3.73 MM with respect to the starting reference of the first screw thread A167. However, the second screw thread starting references 2SH1, 2SH2, and 2SH3 may have starting heights different from each other.

Also, as shown in FIG. 213, the second screw thread A168 may be spaced by three screw thread lines from the screw threads 168A and 168B. Actually, two screw threads 168A and 168B start. Alternatively, as shown in FIG. 214, three screw threads 168A, 168B, and 168C are spaced a predetermined distance from each other.

Also, the second screw thread A168 may be used as a standard of the other three line screw threads having starting points different from each other.

Also, the second screw thread A168 is constituted by the three line screw threads 168A, 168B, and 168C having starting points different from each other. A 2nd second screw thread starting reference 2SH2 having a different starting point may be spaced from the first screw thread staring reference SH by about 4.22 MM. Also, the coupling side surface part inner wall 182 may have a height of about 9.15 MM.

Continuously, even though the second screw thread A168 has the three line screw thread in equal variance, the second screw thread A168 disposed on the coupling side surface part inner wall 182 may have a two line (168A and 168B) starting manner as shown in FIG. 213.

Also, the first screw thread A167 used in the present invention may have an inner diameter of about 26.0 MM, and the second screw thread A168 may have an inner diameter of about 25.5 MM.

As described above, the present invention may be summarized again as follows.

To provide a container neck having a different outer diameter and the receiving apparatus 1 that can be coupled to the container neck as the apparatus 1 for receiving the heterogeneous materials, the plurality of screw threads are disposed on the coupling side surface part inner wall 182 of the main body 100 of the receiving apparatus 1. The plurality of screw threads include the first screw thread A167 disposed at a lower portion thereof and the second screw thread A168 disposed at an upper portion thereof so that the screw threads are coupled to the container neck according to the shape of the screw thread. Thus, the apparatus 1 for receiving the heterogeneous materials may be coupled to container necks having standards different from each other.

A first screw thread height SH from the first screw thread starting reference SH, i.e., a starting point of the first screw thread A167 to an ending point of the first screw thread A167 on the planar figure may be about 3.63 MM.

Also, the first screw thread A167 may have a screw rotation of about 360 degrees.

Also, the second screw thread starting references 2SH1, 2SH2, and 2SH3 may be spaced from the first screw thread starting reference SH by a height of about 3.73 MM.

Also, the starting point of the second screw thread A168 may be used as a standard of other three screw thread lines different from each other.

Also, the second screw thread A168 is constituted by the three line screw threads having starting points different from each other. A 2nd second screw thread starting reference 2SH2 having a different starting point may be spaced from the first screw thread staring reference SH by about 4.22 MM.

Also, the coupling side surface part inner wall 182 may have a height of about 9.15 MM.

Also, the first screw thread A167 may have a screw rotation of about 360 degrees.

In reference, the first screw thread A167 may be provided as long one screw thread. Alternatively, as shown in FIGS. 213 and 214, the first screw thread A167 may be provided as intermittent screw threads 168A, 168B, and 168C. In some cases, the first screw thread A167 may be divided into at least three screw threads.

In further another embodiment (FIG. 218), the present invention relates to an accommodating part that is manufactured by using a press vacuum molding method. Here, plural independent accommodating parts 2900 are manufactured by using a film having a barrier property. In some cases, after the plural independent accommodating parts 2900 are manufactured by using the film having the barrier property, the independent accommodating parts 2900 may be fitted from a lower portion toward an upper portion of the main body or be coupled or adhere to the upper portion of the main body.

Explaining the above-described receiving apparatus 1, the apparatus 1 for receiving the heterogeneous materials, which is coupled to a container includes a main body 100 coupled to a neck of the container and a coupling part such as a screw thread, which is coupled to the container neck on an inner wall of a side surface part 101 of the main body 100.

Also, plural independent accommodating parts 2900 is coupled to an upper portion of the main body 100. The plural independent accommodating parts 2900 include plural accommodating part opening parts 2901 and 2901' lengthily extending from plural accommodating part storage spaces 2902 and 2902' under the foldable parts F and F'. Also, lower portions of the plural accommodating part opening parts 2901 and 2901' are sealed by plural accommodating part sealing parts 2910.

Also, an integrated cover 169 partitioned by an integrated cover cutoff line 170 is disposed on an upper portion of a side surface part 101 of the main body 100.

In the above-described receiving apparatus 1, in use, when the integrated cover 169 is removed, and the foldable parts F and F' are pressed, the plural accommodating part opening parts 2901 and 2901' break the plural accommodating part sealing part 2910 disposed thereunder. In this process, the heterogeneous materials contained in the plural accommodating part storage spaces 2902 and 2902' drop into the container and then are mixed with each other.

In reference, although the plural independent accommodating parts 2900 are pushed and assembled upward from the lower portion of the main body in the present invention, this method may be variously changed.

Also, when the plural independent accommodating parts 2900 are manufactured by using a film, a multi-layered film having a superior barrier property may be used. The foldable parts F and F' disposed on the upper portion of the plural independent accommodating parts 2900 may be provided in two, three, and so on acceding to conditions.

Also, the plural independent accommodating parts 2900 may be manufactured by using a resin such as plastic through a blow molding method. In this case, the foldable parts F and F' may be soft and have a superior barrier property.

In further another embodiment (FIGS. 219 and 220), the receiving apparatus 1 of the present invention includes a protruding accommodating part 108A protruding upward by a predetermined length so that the heterogeneous materials contained in the storage space are easily distinguished.

Preferably, an apparatus 1 for receiving heterogeneous materials, which is coupled to a container in a direction in which the contents are discharged, includes a main body 100 constituted by a top surface part 164 and a side surface part 101 and a coupling part such as a screw thread or hook on an inner wall of the side surface part 101 of the main body 100.

Also, a protruding accommodating part 100A protruding upwardly is disposed on the top surface part 164 of the main body 100. A plurality of foldable parts F and F' are disposed on the protruding accommodating part 100A. Also, opening parts 106 and 106' are respectively disposed in storage spaces 108 and 108' at lower portions of the plurality of foldable parts F and F'.

Also, the lower portions of the opening parts 106 and 106' are sealed by an accommodating part sealing part 400. In use of the receiving apparatus 1, when the foldable parts F and F' are pressed, the foldable parts F and F' are folded laterally to allow the opening parts 106 and 106' to break the accommodating part sealing part 400 disposed thereunder. In this process, the heterogeneous materials contained in the storage spaces 108 and 108' drop into the container and then are mixed with each other.

Also, the lateral folding of the plurality of foldable parts F and F' is for effectively pressing the foldable parts F and F' in a narrow space.

In general, when the receiving apparatus 1 is applied to a container including a container neck having a size of about 28 MM even though a container neck having a large size does not have a problem, it is difficult to push the plurality of foldable parts F and F' by using a finger.

Thus, since vertical folding of the foldable parts F and F' is limited, it is preferable that the foldable parts F and F' are pressed laterally.

Also, a soft resin (material) or a material having a barrier property may adhere or be coupled to the plurality of foldable parts F and F'.

FIG. 220 illustrates a receiving apparatus 1 in which a plurality of storage spaces are vertically and horizontally provided.

Explaining the receiving apparatus 1 with reference to the drawings, an apparatus 1 for receiving heterogeneous materials, which is coupled to a container in a direction in which the contents are discharged, includes a main body 100 constituted by a top surface part 164 and a side surface part 101 and a coupling part such as a screw thread or hook on an inner wall of the side surface part 101 of the main body 100.

Also, a protruding accommodating part 100A protruding upwardly is disposed on the top surface part 164 of the main body 100. A foldable part F is disposed on the protruding accommodating part 100A. Also, an opening part 106 is disposed in a storage space 108 at a lower portion of the foldable part F.

Also, the lower portion of the opening part 106 is sealed by the accommodating part sealing part 400,

and, a second storage space 108A is defined in a lower portion of side portion of the accommodating part sealing part 400, and the lower portion of the second storage space 108A is sealed by an accommodating part sealing part 400' .

Also, a soft resin or a material having a barrier property may adhere or be coupled to the foldable part F.

In use according to the present invention, when the foldable part F is pressed, the opening part 106 breaks the accommodating part sealing parts 400 and 400' so that the heterogeneous materials of the storage space 108 and the second storage space 108A drop down and than are mixed with each other.

In reference, a protective cover may be selectively coupled to the upper portion of the protruding accommodating part 100A of the main body 100. Alternatively, a protective pull tap for protecting the foldable part F may be provided.

In reference, the receiving apparatus 1 may be differently described as follows.

An apparatus 1 for receiving heterogeneous materials, which is coupled to a container in a direction in which the contents are discharged, includes a main body 100 constituted by a top surface part 164 and a side surface part 101 and a coupling part such as a screw thread or hook on an inner wall of the side surface part 101 of the main body 100.

Also, a protruding accommodating part 100A protruding upwardly is disposed on the top surface part 164 of the main body 100. A foldable part F is disposed on the protruding accommodating part 100A. Also, an opening part 106 is disposed in a storage space 108 at a lower portion of the foldable part F, and a lower portion of the opening part 106 is sealed by an accommodating part sealing part 400.

Also, in the formation of the receiving apparatus 1 having a second storage space 108A, in a lower portion or side portion of an accommodating part sealing part 400, the foldable part F of the receiving apparatus 1 may be formed of a soft material. The soft material may be injection-molded by a co-injection molding machine.

Also, the soft material may be a film or a soft material such as rubber.

In further another embodiment (FIG. 221), as shown in FIG. 220, the receiving apparatus 1 may include a protruding accommodating part 100A. A different feature of the present invention is that a storage space 108 is provided in single. This may be described as follows.

An apparatus 1 for receiving heterogeneous materials, which is coupled to a container in a direction in which the contents are discharged, includes a main body 100 constituted by a top surface part 164 and a side surface part 101 and a coupling part such as a screw thread or hook on an inner wall of the side surface part 101 of the main body 100.

Also, a protrusion accommodating part 100A protruding upwardly is disposed on the top surface part 164 of the main body 100. A foldable part F is disposed on the protruding accommodating part 100A. Also, an opening part 106 is respectively disposed in a storage space 108 at a lower portion of the foldable part F.

Also, the lower portion of the opening part 106 is sealed by the accommodating part sealing part 400. The foldable part F is formed of a soft material, and the soft material is injection-molded by a co-injection molding machine.

Alternatively, the soft material may be a film or a soft material such as rubber.

A protective pull tap may be added to an upper portion of the receiving apparatus 1. Explaining this with reference to the present invention, when the soft foldable part F presses a central portion in the state of FIG. 221, the foldable part F that is relatively flat and hard than an edge may be folded downward. In this process, an end of the opening part 106 breaks the accommodating part sealing part 400 disposed thereunder.

Also, in this process, the heterogeneous materials contained in the storage space 108 may drop into a container space part and then be mixed with each other.

In further another embodiment (FIGS. 222 to 224), according to a receiving apparatus 1 of the present invention, a main body 100 has a second storage space 108" different from the accommodating part 107 having a separate storage space 108. Here, the main body is not coupled to a separate container, and the receiving apparatus 1 itself may store the heterogeneous materials and a general material. In use, the materials may be mixed with each other to allow a user to drink the materials or achieve a desired purpose.

In an embodiment, according to a heterogeneous material receiving apparatus 1 having a container shape, a foldable part F is disposed on one end of a main body 100. An opening 106 and an accommodating part 107 having a storage space 108 are defined on a lower portion of the foldable part F. An end of the accommodating part 107 is sealed by an accommodating part sealing part 400.

Also, a second storage space 108" is defined in a lower portion of the accommodating part sealing part 400, and a surface that is an end of the second storage space 108" and an end of the main body 100 is sealed by a main body lower sealing part 3000.

Also, a sealing part discharge hole 3001 for discharging mixed content is defined in the main body lower sealing part 3000. Also, the sealing part discharge hole 3001 is sealed by a discharge hole sealing part 3002.

Also, an integrated cover 121 for protecting a foldable part F of the main body 100 is provided. The integrated cover 121 may be separately manufactured, and then be coupled. Also, the integrated cover 121 may be variously modified.

Also, the main body lower sealing part 3000 may be manufactured through a coupling, thermal adhesion, or other depositing methods. The foldable part F is formed of a soft material, and the soft material is injection-molded by a co-injection molding machine.

Also, as shown in FIG. 223, foldable parts F and F' (the foldable part F of FIG. 222) may be provided in plurality. Also, as shown in FIG. 224, a main body mouth part 103" that is a discharge part for discharging contents may be disposed on a side of the foldable part F.

Also, referring to FIGS. 222, 223 and 224, although an integrated cover 121 or a cover 300 is disposed on the foldable parts F and F' disposed on an end of the main body 100 and a portion on which the main body mouth part 108' is disposed, this may be variously modified in other methods.

In use according to the present invention, in case of FIG. 222, when the integrated cover 121 is opened, and the foldable part F is pressed, the opening part 106 breaks the accommodating part sealing part 400. In this process, the contents contained in the storage space 108 may drop into the content contained in the second storage space 108" and then mixed with each other.

As described above, it is intended to discharge the mixed content, the mixed content may be discharged through a sealing part discharge hole 3001 defined by removing the lower discharge hole sealing part 3002. The sealing part discharge hole 3001 for discharging the content may be variously changed in design.

FIG. 223 illustrates a feature in which a plurality of foldable parts F and F' are provided to mix various materials with each other.

Thus, as shown in FIG. 222, a storage space and an opening part are separately are provided under the foldable parts F and F'. A lower end of an accommodating part having the storage space and the opening part is sealed by an accommodating part sealing part. A second storage space may be defined in a lower portion of the accommodating part sealing part.

Also, if a main body lower portion sealing part 3000' is separated, or if existence, the mixed content of the receiving apparatus 1 may be discharged through a discharge unit added to the main body lower portion sealing part 3000'.

In a case of FIG. 224, a cover 300 is opened, and the foldable part F is pressed. Then, heterogeneous materials contained in the storage space are mixed into the second storage space within the main body 100, and then the mixed content is discharged through a main body mouth part 103" disposed on a side of the foldable part F.

Also, the main body mouth part 103" may have various shapes such as a mamelon shape or a sealing stopper for opening or closing the main body mouth part 103" by being vertically pulled.

In further another embodiment (FIG. 225), an integrated cover 121 connected to an integrated cover connecting part 122 is disposed on a side of a coupling main body 100B, and a foldable part F is disposed on an upper portion of the integrated cover 121. In a case of FIG. 225, the integrated cover 121 is opened.

The above-described present invention may be described as follows.

In a unit for discharging contents of a container and an apparatus 1 for receiving heterogeneous materials within (the container) a container space part of the container, the main body 100 is divided into a coupling cover 100B and an integrated cover 121. An insertion coupling part 185 may be selectively provided in the coupling main body 100B so that a mouth part of the container or a portion of the sealed container is punched and coupled.

Also, a foldable part F having an integrated cover opening part 183 is disposed n the integrated cover 121, and an integrated cover storage space 184 is defined under the foldable part F. An end of the integrated cover storage space 184 is sealed by an accommodating part sealing part 400.

Also, the integrated cover 121 is connected to the coupling main body 100B by the integrated cover connecting part 122.

Also, the foldable part F is formed of a soft material. The soft material may be a film or a soft resin such as rubber. If the soft material is the resin, the resin may be injection-molded by using a co-injection molding machine.

As described above, the receiving apparatus 1 of the present invention may be coupled to a mouth part of a container having a screw thread or hook, a pouch container, a carton pack, or a tetra pack in a state where the integrated cover 121 covers the coupling main body 100B.

Particularly, when coupled to the pouch container, a side surface part 101 of the coupling main body 100B is deformed as an adhesion part. Alternatively, when coupled to tetra pack or carton pack, an adhesion part that is horizontally disposed on a lower end of the side surface part 101 may be changed in design to reduce manufacturing costs.

In the above-described receiving apparatus 1, when the foldable part F is pressed in the state where the integrated cover 121 is closed, the integrated cover opening part 183 breaks the accommodating part sealing part 400. In this process, the heterogeneous materials contained in the integrated cover storage space 184 drop into the container and then are mixed with each other.

The mixed content within the container may be discharged through the coupling main body 100B when the integrated cover 121 is opened and tilted in one direction.

Also, if the insertion coupling part 185 is disposed on the lower end of the coupling main body 100B, when the insertion coupling part 185 having a sharp end of the receiving apparatus 1 is disposed on a portion of the tetra pack and then presses the tetra pack, a surface of the container may be punched, and thus, the coupling main body 100B is coupled.

In this state, the foldable part F is pressed to allow the heterogeneous materials contained in the integrated cover storage space 184 to drop into the container and be mixed with each other.

In further another embodiment (FIG. 226), a receiving apparatus 1 that is changed in design so that the receiving apparatus 1 is used for a pouch container is provided. This may be described as follows.

In an apparatus 1 for receiving heterogeneous materials, which is coupled to a pouch container through thermal adhesion in a direction in which the contents are discharged, a main body 100C is divided into a spout main body 3100 and a main body cover 3200. The spout main body 3100 has an adhesion surface 3101 coupled to the pouch container on a lower portion thereof. Also, a mouth part, on which a screw thread is formed, for accommodating the main body cover 3200 is disposed on an upper portion of the spout main body 3100.

Also, in the spout type receiving apparatus 1, the main body cover 3200 includes a main body cover side surface part 3201 and a main body cover top surface part 3202. Here, the main body cover is coupled to the main body cover side surface part 3201 by using a screw thread or hook. A foldable part F is disposed on the main body cover top surface part 3202 of the main body cover 3200, and an opening part is disposed in a lower storage space of the foldable part F.

Also, an end of the storage space is sealed by the accommodating part sealing part. The foldable part F is formed of a soft material, and the soft material may be a film or a resin such as rubber.

In use according to the present invention, the receiving apparatus 1 is coupled (adheres) to the pouch container in a state of FIG. 226. In use, when the upper foldable part F is pressed, the heterogeneous materials contained in the inner storage space may drop into the container. When it is intended to discharge the mixed content, the main body cover 3200 is separated, and then, the mixed content is discharged through the spout main body 3100.

Thus, the receiving apparatus 1 may be coupled to various containers after only the main body cover 3200 is separately manufactured.

In further another embodiment (FIGS. 227 and 228), various giveaways such as a character or gift card may be put into a space part in which an accommodating part of the receiving apparatus 1 is defined. Alternatively, the giveaways may be printed on the inside of a finished receiving apparatus lower portion sealing part 3300 to give goods according to the printed content or inform win to a customer according to the printed content.

In summary, the apparatus 1 for receiving the heterogeneous materials is coupled to the container in a direction in which the contents are discharged. In the receiving apparatus 1, the heterogeneous materials are contained in the accommodating part 107 of the main body 100. Also, a lower end of the main body 100 is sealed by the receiving apparatus lower portion sealing part 3300, and also, the receiving apparatus 1 is separately packaged.

Also, contents representing the giveways or other gift cards may be printed on the inner side surface of the receiving apparatus lower portion sealing part 3300. Alternatively, gift cards or sales promotional products may be put into the main body sealed by the receiving apparatus lower portion sealing part 3300.

FIG. 227 illustrates a state in which the receiving apparatus 1 is completed. In case of FIG. 228, when the receiving apparatus lower portion sealing part 3300 is removed, the contents such as the giveway that is displayed by means for promotioning consumption of the consumer are printed on the lower portion of the receiving apparatus lower portion sealing part 3300.

In further another embodiment (FIGS. 229 to 239), the receiving apparatus 1 used in the present invention may be coupled to a mouth part of a container in which contents are contained and then be distributed (a before market) as necessary. Also, in some cases, the receiving apparatus 1 may be separately packaged and distributed. The consumer purchases the receiving apparatus 1 and then removes a stopper of the container that is previously hold and separately purchased. Then, the receiving apparatus 1 may be coupled to the container (in this case, an after market).

In use of the receiving apparatus 1, in the case of the after market that is the latter, a system for familiarly transferring the receiving apparatus 1 to the consumer may be required. This may be additionally described below.

FIG. 229 illustrates a state in which the receiving apparatus 1 is put into a packing container P having a cylindrical shape. In this case, a packing container stopper P-2 is disposed on a packing container main body P-1 so that the packing container P is recycled.

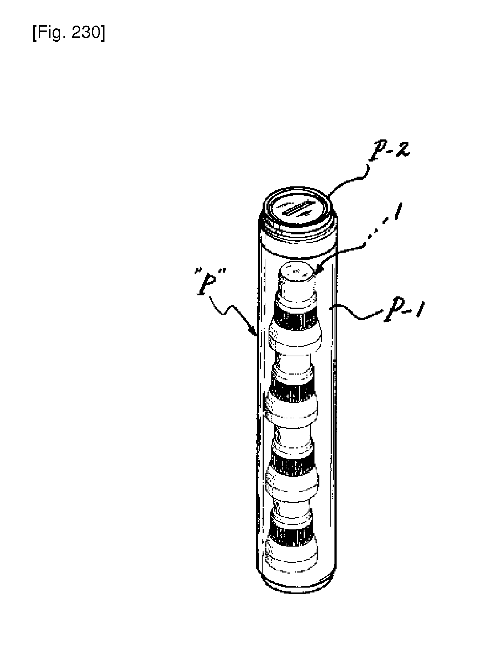

FIG. 230 illustrates another state in which the receiving apparatus 1 is put into a packing container P. In this case, although a packing container stopper P-2 is disposed on a packing container main body P-1 so that the packing container P is recycled, a cutoff groove is formed in the packing container stopper P-2 to allow the receiving apparatus 1 to be used as a coin bank for storing money.

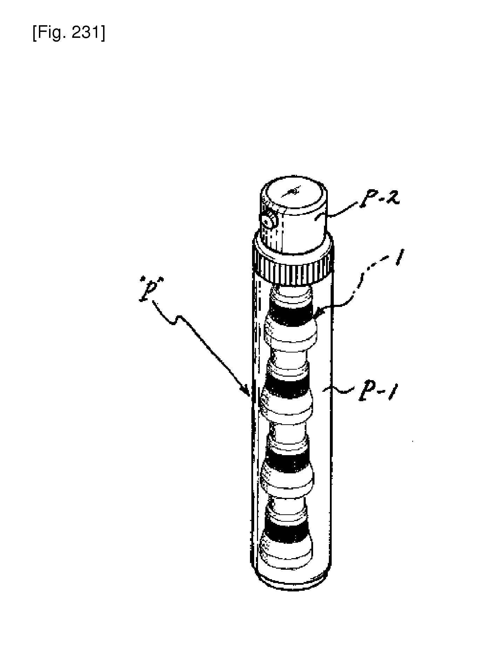

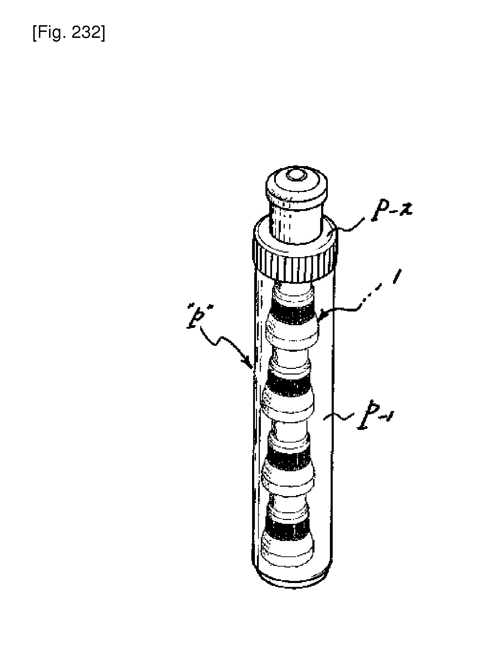

FIG. 231 illustrates another state in which the receiving apparatus 1 is put into a packing container P. In this case, although a packing container stopper P-2 is disposed on a packing container main body P-1 so that the packing container P is recycled, the packing container stopper P-2 is converted into a pump dispenser so that the receiving apparatus 1 is utilized as a pump dispenser. FIG. 232 illustrates an example in which the packing container stopper P-2 is used as a sealing stopper for performing a vertical opening or closing operation.

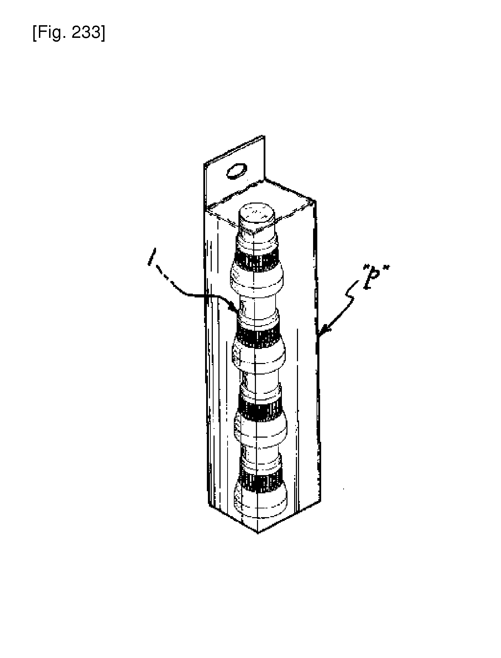

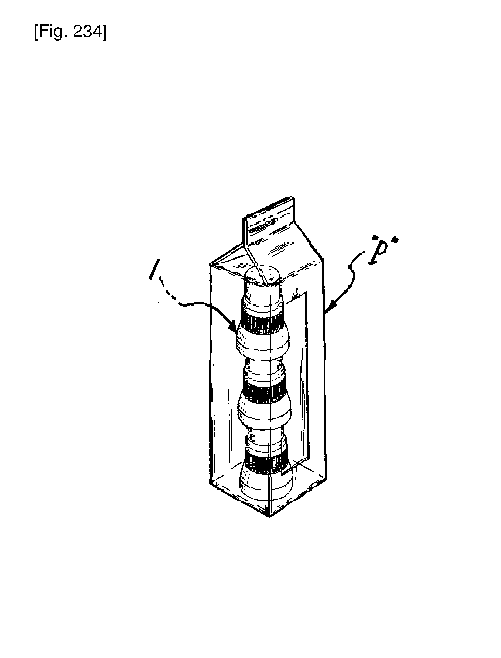

FIG. 233 illustrates an example in which a decoration hole is defined in a square package so that the packing container P is easily decorated. FIG. 234 illustrates a packing container P on which a design such as a carton pack, which provides friendliness is packaged.

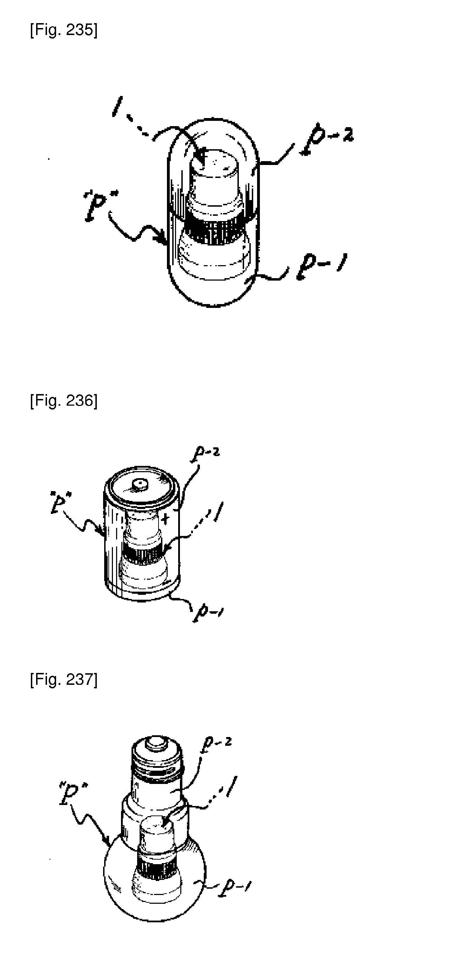

FIG. 235 illustrates a packing container P having a vitamin shape for expressing energy. Also, the packing container P is vertically divided into a packing container main body P-1 and a packing container stopper P-2 so that the packing container P is recycled after being used. FIG. 236 illustrates a packing container P having a battery shape.

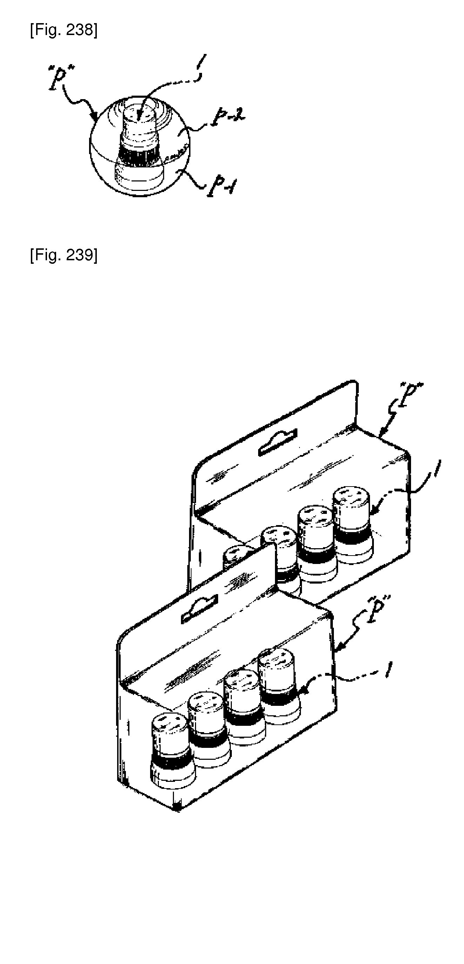

FIG. 237 illustrates a packing container P having a bulb shape, and FIG. 238 illustrates a packing container P having a spheral shape.

FIG. 239 illustrates an example in which a packing container P is packaged through a general packing method.

As described above, when the receiving apparatus 1 of the present invention is applied to the after market, the receiving apparatus 1 may be variously modified as shown in FIGS. 229 to 239 to arouse demands of the consumer.

Also, the receiving apparatus 1 may be attached to drinking packages that are packaged in bulk package of 6 to 48 units and thus be treated as a single package product.

Also, if one or two drinking packages or 24 drinking packages are packaged while the drinking packages are packaged in an empty space or packaged in bulk, the receiving apparatus 1 may be packaged and distributed with a space in which 24 drinking packages are stored.

In this case (the drinking packing method having a space in which 24 drinking packages are stored), a packing method in which 22 drinking packages are provided, and the receiving apparatus 1 is disposed in a space corresponding to 2 drinking packages may be used.

The packing method according to the present invention is not limited thereof. For example, the packing method may be variously changed.

In further another embodiment (FIGS. 240 and 246), an accommodating part 107 of the present invention is manufactured by using a blow molding method in which a corresponding portion is manufactured in a first or second stage.

Preferably, a portion in which an accommodating part 107 together with a main body 100 is formed may be defined as an accommodating part forming preform portion 190. Then, the accommodating part forming preform portion 190 may be variously modified in size and shape by using the blow molding method to form the accommodating part.

The above-described receiving apparatus 1 may be described with reference to the accompanying drawings.

An apparatus 1 for receiving heterogeneous materials, which is coupled to a container includes a main body 100 constituted by a side surface part 101 and a top surface part and a coupling part such as a screw thread or hook on an inner wall of the side surface part 101 of the main body 100.

Also, a foldable part F that is foldable is disposed on an upper portion of the accommodating part 107, and an opening part 106A is disposed on a lower portion of the foldable part F.

Also, a power portion of the accommodating part 107 having the storage space 108 is sealed by an accommodating part sealing part 400 or an accommodating part lower portion sealing part 3400.

Also, the accommodating part 107 including the foldable part F is elongated by the blow molding method in a state of a preform state. The accommodating part 107 may be expressed in various shapes such as a character in addition to a basic shape.

Also, the accommodating part 107 may be manufactured in a multi-layered structure. The accommodating part 107 may be formed of a material such as polyethylene terephthalate (TET), polypropylene (PP), or polyethylene (PE). Particularly, when the accommodating part 107 is provided in the multi-layered structure, a preform may be injection-molded to have several sheets by using a co-injection molding machine, and then, a blow molding process may be performed.

As described above, the present invention may be summarized again as follows.

An apparatus 1 for receiving heterogeneous materials, which is coupled to a container includes a main body 100 containing the heterogeneous materials therein and an accommodating part 107 that is thin and soft on an upper portion of the main body 100.

Also, when the upper portion of the accommodating part 107 is pressed, at least one portion of the accommodating part 107 may be folded downward. Here, a lower sealed surface of the accommodating part 107 may be opened, and simultaneously, the heterogeneous materials contained therein may drop down and then are mixed with each other.

Also, the accommodating part 107 having the storage space may be elongated and expanded by the blow molding method in the preform state. Preferably, an accommodating part forming preform portion 190 may be elongated and expanded.

Also, the accommodating part 107 may be expressed as a shape such as a character. The accommodating part 107 may be provided in a multi-layered structure. Also, the accommodating part may be formed of a materials selected from the group of polyethylene terephthalate (TET), polypropylene (PP), and polyethylene (PE).

Also, a foldable part F may be disposed on an upper portion of the accommodating part 107. An opening part 106A lengthily extending downward may be disposed on a lower or upper portion of the accommodating part 107.

Also, an accommodating part sealing part 400 or an accommodating part lower portion sealing part 3400 may be disposed on a lower portion of the accommodating part 107.

Also, the accommodating part sealing part 400 and a main body lower container neck sealing part 3500 may be disposed on the lower portion of the accommodating part 107.

Also, the accommodating part 107 may be manufactured by using the blow molding method, and then be coupled to the main body 100 through various methods.

Also, a fitting part F-A for assembling an opening part 106A may be disposed on the bottom of the top surface part of the accommodating part 107. Alternatively, the fitting part F-A for assembling the opening part 106A or an assembly part may be disposed on the foldable part F.

Also, the accommodating parts 107 and 107' may be provided in plurality. A cover 300 for protecting the single accommodating part 107 or the plurality of accommodating parts 107 and 107' may be assembled with an upper portion of the main body of the accommodating parts 107 and 107'.

Also, a long groove may be defined in an outer annular part of the single accommodating part 107 or the plurality of accommodating parts 107 and 107' to reinforce the vertical load of the single accommodating part 107 or the plurality of accommodating parts 107 and 107'.

The above-described effects will be described as follows.

FIG. 1 illustrates an receiving apparatus 1 that in a usable state after the accommodating part 107 is manufactured by using the blow molding method.

The accommodating part 107 may be thin and soft. When the accommodating part 107 is pressed without providing the foldable part F on the upper portion of the accommodating part 107, the accommodating part 107 may be naturally folded downward.

In spite of the above-described structure, to further maintain the completed state, the foldable part F that is foldable may be disposed on the top surface part of the accommodating part 107. Also, a fitting part F-A may be additionally provided on the foldable part F, and then, an opening part 106A having a sharp shape may be assembled with a lower end of the fifing part F-A.

In the above-described state, the main body 100 is turned inside out to put heterogeneous materials such as liquid or powder into the storage space 108. Then, the end of the accommodating part 107 is sealed by the accommodating part lower portion sealing part 3400.

Also, an accommodating part lower portion sealing part cutoff line 3401 is disposed on an accommodating part lower portion sealing part cutoff surface 3402 so that the accommodating part lower portion sealing part 3400 is easily opened by the end of the opening part 106A.

Also, a reinforcing part may be disposed on an outer annular part to reinforce a vertical load of the accommodating part 107. The reinforcing part may have several long grooves to achieve a desired purpose. Alternatively, the outer annular part of the accommodating part 107 may be thicker to achieve a desired purpose.

As described above, in the state of FIG. 240, if existence, a protective pull tap disposed on the upper portion of the top surface part 107 may be removed. Then, when the foldable part F is pressed, the opening part 106A opens the accommodating part lower portion sealing part 3400. In this process, the heterogeneous materials contained in the storage space drop into the container and then are mixed with each other.

FIG. 241 illustrates an example in which an accommodating part 107 is formed on an upper portion of a main body 100 by using a blow molding method.

FIG. 242 illustrates an example in which a fitting part F-A is assembled in the state of FIG. 241, and a lower end of the accommodating part 107 that is a lower end of the fitting part F-A is sealed by an accommodating part sealing part 400 having a film shape.

In reference, a coupling portion may be variously expressed on an inner wall of a side surface part 101 of the main body 100. The main body 100 may have a screw thread so that the main body 100 is capable of being coupled to various container necks. Of cause, the main body 100 may be provided as a standard so that the man body 100 is coupled to a specific container neck. Also, the main body 100 may be variously modified so that the main body 100 is commercialized in a state where the main body is coupled to the container.

FIG. 243 illustrates an example in which the accommodating part 107 is expressed as a specific shape such as a character. As shown in FIG. 243, an opening part 106A is assembled with the bottom of the upper portion of the accommodating part 107. As necessary, a foldable part may be disposed on the upper portion of the accommodating part 107, and then the opening part 106A may be assembled with the foldable part.

Also, the accommodating part lower portion sealing part 3400 of FIG. 240 may be coupled with respect to an end T of the accommodating part 107 as shown in FIG. 243. Alternatively, as shown in FIG. 242, the sealing may be performed through various methods such as the formation of the accommodating part sealing part 400.

FIG. 244 illustrates an example in a specific usage.

As shown in FIG. 244, an accommodating part sealing part 400 may be disposed on an end of an accommodating part 107 having a storage space 108. Also, a main body lower container neck sealing part 3500 may be disposed on a lower portion of the accommodating part sealing part 400.

In use, when the accommodating part 107 is pressed or compressed, a pressure may be generated in an inner storage space 108 of the accommodating part 107. Here, the generated pressure may push the accommodating part sealing part 400 downward.

In this process, the accommodating part sealing part 400 may be broken, but does not endure the pressure. Also, simultaneously, the heterogeneous materials contained in the storage space 108 may drop down and be mixed with each other. According to the present invention, a punching pin 3501 having a sharp shape may be disposed inside the main body lower container neck sealing part 3500 to easily break the accommodating part sealing part 400.

FIG. 245 illustrates a state in which an accommodating part forming preform portion 190 is disposed on an upper portion of the main body 100. As necessary, as shown as an enlarged portion "H", a materials having a multi-layered structure may be provided to improve the barrier property.

The accommodating part forming preform portion 190 may be manufactured as an accommodating part 107 having various shapes by using a blow molding method.

FIG. 246 illustrates an example in which accommodating parts 107 and 107' of a main body 100 are provided in plurality.

In use, if existence, the cover 300 is removed, and then, when upper portions of foldable parts F and F' are pressed, opening parts 106A and 106A' break an accommodating part sealing part 400. In this process, heterogeneous materials contained in the storage spaces 108 and 108' drop into the container and then are mixed with each other.

In reference, although an accommodating part forming preform portion 190 may be formed of a single material while accommodating parts 107 and 107' are formed by using the blow molding method, quality in functional aspect may be deteriorated. Thus, it is preferable that opening parts 106A and 106A' may be separately manufactured and then be coupled.

Referring to FIG. 247, a discharge unit having various shapes and discharging a mixed content is disposed on an upper portion of the above-described accommodating part 107. For example, the discharge unit may include a discharge space 202 and a sealing stopper 200. In use, when the sealing stopper 200 is lifted upward, the discharge space 202 may be opened. On the other hand, when the sealing stopper 200 descends, the discharge space 202 may be closed.

In reference, in a method for injecting heterogeneous materials into an inner storage space of accommodating parts 107 and 107' applied to the present invention, an example in use of a receiving apparatus 1 having the accommodating parts 107 and 107' may be described as follows.

### One example)

A content such as liquid containing alcohol is stored in an inner container space part of a container. A receiving apparatus 1 containing a separate content is additionally disposed on an upper portion of the container in a direction in which the content is discharged. While the receiving apparatus 1 is opened or touched, the contents of the inner storage space of the receiving apparatus 1 drop down and are mixed with each other (since various examples have been described, their detailed descriptions will be omitted).

As described above, in an exemplified receiving apparatus 1, referring to FIG. 246, storage spaces 108 and 108' of the receiving apparatus 1 are provided in plurality. A material for relieving hangovers may be stored in one storage space of the plurality of storage spaces 108 and 108', and fragrance or nourishment may be stored in the other storage space.

Also, the material for relieving hangovers may be selected from at least one of taurine, polyphenol, citric acid, tannin, glutathione, succinic acid, lactic acid bacteria, and amino acid.

In the above-described example, when used for the consumer, (if the nourishment such as vitamin exists in a foldable part F), when the foldable part F is pressed, various vitamins or nourishments may drop into the container space part and then are mixed. Then, when the other foldable part F' is pressed, the material for relieving hangovers may drop into the container space part and then mixed.

As described above, due to the pressing of the foldable parts F and F', fragrance or tastes may be added to general alcohol, and simultaneously, a component for dissolving the alcohol may be mixed to help health of the consumer.

As described above, the present invention may be variously utilized.

Referring to FIG. 248, in a heterogeneous material receiving apparatus 1 coupled to a container, a main body 100 containing heterogeneous materials therein is provided. Also, an accommodating part 107 that is soft and thin is disposed on an upper portion of the main body 100. When an upper portion of the accommodating part 107 is pressed, at least one portion of the accommodating part 107 may be folded to open a lower sealed surface of the accommodating part 107. And simultaneously, the heterogeneous materials within the main body 100 drop down and then are mixed with each other.

Also, the accommodating part 107 having a storage space 108 may be elongated and expanded by a blow molding method in a preform state.

Also, an accommodating part lower portion sealing part 3400 having an accommodating part lower portion sealing part cutoff line 3402 is disposed on a lower portion of the accommodating part 107. Also, an accommodating part lower portion sealing part protrusion 3403 is disposed on an upper portion of the accommodating part lower portion sealing part cutoff surface 3402.

Also, an accommodating part lower portion sealing part cutoff line 3401 having a predetermined size is disposed on the accommodating part lower portion sealing part cutoff surface 3402 outside the accommodating part lower portion sealing part protrusion 3403.

Also, an accommodating part lower portion sealing part hook 3404 having at least one stepped portion and protrusion is disposed on the accommodating part lower portion sealing part protrusion 3403.

As described above, the receiving apparatus 1 may be coupled to the container in the state of FIG. 248. Here, when an upper portion of the foldable part F is pressed, the foldable part F may be folded, and simultaneously, the accommodating part lower portion sealing part protrusion 3403 may be pushed. In this process, the accommodating part lower portion sealing part cutoff line 3401 may be broken to open the accommodating part lower portion sealing part cutoff surface 3402.

As described above, while the accommodating part lower portion sealing part cutoff surface 3402 is opened, the heterogeneous materials contained in the storage space 108 may drop into the container and be mixed with each other.

Also, while the accommodating part lower portion sealing part protrusion 3403 is pushed downward, the accommodating part lower portion sealing part hook 3404 is hung on a stepped portion that is formed by curing the accommodating part lower portion sealing part cutoff line 3401. Thus, the accommodating part lower portion sealing part protrusion 3403 may not return its original position, but be continuously stopped.

Also, a material having a barrier property such as a foil may be reinforced on a lower portion of the accommodating part lower portion sealing part cutoff surface 3402 on which the accommodating part lower portion sealing part cutoff line 3401 is disposed to improve the sealing. Alternatively, a soft material having the barrier property may be injection-molded on a portion of the accommodating part lower portion sealing part cutoff line 3401 by using a co-injection molding method.

### INDUSTRIAL APPLICABILITY

In the apparatus for discharging the heterogeneous material, contents such as extract or powder may drop into and be mixed with various products such as special beverages, particularly, water, alcoholic beverages, and the like to allow a user to drink the mixture. Also, the apparatus may be variously used for chemical products which are used again after being separated or other daily supplies.

## Claims

1. An apparatus for receiving heterogeneous materials, which is coupled to a mouth part of a container containing contents such as liquid, the apparatus comprising:
a main body coupled and fixed to the mouth part of the container; and
an accommodating part having a storage space within the main body,
wherein the inner storage space of the accommodating part is configured so that an upper foldable connecting part and an opening part disposed on a lower portion of the foldable connecting part break an accommodating part sealing part sealing a lower end of the accommodating part to allow the contents within the accommodating part storage space to drop into the container, thereby mixing the contents with each other, and
the foldable connecting part is injection-molded by a co-injection molding machine.

2. An apparatus for receiving heterogeneous materials, which is coupled to a mouth part of a container containing contents such as liquid, the apparatus comprising:
a main body coupled and fixed to the mouth part of the container; and
an accommodating part having a storage space within the main body,
wherein the inner storage space of the accommodating part is configured so that an upper foldable connecting part and an opening part disposed on a lower portion of the foldable connecting part break an accommodating part sealing part sealing a lower end of the accommodating part to allow the contents within the accommodating part storage space to drop into the container, thereby mixing the contents with each other,
the opening part is disposed on the bottom of an upper portion of the foldable connecting part,
the foldable connecting part is disposed between the opening part and the main body, and
a soft foldable part is disposed on an upper or lower portion of the foldable connecting part.

3. The apparatus of claim 2, wherein a main body mouth part is disposed on the upper portion of the foldable connecting part.

4. The apparatus of claim 2, wherein a check valve is disposed within the main body mouth part.

5. The apparatus of claim 2, wherein an openable sealing stopper or a hinge type sealing stopper is coupled to the main body mouth part.

6. The apparatus of claim 2, wherein an assembly type accommodating part is coupled to the inside of the main body.

7. The apparatus of claim 2, wherein the foldable connecting part has a thin film shape or a net shape of which a portion is punched.

8. The apparatus of claim 7, wherein a soft material is added to the upper or lower portion of the foldable connecting part.

9. The apparatus of claim 8, wherein the soft material added to the upper and lower portion of the foldable connecting part is added by attaching a film, applying a material having a barrier property, or injection-molding a material having a soft physical property by using a co-injection molding machine.

10. The apparatus of claim 8, wherein the soft material added to the upper portion of the foldable connecting part comprises a film or a material having a soft physical property, and the material is added by assembling the material with the main body.

11. An apparatus for receiving heterogeneous materials, which is coupled to a mouth part of a container containing contents such as liquid, the apparatus comprising:
a main body coupled and fixed to the mouth part of the container; and
an accommodating part having a storage space within the main body,
wherein the inner storage space of the accommodating part is configured so that an upper foldable connecting part and an opening part disposed on a lower portion of the foldable connecting part break an accommodating part sealing part sealing a lower end of the accommodating part to allow the contents within the accommodating part storage space to drop into the container, thereby mixing the contents with each other,
the accommodating part is separately manufactured as an assembly type accommodating part, and
the assembly type accommodating part is coupled to the inside of the main body.

12. The apparatus of claim 11, wherein an assembly type frame is disposed on an outer annular part of the assembly type accommodating part and is hung and fixed to a hook disposed on an upper end of an inner wall of a side surface part of the main body.

13. The apparatus of claim 12, wherein a sealing surface is disposed on a lower end of the assembly type accommodating part, and an accommodating part cutoff line is disposed on the sealing surface.

14. The apparatus of claim 12, wherein an upper protrusion protruding upward is disposed on an upper portion of the sealing surface.

15. The apparatus of claim 12, wherein a protruding cutoff protruding piece is disposed on an upper portion of the sealing surface.

16. The apparatus of claim 15, wherein the outer annular part of the cutoff protruding piece is constituted by an accommodating part cutoff line and a sealing surface connecting part of which a portion is provided as a non-cutoff line.

17. An apparatus for receiving heterogeneous materials, which is coupled to a mouth part of a container containing contents such as liquid, the apparatus comprising:
a main body coupled and fixed to the mouth part of the container; and
an accommodating part having a storage space within the main body,
wherein the inner storage space of the accommodating part is configured so that an upper foldable connecting part and an opening part disposed on a lower portion of the foldable connecting part break an accommodating part sealing part sealing a lower end of the accommodating part to allow the contents within the accommodating part storage space to drop into the container, thereby mixing the contents with each other,
the foldable connecting part or the foldable part comprises an auxiliary foldable part is disposed on a surface opposite to a reference surface so that the foldable part is folded in one direction with respect to a foldable part reference surface,
when a top surface of the foldable part comprising the auxiliary foldable part is pressed in use, the opening part opens the accommodating part sealing part, and
and a sealing stopper for discharging the mixed content is disposed on the upper portion of the foldable part.

18. An apparatus for receiving heterogeneous materials, which is coupled to a mouth part of a container containing contents such as liquid, the apparatus comprising:
a main body coupled and fixed to the mouth part of the container; and
an accommodating part having a storage space within the main body,
wherein the inner storage space of the accommodating part is configured so that an upper foldable connecting part or foldable part and an opening part disposed on a lower portion of the foldable connecting part or the foldable part break an accommodating part sealing part sealing a lower end of the accommodating part to allow the contents within the accommodating part storage space to drop into the container, thereby mixing the contents with each other,
a foldable reference surface is disposed on a surface opposite to a foldable press surface that protrudes so that the foldable part is folded in one direction,
an auxiliary foldable part is disposed on a side opposite to the foldable reference surface, and
an opening part is disposed on the bottom of the foldable press surface.

19. An apparatus for receiving heterogeneous materials, which is coupled to a mouth part of a container containing contents such as liquid, the apparatus comprising:
a main body coupled and fixed to the mouth part of the container; and
an accommodating part having a storage space within the main body,
wherein the inner storage space of the accommodating part is configured so that an upper foldable connecting part and an opening part disposed on a lower portion of the foldable connecting part break an accommodating part sealing part sealing a lower end of the accommodating part to allow the contents within the accommodating part storage space to drop into the container, thereby mixing the contents with each other,
the accommodating part of the receiving apparatus is separately manufactured as an assembly type accommodating part,
the assembly type accommodating part is coupled to the inside of the main body,
a cutoff protruding piece having a protruding piece hook is disposed on an upper portion of a sealing surface of the assembly type accommodating part, and
the protruding piece hook is hung and fixed to a protrusion of the accommodating part while the cutoff protruding piece together with the sealing surface descends when the accommodating part cutoff line disposed on an outer annular part of the of the cutoff protruding piece is broken.

20. An apparatus for receiving heterogeneous materials, which is coupled to a mouth part of a container, the apparatus comprising:
a main body coupled to the mouth part of the container; and
an accommodating part having a storage space, which is integrated or assembled within the main body,
wherein the storage space of the accommodating part is configured so that an upper foldable connecting part or a foldable part is disposed on an upper portion of the main body, and when a rotational operable sealing stopper assembled with the upper portion of the main body is rotated, the foldable connecting part or the foldable part opens an accommodating part sealing part sealing the storage space of the accommodating part,
a main body mount part is disposed on an upper portion of the foldable part,
a main body mouth part corresponding part disposed on the operable sealing stopper meets the main body mouth part,
the main body mouth part and the main body mouth part corresponding part are coupled to each other so that the main body mouth part and the main body mouth part corresponding part are operated by a rotation method using a screw thread or screw groove, and
when the operable sealing stopper is rotated, the main body mouth part corresponding part pushes the main body mouth part, which is coupled to correspond thereto, downward.

21. The apparatus of claim 20, wherein an upper portion of the main body mouth part is opened, and an upper end of the main body mouth part is assembled with a sealing stopper discharge hole to open or close the sealing stopper discharge hole.

22. The apparatus of claim 20, wherein an upper portion of the main body mouth part is opened, and an upper end of the main body mouth part is coupled to a sealing stopper upper portion discharge surface corresponding thereto to open or close the sealing stopper upper portion discharge surface according to a vertical operation thereof.

23. The apparatus of claim 20, wherein an assembly type opening end is inserted into the accommodating part and above the foldable part.

24. An apparatus for receiving heterogeneous materials, which is coupled to a mouth part of a container, the apparatus comprising:
a main body coupled to the mouth part of the container; and
an assembly type accommodating part having an accommodating part storage space, which is integrated or assembled within the main body,
wherein the accommodating part storage space of the assembly type accommodating part is configured so that an upper foldable connecting part or a foldable part is disposed on an upper portion of the main body, and when a rotational operable sealing stopper assembled with the upper portion of the main body is rotated, the foldable connecting part or the foldable part opens a lower sealing surface sealing the accommodating part storage space of the assembly type accommodating part by using the opening part.

25. The apparatus of claim 24, wherein an accommodating part cutoff line is disposed on the sealing surface of the assembly type accommodating part.

26. The apparatus of claim 24, wherein an assembly frame of the assembly type accommodating part is hung on a hook of the main body.

27. The apparatus of claim 24, wherein the assembly type accommodating part is coupled to the main body through a thermal adhesion or ultrasonic method.

28. An apparatus for receiving heterogeneous materials, which is coupled to a mouth part of a container, the apparatus comprising:
a main body coupled to the mouth part of the container; and
an assembly type accommodating part having an accommodating part storage space, which is integrated or assembled within the main body,
wherein the accommodating part storage space of the assembly type accommodating part is configured so that an upper foldable connecting part or a foldable part is disposed on an upper portion of the main body, and when a rotational operable sealing stopper assembled with the upper portion of the main body is rotated, the foldable connecting part or the foldable part opens an accommodating part sealing part sealing the accommodating part storage space of the assembly type accommodating part,
a cutoff protruding piece extending up to a lower side of the foldable part is disposed on an upper portion of the sealing surface, and
an outer circumference of the cutoff protruding piece extends from an accommodating part cutoff line by a predetermined length.

29. An apparatus for receiving heterogeneous materials, which is coupled to a mouth part of a container, the apparatus comprising:
a main body coupled to the mouth part of the container; and
an accommodating part having a storage space, which is integrated or assembled within the main body,
wherein the storage space of the accommodating part is configured so that an upper foldable connecting part or a foldable part is disposed on an upper portion of the main body, and when a rotational operable sealing stopper assembled with the upper portion of the main body is rotated, the foldable connecting part or the foldable part opens an accommodating part sealing part sealing the storage space of the accommodating part,
a main body mount part is disposed on an upper portion of the foldable part,
a main body mouth part corresponding part disposed on the operable sealing stopper meets the main body mouth part,
the main body mouth part and the main body mouth part corresponding part are coupled to each other so that the main body mouth part and the main body mouth part corresponding part are operated by a rotation method using a screw thread or screw groove, and
when the operable sealing stopper is rotated, the main body mouth part corresponding part lifts the main body mouth part, which is coupled to correspond thereto, upward, and
when the foldable connecting part or the foldable part is spread upward in the process, a lower end of the opening part opens the accommodating part sealing part.

30. The apparatus of claim 29, wherein the accommodating part sealing part disposed on the lower end of the accommodating part adheres to the lower end of the opening part through a thermal adhesion method.

31. An apparatus for receiving heterogeneous materials, which is coupled to a mouth part of a container, the apparatus comprising:
a main body coupled to the mouth part of the container; and
an assembly type accommodating part having an accommodating part storage space, which is integrated or assembled within the main body,
wherein the storage space of the accommodating part is configured so that an upper foldable connecting part or a foldable part is disposed on an upper portion of the main body, and when a rotational operable cover assembled with the upper portion of the main body is rotated, a foldable part spacing part pushes a spacing part corresponding part downward to open an accommodating part sealing part sealing the storage space of the accommodating part,
the foldable part spacing part is disposed on the bottom of a top surface part of the rotational operable cover,
the spacing part corresponding part is disposed at a center of the foldable connecting part, and
the foldable part spacing part and the spacing part corresponding part are coupled to each other through a screw thread or screw groove method.

32. The apparatus of claim 31, wherein an opening part lengthily extending downward is disposed on a lower portion of the foldable connecting part.

33. The apparatus of claim 31, wherein the rotational operable cover is coupled to a support corresponding part of the main body to rotate.

34. The apparatus of claim 31, wherein a foldable part formed of a material having a barrier property is added to an upper portion of the foldable connecting part.

35. The apparatus of claim 34, wherein the foldable part is injection-molded by using a soft resin that is foldable.

36. The apparatus of claim 31, wherein an upper auxiliary sealing part formed of a material having a barrier property is added to an upper portion of the foldable connecting part.

37. The apparatus of claim 36, wherein the upper auxiliary sealing part is sealed with respect to the upper portion of the foldable connecting part and a support corresponding part that extends an upper portion of an outer annular part of the main body.

38. The apparatus of claim 31, wherein a support corresponding part is disposed on an upper portion of an outer annular part of the main body, and an inner sealing part closely attached to the support corresponding part to maintain sealing force is disposed on the bottom of a top surface part of the rotational operable cover corresponding thereto.

39. An apparatus for receiving heterogeneous materials, which is coupled to a mouth part of a container, the apparatus comprising:
a main body coupled to the mouth part of the container;
a foldable connecting part or foldable part disposed on an upper portion of the main body;
a spacing part corresponding part disposed on the foldable connecting part;
an opening part disposed under the foldable connecting part; and
an assembly type accommodating part having an accommodating part storage space within the main body,
wherein a lower portion of the assembly type accommodating part is sealed by an opening end of the opening part,
a support corresponding part is disposed on an outer annular part on an upper portion of the main body,
a cover support part is hung to correspond to the support corresponding part, and
a rotational operable cover comprising a foldable part spacing part is disposed on the bottom of a top surface part.

40. The apparatus of claim 39, wherein the foldable part spacing part is disposed on the bottom of the top surface part of the rotatable operable cover, and the foldable part spacing part is coupled to the spacing part corresponding part through a screw thread or screw groove method.

41. The apparatus of claim 39, wherein, when the rotational operable cover is rotated, the foldable spacing part lifts the spacing part corresponding part corresponding thereto upward to open the opening end that closes a lower end opening hole of the accommodating part storage space.

42. The apparatus of claim 39, wherein the foldable connecting part or the foldable part is disposed on an upper end of an upper foldable part accommodating surface of the main body.

43. The apparatus of claim 42, wherein the foldable part accommodating surface is sealed by an inner sealing part of the rotational operable cover to maintain sealing force.

44. The apparatus of claim 39, wherein a screw thread is disposed on an inner wall of a cover support part outside the rotational operable cover, and a screw thread is disposed outside the support corresponding part of the main body to couple the cover support part to the support corresponding part by the screw thread or screw groove.

45. The apparatus of claim 44, wherein, when the rotational operable cover is rotated, the foldable part spacing part pushes the spacing corresponding part downward while the cover support part is coupled on the support corresponding part to allow an opening part to open the accommodating part sealing.

46. An apparatus for receiving heterogeneous materials, which is coupled to a mouth part of a container, the apparatus comprising:
a main body coupled and fixed to the mouth part of the container;
a cover disposed on an upper portion of the main body;
an accommodating part having a storage space therein, the accommodating part being integrated or assembled within the main body,
wherein the storage space of the accommodating part is configured so that an accommodating part sealing part is opened when an upper foldable connecting part or a foldable part is pressed, and
after the accommodating part is coupled to the mouth part of the container, the outer portions of the accommodating part and the mouth part are packaged by using a contraction film.

47. The apparatus of claim 1, wherein an outer portion of the main body has a film adhesion surface that is capable of being coupled to a pouch container.

48. An apparatus for receiving heterogeneous materials, which is coupled to a mouth part of a container containing contents such as liquid, the apparatus comprising:
a main body coupled and fixed to the mouth part of the container; and
an accommodating part having a storage space within the main body,
wherein the inner storage space of the accommodating part is configured so that an upper foldable connecting part and an opening part disposed on a lower portion of the foldable connecting part break an accommodating part sealing part sealing a lower end of the accommodating part to allow the contents within the accommodating part storage space to drop into the container, thereby mixing the contents with each other,
the main body is assembled with the mouth part of the container, and
an outer portion of the main body together with the mouth part of the container are surrounded by an external packing material.

49. The apparatus of claim 48, wherein the external packing material comprises an aluminum material.

50. The apparatus of claim 49, wherein an external packing material cutoff line is disposed on the external packing material.

51. An apparatus for receiving heterogeneous materials, which is coupled to a mouth part of a container containing contents such as liquid, the apparatus comprising:
a main body coupled and fixed to the mouth part of the container; and
an accommodating part having a storage space within the main body,
wherein the inner storage space of the accommodating part is configured so that an upper foldable connecting part and an opening part disposed on a lower portion of the foldable connecting part break an accommodating part sealing part sealing a lower end of the accommodating part to allow the contents within the accommodating part storage space to drop into the container, thereby mixing the contents with each other, and
a second storage space is defined in the accommodating part sealing part.

52. The apparatus of claim 51, wherein the second storage space within the accommodating part sealing part is defined by meeting vertical two sealing surfaces with each other.

53. The apparatus of claim 51, wherein the second storage space of the accommodating part sealing part is opened when an end of the opening part is punched while the opening part descends.

54. The apparatus of claim 51, wherein each of the vertical sealing surfaces constituting the second storage space comprises a film having a barrier property or a synthetic resin material.

55. The apparatus of claim 51, wherein the sealing surface of an upper thin film constituting the second storage space comprises synthetic resin material, and the lower sealing surface comprises a film having a barrier property.

56. The apparatus of claim 55, wherein a second storage space cutoff piece is disposed on the bottom of the sealing surface of the upper thin film constituting the second storage space.

57. The apparatus of claim 56, wherein an upper sealing surface cutoff line having a predetermined length is disposed on the outside of the second storage space cutoff piece.

58. An apparatus for receiving heterogeneous materials, which is coupled to a mouth part of a container containing contents such as liquid, the apparatus comprising:
a main body coupled and fixed to the mouth part of the container; and
an accommodating part having a storage space within the main body,
wherein the inner storage space of the accommodating part is configured so that an upper foldable connecting part and an opening part disposed on a lower portion of the foldable connecting part break an accommodating part sealing part sealing a lower end of the accommodating part to allow the contents within the accommodating part storage space to drop into the container, thereby mixing the contents with each other,
an opening end for separating the accommodating part storage space to partition the accommodating part storage space is disposed on an end of the opening part, and
a storage space is defined above the opening end, and a second storage space is defined under the opening end.

59. The apparatus of claim 58, wherein the opening end is closely attached to an inner wall of the storage space of the accommodating part to vertically partition the space.

60. The apparatus of claim 59, wherein a punching pin is disposed on the opening end to break the accommodating part sealing surface disposed thereunder.

61. The apparatus of claim 58, wherein the receiving apparatus having the second storage space is coupled to a separate auxiliary main body so that the receiving apparatus is applied to other container necks having different standards.

62. An apparatus for receiving heterogeneous materials, the apparatus comprising:
an accommodating part having a storage space within a main body in which the heterogeneous materials such as liquid are contained,
wherein the inner storage space of the accommodating part is configured so that an upper foldable connecting part and an opening part disposed on a lower portion of the foldable connecting part break an accommodating part sealing part sealing a lower end of the accommodating part to allow the contents within the accommodating part storage space to drop into the container, thereby mixing the contents with each other, and
the main body is coupled to an auxiliary main body having the other auxiliary main body second storage space to constitute the completed receiving apparatus.

63. The apparatus of claim 62, wherein the main body is coupled with respect to an auxiliary main body mouth part of the auxiliary main body.

64. The apparatus of claim 62, wherein the auxiliary main body second storage space is defined by sealing a lower side of the auxiliary main body through an auxiliary main body storage space sealing surface and coupling the main body to the auxiliary main body.

65. The apparatus of claim 62, wherein the opening part of the main body is lengthily expanded to extend up to a portion close to the accommodating part sealing part so that, while the foldable part is folded to descend, the end breaks the accommodating part sealing part and a portion that partitions the auxiliary main body second storage space thereunder.

66. An apparatus for receiving heterogeneous materials, the apparatus comprising:
a main body comprising a foldable connecting part or a foldable part; and
an opening part disposed on a lower portion of the foldable connecting part of the main body,
wherein the main body is coupled to an auxiliary main body having a plurality of storage spaces,
the auxiliary main body has an auxiliary main body storage space under an inner auxiliary main body sealing surface of an auxiliary main body mouth part and an auxiliary main body second storage space under the inner auxiliary main body sealing surface, and
a lower portion of the auxiliary main body second storage space is sealed by an auxiliary main body sealing part.

67. The apparatus of claim 66, wherein an auxiliary main body cutoff line is disposed on the auxiliary main body sealing surface.

68. An apparatus for receiving heterogeneous materials, which is coupled to a mouth part of a container containing contents such as liquid, the apparatus comprising:
a main body coupled and fixed to the mouth part of the container; and
an accommodating part or assembly type accommodating part having a storage space within the main body,
wherein the inner storage space of the accommodating part or assembly type accommodating part is configured so that an upper foldable connecting part or foldable part and an opening part or assembly type opening end disposed on a lower portion of the foldable connecting part or the foldable part break an accommodating part sealing part sealing a lower end of the accommodating part or assembly type accommodating part to allow the contents within the accommodating part or assembly type accommodating part storage space to drop into the container, thereby mixing the contents with each other,
a plurality of storage spaces are defined in the accommodating part or assembly type accommodating part,
a sealing surface for vertically partitioning the space is disposed on a predetermined portion within the accommodating part or assembly type accommodating part,
an upper side of the sealing surface is defined as an accommodating part storage space, and a lower side of the sealing surface is defined as the other storage space, and
a lower side of the storage space is sealed by the accommodating part sealing part.

69. The apparatus of claim 68, wherein an accommodating part lower portion punching part is disposed on the bottom of the sealing surface.

70. The apparatus of claim 68, wherein an accommodating part cutoff line is disposed on the sealing surface.

71. The apparatus of claim 68, wherein the opening part is assembled with a lower portion of the foldable connecting part or foldable part.

72. An apparatus for receiving heterogeneous materials, which is coupled to a mouth part of a container containing contents such as liquid, the apparatus comprising:
a main body coupled and fixed to the mouth part of the container; and
an assembly type accommodating part having an accommodating part storage space within the main body,
wherein a lower portion of the inner accommodating part storage space of the assembly type accommodating part is partitioned to define an assembly type accommodating part second storage space, and
an upper end of the assembly type accommodating part second storage space is distinguished by a storage space mouth part boundary surface.

73. The apparatus of claim 72, wherein a lower end of the assembly type accommodating part second storage space is provided as a sealing surface having an accommodating part cutoff line.

74. The apparatus of claim 73, wherein a lower storage space is defined under the sealing surface, and a lower side of the lower storage space is sealed by the accommodating part sealing part.

75. An apparatus for receiving heterogeneous materials, the apparatus comprising:
a main body coupled to a container in a direction in which the contents are discharged;
an opening end guide within the main body,
wherein a main body opening guide pin and a main body opening guide space are disposed on a lower end of the opening end guide, and
an insertion type accommodating part having an insertion type accommodating part storage space is coupled to the inside of the opening end guide in a state where the insertion type accommodating part is sealed.

76. The apparatus of claim 75, wherein a lower end of the insertion type accommodating part is sealed by a lower sealing part.

77. The apparatus of claim 75, wherein an insertion type accommodating part mouth part is disposed on an upper portion of the insertion type accommodating part, and a sealing stopper is disposed on the insertion type accommodating part mouth part.

78. The apparatus of claim 77, wherein the sealing stopper comprises a hinge type sealing stopper.

79. An apparatus for receiving heterogeneous materials, the apparatus comprising:
a main body constituting a portion of the heterogeneous material receiving apparatus; and
an assembly type foldable part coupling part disposed on an upper end of the main body,
wherein an assembly type foldable part and an assembly type accommodating part are coupled to each other with respect to the assembly type foldable part coupling part.

80. The apparatus of claim 79, wherein the assembly type accommodating part has a sealing surface partitioned by an accommodating part cutoff line.

81. The apparatus of claim 79, wherein an assembly type opening part for opening the assembly type accommodating part is disposed on the assembly type foldable part.

82. An apparatus for receiving heterogeneous materials, the apparatus comprising:
a main body comprising an accommodating part having a storage space; and
an assembly type pressing part disposed on an upper portion of the main body,
wherein an assembly type lower portion opening part is disposed within the pressing part.

83. The apparatus of claim 82, wherein a main body accommodating part sealing surface having a main body accommodating part cutoff lien is disposed under the accommodating part.

84. The apparatus of claim 82, wherein a fitting part cutoff line is disposed on the pressing part.

85. The apparatus of claim 82, wherein a main body upper guide is disposed on an upper portion of the main body, and an end of the main body upper end guide is sealed by a main body upper sealing part.

86. An apparatus for receiving heterogeneous materials, the apparatus comprising:
a main body comprising an accommodating part having a storage space,
wherein an assembly type foldable part is coupled to a fitting part at an upper portion of the main body.

87. The apparatus of claim 86, wherein an assembly type lower portion opening part is disposed on a lower portion of the assembly type foldable part.

88. The apparatus of claim 86, wherein a main body upper end guide is disposed on an upper portion of the main body, and an upper portion of the main body upper end guide is sealed by a main body upper portion sealing part.

89. The apparatus of claim 86, wherein a foldable part is disposed on an upper portion of the assembly type foldable part.

90. An apparatus for receiving heterogeneous materials, the apparatus comprising:
a main body coupled to a mouth part of a container; and
an accommodating part having a storage space within the main body,
wherein a main body cutoff protruding piece protruding from on an upper portion of a main body accommodating part sealing surface partitioned by a main body accommodating part cutoff line is disposed on a lower end of the accommodating part, and
an assembly type foldable part is coupled to an upper portion of the main body.

91. The apparatus of claim 90, wherein a hook is disposed on the main body cutoff protruding piece.

92. An apparatus for receiving heterogeneous materials, the apparatus comprising:
an accommodating part having a storage space within a main body; and
an accommodating part sealing part,
wherein a lower portion of the accommodating part is sealed by the accommodating part sealing part,
an upper end of the accommodating part is connected to a foldable connecting part,
an opening part for opening the accommodating part sealing part is disposed on a lower portion of the foldable connecting part,
a main body upper end guide extends from an upper portion of the main body,
an upper portion of the main body upper end guide is sealed by the main body upper portion sealing part, and
the main body upper portion sealing part adheres through a thermal adhesion method to prevent the main body upper portion sealing part from being separated.

93. The apparatus of claim 92, wherein the main body upper portion sealing part adheres by using a film material having elasticity.

94. The apparatus of claim 92, wherein the foldable connecting part is folded in one direction.

95. The apparatus of claim 92, wherein a moving space is defined between an upper side of the foldable connecting part and the main body upper end guide.

96. The apparatus of claim 95, wherein the moving space is defined in the foldable connecting part.

97. An apparatus for receiving heterogeneous materials, the apparatus comprising:
an accommodating part having a storage space within a main body; and
an accommodating part sealing part,
wherein a lower portion of the accommodating part is sealed by the accommodating part sealing part,
an upper end of the accommodating part is connected to a foldable connecting part,
an opening part for opening the accommodating part sealing part is disposed on a lower portion of the foldable connecting part,
a protective cover formed of a soft material having a barrier property is disposed on an upper portion of the main body comprising the foldable connecting part.

98. The apparatus of claim 97, wherein the protective cover is coupled through a thermal adhesion method.

99. The apparatus of claim 97, wherein the protective cover comprises a film having the barrier property.

100. An apparatus for receiving heterogeneous materials, which is coupled to a mouth part of a container containing contents such as liquid, the apparatus comprising:
a main body coupled and fixed to the mouth part of the container; and
an accommodating part having a storage space within the main body,
wherein the inner storage space of the accommodating part is configured so that an upper foldable connecting part or foldable part and an opening part disposed on a lower portion of the foldable connecting part or the foldable part break an accommodating part sealing part sealing a lower end of the accommodating part to allow the contents within the accommodating part storage space to drop into the container, thereby mixing the contents with each other,
the storage space has a plurality of storage spaces,
a plurality of foldable connecting parts or foldable parts are disposed on upper ends of the plurality of storage spaces.

101. The apparatus of claim 100, wherein each of the plurality of foldable connecting parts or foldable parts is formed of a material having a barrier property.

102. The apparatus of claim 101, wherein each of the plurality of foldable connecting parts or foldable parts is injection-molded by using a co-injection molding machine.

103. The apparatus of claim 101, wherein a film having a barrier property adheres to or is coupled to an upper portion of each of the plurality of foldable connecting parts.

104. The apparatus of claim 101, wherein a material having a barrier property is deposited or applied to an upper portion of each of the plurality of foldable connecting parts.

105. An apparatus for receiving heterogeneous materials, which is coupled to a mouth part of a container containing contents such as liquid, the apparatus comprising:
a main body coupled and fixed to the mouth part of the container; and
an assembly type accommodating part having a storage space within the main body,
wherein the storage space disposed above the assembly type accommodating part is configured so that an upper foldable connecting part or foldable part and an opening part disposed on a lower portion of the foldable part or the foldable connecting part break a sealing part sealing a lower end of the assembly type accommodating part to allow the contents within the storage space to drop into the container, thereby mixing the contents with each other,
a plurality of storage spaces are defined in the storage space, and
a sealing surface of the assembly type accommodating part disposed on lower ends of the plurality of storage spaces is provided in plurality to seal the storage spaces.

106. The apparatus of claim 105, wherein an accommodating part cutoff line is disposed on the sealing surface.

107. The apparatus of claim 105, wherein the lower portions of the plurality of storage spaces are sealed by an accommodating part sealing part.

108. The apparatus of claim 101, wherein a main body upper end guide is disposed on an upper portion of the main body, and an end of the main body upper end guide is sealed by a main body top surface sealing part.

109. The apparatus of claim 101, wherein the assembly type accommodating part having the plurality of storage spaces is coupled to the inside of the main body of which an upper portion is sealed by a main body upper end guide, and an upper end is sealed by a main body top surface sealing part.

110. An apparatus for receiving heterogeneous materials, the apparatus comprising:
a main body coupled to a mouth part of a container; and
an accommodating part within the main body,
wherein the accommodating part has a plurality of storage spaces therein,
a main body accommodating part sealing surface partitioned by a main body accommodating part cutoff line is disposed under the plurality of storage spaces, and
a press type assembly accommodating part is assembled within each of the plurality of storage spaces.

111. The apparatus of claim 110, wherein the press type assembly accommodating part is closely attached to an accommodating part sealing surface disposed on an upper end of the storage space of the main body.

112. The apparatus of claim 110, wherein, when the press type assembly accommodating part is pressed, a lower end of the press type assembly accommodating part breaks the main body accommodating cutoff line and pushes the main body accommodating part sealing surface to allow the heterogeneous materials to drop down.

113. The apparatus of claim 110, wherein a cover is coupled to an upper portion of the main body.

114. The apparatus of claim 110, wherein a cover formed of a material having a barrier property adheres to a top surface part of the main body comprising the press type assembly accommodating part.

115. The apparatus of claim 114, wherein the cover comprises a packing material having a film shape.

116. The apparatus of claim 115, wherein a protective cover support part for protecting the film is disposed on the top surface part of the main body within the packing material having the film shape.

117. The apparatus of claim 110, wherein a press type accommodating part sealing stopper is disposed on an upper end of the press type assembly accommodating part.

118. An apparatus for receiving heterogeneous materials, the apparatus comprising:
a main body coupled to a mouth part of a container; and
an accommodating part within the main body,
wherein the accommodating part has a plurality of storage spaces therein,
a plurality of accommodating part opening guides and a dropping space are disposed under the plurality of spaces, and
a press type accommodating part in which a press type assembly accommodating part storage space is sealed by a press type accommodating part sealing surface is coupled in the plurality of spaces.

119. An apparatus for receiving heterogeneous materials, which is coupled to a container in a direction in which the contents are discharged, the apparatus comprising:
an accommodating part having a storage space within a main body,
wherein a foldable connecting part or a foldable part having an opening part is disposed on an upper portion of the accommodating part,
a lower end of the accommodating part is sealed by an accommodating part sealing part, and
a sealing stopper for discharging the contents is disposed on a side of the foldable connecting part or foldable part on the main body.

120. The apparatus of claim 119, wherein a sealing stopper opening part lengthily extending downward is disposed on the sealing stopper, and a lower end of the sealing stopper opening part is sealed by the accommodating part sealing part.

121. The apparatus of claim 119, wherein the foldable connecting part or foldable part is provided in plurality, and an accommodating part having a plurality of storage spaces is disposed under the plurality of foldable connecting parts or foldable parts.

122. An apparatus for receiving heterogeneous materials, which is coupled to a container in a direction in which the contents are discharged, the apparatus comprising:
an accommodating part having a storage space within a main body,
wherein a foldable connecting part or a foldable part having an opening part is disposed on an upper portion of the accommodating part,
a lower end of the accommodating part is sealed by an accommodating part sealing part, and
a sealing stopper for discharging the contents is disposed on a side of the foldable connecting part or foldable part and above the storage space on the main body.

123. An apparatus for receiving heterogeneous materials, which is coupled to a container in a direction in which the contents are discharged, the apparatus comprising:
an accommodating part having a storage space within a main body,
wherein a plurality of foldable connecting parts or foldable parts having an opening part are disposed on an upper portion of the accommodating part,
a lower end of the accommodating part is sealed by an accommodating part sealing part, and
a sealing stopper is disposed on an upper portion of one of the foldable connecting parts or foldable parts.

124. An apparatus for receiving heterogeneous materials, which is coupled to a mouth part of a container, the apparatus comprising:
an accommodating part having a plurality of storage spaces within a main body,
wherein a plurality of foldable parts having an opening part are disposed above the plurality of storage spaces,
the main body comprising the plurality of foldable parts is coupled to the mouth part of the container by a coupling unit.

125. An apparatus for receiving heterogeneous materials, the apparatus comprising:
a main body divided into an upper main body and a lower main body,
wherein the upper main body comprises a plurality of foldable connecting parts or foldable parts,
an opening part is disposed on a lower portion of each of the plurality of foldable connecting parts or foldable parts,
the lower main body has a plurality of storage spaces that are coupled to the plurality of foldable connecting parts or foldable parts.

126. The apparatus of claim 125, wherein a main body accommodating part sealing surface having a main body accommodating part cutoff line is disposed under the storage spaces.

127. The apparatus of claim 125, wherein lower portions of the storage spaces are sealed by an accommodating part sealing part.

128. An apparatus for receiving heterogeneous materials, the apparatus comprising:
an assembly type opening end within a main body having a plurality of storage spaces,
wherein a lower portion of an accommodating part that is a lower end of each of storage spaces is sealed by an accommodating part sealing part, and
a foldable connecting part or foldable part on which the assembly type opening end is disposed is disposed on an upper portion of the main body and above the storage spaces.

129. An apparatus for receiving heterogeneous materials, which is coupled to a container in a direction in which the contents are discharged, the apparatus comprising:
an accommodating part constituted by a side surface portion and a top surface portion, the accommodating part having a storage space in an inner direction of the side surface part;
a foldable part disposed on the top surface part that is an upper portion of the accommodating part; and
an opening part disposed on a lower portion of the foldable part,
wherein an accommodating part sealing part sealing a lower portion of the storage space is disposed on a lower portion of the accommodating part having the opening part,
a main body mouth part having a discharge hole is disposed on a side of the foldable part and above the storage space of the accommodating part including the accommodating part sealing part, and
an openable cover sealing the discharge hole of the main body mouth part is disposed on the main body comprising the main body mouth part.

130. The apparatus of claim 129, wherein a mouth part sealing part sealing an inner discharge hole of the main body mouth part is disposed on the cover.

131. The apparatus of claim 129, wherein a main body mouth part upper end formed of a soft resin is disposed on an upper end of the main body mouth part.

132. The apparatus of claim 129, wherein a check valve is disposed in an upper end of the main body mouth part.

133. The apparatus of claim 129, wherein the discharge hole of the main body mouth part is separated from the storage space of the accommodating part.

134. An apparatus for receiving heterogeneous materials, which is coupled to a container in a direction in which the contents are discharged, the apparatus comprising:
an accommodating part constituted by a side surface portion and a top surface portion, the accommodating part having a storage space in an inner direction of the side surface part;
a foldable part disposed on the top surface part that is an upper portion of the accommodating part; and
an opening part disposed on a lower portion of the foldable part,
wherein an accommodating part sealing part sealing a lower portion of the storage space is disposed on a lower portion of the accommodating part having the opening part,
when the foldable part is pressed, the opening part breaks the accommodating part sealing part, and the heterogeneous materials contained in the storage space drop into the container and are mixed with each other, and
a straw insertion part is disposed on the foldable part or the top surface part.

135. The apparatus of claim 134, wherein the straw insertion part is formed of a soft resin for forming the foldable part and is thin so that the straw insertion part is punched by a straw end having a sharp tip, or a thin cutoff line is disposed on a specific portion of the strew insertion part.

136. The apparatus of claim 134, wherein the straw insertion part comprises a sealing film pulling part that is partitioned by a thin film such as aluminum or a cutoff line.

137. An apparatus for receiving heterogeneous materials, which is coupled to a container in a direction in which the contents are discharged, the apparatus comprising:
a main body;
an independent accommodating part,
wherein the main body has a screw thread inside a side surface part,
a coupling protrusion or coupling grove is disposed on an upper inner wall of the screw thread,
an integrated cover partitioned by an integrated cover cutoff line is disposed on an upper portion of the side surface part having the coupling protrusion or coupling groove,
the independent accommodating part is coupled to the inside of the main body comprising the integrated cover,
an accommodating part main body having an accommodating part storage space is disposed on a lower portion of the independent accommodating part,
a soft foldable part is disposed above the accommodating part main body,
an accommodating part opening part lengthily extending downward is disposed on a lower portion of the foldable part,
a lower end of the accommodating part main body that is a lower end of the accommodating part opening part is sealed by an accommodating part sealing part.

138. The apparatus of claim 137, wherein a container neck sealing part formed of a soft resin is disposed on an outer annular part of the accommodating part main body of the independent accommodating part.

139. The apparatus of claim 137, wherein a coupling surface inserted into the coupling grove of the main body is disposed on an outer annular part of a lower end of the foldable part of the independent accommodating part.

140. The apparatus of claim 137, wherein a discharge mouth part lengthily extending is disposed above the foldable part.

141. The apparatus of claim 140, wherein a sealing stopper that is vertically moved to perform an open or close operation is disposed on the discharge mouth part.

142. The apparatus of claim 141, wherein the sealing stopper comprises a sealing part closely attached to a lower portion of the main body mouth part to seal the main body mouth part and a discharge space that is intermittently defined in a side surface part above the sealing part.

143. The apparatus of claim 140, wherein a main body mouth part sealing part formed of a soft material such as foil is disposed on an upper portion of the discharge mouth part.

144. The apparatus of claim 140, wherein a mouth part sealing film comprising a mouth part sealing pulling part is disposed on an upper portion of the discharge mouth part, and the mouth sealing film is distinguished from a mouth part by a mouth part sealing film cutoff line.

145. An apparatus for receiving heterogeneous materials, which is coupled to a container in a direction in which the contents are discharged, the apparatus comprising:
an accommodating part constituted by a side surface portion and a top surface portion, the accommodating part having a storage space in an inner direction of the side surface part;
a foldable part disposed in an inner direction of the top surface part that is an upper portion of the accommodating part; and
an opening part disposed on a lower portion of the foldable part,
wherein an accommodating part sealing part sealing a lower portion of the storage space is disposed on a lower portion of the accommodating part having the opening part,
a screw thread coupled to a container neck is disposed on an inner wall of the side surface part,
an empty elastic space extending downward is defined in the inside of a portion at which an upper portion and the top surface part of the accommodating part meet each other, and
an elastic part comprising an elastic sealing part is disposed on an outer annular part of the elastic space.

146. The apparatus of claim 145, wherein, when a cover is coupled to the main body, a portion of a lower end of the cover is insertably coupled to the elastic space of the main body.

147. An apparatus for receiving heterogeneous materials, which is coupled to a container in a direction in which the contents are discharged, the apparatus comprising:
an accommodating part constituted by a side surface portion and a top surface portion, the accommodating part having a storage space in an inner direction of the side surface part;
a foldable part disposed in an inner direction of the top surface part that is an upper portion of the accommodating part; and
an opening part disposed on a lower portion of the foldable part,
wherein an accommodating part sealing part sealing a lower portion of the storage space is disposed on a lower portion of the accommodating part having the opening part,
a screw thread coupled to a container neck is disposed on an inner wall of the side surface part, and
an auxiliary cover on which a handle is disposed is coupled with respect to an outer annular part of the side surface part.

148. The apparatus of claim 147, wherein the handle has a shape of which two or three portions protrude.

149. The apparatus of claim 147, wherein an upper foldable part that is thin so that the upper foldable part is easily folded is disposed on a central portion of the auxiliary cover.

150. An apparatus for receiving heterogeneous materials, which is coupled to a container in a direction in which the contents are discharged, the apparatus comprising:
a main body constituted by an upper main body and a lower main body;
a storage space defined in a lower portion of the lower main body;
an accommodating part sealing surface having a main body accommodating part cutoff line on a lower end of the storage space;
a foldable part in an inner direction of a top surface part that is an upper portion of the lower main body; and
an opening part disposed on a lower portion of the foldable part,
wherein the upper main body comprising the opening part and the lower main body disposed thereunder are coupled or adhere to each other, and
an auxiliary cutoff line protective part is disposed under or below the main body accommodating part cutoff line formed on the main body accommodating part sealing surface.

151. The apparatus of claim 150, wherein the auxiliary cutoff line protective part comprises a film having a barrier property such as a soft resin or foil.

152. The apparatus of claim 150, wherein the auxiliary cutoff line protective part forms a space defined by cutting the main body accommodating part cutoff line, and an auxiliary cutoff line protective part formed of a soft material is disposed on the main body accommodating part cutoff line that is provided as the space.

153. An apparatus for receiving heterogeneous materials, the apparatus comprising:
a container neck having an outer diameter with a margin of error within about 3 MM;
a main body in which a plurality of screw threads are disposed on an inner wall of a coupling side surface part therein to provide a receiving apparatus that is capable of being coupled to the heterogeneous material receiving apparatus to the container neck, wherein the plurality of screw threads comprise a first screw thread disposed on a lower portion thereof so that the main body is coupled to the container neck acceding to a shape of the screw thread and a second screw thread disposed on an upper portion thereof so that the main body is coupled to the other container neck; and
an accommodating part having a storage space inside or on an upper portion of the main body,
wherein a lower proton of the accommodating part is sealed,
an opening part for opening the sealed accommodating part is disposed on an upper portion of the sealed accommodating part,
when the opening part is touched, or pressed, or opened, the heterogeneous materials contained in the storage space drop into the container and are mixed with each other, and
a first screw thread height at a point, at which the first screw thread is end, with respect to a point at which the first screw thread of the main body starts on the planar figure is about 3.63 MM.

154. The apparatus of claim 153, wherein the first screw thread has a screw rotation angle within about 360 degrees.

155. The apparatus of claim 153, wherein the second screw threads starting reference with respect to the starting reference point of the first screw thread has a height of about 3.73 MM.

156. The apparatus of claim 153, wherein the second screw thread has three line screw thread standard having starting points different from each other.

157. The apparatus of claim 153, wherein the second screw thread comprises three line screw thread having starting points different from each other, and a second screw thread starting reference having a different starting point with respect to a first screw thread starting reference has a height of about 4.22 MM.

158. The apparatus of claim 153, wherein an inner wall of the coupling side surface part has a height of about 9.15 MM.

159. The apparatus of claim 156, wherein the second screw thread has only two lines on an inner wall of the coupling side surface part even though the second screw thread comprises a three line screw thread in equal variance.

160. The apparatus of claim 153, wherein the first screw thread has an inner diameter of about 26.0 MM.

161. The apparatus of claim 153, wherein the second screw thread has an inner diameter of about 25.5 MM.

162. An apparatus for receiving heterogeneous materials, the apparatus comprising:
a container neck having an outer diameter different in standard,
wherein a plurality of screw threads are disposed on an inner wall of a coupling side surface part of the main body of the receiving apparatus to provide a receiving apparatus that is capable of being coupled to the heterogeneous material receiving apparatus to the container neck,
the plurality of screw threads comprise a first screw thread disposed on a lower portion thereof so that the main body is coupled to the container neck acceding to a shape of the screw thread and a second screw thread disposed on an upper portion thereof so that the main body is coupled to the other container neck; and
a first screw thread height at a point, at which the first screw thread is end, with respect to a first screw thread starting reference is about 3.63 MM.

163. The apparatus of claim 162, wherein the first screw thread has a screw rotation angle within about 360 degrees.

164. The apparatus of claim 162, wherein the second screw threads starting reference with respect to a first screw thread starting reference has a height of about 3.73 MM.

165. The apparatus of claim 162, wherein the second screw thread has three line screw thread standard having starting points different from each other.

166. The apparatus of claim 162, wherein the second screw thread comprises three line screw thread having starting points different from each other, and a second screw thread starting reference having a different starting point with respect to a first screw thread starting reference has a height of about 4.22 MM.

167. The apparatus of claim 162, wherein an inner wall of the coupling side surface part has a height of about 9.15 MM.

168. The apparatus of claim 162, wherein the first screw thread has a screw rotation angle of about 360 degrees or more.

169. An apparatus for receiving heterogeneous materials, which is coupled to a container in a direction in which the contents are discharged, the apparatus comprising:
a main body coupled to a neck of the container;
a coupling part such as a screw thread coupled to the container neck, the coupling part being disposed on an inner wall of a side surface part of the main body,
wherein a plural independent accommodating part is disposed above the main body,
the plural independent accommodating part comprises a soft foldable part on an upper portion thereof and a plural accommodating part opening part, which lengthily extends, in a plural accommodating part storage space that is a lower side of a lower portion of the foldable part, and
a lower portion of the plural accommodating part opening part is sealed by a plural accommodating part sealing part.

170. The apparatus of claim 169, wherein the foldable part disposed on the plural independent accommodating part is formed through a press vacuum molding method or a blow molding method, or the foldable is formed by using a co-injection molding machine.

171. An apparatus for receiving heterogeneous materials, which is coupled to a container in a direction in which the contents are discharged, the apparatus comprising:
a main body constituted by a top surface part and a side surface part;
a coupling part such as a screw thread or a hook on an inner wall of a side surface part of the main body,
wherein a protruding accommodating part that protrudes upward is disposed on the top surface part of the main body,
a plurality of foldable parts are disposed on the protruding accommodating part,
an opening part is disposed in a storage space of a lower portion of each of a plurality of foldable parts, and
a lower portion of the opening part is sealed by an accommodating part sealing part.

172. The apparatus of claim 171, wherein the plurality of foldable parts are folded outward.

173. The apparatus of claim 171, wherein each of the plurality of foldable parts is formed of a soft resin.

174. An apparatus for receiving heterogeneous materials, which is coupled to a container in a direction in which the contents are discharged, the apparatus comprising:
a main body constituted by a top surface part and a side surface part;
a coupling part such as a screw thread or a hook on an inner wall of a side surface part of the main body,
wherein a protruding accommodating part that protrudes upward is disposed on the top surface part of the main body,
a foldable part is disposed on the protruding accommodating part,
an opening part is disposed in a lower portion of the foldable parts,
a lower portion of the opening part is sealed by an accommodating part sealing part, and
a second storage space is defined in a lower portion or side of the accommodating part sealing part.

175. An apparatus for receiving heterogeneous materials, which is coupled to a container in a direction in which the contents are discharged, the apparatus comprising:
a main body constituted by a top surface part and a side surface part;
a coupling part such as a screw thread or a hook on an inner wall of a side surface part of the main body,
wherein a protruding accommodating part that protrudes upward is disposed on the top surface part of the main body,
a foldable part is disposed on the protruding accommodating part,
an opening part is disposed in a lower portion of the foldable parts,
a lower portion of the opening part is sealed by an accommodating part sealing part,
a second storage space is defined in a lower portion or side of the accommodating part sealing part, and
the foldable part is formed of a soft material.

176. The apparatus of claim 175, wherein the soft material is injection-molded by using a co-injection molding machine.

177. The apparatus of claim 175, wherein the soft material comprises a film or a rubber-based soft material.

178. An apparatus for receiving heterogeneous materials, which is coupled to a container in a direction in which the contents are discharged, the apparatus comprising:
a main body constituted by a top surface part and a side surface part;
a coupling part such as a screw thread or a hook on an inner wall of a side surface part of the main body,
wherein a protruding accommodating part that protrudes upward is disposed on the top surface part of the main body,
a foldable part is disposed on the protruding accommodating part,
an opening part is disposed in a lower portion of the foldable parts,
a lower portion of the opening part is sealed by an accommodating part sealing part, and
the foldable part is formed of a soft material.

179. The apparatus of claim 178, wherein the soft material is injection-molded by using a co-injection molding machine.

180. The apparatus of claim 178, wherein the soft material comprises a film or a rubber-based soft material.

181. An apparatus for receiving heterogeneous materials, which has a container shape, the apparatus comprising:
a foldable part on an end of a main body; and
an accommodating part having a storage space together with an opening part on a lower portion of the foldable part,
wherein an end of the accommodating part is sealed by an accommodating part sealing part,
a second storage space is defined in a lower portion of the accommodating part sealing part, and
a surface that is an end of the second storage space and an end of the main body is sealed by a main body lower portion sealing part.

182. The apparatus of claim 181, wherein a sealing part discharge hole for discharging the mixed content is defined in the main body lower portion sealing part.

183. The apparatus of claim 182, wherein the sealing part discharge hole is sealed by a discharge hole sealing part.

184. The apparatus of claim 181, wherein a cover for protecting the foldable part of the main body is provided.

185. The apparatus of claim 181, wherein the main body lower portion sealing part is manufactured through a coupling method, thermal adhesion method, or other depositing methods.

186. The apparatus of claim 181, wherein the foldable part is formed of a soft material.

187. The apparatus of claim 186, wherein the soft material is injection-molded by using a co-injection molding machine.

188. The apparatus of claim 181, wherein the foldable part is provided in plurality.

189. The apparatus of claim 181, wherein a main body mouth part that is a discharge unit for discharging the content is disposed on a side of the foldable part.

190. The apparatus of claim 181, wherein a cover is disposed on the foldable part and the main body mouth part which are disposed on an end of the main body.

191. An apparatus for receiving heterogeneous materials into a container space part within a container, the apparatus comprising:
a unit for discharging the contents of the container,
wherein the main body comprises a coupling main body and an integrated cover,
the coupling main body comprises an insertion coupling part so that a mouth part of the container or a portion of the sealed container is punched and coupled thereto,
a foldable part comprising an integrated cover opening part is disposed on the integrated cover,
an integrated cover storage space is defined under the foldable part, and
an end of the integrated cover storage space is sealed by an accommodating part sealing part.

192. The apparatus of claim 191, wherein the integrated cover is coupled to a coupling main body by an integrated cover connecting part.

193. The apparatus of claim 191, wherein the foldable part is formed of a soft material.

194. The apparatus of claim 193, wherein the soft material comprises a film or a rubber-based soft material.

195. The apparatus of claim 194, wherein the rubber-based soft material is injection-molded by using a co-injection molding machine.

196. An apparatus for receiving heterogeneous materials, which is coupled to a pouch container through a thermal adhesion method in a direction in which the contents within the pouch container are discharged, the apparatus comprising:
a main body comprising a spout main body and a main body cover,
wherein the spout main body has an adhesion surface coupled to the pouch container on a lower portion thereof and a mouth part, on which a screw thread is disposed, for accommodating a main body cover on an upper portion thereof,
the main body cover comprises a main body cover side surface part and a main body cover top surface part,
a the receiving apparatus is coupled to the main body cover side surface part by using a screw thread or hook,
a foldable part is disposed on a main body cover top surface of the main body cover,
an opening part is disposed in a lower storage space of the foldable part, and
an end of the storage space is sealed by an accommodating part sealing part.

197. The apparatus of claim 196, wherein the foldable part is formed of a soft material.

198. The apparatus of claim 197, wherein the soft material comprises a film or a rubber-based soft material.

199. An apparatus for receiving heterogeneous materials, which is coupled to a container in a direction in which the contents are discharged, and the heterogeneous materials are contained in an inner accommodating part of a main body,
wherein a lower end of the main body is sealed by a receiving apparatus lower portion sealing part,
the receiving apparatus is separately packaged and distributed, and
a content representing a giveway or other gift cards is printed on an inner surface of the receiving apparatus lower portion sealing part.

200. The apparatus of claim 199, wherein gift cards or sales promotional products are put into the main body sealed by the receiving apparatus lower portion sealing part.

201. An apparatus for receiving heterogeneous materials, which is separately packaged and distributed and is coupled to a drinking package purchased by a consumer or an existing drinking package,
wherein the receiving apparatus is packaged by using a packing container that is recyclable and distributed in an after market,
the packing container is utilized as a coin back, a pump dispenser, or a packing container comprising a sealing stopper.

202. The apparatus of claim 201, wherein the packing container has a carton pack shape, a vitamin shape, or a battery shape.

203. The apparatus of claim 201, wherein the packing container has a bulb shape or a spheral shape.

204. An apparatus for receiving heterogeneous materials, which is used for an after market in which the receiving apparatus is separately packaged and distributed, and when is coupled to a drinking package purchased by a consumer to mix the heterogeneous materials contained in a receiving apparatus,
wherein the receiving apparatus is packaged and distributed together with a packing space of driving packages distributed in bulk.

205. An apparatus for receiving heterogeneous materials, which is coupled to a container, the apparatus comprising:
a main body constituted by a top surface part and a side surface part;
a coupling part such as a screw thread or a hook that is coupled to a mouth part of the container on an inner wall of a side surface part of the main body,
wherein an accommodating part having a storage space is disposed on the top surface part of the main body,
a foldable part that is foldable is disposed on an upper portion of the accommodating part,
an opening part is disposed on a lower portion of the foldable part,
a lower portion of the accommodating part having the storage space is sealed by an accommodating part sealing part or accommodating part lower portion sealing part, and
the accommodating part comprising the foldable part is elongated by a blow molding method in a preform state.

206. The apparatus of claim 205, wherein the accommodating part is expressed as a character shape.

207. The apparatus of claim 205, wherein the accommodating part is formed of a material having a multilayered structure.

208. The apparatus of claim 205, wherein the accommodating part is formed of polyethylene terephthalate (TET), polypropylene (PP), and polyethylene (PE).

209. An apparatus for receiving heterogeneous materials, which is coupled to a container, the apparatus comprising:
a main body containing the heterogeneous materials therein;
an accommodating part that is soft and thin on an upper portion of the main body,
wherein, when an upper portion of the accommodating part is pressed, at least one portion of the accommodating part is folded downward, and a lower sealed surface of the accommodating part is opened to allow the heterogeneous materials contained in the main body to drop into the container, thereby mixing the heterogeneous materials to each other, and
the accommodating part having the storage space is formed by being elongated and expanded by a blow molding method in a preform state.

210. The apparatus of claim 209, wherein the accommodating part is expressed as a character shape.

211. The apparatus of claim 209, wherein the accommodating part is formed of a material having a multilayered structure.

212. The apparatus of claim 209, wherein the accommodating part is formed of polyethylene terephthalate (TET), polypropylene (PP), and polyethylene (PE).

213. The apparatus of claim 209, wherein a foldable part is disposed on an upper portion of the accommodating part.

214. The apparatus of claim 209, wherein an opening part that lengthily extending downward is disposed on the bottom of an upper portion of the accommodating part.

215. The apparatus of claim 214, wherein an accommodating part sealing part or accommodating part lower portion sealing part is disposed on a lower portion of the accommodating part.

216. The apparatus of claim 214, wherein an accommodating part sealing part and a main body lower portion container neck sealing part are disposed on a lower portion of the accommodating part.

217. The apparatus of claim 209, wherein the accommodating part is manufactured by using a blow molding method and is coupled to the main body.

218. The apparatus of claim 209, wherein a fitting part for assembling the opening part is disposed on the bottom of a top surface part of the accommodating part.

219. The apparatus of claim 213, wherein a fitting part or assembly part for assembling the opening part is disposed on the foldable part.

220. The apparatus of claim 209, wherein the accommodating part is provided in plurality.

221. The apparatus of claim 209, wherein a cover for protecting the accommodating part is assembled with an upper portion of the main body of the accommodating part.

222. The apparatus of claim 209, wherein a long groove is defined in an outer annular part of the accommodating part to reinforce a vertical load of the accommodating part.

223. The apparatus of claim 209, wherein a discharge unit for discharging the mixed content is disposed on an upper portion of the accommodating part.

224. The apparatus of claim 223, wherein the discharge unit has a structure in which, when a sealing stopper is lift, the discharge space is opened, and when the sealing stopper descends, the discharge space is closed.

225. An apparatus for receiving heterogeneous materials, which is coupled to a container, the apparatus comprising:
a main body containing the heterogeneous materials therein;
an accommodating part that is soft and thin on an upper portion of the main body,
wherein, when an upper portion of the accommodating part is pressed, at least one portion of the accommodating part is folded downward, and a lower sealed surface of the accommodating part is opened to allow the heterogeneous materials contained in the main body to drop into the container, thereby mixing the heterogeneous materials to each other,
the accommodating part having the storage space is formed by being elongated and expanded by a blow molding method in a preform state,
an accommodating part lower portion sealing part having an accommodating part lower portion sealing part cutoff surface is disposed on a lower portion of the accommodating part, and
an accommodating part lower portion sealing part protrusion is disposed above the accommodating part lower portion sealing part cutoff surface.

226. The apparatus of claim 225, wherein an accommodating part lower portion sealing part cutoff line having a predetermined size is disposed on the accommodating part lower portion sealing part cutoff surface outside the accommodating part lower portion sealing part protrusion.

227. The apparatus of claim 225, wherein an accommodating part lower portion sealing part hook is disposed on the accommodating part lower portion sealing part protrusion.
